(19) **Europäisches Patentamt / European Patent Office / Office européen des brevets**

(11) **EP 4 650 331 A1**

(12) **EUROPEAN PATENT APPLICATION**
published in accordance with Art. 153(4) EPC

(43) Date of publication:
**19.11.2025 Bulletin 2025/47**

(21) Application number: **24741488.1**

(22) Date of filing: **05.01.2024**

(51) International Patent Classification (IPC):
$C03C\ 10/08^{(2006.01)}$  $C03B\ 32/02^{(2006.01)}$
$C03C\ 3/085^{(2006.01)}$  $C03C\ 3/087^{(2006.01)}$
$C03C\ 3/091^{(2006.01)}$  $C04B\ 35/18^{(2006.01)}$

(52) Cooperative Patent Classification (CPC):
**C03B 32/02; C03C 3/085; C03C 3/087;
C03C 3/091; C03C 10/00; C04B 35/18**

(86) International application number:
**PCT/JP2024/000052**

(87) International publication number:
**WO 2024/150715 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.01.2023 JP 2023003402
10.04.2023 JP 2023063324
18.07.2023 JP 2023116688
07.09.2023 JP 2023145070**

(71) Applicant: **Nippon Electric Glass Co., Ltd.
Otsu-shi, Shiga 520-8639 (JP)**

(72) Inventors:
• **YOKOTA, Yuki**
  **Otsu-shi Shiga 520-8639 (JP)**
• **NISHIMURA, Yuki**
  **Otsu-shi Shiga 520-8639 (JP)**
• **OKADA, Yusuke**
  **Otsu-shi Shiga 520-8639 (JP)**
• **HOSODA, Yohei**
  **Otsu-shi Shiga 520-8639 (JP)**

(74) Representative: **Tetzner, Michael
Tetzner & Partner mbB
Patent- und Rechtsanwälte
Van-Gogh-Strasse 3
81479 München (DE)**

(54) **LOW-THERMAL EXPANSION MEMBER**

(57)    Provided is a low-thermal expansion member having a low coefficient of thermal expansion, like conventional $Li_2O$-$Al_2O_3$-$SiO_2$-based crystallized glasses, and being low in cost. A low-thermal expansion member contains a $MgO$-$Al_2O_3$-$SiO_2$-based crystal.

EP 4 650 331 A1

**Description**

[Technical Field]

The present invention relates to low-thermal expansion members. More specifically, the present invention relates to members suitable as materials for, for example, a front window of an oil stove, a wood stove or the like, a substrate for high-technology products, such as a color filter substrate or an image sensor substrate, a setter for firing electronic components, a light diffuser plate, a furnace core tube for producing semiconductors, a mask for producing semiconductors, an optical lens, a dimension measurement member, a communication member, a construction member, a chemical reaction container, an electromagnetic cooker top plate, a heat-resistant plate or utensil, a heat-resistant cover, a window glass for fire doors, a member for astrometric telescopes, and a member for space optics.

[Background Art]

Conventionally, a $Li_2O$-$Al_2O_3$-$SiO_2$-based crystallized glass is used as a material for a front window of an oil stove, a wood stove or the like, a substrate for high-technology products, such as a color filter substrate or an image sensor substrate, a setter for firing electronic components, a light diffuser plate, a furnace core tube for producing semiconductors, a mask for producing semiconductors, an optical lens, a dimension measurement member, a communication member, a construction member, a chemical reaction container, an electromagnetic cooker top plate, a heat-resistant plate or utensil, a heat-resistant cover, a window glass for fire doors, a member for astrometric telescopes, a member for space optics, and so on. For example, Patent Literatures 1 to 3 disclose $Li_2O$-$Al_2O_3$-$SiO_2$-based crystallized glasses in which $Li_2O$-$Al_2O_3$-$SiO_2$-based crystals, such as a β-quartz solid solution ($Li_2O \cdot Al_2O_3 \cdot nSiO_2$ [where $2 \leq n \leq 4$]) or a β-spodumene solid solution ($Li_2O \cdot Al_2O_3 \cdot nSiO_2$ [where $n \geq 4$]) are precipitated as a major crystalline phase.

$Li_2O$-$Al_2O_3$-$SiO_2$-based crystallized glasses have a low coefficient of thermal expansion and high mechanical strength and therefore have excellent thermal characteristics. In addition, the type of crystals to be precipitated therein can be controlled by appropriately adjusting heat treatment conditions in a crystallization process and, thus, a transparent crystallized glass (in which a β-quartz solid solution is precipitated) can be easily produced.

[Citation List]

[Patent Literature]

[PTL 1]
JP-B-S39-21049
[PTL 2]
JP-B-S40-20182
[PTL 3]
JP-A-H01-308845
[PTL 4]
JP-A-H11-228180
[PTL 5]
JP-A-H11-228181

[Summary of Invention]

[Technical Problem]

Recently, development of lithium ion batteries or the like is increasing and the demand for source materials for lithium is drastically growing in various industries, which has invited a global rise in the prices of the source materials for lithium. As a result, it has become difficult to produce a $Li_2O$-$Al_2O_3$-$SiO_2$-based crystallized glass stably and at a comparable production cost as before and, therefore, alternative materials for conventional $Li_2O$-$Al_2O_3$-$SiO_2$-based crystallized glasses are needed.

In view of the above, an object of the present invention is to provide a low-thermal expansion member having a low coefficient of thermal expansion, like conventional $Li_2O$-$Al_2O_3$-$SiO_2$-based crystallized glasses, and being low in cost.

[Solution to Problem]

The inventors have found from intensive studies that the above problem can be overcome by a member containing crystals having a specified composition and propose the member as the present invention.

[1] Specifically, a low-thermal expansion member according to the present invention has a feature that it contains a $MgO\text{-}Al_2O_3\text{-}SiO_2$-based crystal. $MgO\text{-}Al_2O_3\text{-}SiO_2$-based crystals are low in thermal expansion and low in cost because their major components are $MgO$, $Al_2O_3$, and $SiO_2$, which are inexpensive. The term "low thermal expansion" in the present invention means that the coefficient of thermal expansion at 30 to 380°C is not more than $30 \times 10^{-7}/°C$.

[2] The low-thermal expansion member according to the present invention preferably has a feature that, in the above aspect [1], it contains $\alpha$-cordierite (indialite) and has transmittancy. By doing so, the member has transmittancy and can easily have a low thermal expansion. The term "transmittancy" means that the member has a transmittance (total transmittance) of more than 0% at a thickness of 4 mm and a wavelength of any one of 380 nm, 800 nm, and 1200 nm.

[3] The low-thermal expansion member according to the present invention preferably has a feature that, in the above aspect [1] or [2], it contains, in terms of % by mass, 20 to 90% $SiO_2$, more than 0 to 50% $Al_2O_3$, and more than 0 to 40% $MgO$. In this case, the major components are $MgO$, $Al_2O_3$, and $SiO_2$ each inexpensive and, therefore, the low-thermal expansion member is low in cost and can easily have a low thermal expansion.

[4] The low-thermal expansion member according to the present invention preferably has a feature that, in any one of the above aspects [1] to [3], $SiO_2/(SiO_2+Al_2O_3+MgO)$ is 0.45 to 0.81 in terms of % by mass. In this case, the transmittancy can be easily increased while the coefficient of thermal expansion is kept low.

[5] The low-thermal expansion member according to the present invention preferably has a feature that, in any one of the above aspects [1] to [4], $Al_2O_3/(SiO_2+Al_2O_3+MgO)$ is 0.01 to 0.45 in terms of % by mass. In this case, the transmittancy can be easily increased while the coefficient of thermal expansion is kept low.

[6] The low-thermal expansion member according to the present invention preferably has a feature that, in any one of the above aspects [1] to [5], $MgO/(SiO_2+Al_2O_3+MgO)$ is 0.03 to 0.29 in terms of % by mass. In this case, the transmittancy can be easily increased while the coefficient of thermal expansion is kept low.

[7] The low-thermal expansion member according to the present invention preferably has a feature that, in any one of the above aspects [1] to [6], $SiO_2/Al_2O_3$ is 1 to 15 in terms of % by mass. In this case, while the coefficient of thermal expansion is kept low, the transmittancy can be increased and the liquidus viscosity can be easily increased.

[8] The low-thermal expansion member according to the present invention preferably has a feature that, in any one of the above aspects [1] to [7], $SiO_2/MgO$ is 2 to 15 in terms of % by mass. In this case, while the coefficient of thermal expansion is kept low, the transmittancy can be increased and the liquidus viscosity can be easily increased.

[9] The low-thermal expansion member according to the present invention preferably has a feature that, in any one of the above aspects [1] to [8], $Al_2O_3/MgO$ is 0.2 to 15 in terms of % by mass. In this case, while the coefficient of thermal expansion is kept low, the transmittancy can be increased and the liquidus viscosity can be easily increased.

[10] The low-thermal expansion member according to the present invention preferably has a feature that, in any one of the above aspects [1] to [9], it contains 0 to 5.6% $BaO$ in terms of % by mass, $SiO_2/Al_2O_3$ is 2.5 to 15 in terms of % by mass, and $SiO_2/MgO$ is 5.4 to 15 in terms of % by mass. In this case, devitrification can be easily reduced. In addition, while the coefficient of thermal expansion is made low, the transmittancy can be increased and the liquidus viscosity can be easily increased.

[11] The low-thermal expansion member according to the present invention preferably has a feature that, in any one of the above aspects [1] to [10], it contains 0 to 5.6% $BaO$ in terms of % by mass, $SiO_2/Al_2O_3$ is 2.5 to 15 in terms of % by mass, and $Al_2O_3/MgO$ is 1.8 to 15 in terms of % by mass. In this case, devitrification can be easily reduced. In addition, while the coefficient of thermal expansion is made low, the transmittancy can be increased and the liquidus viscosity can be easily increased.

[12] The low-thermal expansion member according to the present invention preferably has a feature that, in any one of the above aspects [1] to [11], it contains, in terms of % by mass, 55.5 to 90% $SiO_2$ and more than 0% $ZnO$. In this case, while the coefficient of thermal expansion is kept low, the formability and meltability of glass can be easily increased.

[13] The low-thermal expansion member according to the present invention preferably has a feature that, in any one of the above aspects [1] to [12], $(Li_2O+Na_2O+K_2O)/SiO_2$ is 0.00005 to 0.03 in terms of % by mass. In this case, while the viscosity characteristics of glass can be optimized to efficiently promote precipitation of crystals and the chemical durability can be easily increased.

[14] The low-thermal expansion member according to the present invention preferably has a feature that, in any one of the above aspects [1] to [13], $Li_2O+Na_2O+K_2O+CaO+SrO+BaO$ is not more than 2% by mass. In this case, the low-thermal expansion member is less likely to become clouded.

[15] The low-thermal expansion member according to the present invention preferably has a feature that, in any one of the above aspects [1] to [14], $(SiO_2+ZnO)/(MgO+Al_2O_3)$ is 0.7 to 3 in terms of % by mass. In this case, the transmittancy can be easily increased while the coefficient of thermal expansion is kept low.

[16] The low-thermal expansion member according to the present invention preferably has a feature that, in any one of the above aspects [1] to [15], $ZnO-(TiO_2+ZrO_2)$ is -15 to 5% by mass. In this case, the transmittancy can be easily increased.

[17] The low-thermal expansion member according to the present invention preferably has a feature that, in any one of the above aspects [1] to [16], $TiO_2/(TiO_2+Fe_2O_3)$ is 0.001 to 0.999 in terms of % by mass. In this case, a high-transmittancy low-thermal expansion member can be easily obtained at low cost.

[18] The low-thermal expansion member according to the present invention preferably has a feature that, in any one of the above aspects [1] to [17], it contains at least one of $MoO_3$, $V_2O_3$, $CuO$, $NiO$, $MnO_2$, $Cr_2O_3$, $Nd_2O_3$, $WO_3$, and $CO_3O_4$. In this case, precipitation of crystals can be easily promoted. In addition, the glass can be easily colored in a desired color.

[19] The low-thermal expansion member according to the present invention preferably has a feature that, in any one of the above aspects [1] to [18], it contains more than 0% $MoO_3$ in terms of % by mass. In this case, the viscosity of glass can be decreased to easily improve the meltability and formability of the glass.

[20] The low-thermal expansion member according to the present invention preferably has a feature that, in any one of the above aspects [1] to [19], $SiO_2/(SiO_2+Al_2O_3+MgO)$ is 0.36 to 0.81 in terms of % by mass, $Al_2O_3/(SiO_2+Al_2O_3+MgO)$ is 0.09 to 0.5 in terms of % by mass, $MgO/(SiO_2+Al_2O_3+MgO)$ is 0.01 to 0.29 in terms of % by mass, and the low-thermal expansion member contains 0.01 to less than 2.5% $Na_2O$ in terms of % by mass and at least one of $As_2O_3$, $Sb_2O_3$, $SnO_2$, and Cl. In this case, the transmittancy can be easily increased while the coefficient of thermal expansion is kept low.

[21] The low-thermal expansion member according to the present invention preferably has a feature that, in any one of the above aspects [1] to [20], it has a β-OH value of more than 0 to 2/mm. In this case, the initial reaction of the raw material batch can be promoted and the bubble quality, the thermal resistance, and so on of the member can be easily improved.

[22] The low-thermal expansion member according to the present invention preferably has a feature that, in any one of the above aspects [1] to [21], it has a transmittance of not less than 10% at a thickness of 4 mm and a wavelength of 1200 nm. In this case, the member is suitable when used in an infrared camera or applications for infrared communication, such as a remote controller. Herein, when transmittance is referred to simply as "transmittance", it means "total transmittance" and is distinguished from diffuse transmittance.

[23] The low-thermal expansion member according to the present invention preferably has a feature that, in any one of the above aspects [1] to [22], it has a coefficient of thermal expansion of not more than $30 \times 10^{-7}/°C$ at 30 to 380°C. In this case, the member is suitable for various applications requiring low thermal expansion characteristics.

[24] The low-thermal expansion member according to the present invention preferably has a feature that, in any one of the above aspects [1] to [23], it has a coefficient of thermal expansion of not more than $30 \times 10^{-7}/°C$ at 30 to 750°C. In this case, the member is suitable for various applications requiring low thermal expansion characteristics.

[25] The low-thermal expansion member according to the present invention preferably has a feature that, in any one of the above aspects [1] to [24], it is a crystallized glass. In this case, a member having desired characteristics can be easily produced. The crystallized glass refers to a composite material that is obtained by subjecting an original glass in glassy state (a crystallizable glass) before being crystallized to heat treatment or the like to precipitate desired crystals in a glass matrix and therefore contains glass and crystals.

[26] A precursor of a low-thermal expansion member according to the present invention has a feature that it is made of a crystallizable glass containing, in terms of % by mass, 20 to 90% $SiO_2$, more than 0 to 50% $Al_2O_3$, more than 0 to 40% MgO, 0 to 20% CaO, 0 to 20% SrO, 0 to 20% BaO, 0 to 20% ZnO, 0 to 10% $Li_2O$, 0 to 20% $Na_2O$, 0 to 20% $K_2O$, 0 to 20% $B_2O_3$, 0 to 20% $P_2O_5$, 0 to 20% $TiO_2$, 0 to 20% $ZrO_2$, 0 to 10% $HfO_2$, and 0 to 20% $SnO_2$.

[27] A method for producing a low-thermal expansion member according to the present invention is a method for producing the low-thermal expansion member described in the above aspect [25] and has a feature that it includes the steps of: heating a raw material into a melt and forming the melt into a shape to obtain a crystallizable glass; and subjecting the crystallizable glass to heat treatment to crystallize the crystallizable glass.

[28] The method for producing the low-thermal expansion member according to the present invention preferably has a feature that, in the above aspect [27], an amount of metal Al added to the raw material is more than 0 to 5000 ppm in terms of % by mass. In this case, the crystallization of glass can be easily promoted.

[Advantageous Effects of Invention]

The present invention enables provision of a low-thermal expansion member having a low coefficient of thermal expansion, like conventional $Li_2O-Al_2O_3-SiO_2$-based crystallized glasses, and being low in cost.

[Brief Description of Drawings]

[Fig. 1]

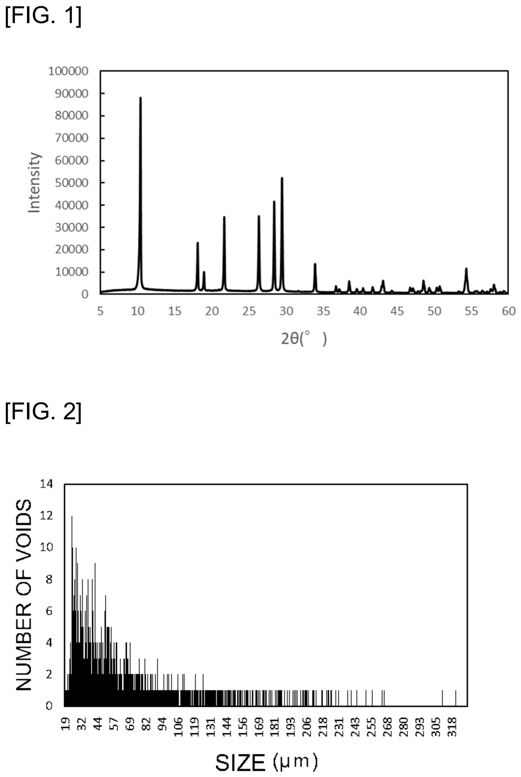

Fig. 1 is a chart showing an XRD pattern of Example No. 127.
[Fig. 2]
Fig. 2 is a histogram showing measurement results of Example No. 306 in terms of void size.

[Description of Embodiments]

A low-thermal expansion member according to the present invention has a feature that it contains a MgO-$Al_2O_3$-$SiO_2$-based crystal. Specifically, the MgO-$Al_2O_3$-$SiO_2$-based crystal is preferably $\alpha$-cordierite. $\alpha$-cordierite is a crystal that is represented by $Mg_2Al_4Si_5O_{18}$ and has a hexagonal crystal structure. $\alpha$-cordierite is known to exhibit negative expansion relative to the c-axis of the crystal. When the member contains $\alpha$-cordierite, its coefficient of thermal expansion can be easily reduced close to zero and its cost can be easily kept low because the major components of $\alpha$-cordierite are MgO, $Al_2O_3$, and $SiO_2$ each inexpensive. The low-thermal expansion member according to the present invention may contain any cordierite other than $\alpha$-cordierite. Examples include a metastable-phase $\mu$-cordierite having a hexagonal crystal structure, like $\alpha$-cordierite, and $\beta$-cordierite having an orthorhombic crystal structure. The low-thermal expansion member according to the present invention may contain other types of crystals different from MgO-$Al_2O_3$-$SiO_2$-based crystals so long as desired characteristics (i.e., desired low-thermal expansion characteristic and transmittancy) can be obtained. Examples of the above types of crystals include gahnite, willemite (zinc silicate), $Al_2SiO_3$ (aluminum silicate), zirconia, zirconia titanate, a tin-containing zirconia-based oxide, titania, aluminotitanate, $\beta$-quartz solid solution, $\alpha$-quartz, $\beta$-quartz, $\beta$-spodumene solid solution, spodumene, zircon, enstatite, mica, nepheline, anorthite, lithium disilicate, lithium metasilicate, wollastonite, diopside, cristobalite, tridymite, feldspar, spinel-based crystals, and metal colloid. These types of crystals may be contained singly or in combination of two or more of them.

The low-thermal expansion member according to the present invention is made of, for example, a crystallized glass. The crystallized glass according to the present invention may be, so long as having desired characteristics, a crystallized glass in which crystals are precipitated from the surface of the glass or a crystallized glass in which crystals are precipitated from inside of the glass other than the surface. The composition of the crystallized glass preferably contains, for example, in terms of % by mass, 20 to 90% $SiO_2$, more than 0 to 50% $Al_2O_3$, and more than 0 to 40% MgO. Reasons why the composition is limited as just described will be described below. In the following description of the respective contents of components, "%" refers to "% by mass" unless otherwise stated.

$SiO_2$ is a component that forms part of a glass network and constitutes part of a MgO-$Al_2O_3$-$SiO_2$-based crystal. The content of $SiO_2$ is preferably not more than 90%, not more than 80%, not more than 75%, not more than 73%, or not more than 70%, particularly preferably not more than 69%, preferably not less than 20%, not less than 30%, not less than 35%, not less than 40%, not less than 45%, not less than 48%, not less than 50%, not less than 53%, or not less than 55.5, and particularly preferably not less than 57%. If the content of $SiO_2$ is too small, the coefficient of thermal expansion tends to increase and, therefore, a crystallized glass having excellent thermal shock resistance is less likely to be obtained. In addition, the chemical durability tends to decrease. Furthermore, the liquidus viscosity of glass is likely to decrease, which makes it difficult to form the glass into shape and thus makes it likely that the productivity decreases. Therefore, in the case where importance is placed on increasing the liquidus viscosity of glass, the lower limit of the content of $SiO_2$ is preferably not less than 58%, not less than 60%, not less than 61%, not less than 62%, not less than 63%, or not less than 65%, and particularly preferably not less than 67%. On the other hand, if the content of $SiO_2$ is too large, the meltability of glass decreases, the viscosity of glass melt increases to make the glass difficult to be fined, and the glass is difficult to form into shape, which makes it likely that the productivity decreases. In addition, the time taken for crystallization increases, which makes it likely that the productivity decreases. Furthermore, crystals (for example, quartz crystals) other than desired crystals, such as $\alpha$-cordierite, tend to precipitate, which makes it likely that the coefficient of thermal expansion of the crystallized glass increases.

$Al_2O_3$ is a component that constitutes part of a MgO-$Al_2O_3$-$SiO_2$-based crystal. The content of $Al_2O_3$ is preferably more than 0 to 50%, 1 to 47.5%, 5 to 45%, 10 to 42.5%, 12 to 40%, 13 to 37.5%, 15 to 35%, or 15 to 30, and particularly preferably 16 to 25%. If the content of $Al_2O_3$ is too small, desired crystals, such as $\alpha$-cordierite, tend to be less likely to precipitate and, as a result, the coefficient of thermal expansion tends to increase. In addition, the difference in coefficient of thermal expansion between the crystalline phase and the residual glass phase after crystallization increases, which may make the crystallized glass susceptible to breakage. Furthermore, the difference in refractive index between the crystalline phase and the residual glass phase after crystallization increases, which makes it likely that the crystallized glass becomes opaque. On the other hand, if the content of $Al_2O_3$ is too large, the viscosity of glass melt excessively decreases to make it difficult to form the glass into shape and, as a result, the productivity is likely to decrease. In addition, mullite crystals or other crystals may precipitate to cause devitrification of the glass and the crystallized glass becomes susceptible to breakage.

MgO is a component that constitutes part of a MgO-$Al_2O_3$-$SiO_2$-based crystal. The content of MgO is preferably more than 0 to 40%, 1 to 37.5%, 2 to 35%, 3 to 32.5%, 4 to 30%, 5 to 27.5%, 6 to 25%, or 7 to 20%, and particularly preferably 7 to 15%. If the content of MgO is too small, desired crystals, such as $\alpha$-cordierite, tend to be less likely to precipitate and, as a result, the coefficient of thermal expansion tends to increase. In addition, the difference in coefficient of thermal expansion between the crystalline phase and the residual glass phase after crystallization increases, which may make the crystallized glass susceptible to breakage. Furthermore, the difference in refractive index between the crystalline phase and the residual glass phase after crystallization increases, which makes it likely that the crystallized glass becomes opaque. On the other hand, if the content of MgO is too large, the viscosity of glass melt excessively decreases to make it difficult to form the glass into shape and, as a result, the productivity is likely to decrease.

In the low-thermal expansion member according to the present invention, the desired low-thermal expansion characteristics are achieved by mutual canceling out between negative expansion of the crystalline phase made of MgO-$Al_2O_3$-$SiO_2$-based crystals (particularly, $\alpha$-cordierite crystals) or others and positive expansion of the residual glass phase. On the other hand, the transmittance can be increased by adjusting the refractive index difference between the crystalline phase and the residual glass phase. Taken together, in order to obtain a crystallized glass having high transmittance and low thermal expansion, it is preferred to closely adjust the elemental compositions of both the crystalline phase and the residual glass phase in the crystallized glass, the ratio of presence between them, and so on. The inventors conducted intensive studies and, as a result, found that the crystalline phase and the residual glass phase can be suitably controlled by restricting the following ratios regarding the contents of three components MgO, $SiO_2$, and $Al_2O_3$ constituting part of the crystalline phase as set forth below. $SiO_2/(SiO_2+Al_2O_3+MgO)$ (i.e., the ratio between the content of $SiO_2$ and the sum of the contents of $SiO_2$, $Al_2O_3$, and MgO) is preferably not more than 0.99, not more than 0.9, not more than 0.81, not more than 0.78, or not more than 0.75, particularly preferably not more than 0.73, preferably not less than 0.18, not less than 0.2, not less than 0.25, not less than 0.3, not less than 0.35, not less than 0.36, not less than 0.4, or not less than 0.45, and particularly preferably not less than 0.5. Furthermore, $Al_2O_3/(SiO_2+Al_2O_3+MgO)$ (i.e., the ratio between the content of $Al_2O_3$ and the sum of the contents of $SiO_2$, $Al_2O_3$, and MgO) is preferably not more than 0.71, not more than 0.6, not more than 0.5, not more than 0.45, not more than 0.4, or not more than 0.3, particularly preferably not more than 0.25, preferably not less than 0.01, not less than 0.09, not less than 0.13, not less than 0.14, not less than 0.15, not less than 0.16, or not less than 0.17, and particularly preferably not less than 0.18. Moreover, $MgO/(SiO_2+Al_2O_3+MgO)$ (i.e., the ratio between the content of MgO and the sum of the contents of $SiO_2$, $Al_2O_3$, and MgO) is preferably not more than 0.67, not more than 0.6, not more than 0.5, not more than 0.4, not more than 0.29, not more than 0.2, not more than 0.15, or not more than 0.125, particularly preferably not more than 0.1, preferably not less than 0.01, not less than 0.03, not less than 0.04, not less than 0.05, or not less than 0.06, and particularly preferably not less than 0.07. If each of $SiO_2/(SiO_2+Al_2O_3+MgO)$, $Al_2O_3/(SiO_2+Al_2O_3+MgO)$, and $MgO/(SiO_2+Al_2O_3+MgO)$ is without the above range, crystals of $\alpha$-cordierite or the like are less likely to precipitate and, therefore, the coefficient of thermal expansion of the obtained crystallized glass tends to increase. In addition, the refractive index difference between the crystalline phase and the residual glass phase increases, which makes it likely that the crystallized glass becomes opaque.

The inventors found that when, regarding the contents of three components MgO, $SiO_2$, and $Al_2O_3$ constituting part of the crystalline phase, $SiO_2/Al_2O_3$ (the ratio between the content of $SiO_2$ and the content of $Al_2O_3$), $SiO_2/MgO$ (the ratio between the content of $SiO_2$ and the content of MgO), and $Al_2O_3/MgO$ (the ratio between the content of $Al_2O_3$ and the content of MgO) are restricted as set forth below, a crystallized glass having high transmittance and low thermal expansion can be realized and the liquidus viscosity can be increased, which makes the glass easily formable into shape and thus increases the productivity. $SiO_2/Al_2O_3$ is preferably not more than 20, not more than 15, not more than 10, not more than 7.5, not more than 7, not more than 6.5, not more than 6, not more than 5.5, not more than 5, not more than 4.5, or not more than 4, particularly preferably not more than 3.75, preferably not less than 0.4, not less than 0.5, not less than 1, not less than 1.2, not less than 1.4, not less than 1.5, not less than 1.7, not less than 2, or not less than 2.5, and particularly preferably not less than 3. Furthermore, $SiO_2/MgO$ is preferably not more than 20, not more than 15, not more than 14, not more than 13, not more than 12, not more than 11.5, not more than 11, not more than 10.5, not more than 10, or not more than 9.5, particularly preferably not more than 9, preferably not less than 0.5, not less than 2, not less than 2.4, not less than 2.8, not less than 3, not less than 3.4, not less than 3.5, not less than 4, not less than 5, not less than 5.4, not less than 6, or not less than 7, and particularly preferably not less than 8. Moreover, $Al_2O_3/MgO$ is preferably not more than 15, not more than 10, not more than 5, not more than 4.8, not more than 4.6, not more than 4.4, not more than 4.2, not more than 4, not more than 3.8, not more than 3.6, not more than 3.4, or not more than 3.2, particularly preferably not more than 3, preferably not less than 0.05, not less than 0.1, not less than 0.2, not less than 0.4, not less than 0.6, not less than 0.8, not less than 1, not less than 1.2, not less than 1.4, not less than 1.6, not less than 1.8, or not less than 2, and particularly preferably not less than 2.3. If each of $SiO_2/Al_2O_3$, $SiO_2/MgO$, and $Al_2O_3/MgO$ is without the above range, crystals of $\alpha$-cordierite or the like are less likely to precipitate and, therefore, the coefficient of thermal expansion of the obtained crystallized glass tends to increase. In addition, the refractive index difference between the crystalline phase and the residual glass phase increases, which makes it likely that the crystallized glass becomes opaque. Furthermore, the liquidus viscosity decreases, which makes it difficult to form the glass into shape and thus decreases the productivity.

The low-thermal expansion member according to the present invention may contain, in addition to the above components, 0 to 10% $Li_2O$, 0 to 20% $Na_2O$, 0 to 20% $K_2O$, 0 to 20% $CaO$, 0 to 20% $SrO$, 0 to 20% $BaO$, 0 to 20% $ZnO$, 0 to 20% $B_2O_3$, 0 to 20% $P_2O_5$, 0 to 20% $TiO_2$, 0 to 20% $ZrO_2$, and 0 to 20% $SnO_2$.

$Li_2O$ is a component that can form a solid solution together with a $MgO$-$Al_2O_3$-$SiO_2$-based crystal, has a large effect on crystallinity and decreases the viscosity of glass to increase the meltability and formability of the glass. On the other hand, the prices of lithium source materials globally rise as described previously and, therefore, the content of $Li_2O$ is required to be reduced as low as possible. Furthermore, if the content of $Li_2O$ is too large, the coefficient of linear thermal expansion becomes too high, which make it difficult to increase the thermal resistance and thermal shock resistance. Therefore, the content of $Li_2O$ is preferably 0 to 10%, 0 to 8%, 0 to 6%, 0 to 4%, 0 to 3%, 0 to 2.5%, 0 to 2%, 0 to 1.5%, 0 to 1, 0 to 0.5%, 0 to 0.3%, 0 to 0.2%, or 0 to 0.1%, and particularly preferably 0 to 0.05%. However, $Li_2O$ is likely to be mixed as impurities into glass. Therefore, if complete removal of $Li_2O$ is pursued, the raw material batch tends to be expensive to increase the production cost. In reducing the increase in production cost, the lower limit of the content of $Li_2O$ is preferably not less than 0.0001%, more preferably not less than 0.0003%, and particularly preferably not less than 0.0005%.

$Na_2O$ is a component that reduces the viscosity of glass to increase the meltability and formability of the glass. Furthermore, $Na_2O$ is also a component for adjusting the coefficient of thermal expansion, the refractive index, and so on of $MgO$-$Al_2O_3$-$SiO_2$-based crystallized glass. The content of $Na_2O$ is preferably not more than 20%, not more than 15%, not more than 10%, not more than 5%, not more than 3%, less than 2.5%, not more than 1.5%, less than 1.5%, not more than 1%, or not more than 0.5%, and particularly preferably not more than 0.3%. If the content of $Na_2O$ is too large, devitrification is likely to occur and the glass becomes susceptible to breakage. However, $Na_2O$ is likely to be mixed as impurities into glass. Therefore, if complete removal of $Na_2O$ is pursued, the raw material batch tends to be expensive to increase the production cost. In reducing the increase in production cost, the lower limit of the content of $Na_2O$ is preferably not less than 0.0001%, not less than 0.0003%, not less than 0.0005%, not less than 0.001, not less than 0.003, or not less than 0.005, and particularly preferably not less than 0.01.

$K_2O$ is a component that reduces the viscosity of glass to increase the meltability and formability of the glass. Furthermore, $K_2O$ is also a component for adjusting the coefficient of thermal expansion, the refractive index, and so on of $MgO$-$Al_2O_3$-$SiO_2$-based crystallized glass. The content of $K_2O$ is preferably 0 to 20%, 0 to 15%, 0 to 10%, 0 to 5%, 0 to 3%, 0 to 1%, or 0 to 0.5%, and particularly preferably 0 to 0.3%. If the content of $K_2O$ is too large, devitrification is likely to occur and the glass becomes susceptible to breakage. However, $K_2O$ is likely to be mixed as impurities into glass. Therefore, if complete removal of $K_2O$ is pursued, the raw material batch tends to be expensive to increase the production cost. In reducing the increase in production cost, the lower limit of the content of $K_2O$ is preferably not less than 0.0001%, more preferably not less than 0.0003%, and particularly preferably not less than 0.0005%.

Although $Li_2O$, $Na_2O$, and $K_2O$ are components that increase the meltability and formability of glass, an excessive large content of each of them causes the viscosity to excessively decrease, which may cause the glass to become excessively softened during crystallization. In addition, if each of $Li_2O$, $Na_2O$, and $K_2O$ is too much, the chemical durability of glass decreases. On the other hand, $SiO_2$ is a component that constitutes part of a $MgO$-$Al_2O_3$-$SiO_2$-based crystal as a major crystalline phase and incorporation of an appropriate amount of $SiO_2$ into glass has the effect of increasing the viscosity of the glass to reduce softening of residual glass. In addition, $SiO_2$ is also a component that increases the chemical durability of glass. Therefore, in order to optimize the viscosity characteristics of the glass to efficiently promote precipitation of crystals and obtain a crystallized glass having high chemical durability, $(Li_2O+Na_2O+K_2O)/SiO_2$ (i.e., the ratio between the sum of contents of $Li_2O$, $Na_2O$, and $K_2O$ and the content of $SiO_2$) is preferably controlled within a suitable range. $(Li_2O+Na_2O+K_2O)/SiO_2$ is preferably 0 to 0.1, 0.00005 to 0.03, 0.00005 to 0.01, 0.0001 to 0.008, 0.0002 to 0.007, 0.0003 to 0.006, or 0.0004 to 0.005, and particularly preferably 0.0004 to 0.002.

$CaO$ is a component that reduces the viscosity of glass to increase the meltability and formability of the glass. Furthermore, $CaO$ is also a component for adjusting the coefficient of thermal expansion, the refractive index, and so on of $MgO$-$Al_2O_3$-$SiO_2$-based crystallized glass. The content of $CaO$ is preferably 0 to 20%, 0 to 15%, 0 to 10%, 0 to 5%, 0 to 3%, 0 to 1%, or 0 to 0.5%, and particularly preferably 0 to 0.3%. If the content of $CaO$ is too large, devitrification is likely to occur and the glass becomes susceptible to breakage. However, $CaO$ is likely to be mixed as impurities into glass. Therefore, if complete removal of $CaO$ is pursued, the raw material batch tends to be expensive to increase the production cost. In reducing the increase in production cost, the lower limit of the content of $CaO$ is preferably not less than 0.0001%, more preferably not less than 0.0003%, and particularly preferably not less than 0.0005%.

$SrO$ is a component that reduces the viscosity of glass to increase the meltability and formability of the glass. Furthermore, $SrO$ is also a component for adjusting the coefficient of thermal expansion, the refractive index, and so on of $MgO$-$Al_2O_3$-$SiO_2$-based crystallized glass. The content of $SrO$ is preferably 0 to 20%, 0 to 15%, 0 to 10%, 0 to 5%, 0 to 3%, 0 to 1%, or 0 to 0.5%, and particularly preferably 0 to 0.3%. If the content of $SrO$ is too large, devitrification is likely to occur and the glass becomes susceptible to breakage. However, $SrO$ is likely to be mixed as impurities into glass. Therefore, if complete removal of $SrO$ is pursued, the raw material batch tends to be expensive to increase the production cost. In reducing the increase in production cost, the lower limit of the content of SrO is preferably not less than 0.0001%, more preferably not less than 0.0003%, and particularly preferably not less than 0.0005%.

BaO is a component that reduces the viscosity of the glass to increase the meltability and formability of the glass. Furthermore, BaO is also a component for adjusting the coefficient of thermal expansion, the refractive index, and so on of $MgO-Al_2O_3-SiO_2$-based crystallized glass. The content of BaO is preferably 0 to 20%, 0 to 15%, 0 to 10%, 0 to 7%, 0 to 6%, 0 to 5.6%, 0 to 5%, 0 to 4%, 0 to 3%, 0 to 1%, or 0 to 0.5%, and particularly preferably 0 to 0.3%. If the content of BaO is too large, devitrification is likely to occur and the glass becomes susceptible to breakage. However, BaO is likely to be mixed as impurities into glass. Therefore, if complete removal of BaO is pursued, the raw material batch tends to be expensive to increase the production cost. In reducing the increase in production cost, the lower limit of the content of BaO is preferably not less than 0.0001%, more preferably not less than 0.0003%, and particularly preferably not less than 0.0005%.

In the low-thermal expansion member according to the present invention, cations of $Li_2O$, $Na_2O$, $K_2O$, CaO, SrO, and BaO are more likely to remain in the residual glass phase after crystallization than Mg cations constituting part of the major crystalline phase. For this reason, if the total content of these components is too large, a refractive index difference between the crystalline phase and the residual glass is likely to occur and, thus, the crystallized glass may easily become clouded. Therefore, $Li_2O+Na_2O+K_2O+CaO+SrO+BaO$ (the sum of the contents of $Li_2O$, $Na_2O$, $K_2O$, CaO, SrO, and BaO) is preferably not more than 9%, not more than 8%, not more than 7%, not less than 6%, not more than 5%, not more than 4%, not more than 3%, not more than 2%, not more than 1%, not more than 0.8%, or not more than 0.5%, and particularly preferably not more than 0.3%.

ZnO is a component that reduces the viscosity of glass to increase the meltability and formability of the glass. Furthermore, ZnO is also a component for adjusting the coefficient of thermal expansion, the refractive index, and so on of $MgO-Al_2O_3-SiO_2$-based crystallized glass. The content of ZnO is preferably 0 to 20%, 0 to 15%, 0 to 10%, more than 0 to 5%, 0.1 to 5%, 0.2 to 4%, 0.3 to 3.5%, 0.4 to 3%, 0.5 to 2.5%, 0.6 to 2%, or 0.7 to 1.9%, and particularly preferably 0.8 to 1.8%. If the content of ZnO is too large, devitrification is likely to occur and the glass becomes susceptible to breakage. If the refractive index difference between the crystalline phase and the glass phase increases, the obtained crystallized glass is likely to become clouded. However, positive incorporation of ZnO reduces the refractive index difference between the crystalline phase and the glass phase to facilitate reduction of clouding of the crystallized glass.

In the low-thermal expansion member according to the present invention, $(SiO_2+ZnO)/(MgO+Al_2O_3)$ (i.e., the ratio between the sum of the contents of $SiO_2$ and ZnO and the sum of the contents of MgO and $Al_2O_3$) is preferably 0.5 to 5, 0.7 to 3, 0.8 to 2.8, 0.9 to 2.7, or 1 to 2.7, and particularly preferably 1.2 to 2.7. If $(SiO_2+ZnO)/(MgO+Al_2O_3)$ is more than the above upper limit, $\alpha$-cordierite crystals are less likely to precipitate and, therefore, the coefficient of thermal expansion of the obtained crystallized glass tends to increase. On the other hand, if $(SiO_2+ZnO)/(MgO+Al_2O_3)$ is less than the above lower limit, the liquidus temperature of glass tends to increase and, therefore, devitrification is likely to occur during production.

$B_2O_3$ is a component that reduces the viscosity of glass to increase the meltability and formability of the glass. The content of $B_2O_3$ is preferably 0 to 20%, 0 to 15%, 0 to 10%, 0 to 5%, 0.1 to 5%, or 0.2 to 3%, and particularly preferably 0.2 to 1%. If the content of $B_2O_3$ is too large, the amount of $B_2O_3$ evaporated during melting becomes large and, thus, the environmental burden increases. In addition, surface crystallization tends to excessively progress, which may make it likely that the mechanical strength of the obtained crystallized glass decreases and may make it impossible to achieve a desired transmittancy. However, $B_2O_3$ is likely to be mixed as impurities into glass. Therefore, if complete removal of $B_2O_3$ is pursued, the raw material batch tends to be expensive to increase the production cost. In reducing the increase in production cost, $B_2O_3$ may be contained in glass at a content of not less than 0.0001%, not less than 0.0003%, or particularly not less than 0.0005%.

$P_2O_5$ is a component that reduces the viscosity of glass to increase the meltability and formability of the glass. On the other hand, if the content of $P_2O_5$ is too large, the amount of $MgO-Al_2O_3-SiO_2$-based crystals precipitated becomes small and, thus, the coefficient of thermal expansion of the obtained crystallized glass tends to increase. The content of $P_2O_5$ is preferably 0 to 20%, 0 to 15%, 0 to 10%, or 0 to 5%, and particularly preferably 0 to 3%. However, $P_2O_5$ is likely to be mixed as impurities into glass. Therefore, if complete removal of $P_2O_5$ is pursued, the raw material batch tends to be expensive to increase the production cost. In reducing the increase in production cost, $P_2O_5$ may be contained in glass at a content of not less than 0.0001, not less than 0.0003%, not less than 0.0005%, not less than 0.001%, not less than 0.005%, not less than 0.01%, not less than 0.05%, or particularly not less than 0.1%.

$TiO_2$ is a component that reduces the viscosity of glass to increase the meltability and formability of the glass. Furthermore, $TiO_2$ is also a component that promotes crystallization and can precipitate $MgO-Al_2O_3-SiO_2$-based crystals well to contribute to achievement of desired low-thermal expansion characteristics and concurrently an increase in transmittancy. On the other hand, if $TiO_2$ is much contained in glass, the precipitated crystals may enlarge, which may decrease the transmittancy. In addition, the coloration of the glass is significantly intensified. Particularly, if zirconia titanate-based crystals containing $ZrO_2$ and $TiO_2$ precipitate, electrons in the crystals transition from the valence band of oxygen serving as a ligand to the conduction bands of zirconia and titanium serving as central metals (LMCT transition), which involves the coloration of crystallized glass. Furthermore, if titanium remains in the residual glass phase, LMCT transition may occur from the valence band of the $SiO_2$ skeleton to the conduction band of tetravalent titanium in the residual glass phase. In addition, d-d transition occurs in trivalent titanium in the residual glass phase, which involves the coloration of the crystallized glass. In the case where titanium and iron coexist, coloration like ilmenite ($FeTiO_3$) may develop. It is known that, in another case, the coexistence of titanium and tin intensifies the yellowish color of glass. Therefore, the content of $TiO_2$ is preferably not more than 20%, not more than 15%, not more than 10%, not more than 8%, or not more than 5%, and particularly preferably not more than 4%, preferably more than 0%, not less than 0.005%, not less than 0.01%, not less than 0.1%, not less than 1%, not less than 2%, not less than 2.5%, or not less than 3%, and particularly preferably not less than 3.3%. In accordance with the application of the low-thermal expansion member according to the present invention, the content of $TiO_2$ may be controlled to adjust the transmittancy. For example, in the case where a colored (for example, black) appearance is required for a cooker top plate or the like, the content of $TiO_2$ may be not less than 4%.

$ZrO_2$ is a component that promotes crystallization, but an excessive large content of $ZrO_2$ makes it likely that coarse $ZrO_2$ crystals precipitate to make the crystallized glass devitrifiable and susceptible to breakage. Therefore, the content of $ZrO_2$ is preferably not more than 20%, not more than 15%, not more than 10%, not more than 5%, or not more than 3%, and particularly preferably not more than 1%. On the other hand, by adding an appropriate amount of $ZrO_2$ into glass, the crystallite size and the amount of precipitation of the $MgO-Al_2O_3-SiO_2$-based crystals can be controlled and, thus, can contribute to achievement of desired low-thermal expansion characteristics and an increase in transmittancy. Therefore, in obtaining the above effects with the use of $ZrO_2$, the content of $ZrO_2$ is preferably more than 0%, not less than 0.005%, not less than 0.01%, not less than 0.1%, not less than 1%, or not less than 2%, and particularly preferably not less than 3.3%.

Regarding crystallized glasses, by reducing the refractive index difference between the crystalline phase and the residual glass phase, light scattering is reduced and, thus, the transmittancy can be increased. In $MgO-Al_2O_3-SiO_2$-based crystallized glass, ZnO is a component that adjusts the refractive index of the residual glass. On the other hand, $TiO_2$ and $ZrO_2$ are components capable of functioning as crystal nuclei, promote precipitation of crystals, and, therefore, have influence on the refractive index of the crystalline phase. Therefore, in view of further increasing the transmittancy of the low-thermal expansion member according to the present invention, it is preferred to suitably control the contents of these components. Specifically, $ZnO-(TiO_2+ZrO_2)$ (i.e., the difference between the content of ZnO and the sum of the contents of $TiO_2$ and $ZrO_2$) is preferably - 15 to 5%, -10 to 4%, or -5 to 3%, and particularly preferably -5 to 2%.

$HfO_2$ is a component that increases the Young's modulus, modulus of rigidity, and so on of glass and also a component that reduces the viscosity of glass to increase the meltability and formability of the glass. If the content of $HfO_2$ is too large, the mechanical strength of the obtained crystallized glass becomes excessively high, which makes it difficult to subject the crystallized glass to processing or the like and thus makes it difficult to obtain a suitable surface condition and, eventually, an excellent transmittancy. Furthermore, the source material for $HfO_2$ is expensive, leading to an increased production cost. In view of the above, the content of $HfO_2$ is preferably not more than 10%, not more than 5%, not more than 1%, not more than 0.5%, not more than 0.3%, or not more than 0.1%, and particularly preferably not more than 0.05%. The lower limit of the content of $HfO_2$ is not particularly limited and not less than 0%. However, $HfO_2$ is a component that can be mixed into glass from raw materials used and the amount of $HfO_2$ mixed varies depending on the composition of the raw materials. Therefore, actually, it is acceptable for the glass to contain $HfO_2$ in an amount of not less than 0.0001%, not less than 0.0003%, or particularly not less than 0.0005%.

$SnO_2$ causes a reaction of $SnO_2 \rightarrow SnO+1/2O_2$ under high temperature to emit $O_2$ gas into glass melt. This reaction is known as a fining mechanism of $SnO_2$ and the $O_2$ gas emitted during the reaction has not only a "defoaming effect" of expanding fine bubbles present in the glass melt and releasing them to the outside of the glass system, but also a "stirring effect" of mixing the glass melt. Furthermore, in the low-thermal expansion member according to the present invention, $SnO_2$ is also a component that promotes crystallization. Therefore, by incorporating an appropriate amount of $SnO_2$ into glass, a crystallized glass having a desired transmittancy and a desired coefficient of thermal expansion can be easily obtained. On the other hand, $SnO_2$ is a component that, if much contained in glass, significantly intensifies the coloration of the glass and concurrently makes it likely that devitrification increases. The upper limit of $SnO_2$ is preferably not more than 20%, not more than 15%, not more than 10%, not more than 5%, not more than 3%, not more than 1%, or not more than 0.5%, and particularly preferably not more than 0.3%, and the lower limit of $SnO_2$ is preferably more than 0%, not less than 0.005%, not less than 0.01%, or not less than 0.05%, and particularly preferably not less than 0.1%. However, $SnO_2$ is likely to be mixed as impurities into glass. Therefore, if complete removal of $SnO_2$ is pursued, the raw material batch tends to be expensive to increase the production cost. Therefore, it is possible to reduce the increase in production cost by restricting the lower limit of the content of $SnO_2$ as described above.

The low-thermal expansion member according to the present invention may contain, other than the above components, the following components.

$Fe_2O_3$ is a component that intensifies the coloration of glass and also a component that significantly intensifies the coloration, particularly, by interaction with $TiO_2$ and/or $SnO_2$. The content of $Fe_2O_3$ is preferably not more than 0.4%, not more than 0.1%, not more than 0.08%, not more than 0.06%, not less than 0.05%, not more than 0.04%, not more than 0.035%, not more than 0.03%, not more than 0.02%, not more than 0.015%, not more than 0.013%, or not more than 0.012%, and particularly preferably not more than 0.011%. However, $Fe_2O_3$ is likely to be mixed as impurities into glass. Therefore, if complete removal of $Fe_2O_3$ is pursued, the raw material batch tends to be expensive to increase the production cost. In order to reduce the increase in production cost, the lower limit of the content of $Fe_2O_3$ is preferably not less than 0.0001%, not less than 0.0002%, not less than 0.0003%, or not less than 0.0005%, and particularly preferably not less than 0.001%. In accordance with the application of the low-thermal expansion member according to the present invention, the content of $Fe_2O_3$ may be controlled to adjust the transmittancy. For example, in the case where a colored appearance is required for a cooker top plate or the like, the content of $Fe_2O_3$ may be not less than 0.1%, not less than 0.3%, or particularly not less than 1%.

In the case where titanium and iron coexist, coloration like ilmenite ($FeTiO_3$) may develop. Particularly, in the case of coexistence of titanium and iron in $MgO$-$Al_2O_3$-$SiO_2$-based crystallized glasses, titanium and iron components having not been precipitated as crystal nuclei or major crystals by crystallization may remain in the residual glass after crystallization and promotes the development of the coloration. These components may be able to be reduced in amount from a design perspective. However, $TiO_2$ and $Fe_2O_3$ are likely to be mixed as impurities into glass. Therefore, if complete removal of these components is pursued, the raw material batch tends to be expensive to increase the production cost. Hence, from the viewpoint of reducing the coloration of the obtained crystallized glass, $TiO_2/(TiO_2+Fe_2O_3)$ is preferably 0 to 1. On the other hand, in order to further reduce the production cost, the crystallized glass may contain both the components within an acceptable range of coloration. In this case, $TiO_2/(TiO_2+Fe_2O_3)$ is preferably 0.001 to 0.999, 0.003 to 0.997, 0.005 to 0.995, 0.007 to 0.993, 0.009 to 0.991, 0.01 to 0.99, 0.1 to 0.9, 0.15 to 0.85, or 0.2 to 0.8, and particularly preferably 0.25 to 0.75. Thus, a high-transmittancy low-thermal expansion member can be easily obtained at low cost.

$As_2O_3$ causes a reaction of $As_2O_5 \rightarrow As_2O_3+O_2$ under high temperature to emit $O_2$ gas into glass melt. This reaction is known as a fining mechanism of $As_2O_3$ and the $O_2$ gas emitted during the reaction has a "defoaming effect" of expanding fine bubbles present in the glass melt and releasing them to the outside of the glass system. On the other hand, because $As_2O_3$ is a toxic component, if it is much contained in glass, the environment may be contaminated, for example, during the production process of glass or during treatment of waste glass. The content of $As_2O_3$ is preferably 0 to 20%, 0 to 5%, or 0 to 1%, and particularly preferably 0 to 0.1%. However, $As_2O_3$ is likely to be mixed as impurities into glass. Therefore, if complete removal of $As_2O_3$ is pursued, the raw material batch tends to be expensive to increase the production cost. In order to reduce the increase in production cost, the lower limit of the content of $As_2O_3$ is preferably not less than 0.0003%, not less than 0.0005%, not less than 0.001%, not less than 0.005%, or not less than 0.01%, and particularly preferably not less than 0.02%.

$Sb_2O_3$ causes a reaction of $Sb_2O_5 \rightarrow Sb_2O_3+O_2$ under high temperature to emit $O_2$ gas into glass melt. This reaction is known as a fining mechanism of $Sb_2O_3$ and the $O_2$ gas emitted during the reaction has a "defoaming effect" of expanding fine bubbles present in the glass melt and releasing them to the outside of the glass system. On the other hand, because $Sb_2O_3$ is a toxic component, if it is much contained in glass, the environment may be contaminated, for example, during the production process of glass or during treatment of waste glass. The content of $Sb_2O_3$ is preferably 0 to 20%, 0 to 5%, or 0 to 1%, and particularly preferably 0 to 0.1%. However, $Sb_2O_3$ is likely to be mixed as impurities into glass. Therefore, if complete removal of $Sb_2O_3$ is pursued, the raw material batch tends to be expensive to increase the production cost. In order to reduce the increase in production cost, the lower limit of the content of $Sb_2O_3$ is preferably not less than 0.0003%, not less than 0.0005%, not less than 0.001%, not less than 0.005%, or not less than 0.01%, and particularly preferably not less than 0.02%.

$Cl_2$ causes a reaction of $NaCl \rightarrow NaCl$ gas under high temperature to emit NaCl gas into glass melt. This reaction is known as a fining mechanism of $Cl_2$ and the NaCl gas emitted during the reaction has a "defoaming effect" of expanding fine bubbles present in the glass melt and releasing them to the outside of the glass system. On the other hand, because $Cl_2$ is a toxic component, if it is much contained in glass, the environment may be contaminated, for example, during the production process of glass or during treatment of waste glass. The content of $Cl_2$ is preferably 0 to 20%, 0 to 5%, or 0 to 1%, and particularly preferably 0 to 0.1%. However, if complete removal of $Cl_2$ is pursued, the raw material batch tends to be expensive to increase the production cost. In order to reduce the increase in production cost, the lower limit of the content of $Cl_2$ is preferably not less than 0.0003%, not less than 0.0005%, not less than 0.001%, not less than 0.005%, or not less than 0.01%, and particularly preferably not less than 0.02%.

Since $As_2O_3$ and $Sb_2O_3$ are toxic components, much incorporation of them into glass may cause the environment to be contaminated, for example, during the production process of glass or during treatment of waste glass. Therefore, the upper limit of $As_2O_3+Sb_2O_3$ (the sum of the contents of $As_2O_3$ and $Sb_2O_3$) is preferably not more than 20%, not more than 5%, not more than 1%, or not more than 0.5%, and particularly preferably less than 0.3. Meanwhile, these components function as fining agents in glass melt and have a "defoaming effect" of expanding fine bubbles present in the glass melt and releasing them to the outside of the glass system. Therefore, in increasing the ability to defoam glass, the lower limit of the content of $As_2O_3+Sb_2O_3$ may be more than 0, not less than 0.0003%, not less than 0.0005%, not less than 0.001%, not less than 0.005%, not less than 0.01%, not less than 0.05%, or particularly not less than 0.1%.

$SnO_2$, $As_2O_3$, $Sb_2O_3$, and $Cl_2$ are toxic and, therefore, much incorporation of them into glass may cause the environment to be contaminated, for example, during the production process of glass or during treatment of waste glass. Therefore, the upper limit of $SnO_2+As_2O_3+Sb_2O_3+Cl_2$ (the sum of the contents of $SnO_2$, $As_2O_3$, $Sb_2O_3$, and $Cl_2$) is preferably not more than 20%, not more than 5%, not more than 1%, or not more than 0.3%, and particularly preferably not more than 0.2%. Meanwhile, these components function as fining agents in glass melt and have a "defoaming effect" of expanding fine bubbles present in the glass melt and releasing them to the outside of the glass system. Therefore, in increasing the ability to defoam glass, at least one of $SnO_2$, $As_2O_3$, $Sb_2O_3$, and $Cl_2$ is preferably contained in glass and the lower limit of the content of $SnO_2+As_2O_3+Sb_2O_3+Cl_2$ may be more than 0, not less than 0.0003%, not less than 0.0005%, not less than 0.001%, not less than 0.005%, not less than 0.01%, not less than 0.05%, or particularly not less than 0.1%.

$SnO_2$ has not only a fining effect, but also the effect of promoting crystallization. In addition, $SnO_2$ is lower in toxicity than $As_2O_3$, $Sb_2O_3$, and $Cl_2$ having a fining effect like $SnO_2$ and therefore less likely to contaminate the environment. For this reason, in order to lower the environmental burden, increase the ability to defoam glass, and concurrently promote the crystallization of the glass to efficiently obtain desired characteristics, among the above components $SnO_2$, $As_2O_3$, $Sb_2O_3$, and $Cl_2$ having a fining effect, $SnO_2$ is preferably positively contained in glass and the lower limit of $SnO_2/(As_2O_3+Sb_2O_3+SnO_2+Cl_2)$ (i.e., the ratio between the content of $SnO_2$ and the sum of the contents of $SnO_2$, $As_2O_3$, $Sb_2O_3$, and $Cl_2$) is preferably not less than 0.00003, not less than 0.0003, not less than 0.003, not less than 0.03, not less than 0.05, not less than 0.1, or not less than 0.5. The upper limit is not particularly limited, but is actually not more than 10%.

Pt is a component that can be mixed in the ionic, colloidal, metallic or other states into glass and causes the glass to develop a yellowish to dark brown color. This tendency is significant after crystallization. Furthermore, the inventors found from intensive studies that the incorporation of Pt may have an effect on the nucleation and crystallizing behavior of crystallized glass to make the crystallized glass easily clouded. Therefore, the content of Pt is preferably not more than 60 ppm, not more than 30 ppm, not more than 7 ppm, not more than 6 ppm, not more than 5 ppm, not more than 4 ppm, not more than 3 ppm, not more than 2 ppm, not more than 1.6 ppm, not more than 1.4 ppm, not more than 1.2 ppm, not more than 1 ppm, not more than 0.9 ppm, not more than 0.8 ppm, not more than 0.7 ppm, not more than 0.6 ppm, not more than 0.5 ppm, not more than 0.45 ppm, not more than 0.40 ppm, or not more than 0.35 ppm, and particularly preferably not more than 0.30 ppm. Although the incorporation of Pt should be avoided as much as possible, there may be a case where, with the use of general melting facilities, Pt members need to be used in order to obtain a homogeneous glass. Therefore, if complete removal of Pt is pursued, the production cost tends to increase. In the absence of any adverse effect on coloring, for the purpose of reducing the increase in production cost, the lower limit of the content of Pt is preferably not less than 0.0001 ppm, not less than 0.001 ppm, not less than 0.005 ppm, not less than 0.01 ppm, not less than 0.02 ppm, not less than 0.03 ppm, not less than 0.04 ppm, not less than 0.05 ppm, or not less than 0.06 ppm, and particularly preferably not less than 0.07 ppm. Furthermore, so long as coloration is permitted, Pt may be used as an agent for promoting crystallization. In doing so, Pt may be used alone or used in combination with another or other components. In using Pt as an agent for promoting crystallization, its form (colloid, metallic crystals or so on) is not particularly limited.

Rh is a component that can be mixed in the ionic, colloidal, metallic or other states into glass and Rh, like Pt, causes the crystallized glass to develop a yellowish to ginger color and tends to make the crystallized glass clouded. Therefore, the content of Rh is preferably not more than 7 ppm, not more than 6 ppm, not more than 5 ppm, not more than 4 ppm, not more than 3 ppm, not more than 2 ppm, not more than 1.6 ppm, not more than 1.4 ppm, not more than 1.2 ppm, not more than 1 ppm, not more than 0.9 ppm, not more than 0.8 ppm, not more than 0.7 ppm, not more than 0.6 ppm, not more than 0.5 ppm, not more than 0.45 ppm, not more than 0.40 ppm, or not more than 0.35 ppm, and particularly preferably not more than 0.30 ppm. Although the incorporation of Rh should be avoided as much as possible, there may be a case where, with the use of general melting facilities, Rh members need to be used in order to obtain a homogeneous glass. Therefore, if complete removal of Rh is pursued, the production cost tends to increase. In the absence of any adverse effect on coloring, for the purpose of reducing the increase in production cost, the lower limit of the content of Rh is preferably not less than 0.0001 ppm, not less than 0.001 ppm, not less than 0.005 ppm, not less than 0.01 ppm, not less than 0.02 ppm, not less than 0.03 ppm, not less than 0.04 ppm, not less than 0.05 ppm, or not less than 0.06 ppm, and particularly preferably not less than 0.07 ppm. Furthermore, so long as coloration is permitted, Rh may be used as an agent for promoting crystallization. In doing so, Rh may be used alone or used in combination with another or other components. In using Rh as an agent for promoting crystallization, its form (colloid, metallic crystals or so on) is not particularly limited.

The content of Pt+Rh (the total content of Pt and Rh) is preferably not more than 60 ppm, not more than 30 ppm, not more than 9 ppm, not more than 8 ppm, not more than 7 ppm, not more than 6 ppm, not more than 5 ppm, not more than 4.75 ppm, not more than 4.5 ppm, not more than 4.25 ppm, not more than 4 ppm, not more than 3.75 ppm, not more than 3.5 ppm, not more than 3.25 ppm, not more than 3 ppm, not more than 2.75 ppm, not more than 2.5 ppm, not more than 2.25 ppm, not more than 2 ppm, not more than 1.75 ppm, not more than 1.5 ppm, not more than 1.25 ppm, not more than 1 ppm, not more than 0.95 ppm, not more than 0.9 ppm, not more than 0.85 ppm, not more than 0.8 ppm, not more than 0.75 ppm, not more than 0.7 ppm, not more than 0.65 ppm, not more than 0.60 ppm, not more than 0.55 ppm, not more than 0.50 ppm, not more than 0.45 ppm, not more than 0.40 ppm, or not more than 0.35 ppm, and particularly preferably not more than 0.30 ppm. Although the incorporation of Pt and Rh should be avoided as much as possible, there may be a case where, with the use of general melting facilities, Pt members and Rh members need to be used in order to obtain a homogeneous glass. Therefore, if complete removal of Pt and Rh is pursued, the production cost tends to increase. In the absence of any adverse effect on coloring, for the purpose of reducing the increase in production cost, the lower limit of Pt+Rh is preferably not less than 0.0001 ppm, not less than 0.001 ppm, not less than 0.005 ppm, not less than 0.01 ppm, not less than 0.02 ppm, not less than 0.03 ppm, not less than 0.04 ppm, not less than 0.05 ppm, or not less than 0.06 ppm, and particularly preferably not less than 0.07 ppm.

$MoO_3$ is a component that reduces the viscosity of glass to increase the meltability and formability of the glass. The content of $MoO_3$ is preferably not less than 0%, more preferably more than 0%, and particularly preferably not less than 0.0001%. On the other hand, if the content of $MoO_3$ is too large, glass is likely to be colored and devitrified matter containing Mo is likely to precipitate, thus increasing the production load. Therefore, the content of $MoO_3$ is preferably not more than 20%, not more than 15%, not more than 10%, or not more than 5%, and particularly preferably not more than 3%. In accordance with the application of the low-thermal expansion member according to the present invention, the content of $MoO_3$ may be controlled to adjust the transmittancy. For example, in the case where a colored appearance is required for a cooker top plate or the like, the content of $MoO_3$ may be not less than 0.01%, not less than 0.1%, not less than 0.3%, or particularly not less than 0.5%.

$V_2O_5$, CuO, NiO, $MnO_2$, $Cr_2O_3$, $Nd_2O_3$, $WO_3$, and $CO_3O_4$ are components that can color the low-thermal expansion member. Therefore, in accordance with the application of the low-thermal expansion member according to the present invention, these components may be contained in glass to adjust the transmittancy of the low-thermal expansion member. For example, in the case where a colored appearance is required for a cooker top plate or the like, the content of each of these components may be more than 0 to 5%, 0.01 to 4%, 0.05 to 3.5%, or particularly 0.1 to not less than 3%.

In the absence of any adverse effect in obtaining the desired characteristics and for the purpose of promoting crystallization, coloring the low-thermal expansion member or giving any other function to the low-thermal expansion member, the low-thermal expansion member according to the present invention may contain, other than the components described thus far, minor components, such as, for example, $H_2$, $CO_2$, CO, $H_2O$, He, Ne, Ar, and $N_2$, each up to 0.1%.

When Ag, Au, Pd, Ir, Sc, Ce, Pr, Pm, Sm, Eu, Gd, Tb, Dy, Ho, Er, Tm, Yb, Lu, Ac, Th, Pa, U or so on is deliberately added into glass, the raw material cost increases and, as a result, the production cost tends to increase. On the other hand, when glass containing Ag, Au and/or so on is subjected to light irradiation or heat treatment, agglomerates of these components are formed and crystallization can be promoted based on these agglomerates. Furthermore, Pd and so on have various catalytic actions. When glass contains these components, the crystallized glass can be given specific functions. In view of the above circumstances, in the case where the purpose is to promote crystallization, color the low-thermal expansion member or give other functions, the glass may contain each of the above components in a range of not more than 1%, not more than 0.5%, not more than 0.3%, or not more than 0.1%. In other cases, the content of each of the above components is preferably not more than 500 ppm, not more than 300 ppm, or not more than 100 ppm, and particularly preferably not more than 10 ppm.

In the absence of any adverse effect in further obtaining desired characteristics, the low-thermal expansion member according to the present invention may contain $SO_3$, MnO, $Y_2O_3$, $La_2O_3$, $HfO_2$, $Ta_2O_5$, $Nb_2O_5$, $RfO_2$, and so on up to 10% in total. However, the raw material batch of the above components is expensive and, thus, the production cost tends to increase. Therefore, these components may not be incorporated into glass unless the circumstances are exceptional.

In view of the description thus far, a preferred composition range of the low-thermal expansion member according to the present invention is, in terms of % by mass, 0 to 70% $SiO_2$, 10 to 50% $Al_2O_3$, 3 to 40% MgO, 0 to 10% $Li_2O$, 0 to 20% $Na_2O$, 0 to 20% $K_2O$, 0 to 20% CaO, 0 to 20% SrO, 0 to 20% BaO, 0 to 20% ZnO, 0 to 20% $B_2O_3$, 0 to 20% $P_2O_5$, 0 to 20% $TiO_2$, 0 to 20% $ZrO_2$, 0 to 20% $SnO_2$, not more than 0.1% $Fe_2O_3$, not more than 7 ppm Pt, not more than 7 ppm Rh, 9 ppm Pt+Rh, and more than 0% $MoO_3$. Another preferred composition range thereof is 0 to 5.6% BaO, 2.5 to 15 $SiO_2/Al_2O_3$, and 5.4 to 15 $SiO_2/MgO$, still another preferred composition range is 0 to 5.6% BaO, 2.5 to 15 $SiO_2/Al_2O_3$, and 1.8 to 15 $Al_2O_3/MgO$, and yet still another preferred composition range is 55.5 to 90% $SiO_2$ and more than 0% ZnO.

A precursor of a low-thermal expansion member according to the present invention is made of, for example, a crystallizable glass (an original glass before being crystallized). In this case, the respective ranges of contents of the components of the crystallizable glass are the same as those described above. Furthermore, for example, when the precursor of a low-thermal expansion member is subjected to heat treatment in predetermined conditions, a low-thermal expansion member can be obtained.

In the low-thermal expansion member according to the present invention, the β-OH value is preferably more than 0 to 2/mm, 0.001 to 2/mm, 0.01 to 1.5/mm, 0.02 to 1.5/mm, 0.03 to 1.2/mm, 0.04 to 1.5/mm, 0.05 to 1.4/mm, 0.06 to 1.3/mm, 0.07 to 1.2/mm, 0.08 to 1.1/mm, 0.08 to 1/mm, 0.08 to 0.9/mm, 0.08 to 0.85/mm, 0.08 to 0.8/mm, 0.08 to 0.75/mm, 0.08 to 0.74/mm, 0.08 to 0.73/mm, 0.08 to 0.72/mm, or 0.08 to 0.71/mm, and particularly preferably 0.08 to 0.7/mm. When the β-OH value is in the above range, the glass quality is less likely to decrease. Specifically, if the β-OH value is too small, the amount of water vapor produced during melting of the raw material batch reduces. Therefore, the effect of stirring the raw material batch due to production of water vapor is reduced, which makes it less likely that the initial reaction of the raw material batch is promoted and, thus, makes it likely that the production load increases. On the other hand, if the β-OH value is too large, bubbles are likely to be produced at the interface between a metallic member, such as Pt, or a refractory member and glass melt, which makes it likely that the quality of the obtained glass member decreases. In addition, the glass transition point, the deformation point, the strain point, the annealing point, and the softening point may decrease or the coefficient of thermal expansion may increase, which deteriorates the thermal resistance and the thermal shock resistance and, therefore, makes the glass member unsuitable for use under high temperature.

In the low-thermal expansion member according to the present invention, the density is preferably 1.2 to 3.50 $g/cm^3$, 2.00 to 3.40 $g/cm^3$, 2.10 to 3.35 $g/cm^3$, or 2.20 to 3.30 $g/cm^3$, and particularly preferably 2.30 to 3.25 $g/cm^3$. If the density is too small, the gas permeability of the glass increases and, thus, the glass may be contaminated during a long-term storage. On the other hand, if the density is too large, the weight per unit area becomes large and, therefore, the member becomes difficult to handle.

In the low-thermal expansion member according to the present invention, the transmittance (total transmittance) at a thickness of 4 mm and a wavelength of 380 nm is preferably not less than 0.5%, not less than 1%, not less than 3%, not less than 5%, not less than 10%, not less than 15%, not less than 20%, not less than 25%, not less than 30%, not less than 35%, not less than 40%, not less than 45%, not less than 50%, not less than 55%, not less than 60%, not less than 65%, not less than 70%, not less than 75%, not less than 78%, not less than 80%, not less than 81%, not less than 82%, or not less than 83%, and particularly preferably not less than 84%. If the transmittance at a wavelength of 380 nm is too low, the yellow coloration may deepen and the transparency of the member may decrease, resulting in failure to obtain a desired transmittancy. Depending on the application, even a low transmittance at a wavelength of 380 nm may be acceptable. In this case, the transmittance at a wavelength of 380 nm is not limited to the above and may be less than 0.5%.

In the low-thermal expansion member according to the present invention, the transmittance (total transmittance) at a thickness of 4 mm and a wavelength of 800 nm is preferably not less than 0.5%, not less than 1%, not less than 3%, not less than 5%, not less than 10%, not less than 15%, not less than 20%, not less than 25%, not less than 30%, not less than 35%, not less than 40%, not less than 45%, not less than 50%, not less than 55%, not less than 60%, not less than 65%, not less than 70%, not less than 75%, not less than 78%, not less than 80%, not less than 81%, not less than 82%, not less than 83%, not less than 84%, not less than 85%, not less than 86%, or not less than 87%, and particularly preferably not less than 88%. If the transmittance at a wavelength of 800 nm is too low, the appearance is likely to become greenish. Particularly, when the member is used in medical applications, such as vein authentication, the higher the transmittance at a wavelength of 800 nm, the more preferred it is. Depending on the application, even a low transmittance at a wavelength of 800 nm may be acceptable. In this case, the transmittance at a wavelength of 800 nm is not limited to the above and may be less than 0.5%.

In the low-thermal expansion member according to the present invention, the transmittance (total transmittance) at a thickness of 4 mm and a wavelength of 1200 nm is preferably not less than 0.5%, not less than 1%, not less than 3%, not less than 5%, not less than 10%, not less than 15%, not less than 20%, not less than 25%, not less than 30%, not less than 35%, not less than 40%, not less than 45%, not less than 50%, not less than 55%, not less than 60%, not less than 65%, not less than 70%, not less than 72%, not less than 74%, not less than 76%, not less than 78%, not less than 80%, not less than 81%, not less than 82%, not less than 83%, not less than 84%, not less than 85%, not less than 86%, not less than 87%, or not less than 88%, and particularly preferably not less than 89%. Particularly, when the member is used in an infrared camera or applications for infrared communication, such as a remote controller, the higher the transmittance at a wavelength of 1200 nm, the more preferred it is. Depending on the application, even a low transmittance at a wavelength of 1200 nm may be acceptable. In this case, the transmittance at a wavelength of 1200 nm is not limited to the above and may be less than 0.5%.

In the low-thermal expansion member according to the present invention, the liquidus temperature is preferably not higher than 1540°C, not higher than 1535°C, not higher than 1530°C, not higher than 1525°C, not higher than 1520°C, not higher than 1515°C, not higher than 1510°C, not higher than 1505°C, not higher than 1500°C, not higher than 1495°C, not higher than 1490°C, not higher than 1485°C, not higher than 1480°C, not higher than 1475°C, not higher than 1470°C, not higher than 1465°C, not higher than 1460°C, not higher than 1455°C, not higher than 1450°C, not higher than 1445°C, not higher than 1440°C, not higher than 1435°C, not higher than 1430°C, not higher than 1425°C, not higher than 1420°C, or not higher than 1415°C, and particularly preferably not higher than 1410°C. If the liquidus temperature is too high, devitrification is likely to occur during production. On the other hand, when the liquidus temperature is 1480°C or below, the member can be easily produced by a roll process or the like. When the liquidus temperature is 1450°C or below, the member can be easily produced by a casting process or the like. When the liquidus temperature is 1410°C or below, the member can be easily produced by a fusion process or the like.

In the low-thermal expansion member according to the present invention, the liquidus viscosity (the logarithmic value of the viscosity at the liquidus temperature) is not less than 1.6, not less than 1.70, not less than 1.75, not less than 1.80, not less than 1.85, not less than 1.90, not less than 1.95, not less than 2.00, not less than 2.05, not less than 2.10, not less than 2.15, not less than 2.20, not less than 2.25, not less than 2.30, not less than 2.35, not less than 2.40, not less than 2.45, not less than 2.50, not less than 2.55, not less than 2.60, not less than 2.65, not less than 2.70, not less than 2.75, not less than 2.80, not less than 2.85, not less than 2.90, not less than 2.95, not less than 3.00, not less than 3.05, not less than 3.10, not less than 3.15, not less than 3.20, not less than 3.25, not less than 3.30, not less than 3.35, not less than 3.40, not less than 3.45, not less than 3.50, not less than 3.55, not less than 3.60, or not less than 3.65, and particularly preferably not less than 3.70. If the liquidus viscosity is too low, devitrification is likely to occur during production. On the other hand, when the liquidus viscosity is not less than 3.40, the member can be easily produced by a roll process or the like. When the liquidus viscosity is not less than 3.50, the member can be easily produced by a casting process or the like. When the liquidus viscosity is not less than 3.70, the member can be easily produced by a fusion process or the like.

In the low-thermal expansion member according to the present invention, the coefficient of thermal expansion at 30 to 380°C is preferably not more than $30 \times 10^{-7}$/°C, not more than $25 \times 10^{-7}$/°C, not more than $20 \times 10^{-7}$/°C, not more than $18 \times 10^{-7}$/°C, not more than $16 \times 10^{-7}$/°C, not more than $14 \times 10^{-7}$/°C, not more than $13 \times 10^{-7}$/°C, not more than $12 \times 10^{-7}$/°C, not more than $11 \times 10^{-7}$/°C, not more than $10 \times 10^{-7}$/°C, not more than $9 \times 10^{-7}$/°C, not more than $8 \times 10^{-7}$/°C, not more than $7 \times 10^{-7}$/°C, not more than $6 \times 10^{-7}$/°C, not more than $5 \times 10^{-7}$/°C, not more than $4 \times 10^{-7}$/°C, or not more than $3 \times 10^{-7}$/°C, and particularly preferably not more than $2 \times 10^{-7}$/°C. When the dimensional stability and/or the thermal shock resistance are particularly required, the coefficient of thermal expansion is preferably $-5 \times 10^{-7}$/°C to $5 \times 10^{-7}$/°C, $-3 \times 10^{-7}$/°C to $3 \times 10^{-7}$/°C, $-2.5 \times 10^{-7}$/°C to $2.5 \times 10^{-7}$/°C, $-2 \times 10^{-7}$/°C to $2 \times 10^{-7}$/°C, $-1.5 \times 10^{-7}$/°C to $1.5 \times 10^{-7}$/°C, or $-1 \times 10^{-7}$/°C to $1 \times 10^{-7}$/°C, and particularly preferably $-0.5 \times 10^{-7}$/°C to $0.5 \times 10^{-7}$/°C.

In the low-thermal expansion member according to the present invention, the coefficient of thermal expansion at 30 to 750°C is preferably not more than $30 \times 10^{-7}$/°C, not more than $25 \times 10^{-7}$/°C, not more than $20 \times 10^{-7}$/°C, not more than $18 \times 10^{-7}$/°C, not more than $16 \times 10^{-7}$/°C, not more than $14 \times 10^{-7}$/°C, not more than $13 \times 10^{-7}$/°C, not more than $12 \times 10^{-7}$/°C, not more than $11 \times 10^{-7}$/°C, not more than $10 \times 10^{-7}$/°C, not more than $9 \times 10^{-7}$/°C, not more than $8 \times 10^{-7}$/°C, not more than $7 \times 10^{-7}$/°C, not more than $6 \times 10^{-7}$/°C, not more than $5 \times 10^{-7}$/°C, or not more than $4 \times 10^{-7}$/°C, and particularly preferably not more than $3 \times 10^{-7}$/°C. When the dimensional stability and/or the thermal shock resistance are particularly required, the coefficient of thermal expansion is preferably $-15 \times 10^{-7}$/°C to $15 \times 10^{-7}$/°C, $-12 \times 10^{-7}$/°C to $12 \times 10^{-7}$/°C, $-10 \times 10^{-7}$/°C to $10 \times 10^{-7}$/°C, $-8 \times 10^{-7}$/°C to $8 \times 10^{-7}$/°C, $-6 \times 10^{-7}$/°C to $6 \times 10^{-7}$/°C, $-5 \times 10^{-7}$/°C to $5 \times 10^{-7}$/°C, $-4.5 \times 10^{-7}$/°C to $4.5 \times 10^{-7}$/°C, $-4 \times 10^{-7}$/°C to $4 \times 10^{-7}$/°C, $-3.5 \times 10^{-7}$/°C to $3.5 \times 10^{-7}$/°C, $-3 \times 10^{-7}$/°C to $3 \times 10^{-7}$/°C, $-2.5 \times 10^{-7}$/°C to $2.5 \times 10^{-7}$/°C, $-2 \times 10^{-7}$/°C to $2 \times 10^{-7}$/°C, $-1.5 \times 10^{-7}$/°C to $1.5 \times 10^{-7}$/°C, or $-1 \times 10^{-7}$/°C to $1 \times 10^{-7}$/°C, and particularly preferably $-0.5 \times 10^{-7}$/°C to $0.5 \times 10^{-7}$/°C.

The low-thermal expansion member according to the present invention may be subjected to chemical strengthening or other treatments. Regarding the treatment conditions for chemical strengthening treatment, the treatment time and the treatment temperature are sufficient to be appropriately selected in consideration of the glass composition, the crystallinity, the type of molten salt, and so on. For example, for the purpose of facilitating chemical strengthening after crystallization, a glass composition containing much $Na_2O$, which is likely to be contained in residual glass, may be selected or the crystallinity may be deliberately lowered. Furthermore, the molten salt may contain alkali metals, such as Li, Na, and K, singly or in combination. Moreover, aside from an ordinary single-step strengthening process, a multistep chemical strengthening process may be selected. The member may be subjected to a physical strengthening process, such as air cooling strengthening. Furthermore, a film may be applied to the surface of the member by sputtering or other methods, in which case the physical and chemical durability can be increased.

Next, a description will be given of a method for producing a low-thermal expansion member according to the present invention.

First, a batch of raw materials prepared to provide a glass having the above-described composition is loaded into a glass melting furnace and melted at 1600 to 1700°C and the molten glass is then formed into shape. Thus, a crystallizable glass as a precursor (a glass before being crystallized) is obtained. In melting the glass, for example, a flame melting process using a burner or the like or an electric melting process by electrical heating may be used. Alternatively, a melting process using laser irradiation or a melting process using plasma is also possible. Furthermore, the shape of the sample may be sheet-like, fibrous, film-like, powdered, spherical, hollow or so on and is not particularly limited.

In producing the low-thermal expansion member according to the present invention, metal Al may be added to the raw material batch. In the present invention, metal Al is a component that can promote crystallization of glass and also a component that adjusts the refractive index of the residual glass phase to increase the transmittance of the obtained crystallized glass. On the other hand, if metal Al is excessively added, this may make the crystallized glass clouded. The amount of metal Al added is preferably more than 0 to 5000 ppm, more preferably 1 to 4000 ppm, and particularly preferably 10 to 3000 ppm.

Examples of the method for forming the molten glass into shape include an overflow process, a float process, a down-draw process, a slot down process, a redraw process, a containerless process, a blow process, a press forming process, a roll process, a bushing process, and a tube draw process.

Next, the obtained crystallizable glass is subjected to heat treatment and thus crystallized. The crystallization conditions include holding the crystallizable glass at 800 to 1250°C for 2 minutes to 1000 hours. The heat treatment may be performed at a specific temperature only, may be performed stepwise by holding the glass in two or more temperature levels or may be performed by the application of heat with a temperature gradient. Alternatively, the crystallization may be promoted by applying sonic waves or electromagnetic waves to the crystallizable glass.

Next, the glass after being subjected to the heat treatment is cooled. The cooling of the glass may be performed at a cooling rate with a specific temperature gradient or in two or more levels of temperature gradients. In the case where the glass is desired to obtain a sufficient thermal shock resistance, it is desirable to control the cooling rate to sufficiently structurally relax the residual glass phase. The average cooling rate from 800°C to 25°C is, in an innermost portion of the crystallized glass thickness farthest from the surface, preferably 3000°C/min, not higher than 1000°C/min, not higher than 500°C/min, not higher than 400°C/min, not higher than 300°C/min, not higher than 200°C/min, not higher than 100°C/min, not higher than 50°C/min, not higher than 25°C/min, or not higher than 10°C/min, and particularly preferably not higher than 5°C/min. In the case where the glass is desired to obtain dimensional stability over a long period, the above average cooling rate is preferably not higher than 2.5°C/min, not higher than 1°C/min, not higher than 0.5°C/min, not higher than 0.1°C/min, not higher than 0.05°C/min, not higher than 0.01°C/min, not higher than 0.005°C/min, not higher than 0.001°C/min, or not higher than 0.0005°C/min, and particularly preferably not higher than 0.0001°C/min. Except for the case where physical strengthening treatment by air cooing, water cooling or the like is performed, the cooling rate of the glass at the glass surface and the cooling rate thereof in the innermost portion of the glass thickness farthest from the glass surface preferably approximate to each other. The value of the cooling rate in the innermost portion farthest from the glass surface divided by the cooling rate at the glass surface is preferably 0.0001 to 1, 0.001 to 1, 0.01 to 1, 0.1 to 1, 0.5 to 1, 0.8 to 1, or 0.9 to 1, and particularly preferably 1. As the above value is closer to 1, residual strain is less likely to occur in all locations of the glass sample and long-term dimensional stability is more likely to be obtained. The cooling rate at the glass surface can be estimated by contact thermometry or with a radiation thermometer, while the temperature of the inner portions of the glass can be determined by placing the glass sample in a high-temperature state into a cooling medium, measuring the heat quantity and rate of heat quantity change of the cooling medium, and making an estimate from the obtained numeric measurement data, and the respective specific heats and the thermal conductivity, and so on of the glass sample and the cooling medium.

When the low-thermal expansion member according to the present invention has a sheet-like shape, the average surface roughness Ra of the principal surface thereof is preferably not more than 50 nm, not more than 25 nm, not more than 15 nm, not more than 10 nm, not more than 9 nm, not more than 8 nm, not more than 7 nm, not more than 6 nm, not more than 5 nm, not more than 4 nm, not more than 3 nm, or not more than 2 nm, and particularly preferably not more than 1 nm. If the surface roughness Ra is too large, light incident on the glass surface from the outside is likely to be scattered, light is less likely to be emitted from the inside of the glass toward the outside, and a desired transmittancy is less likely to be obtained. In addition, the glass becomes susceptible to breakage. On the other hand, if the surface roughness Ra of the flat surface is too small, the glass surface is likely to be charged and the attractive force between the glass and an object brought into contact with the glass surface becomes large, which may make it difficult to obtain mold releasability. In addition, because of the charged glass surface, a desired electrical responsiveness may be less likely to be obtained. In view of the above circumstances, the surface roughness Ra of the flat surface of the glass according to the present invention is preferably not less than 0.01 nm, not less than 0.03 nm, not less than 0.05 nm, not less than 0.07 nm, not less than 0.09 nm, not less than 0.1 nm, or not less than 0.3 nm, and particularly preferably not less than 0.5 nm.

When the low-thermal expansion member according to the present invention has a sheet-like shape, the average surface roughness Ra of the end surface thereof is preferably not more than 100 nm, not more than 50 nm, not more than 25 nm, not more than 15 nm, not more than 10 nm, not more than 9 nm, not more than 8 nm, not more than 7 nm, not more than 6 nm, not more than 5 nm, not more than 4 nm, not more than 3 nm, or not more than 2 nm, and particularly preferably not more than 1 nm. If the surface roughness Ra of the end surface is too large, light is less likely to enter the inside of the glass through the end surface of the glass, light is less likely to be emitted from the inside of the glass toward the outside, and a desired transmittancy is less likely to be obtained. In addition, the glass becomes susceptible to breakage. On the other hand, if the surface roughness Ra of the end surface is too small, in physically holding the glass at the end surface thereof with a holder, the contact area between the glass and the holder becomes small and the frictional resistance becomes small, which may make it difficult to surely hold the glass. In view of the above circumstances, the surface roughness Ra of the end surface of the glass according to the present invention is preferably not less than 0.01 nm, not less than 0.03 nm, not less than 0.05 nm, not less than 0.07 nm, not less than 0.09 nm, or not less than 0.1 nm.

The low-thermal expansion member according to the present invention preferably has a unpolished surface. The theoretical strength of glass is originally very high, but glass is often broken even under a much lower stress than the theoretical strength. The reason for this is that nanoscopic defects called Griffth flaws are produced in the glass surface in processes after the forming of glass into shape, such as a polishing process or the like. Therefore, when the surface of the low-thermal expansion member according to the present invention is unpolished, the original mechanical strength is less likely to be impaired and, thus, the glass becomes less susceptible to breakage. In addition, since the polishing process can be omitted, the production cost can be reduced. For example, when the member according to the present invention has a sheet-like shape and, in this case, the entire effective surfaces of both the principal surfaces of the glass are unpolished, the member according to the present invention becomes even less susceptible to breakage. In order to make the entire effective surfaces into unpolished surfaces, it is effective to make, at the time of forming into shape, surface portions corresponding to the effective surfaces into free surfaces. Furthermore, even if the surface portions corresponding to the effective surfaces make contact with a solid member, such as a forming jig, during forming into shape, the portions only have to be heated again at a temperature of the glass transition point or higher. Thus, smooth surfaces similar to free surfaces can be formed.

The waviness of the low-thermal expansion member according to the present invention is preferably not more than 10 μm, not more than 5 μm, not more than 4 μm, not more than 3 μm, not more than 2 μm, not more than 1 μm, not more than 0.8 μm, not more than 0.7 μm, not more than 0.6 μm, not more than 0.5 μm, not more than 0.4 μm, not more than 0.3 μm, not more than 0.2 μm, not more than 0.1 μm, not more than 0.08 μm, not more than 0.05 μm, not more than 0.03 μm, or not more than 0.02 μm, and particularly preferably not more than 0.01 μm. If the waviness is too large, a distribution of incident angles of light incident on the glass surface at a specific location is likely to be generated and the amount of light scattered on the member surface becomes large on average, which makes it difficult to obtain a desired transmittancy. The lower limit of the waviness is not particularly limited, but is actually not less than 0.01 nm.

The thickness of the low-thermal expansion member according to the present invention is preferably not more than 10 mm, not more than 9 mm, not more than 8 mm, not more than 7 mm, not more than 6 mm, or not more than 5 mm, and particularly preferably not more than 4 mm. If the thickness of a sample is too large, the attenuation rate of light in the inside of the member becomes large, which makes it difficult to obtain a desired transmittancy. Furthermore, with use of the member according to the present invention as a display, the thickness is preferably not more than 1000 μm, 500 μm, not more than 200 μm, not more than 100 μm, not more than 70 μm, not more than 50 μm, not more than 30 μm, or 1 to 20 μm, and particularly preferably 5 to 10 μm.

The difference between the maximum thickness and the minimum thickness of the low-thermal expansion member according to the present invention is preferably not more than 50 μm, not more than 25 μm, not more than 10 μm, not more than 5 μm, not more than 1 μm, not more than 500 nm, not more than 300 nm, not more than 100 nm, not more than 50 nm, not more than 25 nm, not more than 15 nm, not more than 10 nm, not more than 9 nm, not more than 8 nm, not more than 7 nm, not more than 6 nm, not more than 5 nm, not more than 4 nm, not more than 3 nm, or not more than 2 nm, and particularly preferably not more than 1 nm. If the difference between the maximum thickness and the minimum thickness is too large, the incident angle of light having entered the member through one of the front and back surfaces thereof becomes different from the exit angle of light when exiting from the other surface, which causes the light to scatter undesirably and makes it likely that the surface appearance looks dazzling.

The surface roughness Ra of the principal surface and end surface of the member can be measured by a method based on JIS B 0601:2001. The waviness can be measured with a stylus surface profile measurement device by a method based on SEMI STD D15-1296 "measurement method for surface waviness of FPD glass substrate". The thickness can be measured with a general device, such as a digital caliper or a point-contact roughness meter.

The average crystallite size of the major crystalline phase of the low-thermal expansion member according to the present invention is preferably not more than 1000 nm, not more than 500 nm, not more than 300 nm, or not more than 100 nm, and particularly preferably not more than 90 nm. If the average crystallite size of the major crystalline phase is too large, the crystallized glass is likely to become opaque. The lower limit of the average crystallite size of the major crystalline phase is not particularly limited, but is actually not less than 1 nm.

The low-thermal expansion member according to the present invention may contain voids within an acceptable range of transmittancy. When the member contains voids, the coefficient of thermal expansion tends to be lowered. The size of voids is, for example, about several nanometers to 600 μm. The size of nanoscale voids can be measured with a field-emission scanning electron microscope (SU-8220 manufactured by Hitachi High-Technologies Corporation) and the size of microscale voids can be measured with a microfocus X-ray CT system (manufactured by Shimadzu Corporation) or a polarizing microscope (ECLIPSE LV100 POL). In decreasing the coefficient of thermal expansion with the use of voids, the voidage (the percentage of the volume of voids in the entire volume of the low-thermal expansion member) is preferably not less than 0.01%, not less than 0.05%, or particularly preferably not less than 0.1%, and preferably not more than 5%, not more than 1%, or particularly preferably not more than 0.5%. If the voidage is too high, the mechanical strength of the obtained low-thermal expansion member is likely to decrease. In addition, light is likely to scatter and the transmittancy is likely to decrease. The measurement of the voidage can be performed using a microfocus X-ray CT system (manufactured by Shimadzu Corporation), in which the voidage can be measured and calculated by taking an image of the inside of the sample and subjecting the image to defect/inclusion analysis with VGSTUDIO MAX manufactured by VOLUME GRAPHICS.

[Examples]

Hereinafter, the present invention will be described with reference to examples, but the present invention is not limited to the following examples. Tables 1 to 148 show examples (Sample Nos. 1 to 366) of the present invention.

[Table 1]

|  |  |  | No.1 | No.2 | No.3 | No.4 | No.5 |
|---|---|---|---|---|---|---|---|
|  |  | $SiO_2$ | 51.8 | 51.6 | 51.2 | 49.8 | 50.8 |
|  |  | $Al_2O_3$ | 32.4 | 33 | 34.7 | 31.7 | 28.7 |
|  |  | $MgO$ | 15.1 | 14.7 | 13.7 | 13.8 | 10.8 |
|  |  | $Li_2O$ | 0 | 0 | 0 | 0 | 0 |
|  |  | $Na_2O$ | 0.09 | 0.08 | 0.02 | 0.07 | 0.07 |
|  |  | $K_2O$ | 0 | 0 | 0 | 0 | 0 |
|  |  | $CaO$ | 0.48 | 0.46 | 0.12 | 2.1 | 0.35 |
|  |  | $SrO$ | 0 | 0 | 0 | 0 | 0 |
|  |  | $BaO$ | 0 | 0 | 0 | 0 | 0 |
|  |  | $ZnO$ | 0 | 0 | 0 | 0 | 0 |
|  |  | $B_2O_3$ | 0 | 0 | 0 | 0 | 0 |
|  |  | $P_2O_5$ | 0 | 0 | 0 | 0 | 0.03 |
|  |  | $TiO_2$ | 0.01 | 0.02 | 0.02 | 2.3 | 9.03 |
|  |  | $ZrO_2$ | 0 | 0 | 0 | 0 | 0 |
|  | [% by mass] | $HfO_2$ | 0 | 0 | 0 | 0 | 0 |
|  |  | $SnO_2$ | 0.09 | 0.1 | 0.23 | 0.17 | 0.19 |
|  |  | $Fe_2O_3$ | 0.03 | 0.03 | 0.01 | 0.03 | 0.03 |
|  |  | $As_2O_3$ | 0 | 0 | 0 | 0 | 0 |
|  |  | $Sb_2O_3$ | 0 | 0 | 0 | 0 | 0 |
|  |  | $Cl_2$ | 0 | 0 | 0 | 0 | 0 |
|  |  | $MoO_3$ | 0.0003 | 0.0003 | 0.0003 | 0.0003 | 0.0003 |
|  |  | $V_2O_5$ | 0 | 0 | 0 | 0 | 0 |
|  |  | $CuO$ | 0 | 0 | 0 | 0 | 0 |
|  |  | $NiO$ | 0 | 0 | 0 | 0 | 0 |
|  |  | $MnO_2$ | 0 | 0 | 0 | 0 | 0 |
|  |  | $Cr_2O_3$ | 0 | 0 | 0 | 0 | 0 |
|  |  | $Nd_2O_3$ | 0 | 0 | 0 | 0 | 0 |
|  |  | $WO_3$ | 0 | 0 | 0 | 0 | 0 |
|  |  | $Co_3O_4$ | 0 | 0 | 0 | 0 | 0 |
|  | [ppm] | Pt | 0.03 | 0.03 | 0.03 | 0.03 | 0.03 |
|  |  | Rh | 0.02 | 0.02 | 0.02 | 0.02 | 0.02 |
|  |  | Pt+Rh | 0.05 | 0.05 | 0.05 | 0.05 | 0.05 |
| Si/(Si+Al+Mg) |  |  | 0.52 | 0.52 | 0.51 | 0.52 | 0.56 |
| Al/(Si+Al+Mg) |  |  | 0.33 | 0.33 | 0.35 | 0.33 | 0.32 |
| Mg/(Si+Al+Mg) |  |  | 0.15 | 0.15 | 0.14 | 0.14 | 0.12 |
| Si/Al |  |  | 1.60 | 1.56 | 1.48 | 1.57 | 1.77 |
| Si/Mg |  |  | 3.43 | 3.51 | 3.74 | 3.61 | 4.70 |
| Al/Mg |  |  | 2.15 | 2.24 | 2.53 | 2.30 | 2.66 |
| (Li+Na+K)/Si |  |  | 0.00174 | 0.00155 | 0.00039 | 0.00141 | 0.00138 |

(continued)

|  | No.1 | No.2 | No.3 | No.4 | No.5 |
|---|---|---|---|---|---|
| Li+Na+K+Ca+Sr+Ba [% by mass] | 0.57 | 0.54 | 0.14 | 2.17 | 0.42 |
| (Si+Zn)/(Mg+Al) | 1.09 | 1.08 | 1.06 | 1.09 | 1.29 |
| Zn-(Ti+Zr) [% by mass] | -0.01 | -0.02 | -0.02 | -2.3 | -9.03 |
| Ti/(Ti+Fe) | 0.250 | 0.400 | 0.667 | 0.987 | 0.997 |
| As+Sb [% by mass] | 0 | 0 | 0 | 0 | 0 |
| Sn+As+Sb+Cl [% by mass] | 0.09 | 0.10 | 0.23 | 0.17 | 0.19 |
| Sn/(Sn+As+Sb+Cl) | 1 | 1 | 1 | 1 | 1 |
| Metal Al [ppm] | 0 | 0 | 0 | 0 | 0 |

[Table 2]

| | | No.1 | No.2 | No.3 | No.4 | No.5 |
|---|---|---|---|---|---|---|
| Before Crystallization | | | | | | |
| Temperature equiv. to High-Temp. Viscosity | $10^4$ [°C] | 1241 | unmeasured | 1224 | 1192 | unmeasured |
| | $10^3$ [°C] | 1332 | unmeasured | 1324 | 1290 | unmeasured |
| | $10^{2.5}$ [°C] | 1395 | unmeasured | 1390 | 1356 | unmeasured |
| | $10^2$ [°C] | 1476 | unmeasured | 1474 | 1440 | unmeasured |
| Liquidus Temperature [°C] | | unmeasured | unmeasured | 1538 | unmeasured | unmeasured |
| Liquidus Viscosity [-] | | unmeasured | unmeasured | 1.7 | unmeasured | unmeasured |
| $\alpha$ [$\times 10^{-7}$/°C] 30-380°C | | 40.5 | 40.8 | 37.7 | 40.5 | 36.7 |
| Density [g/cm$^3$] | | 2.63 | 2.64 | 2.63 | 2.66 | 2.65 |
| $\beta$-OH [/mm] | | 0.12 | 0.12 | 0.12 | 0.12 | 0.12 |
| After Crystallization | | | | | | |
| Crystallization Conditions① | | 810°C-2h 1210°C-10h | 810°C-2h 1210°C-1h | 1150°C-3h | 810°C-2h 1210°C-10h | 1210°C-3min |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L * | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | 138 | unmeasured | 126 |
| $\alpha$ [$\times 10^7$/°C] 30-380°C | | 0 | 1.6 | -6.77 | 2.4 | 12.4 |
| $\alpha$ [$\times 10^{-7}$/°C] 30-750°C | | 7 | 8.9 | 0.07 | 9.8 | 18.2 |
| Density [g/cm$^3$] | | 2.51 | 2.51 | unmeasured | 2.55 | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |
| Crystallization Conditions② | - | 1100°C-3h | 1210°C-2h | - | 1210°C-2min |
| Average Crystallite Size [nm] | - | 126 | 117 | - | 58 |
| $\alpha$ [$\times 10^{-7}$/°C] 30-380°C | - | 0.14 | -1.85 | - | unmeasured |
| $\alpha$ [$\times 10^{-7}$/°C] 30-750°C | | 8.01 | 4.55 | - | unmeasured |

[Table 3]

| | | | No.6 | No.7 | No.8 | No.9 | No.10 |
|---|---|---|---|---|---|---|---|
| | | $SiO_2$ | 51.5 | 50.8 | 50.7 | 66.7 | 60.1 |
| | | $Al_2O_3$ | 31.5 | 30.6 | 30.7 | 23.7 | 27.8 |
| | | MgO | 14 | 13.9 | 14 | 8.9 | 11.4 |
| | | $Li_2O$ | 0.01 | 0 | 0 | 0.01 | 0.01 |
| | | $Na_2O$ | 0.08 | 0.08 | 0.07 | 0.06 | 0.07 |
| | | $K_2O$ | 0 | 0 | 0 | 0 | 0 |
| | | CaO | 0.45 | 0.45 | 0.34 | 0.22 | 0.28 |
| | | SrO | 0 | 0 | 0 | 0 | 0 |
| | | BaO | 0 | 0 | 0 | 0 | 0 |
| | | ZnO | 0 | 0 | 0 | 0 | 0 |
| | | $B_2O_3$ | 0 | 0 | 0 | 0 | 0 |
| | | $P_2O_5$ | 0.01 | 3.97 | 4.03 | 0 | 0 |
| | | $TiO_2$ | 2.28 | 0.02 | 0.01 | 0.02 | 0.01 |
| | | $ZrO_2$ | 0 | 0 | 0 | 0.02 | 0.01 |
| [% by mass] | | $HfO_2$ | 0 | 0 | 0 | 0 | 0 |
| | | $SnO_2$ | 0 | 0 | 0 | 0 | 0 |
| | | $Fe_2O_3$ | 0.17 | 0.18 | 0.18 | 0.35 | 0.3 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0.0003 | 0.0003 | 0.0003 | 0.0003 | 0.0003 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |

(continued)

|  |  | No.6 | No.7 | No.8 | No.9 | No.10 |
|---|---|---|---|---|---|---|
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.53 | 0.53 | 0.53 | 0.67 | 0.61 |
| Al/(Si+Al+Mg) | | 0.32 | 0.32 | 0.32 | 0.24 | 0.28 |
| Mg/(Si+Al+Mg) | | 0.14 | 0.15 | 0.15 | 0.09 | 0.11 |
| Si/Al | | 1.63 | 1.66 | 1.65 | 2.81 | 2.16 |
| Si/Mg | | 3.68 | 3.65 | 3.62 | 7.49 | 5.27 |
| Al/Mg | | 2.25 | 2.20 | 2.19 | 2.66 | 2.44 |
| (Li+Na+K)/Si | | 0.00175 | 0.00157 | 0.00138 | 0.00105 | 0.00133 |
| Li+Na+K+Ca+Sr+Ba [% by mass] | | 0.54 | 0.53 | 0.41 | 0.29 | 0.36 |
| (Si+Zn)/(Mg+Al) | | 1.13 | 1.14 | 1.13 | 2.05 | 1.53 |
| Zn-(Ti+Zr) [% by mass] | | -2.28 | -0.02 | -0.01 | -0.04 | -0.02 |
| Ti/(Ti+Fe) | | 0.931 | 0.100 | 0.053 | 0.054 | 0.032 |
| As+Sb [% by mass] | | 0 | 0 | 0 | 0 | 0 |
| Sn+As+Sb+Cl [% by mass] | | 0 | 0 | 0 | 0 | 0 |
| Sn/(Sn+As+Sb+Cl) | | - | - | - | - | - |
| Metal Al [ppm] | | 0 | 0 | 0 | 0 | 0 |

[Table 4]

| | | No.6 | No.7 | No.8 | No.9 | No.10 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^7$/°C] 30-380°C | | 38.4 | 37.4 | unmeasured | 28 | 33 |
| Density [g/cm$^3$] | | 2.64 | 2.60 | 2.60 | 2.47 | 2.54 |
| $\beta$-OH [/mm] | | 0.14 | 0.14 | 0.14 | 0.14 | 0.14 |
| After Crystallization | | | | | | |
| Crystallization Conditions① | | 810°C-2h 1210°C-10h | 810°C-10h 1210°C-1h | 810°C-10h 1210°C-1h | 810°C-2h 1210°C-10h | 810°C-2h 1210°C-10h |
| Transmittance [%] 4mm thickness | 380nm | unmeasured | 0.56 | unmeasured | unmeasured | unmeasured |
| | 800nm | unmeasured | 11.7 | unmeasured | unmeasured | unmeasured |
| | 1200nm | unmeasured | 17 | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b* | | unmeasured | unmeasured | unmeasured | unmeasured | unmeasured |

(continued)

| After Crystallization | | | | | | |
|---|---|---|---|---|---|---|
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | unmeasured | unmeasured |
| Average Crystallite Size [nm] | | unmeasured | 126 | unmeasured | unmeasured | unmeasured |
| $\alpha$ [$\times 10^7$/°C] 30-380°C | | unmeasured | 9.4 | unmeasured | unmeasured | 23.3 |
| $\alpha$ [$\times 10^{-7}$/°C] 30-750°C | | unmeasured | 16.18 | unmeasured | unmeasured | 24.6 |
| Density [g/cm$^3$] | | unmeasured | 2.49 | unmeasured | 2.36 | 2.43 |
| Average Surface Roughness of Principal Surface R a [nm] | | unmeasured | unmeasured | unmeasured | unmeasured | unmeasured |
| Average Surface Roughness of End Surface R a [nm] | | unmeasured | unmeasured | unmeasured | unmeasured | unmeasured |
| Waviness [$\mu$m] | | unmeasured | unmeasured | unmeasured | unmeasured | unmeasured |

[Table 5]

| | | No.11 | No.12 | No.13 | No.14 | No.15 |
|---|---|---|---|---|---|---|
| [% by mass] | SiO$_2$ | 43.0 | 49.3 | 48.9 | 50.6 | 48.8 |
| | Al$_2$O$_3$ | 32.9 | 32.8 | 32.7 | 30 | 33.3 |
| | MgO | 13.1 | 13.6 | 14 | 13.2 | 13.4 |
| | Li$_2$O | 0.01 | 0 | 0 | 0.01 | 0 |
| | Na$_2$O | 0.08 | 0.08 | 0.08 | 0.07 | 0.08 |
| | K$_2$O | 0 | 0 | 0 | 0 | 0 |
| | CaO | 0.33 | 0.33 | 0.35 | 0.33 | 0.34 |
| | SrO | 0 | 0 | 0 | 0 | 0 |
| | BaO | 0 | 0 | 0 | 0 | 0 |
| | ZnO | 0 | 0 | 0 | 0 | 0 |
| | B$_2$O$_3$ | 0 | 0 | 0 | 0 | 0 |
| | P$_2$O$_5$ | 0.03 | 0.01 | 0.01 | 2.97 | 3.94 |
| | TiO$_2$ | 0.06 | 0.03 | 0.03 | 0.02 | 0.01 |
| | ZrO$_2$ | 10.19 | 3.66 | 3.69 | 2.53 | 0 |
| | HfO$_2$ | 0.21 | 0.08 | 0.08 | 0.05 | 0 |
| | SnO$_2$ | 0.12 | 0.11 | 0.12 | 0.18 | 0.18 |
| | Fe$_2$O$_3$ | 0.02 | 0.02 | 0.02 | 0.02 | 0.02 |
| | As$_2$O$_3$ | 0 | 0 | 0 | 0 | 0 |
| | Sb$_2$O$_3$ | 0 | 0 | 0 | 0 | 0 |
| | Cl$_2$ | 0 | 0 | 0 | 0 | 0 |
| | MoO$_3$ | 0.00032 | 0.00032 | 0.00032 | 0.00032 | 0.00032 |
| | V$_2$O$_5$ | 0 | 0 | 0 | 0 | 0 |
| | CuO | 0 | 0 | 0 | 0 | 0 |
| | NiO | 0 | 0 | 0 | 0 | 0 |
| | MnO$_2$ | 0 | 0 | 0 | 0 | 0 |
| | Cr$_2$O$_3$ | 0 | 0 | 0 | 0 | 0 |
| | Nd$_2$O$_3$ | 0 | 0 | 0 | 0 | 0 |
| | WO$_3$ | 0 | 0 | 0 | 0 | 0 |
| | Co$_3$O$_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.48 | 0.52 | 0.51 | 0.54 | 0.51 |
| Al/(Si+Al+Mg) | | 0.37 | 0.34 | 0.34 | 0.32 | 0.35 |
| Mg/(Si+Al+Mg) | | 0.15 | 0.14 | 0.15 | 0.14 | 0.14 |
| Si/Al | | 1.31 | 1.50 | 1.50 | 1.69 | 1.47 |
| Si/Mg | | 3.28 | 3.63 | 3.49 | 3.83 | 3.64 |
| Al/Mg | | 2.51 | 2.41 | 2.34 | 2.27 | 2.49 |
| (Li+Na+K)/Si | | 0.00209 | 0.00162 | 0.00164 | 0.00158 | 0.00164 |

(continued)

|  | No.11 | No.12 | No.13 | No.14 | No.15 |
|---|---|---|---|---|---|
| Li+Na+K+Ca+Sr+Ba [% by mass] | 0.42 | 0.41 | 0.43 | 0.41 | 0.42 |
| (Si+Zn)/(Mg+Al) | 0.93 | 1.06 | 1.05 | 1.17 | 1.04 |
| Zn-(Ti+Zr) [% by mass] | -10.25 | -3.69 | -3.72 | -2.55 | -0.01 |
| Ti/(Ti+Fe) | 0.750 | 0.600 | 0.600 | 0.500 | 0.333 |
| As+Sb [% by mass] | 0 | 0 | 0 | 0 | 0 |
| Sn+As+Sb+Cl [% by mass] | 0.12 | 0.11 | 0.12 | 0.18 | 0.18 |
| Sn/(Sn+As+Sb+Cl) | 1 | 1 | 1 | 1 | 1 |
| Metal Al [ppm] | 0 | 0 | 0 | 0 | 0 |

[Table 6]

|  |  | No.11 | No.12 | No.13 | No.14 | No.15 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | 42 | 38.8 | unmeasured | 36.9 | 37.3 |
| Density [g/cm$^3$] | | 2.83 | 2.69 | 2.69 | 2.63 | 2.61 |
| $\beta$-OH [/mm] | | 0.12 | 0.12 | 0.12 | 0.12 | 0.12 |
| After Crystallization | | | | | | |
| Crystallization Conditions① | | 810°C-2h 1210°C-10h | 810°C-10h 1210°C-1h | 810°C-2h 1210°C-10h | 810°C-2h 1210°C-10h | 810°C-2h 1210°C-1h |
| Transmittance [%] 4mm thickness | 380nm | unmeasured | unmeasured | unmeasured | unmeasured | 0.62 |
| | 800nm | unmeasured | unmeasured | unmeasured | unmeasured | 9.45 |
| | 1200nm | unmeasured | unmeasured | unmeasured | unmeasured | 14 |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | 117 | unmeasured | unmeasured | 126 |
| $\alpha$ [$\times 10^{-7}$/°C] 30-380°C | | unmeasured | 8.35 | unmeasured | 17.7 | 5.34 |
| $\alpha$ [$\times 10^{-7}$/°C] 30-750°C | | unmeasured | 15.06 | unmeasured | 22.4 | 12.21 |
| Density [g/cm$^3$] | | 2.93 | 2.56 | unmeasured | 2.53 | 2.50 |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 7]

| | | | No.16 | No.17 | No.18 | No.19 | No.20 |
|---|---|---|---|---|---|---|---|
| [% by mass] | | $SiO_2$ | 48.1 | 46.7 | 55.7 | 53.1 | 55.4 |
| | | $Al_2O_3$ | 32.6 | 31.8 | 30.2 | 30.6 | 27.5 |
| | | MgO | 13.4 | 12.7 | 12.4 | 14.7 | 15.5 |
| | | $Li_2O$ | 0 | 0 | 0 | 0 | 0 |
| | | $Na_2O$ | 0.08 | 0.08 | 0.05 | 0.04 | 0.04 |
| | | $K_2O$ | 0 | 0 | 0 | 0 | 0 |
| | | CaO | 0.34 | 0.33 | 0.31 | 0.37 | 0.38 |
| | | SrO | 0 | 0 | 0 | 0 | 0 |
| | | BaO | 0 | 0 | 0 | 0 | 0 |
| | | ZnO | 0 | 0 | 0 | 0 | 0 |
| | | $B_2O_3$ | 0 | 0 | 0 | 0 | 0 |
| | | $P_2O_3$ | 0.02 | 0.02 | 0 | 0 | 0 |
| | | $TiO_2$ | 0.04 | 0.05 | 1.07 | 0.96 | 0.94 |
| | | $ZrO_2$ | 5.26 | 7.93 | 0 | 0 | 0 |
| | | $HfO_2$ | 0.11 | 0.17 | 0 | 0 | 0 |
| | | $SnO_2$ | 0.11 | 0.12 | 0.19 | 0.15 | 0.15 |
| | | $Fe_2O_3$ | 0.02 | 0.02 | 0.02 | 0.02 | 0.02 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0.00032 | 0.00032 | 0.00032 | 0.00032 | 0.00032 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |
| [ppm] | | Pt | 1.5 | 1.5 | 1.5 | 1.5 | 1.5 |
| | | Rh | 0.02 | 0.02 | 0.02 | 0.02 | 0.02 |
| | | Pt+Rh | 1.52 | 1.52 | 1.52 | 1.52 | 1.52 |
| Si/(Si+Al+Mg) | | | 0.51 | 0.51 | 0.57 | 0.54 | 0.56 |
| Al/(Si+Al+Mg) | | | 0.35 | 0.35 | 0.31 | 0.31 | 0.28 |

(continued)

|  | No.16 | No.17 | No.18 | No.19 | No.20 |
|---|---|---|---|---|---|
| Mg/(Si+Al+Mg) | 0.14 | 0.14 | 0.13 | 0.15 | 0.16 |
| Si/Al | 1.48 | 1.47 | 1.84 | 1.74 | 2.01 |
| Si/Mg | 3.59 | 3.68 | 4.49 | 3.61 | 3.57 |
| Al/Mg | 2.43 | 2.50 | 2.44 | 2.08 | 1.77 |
| (Li+Na+K)/Si | 0.00166 | 0.00171 | 0.00090 | 0.00075 | 0.00072 |
| Li+Na+K+Ca+Sr+Ba [% by mass] | 0.42 | 0.41 | 0.36 | 0.41 | 0.42 |
| (Si+Zn)/(Mg+Al) | 1.05 | 1.05 | 1.31 | 1.17 | 1.29 |
| Zn-(Ti+Zr) [% by mass] | -5.3 | -7.98 | -1.07 | -0.96 | -0.94 |
| Ti/(Ti+Fe) | 0.667 | 0.714 | 0.982 | 0.980 | 0.979 |
| As+Sb [% by mass] | 0 | 0 | 0 | 0 | 0 |
| Sn+As+Sb+Cl [% by mass] | 0.11 | 0.12 | 0.19 | 0.15 | 0.15 |
| Sn/(Sn+As+Sb+Cl) | 1 | 1 | 1 | 1 | 1 |
| Metal Al [ppm] | 0 | 0 | 0 | 0 | 0 |

[Table 8]

| | | No.16 | No.17 | No.18 | No.19 | No.20 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | 39.8 | 39.7 | 38.8 | 35.6 | 39.5 |
| Density [g/cm$^3$] | | 2.72 | 2.76 | 2.58 | 2.62 | 2.61 |
| $\beta$-OH [/mm] | | 0.13 | 0.13 | 0.13 | 0.13 | 0.13 |
| After Crystallization | | | | | | |
| Crystallization Conditions① | | 810°C-2h 1210°C-10h | 810°C-2h 1210°C-10h | 1150°C-3h | 1150°C-3h | 1050°C-5h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b* | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | unmeasured | $\alpha$-Cor. | $\alpha$-Cor. | $\alpha$-Cor. |
| Average Crystallite Size [nm] | | unmeasured | unmeasured | 126 | 95 | 126 |

(continued)

| After Crystallization | | | | | |
|---|---|---|---|---|---|
| $\alpha$ [$\times 10^{-7}$/°C] 30-380°C | 4.18 | unmeasured | unmeasured | -8.22 | -4.42 |
| $\alpha$ [$\times 10^{-7}$/°C] 30-750°C | 11.58 | unmeasured | unmeasured | -1.66 | 2.29 |
| Density [g/cm$^3$] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 9]

| | | No.21 | No.22 | No.23 | No.24 | No.25 |
|---|---|---|---|---|---|---|
| | $SiO_2$ | 46.8 | 53.2 | 48.6 | 52.2 | 52.8 |
| | $Al_2O_3$ | 31.9 | 30.1 | 33.2 | 29.5 | 27.5 |
| | MgO | 12.6 | 10.9 | 13.1 | 10.7 | 10.2 |
| | $Li_2O$ | 0 | 0 | 0 | 0 | 0 |
| | $Na_2O$ | 0.02 | 0.02 | 0.02 | 0.02 | 0.02 |
| | $K_2O$ | 0.02 | 0.02 | 0.01 | 0.02 | 0.02 |
| | CaO | 0.09 | 0.27 | 0.09 | 0.27 | 0.25 |
| | SrO | 0 | 0 | 0 | 0 | 0 |
| | BaO | 0 | 0 | 0 | 0 | 0 |
| | ZnO | 0 | 0 | 0 | 0 | 0 |
| | $B_2O_3$ | 0 | 0 | 0 | 0 | 0 |
| | $P_2O_5$ | 0.03 | 0.02 | 0.02 | 0.02 | 0.03 |
| | $TiO_2$ | 8.28 | 5.15 | 4.79 | 7.06 | 8.96 |
| | $ZrO_2$ | 0 | 0 | 0 | 0 | 0 |
| [% by mass] | $HfO_2$ | 0 | 0 | 0 | 0 | 0 |
| | $SnO_2$ | 0.2 | 0.21 | 0.2 | 0.21 | 0.23 |
| | $Fe_2O_3$ | 0.01 | 0.02 | 0.01 | 0.02 | 0.02 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0.00028 | 0.00028 | 0.00028 | 0.00028 | 0.00028 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |

(continued)

|  |  | No.21 | No.22 | No.23 | No.24 | No.25 |
|---|---|---|---|---|---|---|
| [ppm] | Pt | 1.3 | 1.3 | 1.3 | 1.3 | 1.3 |
|  | Rh | 0.02 | 0.02 | 0.02 | 0.02 | 0.02 |
|  | Pt+Rh | 1.32 | 1.32 | 1.32 | 1.32 | 1.32 |
| Si/(Si+Al+Mg) | | 0.51 | 0.56 | 0.51 | 0.56 | 0.58 |
| Al/(Si+Al+Mg) | | 0.35 | 0.32 | 0.35 | 0.32 | 0.30 |
| Mg/(Si+Al+Mg) | | 0.14 | 0.12 | 0.14 | 0.12 | 0.11 |
| Si/Al | | 1.47 | 1.77 | 1.46 | 1.77 | 1.92 |
| Si/Mg | | 3.71 | 4.88 | 3.71 | 4.88 | 5.18 |
| Al/Mg | | 2.53 | 2.76 | 2.53 | 2.76 | 2.70 |
| (Li+Na+K)/Si | | 0.00085 | 0.00075 | 0.00062 | 0.00077 | 0.00076 |
| Li+Na+K+Ca+Sr+Ba [% by mass] | | 0.13 | 0.31 | 0.12 | 0.31 | 0.29 |
| (Si+Zn)/(Mg+Al) | | 1.05 | 1.30 | 1.05 | 1.30 | 1.40 |
| Zn-(Ti+Zr) [% by mass] | | -8.28 | -5.15 | -4.79 | -7.06 | -8.96 |
| Ti/(Ti+Fe) | | 0.999 | 0.996 | 0.998 | 0.997 | 0.998 |
| As+Sb [% by mass] | | 0 | 0 | 0 | 0 | 0 |
| Sn+As+Sb+Cl [% by mass] | | 0.20 | 0.21 | 0.20 | 0.21 | 0.23 |
| Sn/(Sn+As+Sb+Cl) | | 1 | 1 | 1 | 1 | 1 |
| Metal Al [ppm] | | 0 | 0 | 0 | 0 | 0 |

[Table 10]

| | | No.21 | No.22 | No.23 | No.24 | No.25 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^7$/°C] 30-380°C | | 39.9 | 35.3 | 38.9 | 36.4 | 35.7 |
| Density [g/cm$^3$] | | 2.70 | 2.62 | 2.67 | 2.63 | 2.63 |
| $\beta$-OH [/mm] | | 0.18 | 0.18 | 0.18 | 0.18 | 0.18 |
| After Crystallization | | | | | | |
| Crystallization Conditions① | | 810°C-2h 1210°C-10h | 830°C-10h 1100°C-3h | 810°C-2h 1210°C-10h | 1100°C-3h | 1210°C-15min |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L * | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |

(continued)

| After Crystallization | | | | | | |
|---|---|---|---|---|---|---|
| Diffuse Trans-mittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | unmeasured | $\alpha$-Cor. | unmeasured | $\alpha$-Cor. | $\alpha$-Cor. |
| Average Crystallite Size [nm] | | unmeasured | 126 | unmeasured | 126 | 108 |
| $\alpha$ [$\times 10^{-7}$/°C] 30-380°C | | unmeasured | 0.36 | unmeasured | -1.46 | 21.8 |
| $\alpha$ [$\times 10^{7}$/°C] 30-750°C | | unmeasured | 5.53 | unmeasured | 4.32 | 25.4 |
| Density [g/cm³] | | unmeasured | unmeasured | unmeasured | unmeasured | unmeasured |
| Average Surface Roughness of Principal Surface R a [nm] | | unmeasured | unmeasured | unmeasured | unmeasured | unmeasured |
| Average Surface Roughness of End Surface R a [nm] | | unmeasured | unmeasured | unmeasured | unmeasured | unmeasured |
| Waviness [μm] | | unmeasured | unmeasured | unmeasured | unmeasured | unmeasured |

[Table 11]

|  |  |  | No.26 | No.27 | No.28 | No.29 | No.30 |
|---|---|---|---|---|---|---|---|
| [% by mass] |  | $SiO_2$ | 54.8 | 49.8 | 48.6 | 50.4 | 50.0 |
|  |  | $Al_2O_3$ | 26 | 28.2 | 27.6 | 28.6 | 28.3 |
|  |  | MgO | 9.6 | 10.5 | 10.3 | 10.6 | 10.5 |
|  |  | $Li_2O$ | 0.01 | 0.01 | 0.01 | 0.01 | 0.01 |
|  |  | $Na_2O$ | 0.02 | 0.02 | 0.02 | 0.02 | 0.02 |
|  |  | $K_2O$ | 0.03 | 0.02 | 0.02 | 0.02 | 0.02 |
|  |  | CaO | 0.24 | 0.27 | 0.26 | 0.27 | 0.27 |
|  |  | SrO | 0 | 0 | 0 | 0 | 0 |
|  |  | BaO | 0 | 0 | 0 | 0 | 0 |
|  |  | ZnO | 0 | 0 | 0 | 0 | 0 |
|  |  | $B_2O_3$ | 0 | 0 | 0 | 0 | 0 |
|  |  | $P_2O_5$ | 0.03 | 2.12 | 4.17 | 2.12 | 4.19 |
|  |  | $TiO_2$ | 8.98 | 8.85 | 8.8 | 7.66 | 6.44 |
|  |  | $ZrO_2$ | 0 | 0 | 0 | 0 | 0 |
|  |  | $HfO_2$ | 0 | 0 | 0 | 0 | 0 |
|  |  | $SnO_2$ | 0.23 | 0.2 | 0.21 | 0.2 | 0.2 |
|  |  | $Fe_2O_3$ | 0.01 | 0.02 | 0.02 | 0.02 | 0.02 |
|  |  | $As_2O_3$ | 0 | 0 | 0 | 0 | 0 |
|  |  | $Sb_2O_3$ | 0 | 0 | 0 | 0 | 0 |
|  |  | $Cl_2$ | 0 | 0 | 0 | 0 | 0 |
|  |  | $MoO_3$ | 0.00028 | 0.00028 | 0.00028 | 0.00028 | 0.00028 |
|  |  | $V_2O_5$ | 0 | 0 | 0 | 0 | 0 |
|  |  | CuO | 0 | 0 | 0 | 0 | 0 |
|  |  | NiO | 0 | 0 | 0 | 0 | 0 |
|  |  | $MnO_2$ | 0 | 0 | 0 | 0 | 0 |
|  |  | $Cr_2O_3$ | 0 | 0 | 0 | 0 | 0 |
|  |  | $Nd_2O_3$ | 0 | 0 | 0 | 0 | 0 |
|  |  | $WO_3$ | 0 | 0 | 0 | 0 | 0 |
|  |  | $Co_4O_4$ | 0 | 0 | 0 | 0 | 0 |
| [ppm] |  | Pt | 1.3 | 1.3 | 1.3 | 1.3 | 1.3 |
|  |  | Rh | 0.02 | 0.02 | 0.02 | 0.02 | 0.02 |
|  |  | Pt+Rh | 1.32 | 1.32 | 1.32 | 1.32 | 1.32 |
| Si/(Si+Al+Mg) |  |  | 0.61 | 0.56 | 0.56 | 0.56 | 0.56 |
| Al/(Si+Al+Mg) |  |  | 0.29 | 0.32 | 0.32 | 0.32 | 0.32 |
| Mg/(Si+Al+Mg) |  |  | 0.11 | 0.12 | 0.12 | 0.12 | 0.12 |
| Si/Al |  |  | 2.11 | 1.77 | 1.76 | 1.76 | 1.77 |
| Si/Mg |  |  | 5.71 | 4.74 | 4.72 | 4.75 | 4.76 |
| Al/Mg |  |  | 2.71 | 2.69 | 2.68 | 2.70 | 2.70 |
| (Li+Na+K)/Si |  |  | 0.00109 | 0.00100 | 0.00103 | 0.00099 | 0.00100 |

(continued)

|  | No.26 | No.27 | No.28 | No.29 | No.30 |
|---|---|---|---|---|---|
| Li+Na+K+Ca+Sr+Ba [% by mass] | 0.3 | 0.32 | 0.31 | 0.32 | 0.32 |
| (Si+Zn)/(Mg+Al) | 1.54 | 1.29 | 1.28 | 1.29 | 1.29 |
| Zn-(Ti+Zr) [% by mass] | -8.98 | -8.85 | -8.8 | -7.66 | -6.44 |
| Ti/(Ti+Fe) | 0.999 | 0.998 | 0.998 | 0.997 | 0.997 |
| As+Sb [% by mass] | 0 | 0 | 0 | 0 | 0 |
| Sn+As+Sb+Cl [% by mass] | 0.23 | 0.20 | 0.21 | 0.20 | 0.20 |
| Sn/(Sn+As+Sb+Cl) | 1 | 1 | 1 | 1 | 1 |
| Metal Al [ppm] | 0 | 0 | 0 | 0 | 0 |

[Table 12]

| | | No.26 | No.27 | No.28 | No.29 | No.30 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | 34.4 | 35.9 | 35.7 | 35.9 | 34.8 |
| Density [g/cm$^3$] | | 2.60 | 2.64 | 2.62 | 2.63 | 2.60 |
| $\beta$-OH [/mm] | | 0.14 | 0.14 | 0.14 | 0.14 | 0.14 |
| After Crystallization | | | | | | |
| Crystallization Conditions① | | 1210°C-15min | 1210°C-30min | 1210°C-1h | 1100°C-3h | 1210°C-1h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | unmeasured |
| Average Crystallite Size [nm] | | 117 | 117 | unmeasured | 126 | unmeasured |
| $\alpha$ [$\times 10^{-7}$/°C] 30-380°C | | unmeasured | unmeasured | unmeasured | 8.06 | unmeasured |
| $\alpha$ [$\times 10^{-7}$/°C] 30-750°C | | unmeasured | unmeasured | unmeasured | 13.31 | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Average Surface Roughness of End Surface R a [nm] | unmeasured | unmeasured | unmeasured | unmeasured | unmeasured |
| Waviness [μm] | unmeasured | unmeasured | unmeasured | unmeasured | unmeasured |

[Table 13]

| | | | No.31 | No.32 | No.33 | No.34 | No.35 |
|---|---|---|---|---|---|---|---|
| [% by mass] | | $SiO_2$ | 52.7 | 54.6 | 50.4 | 50.2 | 50.0 |
| | | $Al_2O_3$ | 29 | 27.5 | 28.6 | 28.2 | 28.3 |
| | | MgO | 10.7 | 10.3 | 10.6 | 10.5 | 10.5 |
| | | $Li_2O$ | 0.02 | 0.02 | 0.02 | 0.02 | 0.02 |
| | | $Na_2O$ | 0.02 | 0.02 | 0.02 | 0.03 | 0.03 |
| | | $K_2O$ | 0.02 | 0.02 | 0.02 | 0.03 | 0.03 |
| | | CaO | 0.27 | 0.26 | 0.26 | 0.27 | 0.26 |
| | | SrO | 0 | 0 | 0 | 0 | 0 |
| | | BaO | 0 | 0 | 0 | 0 | 0 |
| | | ZnO | 0 | 0 | 0 | 0 | 0 |
| | | $B_2O_3$ | 0 | 0 | 0.9 | 1.5 | 0 |
| | | $P_2O_5$ | 0.02 | 0.02 | 0.03 | 0.03 | 0.03 |
| | | $TiO_2$ | 6.99 | 7.04 | 8.97 | 8.98 | 8.61 |
| | | $ZrO_2$ | 0 | 0 | 0 | 0 | 1.93 |
| | | $HfO_2$ | 0 | 0 | 0 | 0 | 0.04 |
| | | $SnO_2$ | 0.2 | 0.21 | 0.2 | 0.2 | 0.2 |
| | | $Fe_2O_3$ | 0.02 | 0.01 | 0.01 | 0.02 | 0.02 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0.00028 | 0.00028 | 0.00028 | 0.00028 | 0.00028 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |
| [ppm] | | Pt | 0.03 | 0.03 | 0.03 | 0.03 | 0.03 |
| | | Rh | 1.2 | 1.2 | 1.2 | 1.2 | 1.2 |
| | | Pt+Rh | 1.23 | 1.23 | 1.23 | 1.23 | 1.23 |
| Si/(Si+Al+Mg) | | | 0.57 | 0.59 | 0.56 | 0.56 | 0.56 |
| Al/(Si+Al+Mg) | | | 0.31 | 0.30 | 0.32 | 0.32 | 0.32 |

(continued)

|  | No.31 | No.32 | No.33 | No.34 | No.35 |
|---|---|---|---|---|---|
| Mg/(Si+Al+Mg) | 0.12 | 0.11 | 0.12 | 0.12 | 0.12 |
| Si/Al | 1.82 | 1.99 | 1.76 | 1.78 | 1.77 |
| Si/Mg | 4.93 | 5.30 | 4.75 | 4.78 | 4.76 |
| Al/Mg | 2.71 | 2.67 | 2.70 | 2.69 | 2.70 |
| (Li+Na+K)/Si | 0.00114 | 0.00110 | 0.00119 | 0.00159 | 0.00160 |
| Li+Na+K+Ca+Sr+Ba [% by mass] | 0.33 | 0.32 | 0.32 | 0.35 | 0.34 |
| (Si+Zn)/(Mg+Al) | 1.33 | 1.44 | 1.29 | 1.30 | 1.29 |
| Zn-(Ti+Zr) [% by mass] | -6.99 | -7.04 | -8.97 | -8.98 | -10.54 |
| Ti/(Ti+Fe) | 0.997 | 0.999 | 0.999 | 0.998 | 0.998 |
| As+Sb [% by mass] | 0 | 0 | 0 | 0 | 0 |
| Sn+As+Sb+Cl [% by mass] | 0.20 | 0.21 | 0.20 | 0.20 | 0.20 |
| Sn/(Sn+As+Sb+Cl) | 1 | 1 | 1 | 1 | 1 |
| Metal Al [ppm] | 0 | 0 | 0 | 0 | 0 |

[Table 14]

| | | No.31 | No.32 | No.33 | No.34 | No.35 |
|---|---|---|---|---|---|---|
| Before Crystallization | | | | | | |
| Temperature equiv. to High-Temp. Viscosity | 10^4 [°C] | unmeasured | unmeasured | unmeasured | unmeasured | unmeasured |
| | 10^3 [°C] | unmeasured | unmeasured | unmeasured | unmeasured | unmeasured |
| | 10^2.5 [°C] | unmeasured | unmeasured | unmeasured | unmeasured | unmeasured |
| | 10^2 [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^7$/°C] 30-380°C | | 34.6 | 35.6 | 36.9 | 36.9 | 37.4 |
| Density [g/cm$^3$] | | 2.61 | 2.63 | 2.65 | 2.64 | 2.68 |
| $\beta$-OH [/mm] | | 0.15 | 0.15 | 0.15 | 0.15 | 0.15 |
| After Crystallization | | | | | | |
| Crystallization Conditions① | | 1100°C-3h | 1210°C-7min | 1210°C-15min | 1210°C-1h | 1210°C-15min |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | unmeasured | $\alpha$-Cor. | $\alpha$-Cor. | $\alpha$-Cor. |
| Average Crystallite Size [nm] | | 117 | unmeasured | 117 | unmeasured | 101 |

(continued)

| After Crystallization | | | | | |
|---|---|---|---|---|---|
| $\alpha$ [$\times 10^{-7}$/°C] 30-380°C | 7.92 | unmeasured | 23.4 | unmeasured | 17.6 |
| $\alpha$ [$\times 10^7$/°C] 30-750°C | 12.14 | unmeasured | 26.9 | unmeasured | 22.7 |
| Density [g/cm$^3$] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 15]

| | | No.36 | No.37 | No.38 | No.39 | No.40 |
|---|---|---|---|---|---|---|
| [% by mass] | $SiO_2$ | 49.1 | 50.7 | 50.4 | 50.3 | 49.8 |
| | $Al_2O_3$ | 27.7 | 28.7 | 28.4 | 28.3 | 27.7 |
| | MgO | 10.2 | 10.6 | 10.5 | 10.4 | 10.2 |
| | $Li_2O$ | 0 | 0 | 0 | 0 | 0 |
| | $Na_2O$ | 0.03 | 0.03 | 0.04 | 0.03 | 0.03 |
| | $K_2O$ | 0.03 | 0.02 | 0.02 | 0.02 | 0.02 |
| | CaO | 0.26 | 0.26 | 0.27 | 0.28 | 0.29 |
| | SrO | 0 | 0 | 0 | 0 | 0 |
| | BaO | 0 | 0 | 0 | 0 | 0 |
| | ZnO | 0 | 0 | 0 | 0 | 0 |
| | $B_2O_3$ | 0 | 0 | 0 | 0 | 0 |
| | $P_2O_5$ | 0.04 | 0.03 | 0.03 | 0.03 | 0.03 |
| | $TiO_2$ | 8.51 | 7.46 | 6.24 | 8.45 | 8.36 |
| | $ZrO_2$ | 3.82 | 1.93 | 3.83 | 0 | 0 |
| | $HfO_2$ | 0.08 | 0.04 | 0.08 | 0 | 0 |
| | $SnO_2$ | 0.19 | 0.21 | 0.2 | 2.2 | 3.51 |
| | $Fe_2O_3$ | 0.02 | 0.02 | 0.02 | 0.02 | 0.02 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0.00028 | 0.00028 | 0.00028 | 0.00028 | 0.00028 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |

(continued)

| | | No.36 | No.37 | No.38 | No.39 | No.40 |
|---|---|---|---|---|---|---|
| [ppm] | Pt | 1.3 | 1.3 | 1.3 | 1.3 | 1.3 |
| | Rh | 0.02 | 0.02 | 0.02 | 0.02 | 0.02 |
| | Pt+Rh | 1.32 | 1.32 | 1.32 | 1.32 | 1.32 |
| Si/(Si+Al+Mg) | | 0.56 | 0.56 | 0.56 | 0.57 | 0.57 |
| Al/(Si+Al+Mg) | | 0.32 | 0.32 | 0.32 | 0.32 | 0.32 |
| Mg/(Si+Al+Mg) | | 0.12 | 0.12 | 0.12 | 0.12 | 0.12 |
| Si/Al | | 1.77 | 1.77 | 1.77 | 1.78 | 1.80 |
| Si/Mg | | 4.81 | 4.78 | 4.80 | 4.84 | 4.88 |
| Al/Mg | | 2.72 | 2.71 | 2.70 | 2.72 | 2.72 |
| (Li+Na+K)/Si | | 0.00122 | 0.00099 | 0.00119 | 0.00099 | 0.00100 |
| Li+Na+K+Ca+Sr+Ba [% by mass] | | 0.32 | 0.31 | 0.33 | 0.33 | 0.34 |
| (Si+Zn)/(Mg+Al) | | 1.30 | 1.29 | 1.30 | 1.30 | 1.31 |
| Zn-(Ti+Zr) [% by mass] | | -12.33 | -9.39 | -10.07 | -8.45 | -8.36 |
| Ti/(Ti+Fe) | | 0.998 | 0.997 | 0.997 | 0.998 | 0.998 |
| As+Sb [% by mass] | | 0 | 0 | 0 | 0 | 0 |
| Sn+As+Sb+Cl [% by mass] | | 0.19 | 0.21 | 0.20 | 2.20 | 3.51 |
| Sn/(Sn+As+Sb+Cl) | | 1 | 1 | 1 | 1 | 1 |
| Metal Al [ppm] | | 0 | 0 | 0 | 0 | 0 |

[Table 16]

| | | No.36 | No.37 | No.38 | No.39 | No.40 |
|---|---|---|---|---|---|---|
| Before Crystallization | | | | | | |
| Temperature equiv. to High-Temp. Viscosity | 10^4 [°C] | unmeasured | unmeasured | unmeasured | unmeasured | unmeasured |
| | 10^3 [°C] | unmeasured | unmeasured | unmeasured | unmeasured | unmeasured |
| | 10^2.5 [°C] | unmeasured | unmeasured | unmeasured | unmeasured | unmeasured |
| | 10^2 [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^7$/°C] 30-380°C | | 37.9 | 36.9 | 37.4 | 37.3 | 37.5 |
| Density [g/cm$^3$] | | 2.71 | 2.67 | 2.69 | 2.68 | 2.71 |
| $\beta$-OH [/mm] | | 0.12 | 0.12 | 0.12 | 0.12 | 0.12 |
| After Crystallization | | | | | | |
| Crystallization Conditions① | | 1210°C-30m-in | 1210°C-30m-in | 1210°C-30m-in | 1210°C-30m-in | 1210°C-30m-in |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |

(continued)

| After Crystallization | | | | | | |
|---|---|---|---|---|---|---|
| Diffuse Trans-mittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | 126 | unmeasured | unmeasured | unmeasured |
| $\alpha$ [$\times 10^{-7}$/°C] 30-380°C | | unmeasured | 21.7 | unmeasured | unmeasured | unmeasured |
| $\alpha$ [$\times 10^{7}$/°C] 30-750°C | | unmeasured | 26.6 | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |
| Average Surface Roughness of End Surface R a [nm] | | unmeasured | unmeasured | unmeasured | unmeasured | unmeasured |
| Waviness [$\mu$m] | | unmeasured | unmeasured | unmeasured | unmeasured | unmeasured |

[Table 17]

| | | | No.41 | No.42 | No.43 | No.44 | No.45 |
|---|---|---|---|---|---|---|---|
| [% by mass] | | $SiO_2$ | 51.0 | 50.4 | 50.5 | 47.6 | 48.9 |
| | | $Al_2O_3$ | 28.5 | 28.3 | 28.5 | 29.4 | 27.6 |
| | | MgO | 10.5 | 10.5 | 10.2 | 11.5 | 10.2 |
| | | $Li_2O$ | 0.02 | 0.02 | 0.02 | 0.02 | 0.02 |
| | | $Na_2O$ | 0.03 | 0.03 | 0.03 | 0.03 | 0.04 |
| | | $K_2O$ | 0.02 | 0.01 | 0.03 | 0.02 | 0.02 |
| | | CaO | 0.28 | 0.29 | 0.25 | 0.3 | 0.27 |
| | | SrO | 0 | 0 | 0 | 0 | 0 |
| | | BaO | 0 | 0 | 1.72 | 0 | 0 |
| | | ZnO | 0 | 0 | 0 | 0 | 0 |
| | | $B_2O_3$ | 0 | 0 | 0 | 2.9 | 2.7 |
| | | $P_2O_5$ | 0.02 | 0.02 | 0.03 | 0.02 | 0.03 |
| | | $TiO_2$ | 7.31 | 6.11 | 8.47 | 6.3 | 6.4 |
| | | $ZrO_2$ | 0 | 0 | 0 | 0 | 1.86 |
| | | $HfO_2$ | 0 | 0 | 0 | 0 | 0.04 |
| | | $SnO_2$ | 2.3 | 4.3 | 0.21 | 1.9 | 1.9 |
| | | $Fe_2O_3$ | 0.02 | 0.02 | 0.02 | 0.02 | 0.02 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0.00028 | 0.00028 | 0.00028 | 0.00028 | 0.00028 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |
| [ppm] | | Pt | 0.04 | 0.04 | 0.04 | 0.04 | 0.04 |
| | | Rh | 1.2 | 1.2 | 1.2 | 1.2 | 1.2 |
| | | Pt+Rh | 1.24 | 1.24 | 1.24 | 1.24 | 1.24 |
| Si/(Si+Al+Mg) | | | 0.57 | 0.57 | 0.57 | 0.54 | 0.56 |
| Al/(Si+Al+Mg) | | | 0.32 | 0.32 | 0.32 | 0.33 | 0.32 |
| Mg/(Si+Al+Mg) | | | 0.12 | 0.12 | 0.11 | 0.13 | 0.12 |
| Si/Al | | | 1.79 | 1.78 | 1.77 | 1.62 | 1.77 |
| Si/Mg | | | 4.86 | 4.80 | 4.95 | 4.14 | 4.79 |
| Al/Mg | | | 2.71 | 2.70 | 2.79 | 2.56 | 2.71 |
| (Li+Na+K)/Si | | | 0.00137 | 0.00119 | 0.00158 | 0.00147 | 0.00164 |

(continued)

|  | No.41 | No.42 | No.43 | No.44 | No.45 |
|---|---|---|---|---|---|
| Li+Na+K+Ca+Sr+Ba [% by mass] | 0.35 | 0.35 | 2.05 | 0.37 | 0.35 |
| (Si+Zn)/(Mg+Al) | 1.31 | 1.30 | 1.30 | 1.16 | 1.29 |
| Zn-(Ti+Zr) [% by mass] | -7.31 | -6.11 | -8.47 | -6.3 | -8.26 |
| Ti/(Ti+Fe) | 0.997 | 0.997 | 0.998 | 0.997 | 0.997 |
| As+Sb [% by mass] | 0 | 0 | 0 | 0 | 0 |
| Sn+As+Sb+Cl [% by mass] | 2.30 | 4.30 | 0.21 | 1.90 | 1.90 |
| Sn/(Sn+As+Sb+Cl) | 1 | 1 | 1 | 1 | 1 |
| Metal Al [ppm] | 0 | 0 | 0 | 0 | 0 |

[Table 18]

| | | No.41 | No.42 | No.43 | No.44 | No.45 |
|---|---|---|---|---|---|---|
| Before Crystallization | | | | | | |
| Temperature equiv. to High-Temp. Viscosity | 10^4 [°C] | unmeasured | unmeasured | unmeasured | unmeasured | unmeasured |
| | 10^3 [°C] | unmeasured | unmeasured | unmeasured | unmeasured | unmeasured |
| | 10^2.5 [°C] | unmeasured | unmeasured | unmeasured | unmeasured | unmeasured |
| | 10^2 [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^7$/°C] 30-380°C | | 36.8 | 37 | 37.3 | 38 | 36.8 |
| Density [g/cm$^3$] | | 2.67 | 2.69 | 2.67 | 2.66 | 2.65 |
| $\beta$-OH [/mm] | | 0.14 | 0.14 | 0.14 | 0.14 | 0.14 |
| After Crystallization | | | | | | |
| Crystallization Conditions① | | 1210°C-30min | 1210°C-30min | 1210°C-15min | 1210°C-30min | 1210°C-1h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | unmeasured | $\alpha$-Cor. |
| Average Crystallite Size [nm] | | unmeasured | 117 | 108 | unmeasured | unmeasured |
| $\alpha$ [$\times 10^{-7}$/°C] 30-380°C | | unmeasured | 14.1 | unmeasured | unmeasured | unmeasured |
| $\alpha$ [$\times 10^7$/°C] 30-750°C | | unmeasured | 19 | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Average Surface Roughness of End Surface R a [nm] | unmeasured | unmeasured | unmeasured | unmeasured | unmeasured |
| Waviness [μm] | unmeasured | unmeasured | unmeasured | unmeasured | unmeasured |

[Table 19]

| | | | No.46 | No.47 | No.48 | No.49 | No.50 |
|---|---|---|---|---|---|---|---|
| [% by mass] | | $SiO_2$ | 52.9 | 51.8 | 53.7 | 52.7 | 49.7 |
| | | $Al_2O_3$ | 32.6 | 35.3 | 32.1 | 34.6 | 36.7 |
| | | MgO | 14.1 | 12.6 | 13.9 | 12.4 | 13.3 |
| | | $Li_2O$ | 0 | 0 | 0 | 0 | 0 |
| | | $Na_2O$ | 0.03 | 0.03 | 0.03 | 0.04 | 0.03 |
| | | $K_2O$ | 0 | 0 | 0 | 0 | 0 |
| | | CaO | 0.09 | 0.09 | 0.09 | 0.09 | 0.09 |
| | | SrO | 0 | 0 | 0 | 0 | 0 |
| | | BaO | 0 | 0 | 0 | 0 | 0 |
| | | ZnO | 0 | 0 | 0 | 0 | 0 |
| | | $B_2O_3$ | 0 | 0 | 0 | 0 | 0 |
| | | $P_2O_5$ | 0 | 0 | 0 | 0 | 0 |
| | | $TiO_2$ | 0.01 | 0.01 | 0.01 | 0.01 | 0.01 |
| | | $ZrO_2$ | 0 | 0 | 0 | 0.01 | 0 |
| | | $HfO_2$ | 0 | 0 | 0 | 0 | 0 |
| | | $SnO_2$ | 0.22 | 0.23 | 0.23 | 0.22 | 0.21 |
| | | $Fe_2O_3$ | 0.01 | 0.01 | 0.01 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0.00015 | 0.00015 | 0.00015 | 0.00015 | 0.00015 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |
| [ppm] | | Pt | 0.01 | 0.01 | 0.01 | 0.01 | 0.01 |
| | | Rh | 0.02 | 0.02 | 0.02 | 0.02 | 0.02 |
| | | Pt+Rh | 0.03 | 0.03 | 0.03 | 0.03 | 0.03 |
| Si/(Si+Al+Mg) | | | 0.53 | 0.52 | 0.54 | 0.53 | 0.50 |
| Al/(Si+Al+Mg) | | | 0.33 | 0.35 | 0.32 | 0.35 | 0.37 |

(continued)

|  | No.46 | No.47 | No.48 | No.49 | No.50 |
|---|---|---|---|---|---|
| Mg/(Si+Al+Mg) | 0.14 | 0.13 | 0.14 | 0.12 | 0.13 |
| Si/Al | 1.62 | 1.47 | 1.67 | 1.52 | 1.35 |
| Si/Mg | 3.75 | 4.11 | 3.86 | 4.25 | 3.74 |
| Al/Mg | 2.31 | 2.80 | 2.31 | 2.79 | 2.76 |
| (Li+Na+K)/Si | 0.00057 | 0.00058 | 0.00056 | 0.00076 | 0.00060 |
| Li+Na+K+Ca+Sr+Ba [% by mass] | 0.12 | 0.12 | 0.12 | 0.13 | 0.12 |
| (Si+Zn)/(Mg+Al) | 1.13 | 1.08 | 1.17 | 1.12 | 0.99 |
| Zn-(Ti+Zr) [% by mass] | -0.01 | -0.01 | -0.01 | -0.02 | -0.01 |
| Ti/(Ti+Fe) | 0.500 | 0.500 | 0.500 | 0.500 | 0.500 |
| As+Sb [% by mass] | 0 | 0 | 0 | 0 | 0 |
| Sn+As+Sb+Cl [% by mass] | 0.22 | 0.23 | 0.23 | 0.22 | 0.21 |
| Sn/(Sn+As+Sb+Cl) | 1 | 1 | 1 | 1 | 1 |
| Metal Al [ppm] | 0 | 0 | 0 | 0 | 0 |

[Table 20]

| | | | No.46 No.47 No.48 No.49 No.50 | | |
|---|---|---|---|---|---|
| Before Crystallization | | | | | |
| Temperature equiv. to High-Temp. Viscosity | 10^4 [°C] | 1255 | unmeasured | 1225 | unmeasured | unmeasured |
| | 10^3 [°C] | 1342 | unmeasured | 1333 | unmeasured | unmeasured |
| | 10^2.5 [°C] | 1404 | unmeasured | 1405 | unmeasured | unmeasured |
| | 10^2 [°C] | 1487 | unmeasured | 1495 | unmeasured | unmeasured |
| Liquidus Temperature [°C] | | unmeasured | unmeasured | 1473 | unmeasured | unmeasured |
| Liquidus Viscosity [-] | | unmeasured | unmeasured | 2.1 | unmeasured | unmeasured |
| $\alpha$ [$\times 10^7$/°C] 30-380°C | | 37.8 | 36.6 | 37.4 | 36.1 | 37.8 |
| Density [g/cm$^3$] | | 2.62 | 2.60 | 2.61 | 2.61 | 2.64 |
| $\beta$-OH [/mm] | | 0.13 | 0.13 | 0.13 | 0.13 | 0.13 |
| After Crystallization | | | | | |
| Crystallization Conditions① | | 1210°C-2h | 1210°C-2h | 1210°C-2h | 810°C-2h 1210°C-2h | 1150°C-3h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |

(continued)

| After Crystallization | | | | | |
|---|---|---|---|---|---|
| Precipitated Crystals | $\alpha$-Cor. | $\alpha$-Cor. | $\alpha$-Cor. | $\alpha$-Cor. | $\alpha$-Cor. |
| Average Crystallite Size [nm] | 101 | 126 | 108 | 117 | 126 |
| $\alpha$ [$\times 10^7$/°C] 30-380°C | -7.4 | 2.4 | -10.65 | -4.08 | -11.62 |
| $\alpha$ [$\times 10^{-7}$/°C] 30-750°C | -0.63 | 8.46 | -4.56 | 2.1 | -5.21 |
| Density [g/cm$^3$] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 21]

| | | | No.51 | No.52 | No.53 | No.54 | No.55 |
|---|---|---|---|---|---|---|---|
| [% by mass] | | $SiO_2$ | 50.6 | 50.5 | 51.5 | 50.1 | 49.3 |
| | | $Al_2O_3$ | 34.2 | 36 | 33.7 | 31.1 | 33.5 |
| | | MgO | 14.8 | 13.1 | 14.5 | 13.4 | 11.9 |
| | | $Li_2O$ | 0 | 0 | 0 | 0 | 0 |
| | | $Na_2O$ | 0.04 | 0.03 | 0.03 | 0.02 | 0.02 |
| | | $K_2O$ | 0 | 0 | 0 | 0.02 | 0.02 |
| | | CaO | 0.1 | 0.11 | 0.11 | 0.11 | 0.1 |
| | | SrO | 0 | 0 | 0 | 0 | 0 |
| | | BaO | 0 | 0 | 0 | 0 | 0 |
| | | ZnO | 0 | 0 | 0 | 0 | 0 |
| | | $B_2O_3$ | 0 | 0 | 0 | 0 | 0 |
| | | $P_2O_5$ | 0 | 0 | 0 | 0.02 | 0.02 |
| | | $TiO_2$ | 0.01 | 0.01 | 0.01 | 5.01 | 4.91 |
| | | $ZrO_2$ | 0 | 0 | 0 | 0 | 0 |
| | | $HfO_2$ | 0 | 0 | 0 | 0 | 0 |
| | | $SnO_2$ | 0.23 | 0.21 | 0.22 | 0.23 | 0.23 |
| | | $Fe_2O_3$ | 0.01 | 0.01 | 0.01 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0.00015 | 0.00015 | 0.00015 | 0.00015 | 0.00015 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |
| [ppm] | | Pt | 0.01 | 0.01 | 0.01 | 0.01 | 0.01 |
| | | Rh | 0.02 | 0.02 | 0.02 | 0.02 | 0.02 |
| | | Pt+Rh | 0.03 | 0.03 | 0.03 | 0.03 | 0.03 |
| Si/(Si+Al+Mg) | | | 0.51 | 0.51 | 0.52 | 0.53 | 0.52 |
| Al/(Si+Al+Mg) | | | 0.34 | 0.36 | 0.34 | 0.33 | 0.35 |
| Mg/(Si+Al+Mg) | | | 0.15 | 0.13 | 0.15 | 0.14 | 0.13 |
| Si/Al | | | 1.48 | 1.40 | 1.53 | 1.61 | 1.47 |
| Si/Mg | | | 3.42 | 3.85 | 3.55 | 3.74 | 4.14 |
| Al/Mg | | | 2.31 | 2.75 | 2.32 | 2.32 | 2.82 |
| (Li+Na+K)/Si | | | 0.00079 | 0.00059 | 0.00058 | 0.00080 | 0.00081 |

(continued)

|  | No.51 | No.52 | No.53 | No.54 | No.55 |
|---|---|---|---|---|---|
| Li+Na+K+Ca+Sr+Ba [% by mass] | 0.14 | 0.14 | 0.14 | 0.15 | 0.14 |
| (Si+Zn)/(Mg+Al) | 1.03 | 1.03 | 1.07 | 1.13 | 1.09 |
| Zn-(Ti+Zr) [% by mass] | -0.01 | -0.01 | -0.01 | -5.01 | -4.91 |
| Ti/(Ti+Fe) | 0.500 | 0.500 | 0.500 | 0.998 | 0.998 |
| As+Sb [% by mass] | 0 | 0 | 0 | 0 | 0 |
| Sn+As+Sb+Cl [% by mass] | 0.23 | 0.21 | 0.22 | 0.23 | 0.23 |
| Sn/(Sn+As+Sb+Cl) | 1 | 1 | 1 | 1 | 1 |
| Metal Al [ppm] | 0 | 0 | 0 | 0 | 0 |

[Table 22]

|  |  | No.51 | No.52 | No.53 | No.54 | No.55 |
|---|---|---|---|---|---|---|
| Before Crystallization | | | | | | |
| Temperature equiv. to High-Temp. Viscosity | $10^4$ [°C] | 1232 | unmeasured | 1204 | unmeasured | unmeasured |
| | $10^3$ [°C] | 1319 | unmeasured | 1309 | unmeasured | unmeasured |
| | $10^{2.5}$ [°C] | 1379 | unmeasured | 1378 | unmeasured | unmeasured |
| | $10^2$ [°C] | 1458 | unmeasured | 1465 | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^7$/°C] 30-380°C | | 39.2 | 37.2 | 38.6 | 38.7 | 37.3 |
| Density [g/cm$^3$] | | 2.64 | 2.63 | 2.63 | 2.66 | 2.66 |
| $\beta$-OH [/mm] | | 0.19 | 0.19 | 0.19 | 0.19 | 0.19 |
| After Crystallization | | | | | | |
| Crystallization Conditions① | | 810°C-2h 1210°C-2h | 1210°C-2h | 1210°C-2h | 1210°C-2h | 1210°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L * | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | 89 | 117 | 108 | 117 | 117 |
| $\alpha$ [$\times 10^{-7}$/°C] 30-380°C | | 1.31 | -2.37 | -4.12 | 9.25 | 5.52 |
| $\alpha$ [$\times 10^7$/°C] 30-750°C | | 8.22 | 3.8 | 2.27 | 15.82 | 11.59 |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Average Surface Roughness of End Surface R a [nm] | unmeasured | unmeasured | unmeasured | unmeasured | unmeasured |
| Waviness [μm] | unmeasured | unmeasured | unmeasured | unmeasured | unmeasured |

[Table 23]

| | | | No.56 | No.57 | No.58 | No.59 | No.60 |
|---|---|---|---|---|---|---|---|
| [% by mass] | | $SiO_2$ | 51.0 | 50.1 | 47.1 | 48.0 | 48.1 |
| | | $Al_2O_3$ | 30.5 | 32.9 | 35 | 32.6 | 34.3 |
| | | $MgO$ | 13.1 | 11.7 | 12.6 | 14 | 12.3 |
| | | $Li_2O$ | 0 | 0 | 0 | 0 | 0 |
| | | $Na_2O$ | 0.02 | 0.02 | 0.02 | 0.02 | 0.02 |
| | | $K_2O$ | 0.02 | 0.02 | 0.02 | 0.02 | 0.02 |
| | | $CaO$ | 0.11 | 0.1 | 0.11 | 0.12 | 0.11 |
| | | $SrO$ | 0 | 0 | 0 | 0 | 0 |
| | | $BaO$ | 0 | 0 | 0 | 0 | 0 |
| | | $ZnO$ | 0 | 0 | 0 | 0 | 0 |
| | | $B_2O_3$ | 0 | 0 | 0 | 0 | 0 |
| | | $P_2O_5$ | 0.02 | 0.02 | 0.02 | 0.02 | 0.02 |
| | | $TiO_2$ | 5.01 | 4.91 | 4.9 | 4.97 | 4.9 |
| | | $ZrO_2$ | 0 | 0 | 0 | 0 | 0 |
| | | $HfO_2$ | 0 | 0 | 0 | 0 | 0 |
| | | $SnO_2$ | 0.22 | 0.22 | 0.21 | 0.21 | 0.22 |
| | | $Fe_2O_3$ | 0.01 | 0.01 | 0.01 | 0.02 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0.0002 | 0.0002 | 0.0002 | 0.0002 | 0.0002 |
| | | $V_2O_5$ | 0 | 0 | 0 | 0 | 0 |
| | | $CuO$ | 0 | 0 | 0 | 0 | 0 |
| | | $NiO$ | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |
| [ppm] | | Pt | 0.02 | 0.02 | 0.02 | 0.02 | 0.02 |
| | | Rh | 0.01 | 0.01 | 0.01 | 0.01 | 0.01 |
| | | Pt+Rh | 0.03 | 0.03 | 0.03 | 0.03 | 0.03 |
| Si/(Si+Al+Mg) | | | 0.54 | 0.53 | 0.50 | 0.51 | 0.51 |
| Al/(Si+Al+Mg) | | | 0.32 | 0.35 | 0.37 | 0.34 | 0.36 |

(continued)

|  | No.56 | No.57 | No.58 | No.59 | No.60 |
|---|---|---|---|---|---|
| Mg/(Si+Al+Mg) | 0.14 | 0.12 | 0.13 | 0.15 | 0.13 |
| Si/Al | 1.67 | 1.52 | 1.35 | 1.47 | 1.40 |
| Si/Mg | 3.89 | 4.28 | 3.74 | 3.43 | 3.91 |
| Al/Mg | 2.33 | 2.81 | 2.78 | 2.33 | 2.79 |
| (Li+Na+K)/Si | 0.00078 | 0.00080 | 0.00085 | 0.00083 | 0.00083 |
| Li+Na+K+Ca+Sr+Ba [% by mass] | 0.15 | 0.14 | 0.15 | 0.16 | 0.15 |
| (Si+Zn)/(Mg+Al) | 1.17 | 1.12 | 0.99 | 1.03 | 1.03 |
| Zn-(Ti+Zr) [% by mass] | -5.01 | -4.91 | -4.9 | -4.97 | -4.9 |
| Ti/(Ti+Fe) | 0.998 | 0.998 | 0.998 | 0.996 | 0.998 |
| As+Sb [% by mass] | 0 | 0 | 0 | 0 | 0 |
| Sn+As+Sb+Cl [% by mass] | 0.22 | 0.22 | 0.21 | 0.21 | 0.22 |
| Sn/(Sn+As+Sb+Cl) | 1 | 1 | 1 | 1 | 1 |
| Metal Al [ppm] | 0 | 0 | 0 | 0 | 0 |

[Table 24]

| | | No.56 | No.57 | No.58 | No.59 | No.60 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^7$/°C] 30-380°C | | 37.9 | 36.9 | 38.2 | 39.7 | 38.2 |
| Density [g/cm$^3$] | | 2.65 | 2.65 | 2.68 | 2.68 | 2.67 |
| $\beta$-OH [/mm] | | 0.15 | 0.15 | 0.15 | 0.15 | 0.15 |
| After Crystallization | | | | | | |
| Crystallization Conditions① | | 1210°C-2h | 1210°C-2h | 1210°C-2h | 1210°C-2h | 1210°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L * | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | 108 | 117 | 117 | 117 | 117 |

(continued)

| After Crystallization | | | | | |
|---|---|---|---|---|---|
| $\alpha$ [$\times10^7$/°C] 30-380°C | 8.45 | 5.45 | 0.65 | 8.66 | -0.56 |
| $\alpha$ [$\times10^{-7}$/°C] 30-750°C | 15.65 | 11.37 | 7.51 | 15.5 | 6.57 |
| Density [g/cm$^3$] | unmeasured | unmeasured | unmeasured | unmeasured | unmeasured |
| Average Surface Roughness of Principal Surface Ra [nm] | unmeasured | unmeasured | unmeasured | unmeasured | unmeasured |
| Average Surface Roughness of End Surface Ra [nm] | unmeasured | unmeasured | unmeasured | unmeasured | unmeasured |
| Waviness [$\mu$m] | unmeasured | unmeasured | unmeasured | unmeasured | unmeasured |

[Table 25]

| | | | No.61 | No.62 | No.63 | No.64 | No.65 |
|---|---|---|---|---|---|---|---|
| | | $SiO_2$ | 49.0 | 51.7 | 50.8 | 52.5 | 51.7 |
| | | $Al_2O_3$ | 31.9 | 31.9 | 34.4 | 31.3 | 33.7 |
| | | MgO | 13.7 | 13.9 | 12.3 | 13.6 | 12.1 |
| | | $Li_2O$ | 0 | 0 | 0 | 0 | 0 |
| | | $Na_2O$ | 0.02 | 0.02 | 0.02 | 0.02 | 0.02 |
| | | $K_2O$ | 0.02 | 0 | 0 | 0 | 0 |
| | | CaO | 0.12 | 0.12 | 0.11 | 0.12 | 0.11 |
| | | SrO | 0 | 0 | 0 | 0 | 0 |
| | | BaO | 0 | 0 | 0 | 0 | 0 |
| | | ZnO | 0 | 0 | 0 | 0 | 0 |
| | | $B_2O_3$ | 0 | 0 | 0 | 0 | 0 |
| | | $P_2O_5$ | 0.02 | 2.14 | 2.1 | 2.27 | 2.1 |
| | | $TiO_2$ | 4.95 | 0.02 | 0.02 | 0.02 | 0.02 |
| | | $ZrO_2$ | 0 | 0 | 0 | 0.01 | 0 |
| [% by mass] | | $HfO_2$ | 0 | 0 | 0 | 0 | 0 |
| | | $SnO_2$ | 0.21 | 0.23 | 0.23 | 0.23 | 0.23 |
| | | $Fe_2O_3$ | 0.01 | 0.01 | 0.01 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0.0002 | 0.0002 | 0.0002 | 0.0002 | 0.0002 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |

(continued)

|  |  | No.61 | No.62 | No.63 | No.64 | No.65 |
|---|---|---|---|---|---|---|
| [ppm] | Pt | 0.04 | 0.04 | 0.04 | 0.04 | 0.04 |
|  | Rh | 0.01 | 0.01 | 0.01 | 0.01 | 0.01 |
|  | Pt+Rh | 0.05 | 0.05 | 0.05 | 0.05 | 0.05 |
| Si/(Si+Al+Mg) | | 0.52 | 0.53 | 0.52 | 0.54 | 0.53 |
| Al/(Si+Al+Mg) | | 0.34 | 0.33 | 0.35 | 0.32 | 0.35 |
| Mg/(Si+Al+Mg) | | 0.14 | 0.14 | 0.13 | 0.14 | 0.12 |
| Si/Al | | 1.54 | 1.62 | 1.48 | 1.68 | 1.53 |
| Si/Mg | | 3.58 | 3.72 | 4.13 | 3.86 | 4.27 |
| Al/Mg | | 2.33 | 2.29 | 2.80 | 2.30 | 2.79 |
| (Li+Na+K)/Si | | 0.00082 | 0.00039 | 0.00039 | 0.00038 | 0.00039 |
| Li+Na+K+Ca+Sr+Ba [% by mass] | | 0.16 | 0.14 | 0.13 | 0.14 | 0.13 |
| (Si+Zn)/(Mg+Al) | | 1.07 | 1.13 | 1.09 | 1.17 | 1.13 |
| Zn-(Ti+Zr) [% by mass] | | -4.95 | -0.02 | -0.02 | -0.03 | -0.02 |
| Ti/(Ti+Fe) | | 0.998 | 0.667 | 0.667 | 0.667 | 0.667 |
| As+Sb [% by mass] | | 0 | 0 | 0 | 0 | 0 |
| Sn+As+Sb+Cl [% by mass] | | 0.21 | 0.23 | 0.23 | 0.23 | 0.23 |
| Sn/(Sn+As+Sb+Cl) | | 1 | 1 | 1 | 1 | 1 |
| Metal Al [ppm] | | 0 | 0 | 0 | 0 | 0 |

[Table 26]

|  |  | No.61 | No.62 | No.63 | No.64 | No.65 |
|---|---|---|---|---|---|---|
| Before Crystallization | | | | | | |
| Temperature equiv. to High-Temp. Viscosity | 10^4 [°C] | unmeasured | unmeasured | unmeasured | unmeasured | unmeasured |
|  | 10^3 [°C] | unmeasured | unmeasured | unmeasured | unmeasured | unmeasured |
|  | 10^2.5 [°C] | unmeasured | unmeasured | unmeasured | unmeasured | unmeasured |
|  | 10^2 [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [×10$^{-7}$/°C] 30-380°C | | 39.3 | 37.1 | 31.8 | 36.7 | 35.3 |
| Density [g/cm$^3$] | | 2.67 | 2.61 | 2.61 | 2.60 | 2.60 |
| $\beta$-OH [/mm] | | 0.12 | 0.12 | 0.12 | 0.12 | 0.12 |
| After Crystallization | | | | | | |
| Crystallization Conditions① | | 1210°C-2h | 1210°C-2h | 1210°C-2h | 1210°C-2h | 1210°C-2h |
| Transmittance [%] 4mm thickness | 380nm | unmeasured | unmeasured | unmeasured | unmeasured | unmeasured |
|  | 800nm | unmeasured | unmeasured | unmeasured | unmeasured | unmeasured |
|  | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |

(continued)

| After Crystallization | | | | | | |
|---|---|---|---|---|---|---|
| Diffuse Trans-mittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | 108 | 126 | 138 | 126 | 126 |
| $\alpha$ [$\times 10^{-7}$/°C] 30-380°C | | 9.76 | 9.42 | 2.19 | 12.24 | 5.21 |
| $\alpha$ [$\times 10^{-7}$/°C] 30-750°C | | 16.82 | 16.4 | 8.42 | 19.4 | 11.35 |
| Density [g/cm$^3$] | | unmeasured | unmeasured | unmeasured | unmeasured | unmeasured |
| Average Surface Roughness of Principal Surface Ra [nm] | | unmeasured | unmeasured | unmeasured | unmeasured | unmeasured |
| Average Surface Roughness of End Surface Ra [nm] | | unmeasured | unmeasured | unmeasured | unmeasured | unmeasured |
| Waviness [$\mu$m] | | unmeasured | unmeasured | unmeasured | unmeasured | unmeasured |

[Table 27]

| | | | No.66 | No.67 | No.68 | No.69 | No.70 |
|---|---|---|---|---|---|---|---|
| [% by mass] | | $SiO_2$ | 48.7 | 49.6 | 49.5 | 50.3 | 52.4 |
| | | $Al_2O_3$ | 35.8 | 33.5 | 35.2 | 33 | 32.3 |
| | | $MgO$ | 13 | 14.4 | 12.8 | 14.2 | 14 |
| | | $Li_2O$ | 0 | 0 | 0 | 0 | 0 |
| | | $Na_2O$ | 0.02 | 0.02 | 0.02 | 0.02 | 0.02 |
| | | $K_2O$ | 0 | 0 | 0 | 0 | 0 |
| | | $CaO$ | 0.12 | 0.13 | 0.11 | 0.12 | 0.12 |
| | | $SrO$ | 0 | 0 | 0 | 0 | 0 |
| | | $BaO$ | 0 | 0 | 0 | 0 | 0 |
| | | $ZnO$ | 0 | 0 | 0 | 0 | 0 |
| | | $B_2O_3$ | 0 | 0 | 0 | 0 | 0.9 |
| | | $P_2O_5$ | 2.09 | 2.14 | 2.1 | 2.13 | 0 |
| | | $TiO_2$ | 0.01 | 0.01 | 0.01 | 0.01 | 0.01 |
| | | $ZrO_2$ | 0.01 | 0 | 0 | 0 | 0 |
| | | $HfO_2$ | 0 | 0 | 0 | 0 | 0 |
| | | $SnO_2$ | 0.22 | 0.22 | 0.22 | 0.22 | 0.23 |
| | | $Fe_2O_3$ | 0.01 | 0.02 | 0.01 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0.0002 | 0.0002 | 0.0002 | 0.0002 | 0.0002 |
| | | $V_2O_5$ | 0 | 0 | 0 | 0 | 0 |
| | | $CuO$ | 0 | 0 | 0 | 0 | 0 |
| | | $NiO$ | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |
| [ppm] | | Pt | 0.04 | 0.04 | 0.04 | 0.04 | 0.04 |
| | | Rh | 0.01 | 0.01 | 0.01 | 0.01 | 0.01 |
| | | Pt+Rh | 0.05 | 0.05 | 0.05 | 0.05 | 0.05 |
| Si/(Si+Al+Mg) | | | 0.50 | 0.51 | 0.51 | 0.52 | 0.53 |
| Al/(Si+Al+Mg) | | | 0.37 | 0.34 | 0.36 | 0.34 | 0.33 |
| Mg/(Si+Al+Mg) | | | 0.13 | 0.15 | 0.13 | 0.15 | 0.14 |
| Si/Al | | | 1.36 | 1.48 | 1.41 | 1.52 | 1.62 |
| Si/Mg | | | 3.75 | 3.44 | 3.87 | 3.54 | 3.74 |
| Al/Mg | | | 2.75 | 2.33 | 2.75 | 2.32 | 2.31 |
| (Li+Na+K)/Si | | | 0.00041 | 0.00040 | 0.00040 | 0.00040 | 0.00038 |

(continued)

|  | No.66 | No.67 | No.68 | No.69 | No.70 |
|---|---|---|---|---|---|
| Li+Na+K+Ca+Sr+Ba [% by mass] | 0.14 | 0.15 | 0.13 | 0.14 | 0.14 |
| (Si+Zn)/(Mg+Al) | 1.00 | 1.04 | 1.03 | 1.07 | 1.13 |
| Zn-(Ti+Zr) [% by mass] | -0.02 | -0.01 | -0.01 | -0.01 | -0.01 |
| Ti/(Ti+Fe) | 0.500 | 0.333 | 0.500 | 0.500 | 0.500 |
| As+Sb [% by mass] | 0 | 0 | 0 | 0 | 0 |
| Sn+As+Sb+Cl [% by mass] | 0.22 | 0.22 | 0.22 | 0.22 | 0.23 |
| Sn/(Sn+As+Sb+Cl) | 1 | 1 | 1 | 1 | 1 |
| Metal Al [ppm] | 0 | 0 | 0 | 0 | 0 |

[Table 28]

| | | No.66 | No.67 | No.68 | No.69 | No.70 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | 36.8 | 38.4 | 36.6 | 37.7 | 37.8 |
| Density [g/cm$^3$] | | 2.63 | 2.63 | 2.62 | 2.62 | 2.61 |
| $\beta$ -OH [/mm] | | 0.13 | 0.13 | 0.13 | 0.13 | 0.13 |
| After Crystallization | | | | | | |
| Crystallization Conditions① | | 1210°C-2h | 1210°C-2h | 1210°C-2h | 1210°C-2h | 1210°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | 138 | 126 | 126 | 126 | 126 |
| $\alpha$ [$\times 10^{-7}$/°C] 30-380°C | | 1.98 | -5.35 | -1.31 | -2.86 | 2.01 |
| $\alpha$ [$\times 10^{-7}$/°C] 30-750°C | | 8.1 | 0.8 | 5.92 | 3.6 | 9.48 |
| Density [g/cm$^3$] | | unmeasured | unmeasured | unmeasured | unmeasured | unmeasured |
| Average Surface Roughness of Principal Surface Ra [nm] | | unmeasured | unmeasured | unmeasured | unmeasured | unmeasured |

(continued)

| After Crystallization | | | | | |
|---|---|---|---|---|---|
| Average Surface Roughness of End Surface Ra [nm] | unmeasured | unmeasured | unmeasured | unmeasured | unmeasured |
| Waviness [$\mu$m] | unmeasured | unmeasured | unmeasured | unmeasured | unmeasured |

[Table 29]

| | | | No.71 | No.72 | No.73 | No.74 | No.75 |
|---|---|---|---|---|---|---|---|
| [% by mass] | | $SiO_2$ | 51.4 | 53.3 | 52.2 | 49.1 | 50.1 |
| | | $Al_2O_3$ | 34.8 | 31.7 | 34 | 36.3 | 33.8 |
| | | $MgO$ | 12.5 | 13.7 | 12.3 | 13.1 | 14.6 |
| | | $Li_2O$ | 0 | 0 | 0 | 0 | 0 |
| | | $Na_2O$ | 0.02 | 0.02 | 0.02 | 0.02 | 0.02 |
| | | $K_2O$ | 0 | 0 | 0 | 0 | 0 |
| | | $CaO$ | 0.11 | 0.12 | 0.11 | 0.12 | 0.12 |
| | | $SrO$ | 0 | 0 | 0 | 0 | 0 |
| | | $BaO$ | 0 | 0 | 0 | 0 | 0 |
| | | $ZnO$ | 0 | 0 | 0 | 0 | 0 |
| | | $B_2O_3$ | 0.9 | 0.9 | 1.1 | 1.2 | 1.1 |
| | | $P_2O_5$ | 0 | 0 | 0 | 0 | 0 |
| | | $TiO_2$ | 0.01 | 0.01 | 0.01 | 0.01 | 0.01 |
| | | $ZrO_2$ | 0 | 0.01 | 0 | 0 | 0 |
| | | $HfO_2$ | 0 | 0 | 0 | 0 | 0 |
| | | $SnO_2$ | 0.22 | 0.22 | 0.22 | 0.21 | 0.21 |
| | | $Fe_2O_3$ | 0.01 | 0.01 | 0.02 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0.00024 | 0.00024 | 0.00024 | 0.00024 | 0.00024 |
| | | $V_2O_5$ | 0 | 0 | 0 | 0 | 0 |
| | | $CuO$ | 0 | 0 | 0 | 0 | 0 |
| | | $NiO$ | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |
| | [ppm] | Pt | 0.04 | 0.04 | 0.04 | 0.04 | 0.04 |
| | | Rh | 0.02 | 0.02 | 0.02 | 0.02 | 0.02 |
| | | Pt+Rh | 0.06 | 0.06 | 0.06 | 0.06 | 0.06 |
| Si/(Si+Al+Mg) | | | 0.52 | 0.54 | 0.53 | 0.50 | 0.51 |
| Al/(Si+Al+Mg) | | | 0.35 | 0.32 | 0.35 | 0.37 | 0.34 |

(continued)

|  | No.71 | No.72 | No.73 | No.74 | No.75 |
|---|---|---|---|---|---|
| Mg/(Si+Al+Mg) | 0.13 | 0.14 | 0.12 | 0.13 | 0.15 |
| Si/Al | 1.48 | 1.68 | 1.54 | 1.35 | 1.48 |
| Si/Mg | 4.11 | 3.89 | 4.24 | 3.75 | 3.43 |
| Al/Mg | 2.78 | 2.31 | 2.76 | 2.77 | 2.32 |
| (Li+Na+K)/Si | 0.00039 | 0.00038 | 0.00038 | 0.00041 | 0.00040 |
| Li+Na+K+Ca+Sr+Ba [% by mass] | 0.13 | 0.14 | 0.13 | 0.14 | 0.14 |
| (Si+Zn)/(Mg+Al) | 1.09 | 1.17 | 1.13 | 0.99 | 1.04 |
| Zn-(Ti+Zr) [% by mass] | -0.01 | -0.02 | -0.01 | -0.01 | -0.01 |
| Ti/(Ti+Fe) | 0.500 | 0.500 | 0.333 | 0.500 | 0.500 |
| As+Sb [% by mass] | 0 | 0 | 0 | 0 | 0 |
| Sn+As+Sb+Cl [% by mass] | 0.22 | 0.22 | 0.22 | 0.21 | 0.21 |
| Sn/(Sn+As+Sb+Cl) | 1 | 1 | 1 | 1 | 1 |
| Metal Al [ppm] | 0 | 0 | 0 | 0 | 0 |

[Table 30]

| | | No.71 | No.72 | No.73 | No.74 | No.75 |
|---|---|---|---|---|---|---|
| Before Crystallization | | | | | | |
| Temperature equiv. to High-Temp. Viscosity | 10^4 [°C] | unmeasured | unmeasured | unmeasured | unmeasured | unmeasured |
| | 10^3 [°C] | unmeasured | unmeasured | unmeasured | unmeasured | unmeasured |
| | 10^2.5 [°C] | unmeasured | unmeasured | unmeasured | unmeasured | unmeasured |
| | 10^2 [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times$ 10$^{-7}$/°C] 30-380°C | | 36.4 | 37 | 36 | 37.7 | 38.6 |
| Density [g/cm$^3$] | | 2.61 | 2.60 | 2.60 | 2.63 | 2.63 |
| $\beta$-OH [/mm] | | 0.12 | 0.12 | 0.12 | 0.12 | 0.12 |
| After Crystallization | | | | | | |
| Crystallization Conditions① | | 1210°C-2h | 1210°C-2h | 1210°C-2h | 1210°C-2h | 1210°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | 126 | 126 | 126 | 117 | 117 |

(continued)

| After Crystallization | | | | | |
|---|---|---|---|---|---|
| $\alpha$ [$\times 10^{-7}$/°C] 30-380°C | -2.36 | 1.02 | -2.19 | -2.82 | 3.62 |
| $\alpha$ [$\times 10^{-7}$/°C] 30-750°C | 5.71 | 8.5 | 6.03 | 4.58 | 9.74 |
| Density [g/cm$^3$] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 31]

| | | | No.76 | No.77 | No.78 | No.79 | No.80 |
|---|---|---|---|---|---|---|---|
| [% by mass] | | $SiO_2$ | 50.1 | 51.0 | 51.8 | 50.8 | 52.4 |
| | | $Al_2O_3$ | 35.5 | 33.2 | 32 | 34.4 | 31.5 |
| | | MgO | 12.9 | 14.2 | 13.9 | 12.4 | 13.7 |
| | | $Li_2O$ | 0 | 0 | 0 | 0 | 0 |
| | | $Na_2O$ | 0.02 | 0.03 | 0.03 | 0.04 | 0.04 |
| | | $K_2O$ | 0 | 0 | 0 | 0 | 0 |
| | | CaO | 0.11 | 0.11 | 0.1 | 0.09 | 0.1 |
| | | SrO | 0 | 0 | 0 | 0 | 0 |
| | | BaO | 0 | 0 | 0 | 0 | 0 |
| | | ZnO | 0 | 0 | 0 | 0 | 0 |
| | | $B_2O_3$ | 1.1 | 1.2 | 0 | 0 | 0 |
| | | $P_2O_5$ | 0 | 0 | 0 | 0 | 0 |
| | | $TiO_2$ | 0.01 | 0.01 | 0.02 | 0.02 | 0.03 |
| | | $ZrO_2$ | 0 | 0.01 | 1.94 | 1.9 | 1.95 |
| | | $HfO_2$ | 0 | 0 | 0.04 | 0.04 | 0.04 |
| | | $SnO_2$ | 0.21 | 0.2 | 0.23 | 0.23 | 0.23 |
| | | $Fe_2O_3$ | 0.02 | 0.01 | 0.01 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0.00024 | 0.00024 | 0.00024 | 0.00024 | 0.00024 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |

(continued)

|  |  | No.76 | No.77 | No.78 | No.79 | No.80 |
|---|---|---|---|---|---|---|
| [ppm] | Pt | 0.04 | 0.04 | 0.04 | 0.04 | 0.04 |
|  | Rh | 0.02 | 0.02 | 0.02 | 0.02 | 0.02 |
|  | Pt+Rh | 0.06 | 0.06 | 0.06 | 0.06 | 0.06 |
| Si/(Si+Al+Mg) | | 0.51 | 0.52 | 0.53 | 0.52 | 0.54 |
| Al/(Si+Al+Mg) | | 0.36 | 0.34 | 0.33 | 0.35 | 0.32 |
| Mg/(Si+Al+Mg) | | 0.13 | 0.14 | 0.14 | 0.13 | 0.14 |
| Si/Al | | 1.41 | 1.54 | 1.62 | 1.48 | 1.66 |
| Si/Mg | | 3.88 | 3.59 | 3.73 | 4.10 | 3.82 |
| Al/Mg | | 2.75 | 2.34 | 2.30 | 2.77 | 2.30 |
| (Li+Na+K)/Si | | 0.00040 | 0.00059 | 0.00058 | 0.00079 | 0.00076 |
| Li+Na+K+Ca+Sr+Ba [% by mass] | | 0.13 | 0.14 | 0.13 | 0.13 | 0.14 |
| (Si+Zn)/(Mg+Al) | | 1.04 | 1.08 | 1.13 | 1.09 | 1.16 |
| Zn-(Ti+Zr) [% by mass] | | -0.01 | -0.02 | -1.96 | -1.92 | -1.98 |
| Ti/(Ti+Fe) | | 0.333 | 0.500 | 0.667 | 0.667 | 0.750 |
| As+Sb [% by mass] | | 0 | 0 | 0 | 0 | 0 |
| Sn+As+Sb+Cl [% by mass] | | 0.21 | 0.20 | 0.23 | 0.23 | 0.23 |
| Sn/(Sn+As+Sb+Cl) | | 1 | 1 | 1 | 1 | 1 |
| Metal Al [ppm] | | 0 | 0 | 0 | 0 | 0 |

[Table 32]

| | | No.76 | No.77 | No.78 | No.79 | No.80 |
|---|---|---|---|---|---|---|
| Before Crystallization | | | | | | |
| Temperature equiv. to High-Temp. Viscosity | 10^4 [°C] | unmeasured | unmeasured | unmeasured | unmeasured | unmeasured |
| | 10^3 [°C] | unmeasured | unmeasured | unmeasured | unmeasured | unmeasured |
| | 10^2.5 [°C] | unmeasured | unmeasured | unmeasured | unmeasured | unmeasured |
| | 10^2 [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [×10^{-7}/°C] 30-380°C | | 37.2 | 38 | 38.3 | 36.9 | 37.7 |
| Density [g/cm$^3$] | | 2.62 | 2.62 | 2.65 | 2.65 | 2.64 |
| $\beta$ -OH [/mm] | | 0.15 | 0.15 | 0.15 | 0.15 | 0.15 |
| After Crystallization | | | | | | |
| Crystallization Conditions① | | 1210°C-2h | 1210°C-2h | 1210°C-2h | 1210°C-2h | 1210°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |

(continued)

| After Crystallization | | | | | | |
|---|---|---|---|---|---|---|
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | 126 | 117 | 117 | 126 | 126 |
| $\alpha$ [$\times 10^{-7}$/°C] 30-380°C | | -2.38 | 1.786 | 7.574 | -0.961 | 6.789 |
| $\alpha$ [$\times 10^{-7}$/°C] 30-750°C | | 5.39 | 9.47 | 14.357 | 5.859 | 13.747 |
| Density [g/cm$^3$] | | unmeasured | unmeasured | unmeasured | unmeasured | unmeasured |
| Average Surface Roughness of Principal Surface Ra [nm] | | unmeasured | unmeasured | unmeasured | unmeasured | unmeasured |
| Average Surface Roughness of End Surface Ra [nm] | | unmeasured | unmeasured | unmeasured | unmeasured | unmeasured |
| Waviness [$\mu$m] | | unmeasured | unmeasured | unmeasured | unmeasured | unmeasured |

[Table 33]

|  |  | No.81 | No.82 | No.83 | No.84 | No.85 |
|---|---|---|---|---|---|---|
| [% by mass] | $SiO_2$ | 51.7 | 48.7 | 49.7 | 49.6 | 50.4 |
|  | $Al_2O_3$ | 33.9 | 36 | 33.5 | 35.3 | 33 |
|  | $MgO$ | 12.1 | 13 | 14.4 | 12.8 | 14.3 |
|  | $Li_2O$ | 0 | 0 | 0 | 0 | 0 |
|  | $Na_2O$ | 0.04 | 0.04 | 0.04 | 0.04 | 0.03 |
|  | $K_2O$ | 0 | 0 | 0 | 0 | 0 |
|  | $CaO$ | 0.09 | 0.1 | 0.1 | 0.09 | 0.09 |
|  | $SrO$ | 0 | 0 | 0 | 0 | 0 |
|  | $BaO$ | 0 | 0 | 0 | 0 | 0 |
|  | $ZnO$ | 0 | 0 | 0 | 0 | 0 |
|  | $B_2O_3$ | 0 | 0 | 0 | 0 | 0 |
|  | $P_2O_5$ | 0 | 0 | 0.01 | 0 | 0.01 |
|  | $TiO_2$ | 0.02 | 0.02 | 0.02 | 0.02 | 0.03 |
|  | $ZrO_2$ | 1.89 | 1.89 | 1.92 | 1.89 | 1.92 |
|  | $HfO_2$ | 0.04 | 0.04 | 0.04 | 0.04 | 0.04 |
|  | $SnO_2$ | 0.23 | 0.22 | 0.21 | 0.22 | 0.22 |
|  | $Fe_2O_3$ | 0.01 | 0.01 | 0.01 | 0.01 | 0.01 |
|  | $As_2O_3$ | 0 | 0 | 0 | 0 | 0 |
|  | $Sb_2O_3$ | 0 | 0 | 0 | 0 | 0 |
|  | $Cl_2$ | 0 | 0 | 0 | 0 | 0 |
|  | $MoO_3$ | 0.00022 | 0.00022 | 0.00022 | 0.00022 | 0.00022 |
|  | $V_2O_5$ | 0 | 0 | 0 | 0 | 0 |
|  | $CuO$ | 0 | 0 | 0 | 0 | 0 |
|  | $NiO$ | 0 | 0 | 0 | 0 | 0 |
|  | $MnO_2$ | 0 | 0 | 0 | 0 | 0 |
|  | $Cr_2O_3$ | 0 | 0 | 0 | 0 | 0 |
|  | $Nd_2O_3$ | 0 | 0 | 0 | 0 | 0 |
|  | $WO_3$ | 0 | 0 | 0 | 0 | 0 |
|  | $Co_3O_4$ | 0 | 0 | 0 | 0 | 0 |
| [ppm] | $Pt$ | 0.04 | 0.04 | 0.04 | 0.04 | 0.04 |
|  | $Rh$ | 0.02 | 0.02 | 0.02 | 0.02 | 0.02 |
|  | $Pt+Rh$ | 0.06 | 0.06 | 0.06 | 0.06 | 0.06 |
| Si/(Si+Al+Mg) |  | 0.53 | 0.50 | 0.51 | 0.51 | 0.52 |
| Al/(Si+Al+Mg) |  | 0.35 | 0.37 | 0.34 | 0.36 | 0.34 |
| Mg/(Si+Al+Mg) |  | 0.12 | 0.13 | 0.15 | 0.13 | 0.15 |
| Si/Al |  | 1.53 | 1.35 | 1.48 | 1.41 | 1.53 |
| Si/Mg |  | 4.27 | 3.75 | 3.45 | 3.88 | 3.52 |
| Al/Mg |  | 2.80 | 2.77 | 2.33 | 2.76 | 2.31 |
| (Li+Na+K)/Si |  | 0.00077 | 0.00082 | 0.00080 | 0.00081 | 0.00060 |

(continued)

|  | No.81 | No.82 | No.83 | No.84 | No.85 |
|---|---|---|---|---|---|
| Li+Na+K+Ca+Sr+Ba [% by mass] | 0.13 | 0.14 | 0.14 | 0.13 | 0.12 |
| (Si+Zn)/(Mg+Al) | 1.12 | 0.99 | 1.04 | 1.03 | 1.07 |
| Zn-(Ti+Zr) [% by mass] | -1.91 | -1.91 | -1.94 | -1.91 | -1.95 |
| Ti/(Ti+Fe) | 0.667 | 0.667 | 0.667 | 0.667 | 0.750 |
| As+Sb [% by mass] | 0 | 0 | 0 | 0 | 0 |
| Sn+As+Sb+Cl [% by mass] | 0.23 | 0.22 | 0.21 | 0.22 | 0.22 |
| Sn/(Sn+As+Sb+Cl) | 1 | 1 | 1 | 1 | 1 |
| Metal Al [ppm] | 0 | 0 | 0 | 0 | 0 |

[Table 34]

|  |  | No.81 | No.82 | No.83 | No.84 | No.85 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | 36.4 | 38.2 | 39.4 | 37.9 | 38.9 |
| Density [g/cm$^3$] | | 2.64 | 2.67 | 2.67 | 2.66 | 2.66 |
| $\beta$ -OH [/mm] | | 0.12 | 0.12 | 0.12 | 0.12 | 0.12 |
| After Crystallization | | | | | | |
| Crystallization Conditions① | | 1210°C-2h | 1210°C-2h | 1210°C-2h | 1210°C-2h | 1210°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | 126 | 138 | 126 | 126 | 117 |
| $\alpha$ [$\times 10^{-7}$/°C] 30-380°C | | -2.44 | -1.1 | 5.97 | -1 | 7.63 |
| $\alpha$ [$\times 10^{-7}$/°C] 30-750°C | | 4.73 | 5.31 | 12.8 | 5.47 | 14.5 |
| Density [g/cm$^3$] | | unmeasured | unmeasured | unmeasured | unmeasured | unmeasured |
| Average Surface Roughness of Principal Surface Ra [nm] | | unmeasured | unmeasured | unmeasured | unmeasured | unmeasured |

(continued)

| After Crystallization | | | | | |
|---|---|---|---|---|---|
| Average Surface Roughness of End Surface Ra [nm] | unmeasured | unmeasured | unmeasured | unmeasured | unmeasured |
| Waviness [$\mu$m] | unmeasured | unmeasured | unmeasured | unmeasured | unmeasured |

[Table 35]

| | | No.86 | No.87 | No.88 | No.89 | No.90 |
|---|---|---|---|---|---|---|
| [% by mass] | SiO$_2$ | 48.3 | 47.4 | 48.9 | 48.1 | 45.4 |
| | Al$_2$O$_3$ | 29.9 | 32.3 | 29.4 | 31.7 | 33.7 |
| | MgO | 12.9 | 11.5 | 12.7 | 11.4 | 12.2 |
| | Li$_2$O | 0.01 | 0.01 | 0.01 | 0.01 | 0.01 |
| | Na$_2$O | 0.03 | 0.03 | 0.03 | 0.03 | 0.03 |
| | K$_2$O | 0.02 | 0.02 | 0.03 | 0.02 | 0.02 |
| | CaO | 0.08 | 0.07 | 0.08 | 0.07 | 0.08 |
| | SrO | 0 | 0 | 0 | 0 | 0 |
| | BaO | 0 | 0 | 0 | 0 | 0 |
| | ZnO | 0 | 0 | 0 | 0 | 0 |
| | B$_2$O$_3$ | 0 | 0 | 0 | 0 | 0 |
| | P$_2$O$_5$ | 0.03 | 0.03 | 0.03 | 0.03 | 0.03 |
| | TiO$_2$ | 8.48 | 8.37 | 8.54 | 8.44 | 8.35 |
| | ZrO$_2$ | 0 | 0 | 0 | 0 | 0 |
| | HfO$_2$ | 0 | 0 | 0 | 0 | 0 |
| | SnO$_2$ | 0.22 | 0.22 | 0.21 | 0.21 | 0.21 |
| | Fe$_2$O$_3$ | 0.01 | 0.01 | 0.01 | 0.01 | 0.01 |
| | As$_2$O$_3$ | 0 | 0 | 0 | 0 | 0 |
| | Sb$_2$O$_3$ | 0 | 0 | 0 | 0 | 0 |
| | Cl$_2$ | 0 | 0 | 0 | 0 | 0 |
| | MoO$_3$ | 0.00022 | 0.00022 | 0.00022 | 0.00022 | 0.00022 |
| | V$_2$O$_5$ | 0 | 0 | 0 | 0 | 0 |
| | CuO | 0 | 0 | 0 | 0 | 0 |
| | NiO | 0 | 0 | 0 | 0 | 0 |
| | MnO$_2$ | 0 | 0 | 0 | 0 | 0 |
| | Cr$_2$O$_3$ | 0 | 0 | 0 | 0 | 0 |
| | Nd$_2$O$_3$ | 0 | 0 | 0 | 0 | 0 |
| | WO$_3$ | 0 | 0 | 0 | 0 | 0 |
| | Co$_3$O$_4$ | 0 | 0 | 0 | 0 | 0 |
| [ppm] | Pt | 0.04 | 0.04 | 0.04 | 0.04 | 0.04 |
| | Rh | 0.02 | 0.02 | 0.02 | 0.02 | 0.02 |
| | Pt+Rh | 0.06 | 0.06 | 0.06 | 0.06 | 0.06 |
| Si/(Si+Al+Mg) | | 0.53 | 0.52 | 0.54 | 0.53 | 0.50 |
| Al/(Si+Al+Mg) | | 0.33 | 0.35 | 0.32 | 0.35 | 0.37 |

(continued)

|  | No.86 | No.87 | No.88 | No.89 | No.90 |
|---|---|---|---|---|---|
| Mg/(Si+Al+Mg) | 0.14 | 0.13 | 0.14 | 0.13 | 0.13 |
| Si/Al | 1.62 | 1.47 | 1.66 | 1.52 | 1.35 |
| Si/Mg | 3.74 | 4.12 | 3.85 | 4.22 | 3.72 |
| Al/Mg | 2.32 | 2.81 | 2.31 | 2.78 | 2.76 |
| (Li+Na+K)/Si | 0.00124 | 0.00127 | 0.00143 | 0.00125 | 0.00132 |
| Li+Na+K+Ca+Sr+Ba [% by mass] | 0.14 | 0.13 | 0.15 | 0.13 | 0.14 |
| (Si+Zn)/(Mg+Al) | 1.13 | 1.08 | 1.16 | 1.12 | 0.99 |
| Zn-(Ti+Zr) [% by mass] | -8.48 | -8.37 | -8.54 | -8.44 | -8.35 |
| Ti/(Ti+Fe) | 0.999 | 0.999 | 0.999 | 0.999 | 0.999 |
| As+Sb [% by mass] | 0 | 0 | 0 | 0 | 0 |
| Sn+As+Sb+Cl [% by mass] | 0.22 | 0.22 | 0.21 | 0.21 | 0.21 |
| Sn/(Sn+As+Sb+Cl) | 1 | 1 | 1 | 1 | 1 |
| Metal Al [ppm] | 0 | 0 | 0 | 0 | 0 |

[Table 36]

|  |  | No.86 | No.87 | No.88 | No.89 | No.90 |
|---|---|---|---|---|---|---|
| Before Crystallization | | | | | | |
| Temperature equiv. to High-Temp. Viscosity | 10^4 [°C] | unmeasured | unmeasured | unmeasured | unmeasured | unmeasured |
| | 10^3 [°C] | unmeasured | unmeasured | unmeasured | unmeasured | unmeasured |
| | 10^2.5 [°C] | unmeasured | unmeasured | unmeasured | unmeasured | unmeasured |
| | 10^2 [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | 39.9 | 38.1 | 39.1 | 38 | 39.8 |
| Density [g/cm$^3$] | | 2.69 | 2.69 | 2.68 | 2.68 | 2.71 |
| $\beta$-OH [/mm] | | 0.14 | 0.14 | 0.14 | 0.14 | 0.14 |
| After Crystallization | | | | | | |
| Crystallization Conditions① | | 1210°C-2h | 1210°C-2h | 1210°C-2h | 1210°C-2h | 1210°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b* | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | 108 | 108 | 108 | 117 | 117 |

(continued)

| After Crystallization | | | | | |
|---|---|---|---|---|---|
| $\alpha$ [×10⁻⁷/°C] 30-380°C | 12.41 | 8.65 | 6.53 | 9.14 | 6.18 |
| $\alpha$ [×10⁻⁷/°C] 30-750°C | 19.02 | 16.03 | 13.18 | 16.04 | 13.32 |
| Density [g/cm³] | unmeasured | unmeasured | unmeasured | unmeasured | unmeasured |
| Average Surface Roughness of Principal Surface Ra [nm] | unmeasured | unmeasured | unmeasured | unmeasured | unmeasured |
| Average Surface Roughness of End Surface Ra [nm] | unmeasured | unmeasured | unmeasured | unmeasured | unmeasured |
| Waviness [$\mu$m] | unmeasured | unmeasured | unmeasured | unmeasured | unmeasured |

[Table 37]

| | | | No.91 | No.92 | No.93 | No.94 | No.95 |
|---|---|---|---|---|---|---|---|
| | | $SiO_2$ | 46.3 | 46.3 | 47.0 | 55.6 | 61.7 |
| | | $Al_2O_3$ | 31.4 | 33 | 30.8 | 24.6 | 18 |
| | | $MgO$ | 13.5 | 12 | 13.3 | 14.4 | 14.8 |
| | | $Li_2O$ | 0 | 0 | 0 | 0 | 0 |
| | | $Na_2O$ | 0.03 | 0.04 | 0.03 | 0.03 | 0.02 |
| | | $K_2O$ | 0.02 | 0.02 | 0.02 | 0 | 0 |
| | | $CaO$ | 0.08 | 0.08 | 0.09 | 0.09 | 0.09 |
| | | $SrO$ | 0 | 0 | 0 | 0 | 0 |
| | | $BaO$ | 0 | 0 | 0 | 0 | 0 |
| | | $ZnO$ | 0 | 0 | 0 | 0 | 0 |
| | | $B_2O_3$ | 0 | 0 | 0 | 5.09 | 5.11 |
| | | $P_2O_5$ | 0.03 | 0.03 | 0.03 | 0 | 0 |
| | | $TiO_2$ | 8.5 | 8.37 | 8.52 | 0 | 0.01 |
| | | $ZrO_2$ | 0 | 0 | 0 | 0 | 0 |
| [% by mass] | | $HfO_2$ | 0 | 0 | 0 | 0 | 0 |
| | | $SnO_2$ | 0.21 | 0.21 | 0.21 | 0.21 | 0.21 |
| | | $Fe_2O_3$ | 0.01 | 0.01 | 0.01 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0.00018 | 0.00018 | 0.00018 | 0.00018 | 0.00018 |
| | | $V_2O_5$ | 0 | 0 | 0 | 0 | 0 |
| | | $CuO$ | 0 | 0 | 0 | 0 | 0 |
| | | $NiO$ | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |

(continued)

|  |  | No.91 | No.92 | No.93 | No.94 | No.95 |
|---|---|---|---|---|---|---|
| [ppm] | Pt | 0.03 | 0.03 | 0.03 | 0.03 | 0.03 |
|  | Rh | 0.02 | 0.02 | 0.02 | 0.02 | 0.02 |
|  | Pt+Rh | 0.05 | 0.05 | 0.05 | 0.05 | 0.05 |
| Si/(Si+Al+Mg) | | 0.51 | 0.51 | 0.52 | 0.59 | 0.65 |
| Al/(Si+Al+Mg) | | 0.34 | 0.36 | 0.34 | 0.26 | 0.19 |
| Mg/(Si+Al+Mg) | | 0.15 | 0.13 | 0.15 | 0.15 | 0.16 |
| Si/Al | | 1.47 | 1.40 | 1.53 | 2.26 | 3.43 |
| Si/Mg | | 3.43 | 3.86 | 3.53 | 3.86 | 4.17 |
| Al/Mg | | 2.33 | 2.75 | 2.32 | 1.71 | 1.22 |
| (Li+Na+K)/Si | | 0.00108 | 0.00130 | 0.00106 | 0.00054 | 0.00032 |
| Li+Na+K+Ca+Sr+Ba [% by mass] | | 0.13 | 0.14 | 0.14 | 0.12 | 0.11 |
| (Si+Zn)/(Mg+Al) | | 1.03 | 1.03 | 1.07 | 1.43 | 1.88 |
| Zn-(Ti+Zr) [% by mass] | | -8.5 | -8.37 | -8.52 | 0 | -0.01 |
| Ti/(Ti+Fe) | | 0.999 | 0.999 | 0.999 | 0.000 | 0.500 |
| As+Sb [% by mass] | | 0 | 0 | 0 | 0 | 0 |
| Sn+As+Sb+Cl [% by mass] | | 0.21 | 0.21 | 0.21 | 0.21 | 0.21 |
| Sn/(Sn+As+Sb+Cl) | | 1 | 1 | 1 | 1 | 1 |
| Metal Al [ppm] | | 0 | 0 | 0 | 0 | 0 |

[Table 38]

| | | No.91 | No.92 | No.93 | No.94 | No.95 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | 41.3 | 39.4 | 40 | 36.3 | 37 |
| Density [g/cm$^3$] | | 2.71 | 2.70 | 2.71 | 2.53 | 2.49 |
| $\beta$-OH [/mm] | | 0.14 | 0.14 | 0.14 | 0.14 | 0.14 |
| After Crystallization | | | | | | |
| Crystallization Conditions① | | 1210°C-2h | 1210°C-2h | 1210°C-2h | 1210°C-4h | 1210°C-4h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |

(continued)

| After Crystallization | | | | | | |
|---|---|---|---|---|---|---|
| Diffuse Trans-mittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | 117 | 117 | 117 | 117 | 117 |
| $\alpha$ [$\times 10^{-7}$/°C] 30-380°C | | 9.76 | 7.96 | 8.18 | unmeasured | unmeasured |
| $\alpha$ [$\times 10^{-7}$/°C] 30-750°C | | 17.21 | 15.49 | 15.12 | unmeasured | unmeasured |
| Density [g/cm³] | | unmeasured | unmeasured | unmeasured | unmeasured | unmeasured |
| Average Surface Roughness of Principal Surface Ra [nm] | | unmeasured | unmeasured | unmeasured | unmeasured | unmeasured |
| Average Surface Roughness of End Surface Ra [nm] | | unmeasured | unmeasured | unmeasured | unmeasured | unmeasured |
| Waviness [$\mu$m] | | unmeasured | unmeasured | unmeasured | unmeasured | unmeasured |

[Table 39]

| | | | No.96 | No.97 | No.98 | No.99 | No.100 |
|---|---|---|---|---|---|---|---|
| [% by mass] | | $SiO_2$ | 59.2 | 53.8 | 54.8 | 50.1 | 51.0 |
| | | $Al_2O_3$ | 18 | 31.4 | 30.7 | 34.2 | 33.5 |
| | | MgO | 14.7 | 14.4 | 14.1 | 15.4 | 15.1 |
| | | $Li_2O$ | 0 | 0 | 0 | 0 | 0 |
| | | $Na_2O$ | 0.02 | 0.03 | 0.03 | 0.03 | 0.04 |
| | | $K_2O$ | 0 | 0 | 0 | 0 | 0 |
| | | CaO | 0.09 | 0.09 | 0.09 | 0.09 | 0.09 |
| | | SrO | 0 | 0 | 0 | 0 | 0 |
| | | BaO | 0 | 0 | 0 | 0 | 0 |
| | | ZnO | 0 | 0 | 0 | 0 | 0 |
| | | $B_2O_3$ | 5.22 | 0 | 0 | 0 | 0 |
| | | $P_2O_5$ | 0.01 | 0 | 0 | 0 | 0 |
| | | $TiO_2$ | 2.55 | 0.01 | 0.01 | 0.01 | 0.01 |
| | | $ZrO_2$ | 0 | 0 | 0 | 0 | 0 |
| | | $HfO_2$ | 0 | 0 | 0 | 0 | 0 |
| | | $SnO_2$ | 0.23 | 0.23 | 0.23 | 0.22 | 0.21 |
| | | $Fe_2O_3$ | 0.01 | 0.01 | 0.01 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0.00018 | 0.00018 | 0.00018 | 0.00018 | 0.00018 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |
| [ppm] | | Pt | 0.03 | 0.03 | 0.03 | 0.03 | 0.03 |
| | | Rh | 0.02 | 0.02 | 0.02 | 0.02 | 0.02 |
| | | Pt+Rh | 0.05 | 0.05 | 0.05 | 0.05 | 0.05 |
| Si/(Si+Al+Mg) | | | 0.64 | 0.54 | 0.55 | 0.50 | 0.51 |
| Al/(Si+Al+Mg) | | | 0.20 | 0.32 | 0.31 | 0.34 | 0.34 |
| Mg/(Si+Al+Mg) | | | 0.16 | 0.14 | 0.14 | 0.15 | 0.15 |
| Si/Al | | | 3.29 | 1.71 | 1.79 | 1.46 | 1.52 |
| Si/Mg | | | 4.03 | 3.74 | 3.89 | 3.25 | 3.38 |
| Al/Mg | | | 1.22 | 2.18 | 2.18 | 2.22 | 2.22 |
| (Li+Na+K)/Si | | | 0.00034 | 0.00056 | 0.00055 | 0.00060 | 0.00078 |

(continued)

|  | No.96 | No.97 | No.98 | No.99 | No.100 |
|---|---|---|---|---|---|
| Li+Na+K+Ca+Sr+Ba [% by mass] | 0.11 | 0.12 | 0.12 | 0.12 | 0.13 |
| (Si+Zn)/(Mg+Al) | 1.81 | 1.17 | 1.22 | 1.01 | 1.05 |
| Zn-(Ti+Zr) [% by mass] | -2.55 | -0.01 | -0.01 | -0.01 | -0.01 |
| Ti/(Ti+Fe) | 0.996 | 0.500 | 0.500 | 0.500 | 0.500 |
| As+Sb [% by mass] | 0 | 0 | 0 | 0 | 0 |
| Sn+As+Sb+Cl [% by mass] | 0.23 | 0.23 | 0.23 | 0.22 | 0.21 |
| Sn/(Sn+As+Sb+Cl) | 1 | 1 | 1 | 1 | 1 |
| Metal Al [ppm] | 0 | 0 | 0 | 0 | 0 |

[Table 40]

|  |  | No.96 | No.97 | No.98 | No.99 | No.100 |
|---|---|---|---|---|---|---|
| Before Crystallization | | | | | | |
| Temperature equiv. to High-Temp. Viscosity | $10^4$ [°C] | 1241 | unmeasured | 1224 | 1192 | unmeasured |
|  | $10^3$ [°C] | 1332 | unmeasured | 1324 | 1290 | unmeasured |
|  | $10^{2.5}$ [°C] | 1395 | unmeasured | 1390 | 1356 | unmeasured |
|  | $10^2$ [°C] | 1476 | unmeasured | 1474 | 1440 | unmeasured |
| Liquidus Temperature [°C] | | unmeasured | unmeasured | 1538 | unmeasured | unmeasured |
| Liquidus Viscosity [-] | | unmeasured | unmeasured | 1.7 | unmeasured | unmeasured |
| $\alpha$ [$\times 10^{-7}$/°C] 30-380°C | | 40.5 | 40.8 | 37.7 | 40.5 | 36.7 |
| Density [g/cm$^3$] | | 2.63 | 2.64 | 2.63 | 2.66 | 2.65 |
| $\beta$-OH [/mm] | | 0.12 | 0.12 | 0.12 | 0.12 | 0.12 |
| After Crystallization | | | | | | |
| Crystallization Conditions① | | 1210°C-4h | 1210°C-2h | 810°C-2h 1210°C-10h | 1210°C-2h | 810°C-2h 1210°C-10h |
| Transmittance [%] 4mm thickness | 380nm | unmeasured | unmeasured | unmeasured | unmeasured | unmeasured |
|  | 800nm | unmeasured | unmeasured | unmeasured | unmeasured | unmeasured |
|  | 1200nm | unmeasured | unmeasured | unmeasured | unmeasured | unmeasured |
| L * | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
|  | 800nm | unmeasured | unmeasured | unmeasured | unmeasured | unmeasured |
|  | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | 101 | 101 | 101 | 126 | 95 |
| $\alpha$ [$\times 10^{-7}$/°C] 30-380°C | | unmeasured | -7.91 | 7.72 | 4.69 | 2.14 |
| $\alpha$ [$\times 10^{-7}$/°C] 30-750°C | | unmeasured | -1.09 | 13.38 | 11 | 8.95 |
| Density [g/cm$^3$] | | unmeasured | unmeasured | unmeasured | unmeasured | unmeasured |
| Average Surface Roughness of Principal Surface Ra [nm] | | unmeasured | unmeasured | unmeasured | unmeasured | unmeasured |

(continued)

| After Crystallization | | | | | |
|---|---|---|---|---|---|
| Average Surface Roughness of End Surface Ra [nm] | unmeasured | unmeasured | unmeasured | unmeasured | unmeasured |
| Waviness [$\mu$m] | unmeasured | unmeasured | unmeasured | unmeasured | unmeasured |

[Table 41]

| | | No.101 | No.102 | No.103 | No.104 | No.105 |
|---|---|---|---|---|---|---|
| [% by mass] | $SiO_2$ | 51.1 | 52.8 | 51.7 | 50.2 | 49.8 |
| | $Al_2O_3$ | 30.5 | 31.3 | 30.8 | 29.8 | 29.8 |
| | MgO | 13.2 | 13.7 | 13.4 | 13 | 12.9 |
| | $Li_2O$ | 0 | 0 | 0 | 0 | 0 |
| | $Na_2O$ | 0.03 | 0.03 | 0.03 | 0.03 | 0.02 |
| | $K_2O$ | 0.02 | 0 | 0.01 | 0.02 | 0.02 |
| | CaO | 0.09 | 0.09 | 0.09 | 0.08 | 0.09 |
| | SrO | 0 | 0 | 0 | 0 | 0 |
| | BaO | 0 | 0 | 0 | 0 | 0 |
| | ZnO | 0 | 0 | 0 | 0 | 0 |
| | $B_2O_3$ | 0 | 1.9 | 1.2 | 1.9 | 0 |
| | $P_2O_5$ | 0.02 | 0 | 0.01 | 0.02 | 0.03 |
| | $TiO_2$ | 4.84 | 0.01 | 2.59 | 4.74 | 7.12 |
| | $ZrO_2$ | 0 | 0 | 0 | 0 | 0 |
| | $HfO_2$ | 0 | 0 | 0 | 0 | 0 |
| | $SnO_2$ | 0.22 | 0.21 | 0.21 | 0.2 | 0.22 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0.00018 | 0.00018 | 0.00018 | 0.00018 | 0.00018 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.54 | 0.54 | 0.54 | 0.54 | 0.54 |
| Al/(Si+Al+Mg) | | 0.32 | 0.32 | 0.32 | 0.32 | 0.32 |

(continued)

|  | No.101 | No.102 | No.103 | No.104 | No.105 |
|---|---|---|---|---|---|
| Mg/(Si+Al+Mg) | 0.14 | 0.14 | 0.14 | 0.14 | 0.14 |
| Si/Al | 1.68 | 1.69 | 1.68 | 1.68 | 1.67 |
| Si/Mg | 3.87 | 3.85 | 3.86 | 3.86 | 3.86 |
| Al/Mg | 2.31 | 2.28 | 2.30 | 2.29 | 2.31 |
| (Li+Na+K)/Si | 0.00098 | 0.00057 | 0.00077 | 0.00100 | 0.00080 |
| Li+Na+K+Ca+Sr+Ba [% by mass] | 0.14 | 0.12 | 0.13 | 0.13 | 0.13 |
| (Si+Zn)/(Mg+Al) | 1.17 | 1.17 | 1.17 | 1.17 | 1.17 |
| Zn-(Ti+Zr) [% by mass] | -4.84 | -0.01 | -2.59 | -4.74 | -7.12 |
| Ti/(Ti+Fe) | 0.998 | 0.500 | 0.996 | 0.998 | 0.999 |
| As+Sb [% by mass] | 0 | 0 | 0 | 0 | 0 |
| Sn+As+Sb+Cl [% by mass] | 0.22 | 0.21 | 0.21 | 0.20 | 0.22 |
| Sn/(Sn+As+Sb+Cl) | 1 | 1 | 1 | 1 | 1 |
| Metal Al [ppm] | 0 | 0 | 0 | 0 | 0 |

[Table 42]

| | | No.101 | No.102 | No.103 | No.104 | No.105 |
|---|---|---|---|---|---|---|
| Before Crystallization | | | | | | |
| Temperature equiv. to High-Temp. Viscosity | $10^4$ [°C] | 1212 | 1215 | 1204 | 1194 | unmeasured |
| | $10^3$ [°C] | 1302 | 1317 | 1302 | 1284 | unmeasured |
| | $10^{2.5}$ [°C] | 1365 | 1387 | 1369 | 1347 | unmeasured |
| | $10^2$ [°C] | 1448 | 1475 | 1455 | 1429 | unmeasured |
| Liquidus Temperature [°C] | | 1461 | 1440 | 1461 | 1424 | unmeasured |
| Liquidus Viscosity [-] | | 1.9 | 2.2 | 2 | 2 | unmeasured |
| $\alpha$ [$\times 10^{-7}$/°C] 30-380°C | | 38.3 | 37.3 | 37.8 | 38.1 | 39.1 |
| Density [g/cm$^3$] | | 2.65 | 2.59 | 2.62 | 2.63 | unmeasured |
| $\beta$-OH [/mm] | | 1.5 | 1.5 | 1.5 | 1.5 | 1.5 |
| After Crystallization | | | | | | |
| Crystallization Conditions① | | 1150°C-3h | 1150°C-3h | 1150°C-3h | 1150°C-3h | 1210°C-2h |
| Transmittance [%] 4mm thickness | 380nm | unmeasured | 2.54 | unmeasured | unmeasured | unmeasured |
| | 800nm | unmeasured | 13.1 | unmeasured | unmeasured | unmeasured |
| | 1200nm | unmeasured | 19.6 | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b* | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | unmeasured |
| Average Crystallite Size [nm] | | 117 | 117 | 117 | 126 | unmeasured |

(continued)

| After Crystallization | | | | | |
|---|---|---|---|---|---|
| $\alpha$ [×10$^{-7}$/°C] 30-380°C | 8.4 | -6.24 | -3.97 | 4.67 | unmeasured |
| $\alpha$ [×10$^{-7}$/°C] 30-750°C | 15.2 | 2.93 | 3.97 | 14.25 | unmeasured |
| Density [g/cm$^3$] | unmeasured | unmeasured | unmeasured | unmeasured | unmeasured |
| Average Surface Roughness of Principal Surface Ra [nm] | unmeasured | unmeasured | unmeasured | unmeasured | unmeasured |
| Average Surface Roughness of End Surface Ra [nm] | unmeasured | unmeasured | unmeasured | unmeasured | unmeasured |
| Waviness [$\mu$m] | unmeasured | unmeasured | unmeasured | unmeasured | unmeasured |

[Table 43]

| | | | No.106 | No.107 | No.108 | No.109 | No110 |
|---|---|---|---|---|---|---|---|
| [% by mass] | | SiO$_2$ | 51.8 | 51.4 | 53.5 | 53.6 | 63.2 |
| | | Al$_2$O$_3$ | 30.9 | 33.8 | 32 | 32 | 23.3 |
| | | MgO | 13.5 | 13.1 | 13.9 | 13.9 | 5.5 |
| | | Li$_2$O | 0 | 0 | 0 | 0 | 0 |
| | | Na$_2$O | 0.02 | 0.03 | 0.03 | 0.03 | 0.44 |
| | | K$_2$O | 0 | 0 | 0 | 0 | 0.29 |
| | | CaO | 0.1 | 0.49 | 0.09 | 0.09 | 0.14 |
| | | SrO | 0 | 0.23 | 0.01 | 0 | 0 |
| | | BaO | 0 | 0.02 | 0.01 | 0 | 1.22 |
| | | ZnO | 0 | 0 | 0.01 | 0 | 0 |
| | | B$_2$O$_3$ | 3.41 | 0.7 | 0.2 | 0.1 | 0 |
| | | P$_2$O$_5$ | 0 | 0 | 0.01 | 0 | 1.34 |
| | | TiO$_2$ | 0.01 | 0.01 | 0.01 | 0.01 | 2 |
| | | ZrO$_2$ | 0 | 0 | 0.01 | 0 | 2.26 |
| | | HfO$_2$ | 0 | 0 | 0.0001 | 0.001 | 0.05 |
| | | SnO$_2$ | 0.2 | 0.22 | 0.23 | 0.23 | 0.3 |
| | | Fe$_2$O$_3$ | 0.01 | 0.01 | 0.01 | 0.01 | 0.01 |
| | | As$_2$O$_3$ | 0 | 0 | 0 | 0 | 0 |
| | | Sb$_2$O$_3$ | 0 | 0 | 0 | 0 | 0 |
| | | Cl$_2$ | 0 | 0 | 0 | 0 | 0 |
| | | MoO$_3$ | 0.0002 | 0.0002 | 0.0002 | 0.0002 | 0.0002 |
| | | V$_2$O$_5$ | 0 | 0 | 0 | 0 | 0 |
| | | CuO | 0 | 0 | 0 | 0 | 0 |
| | | NiO | 0 | 0 | 0 | 0 | 0 |
| | | MnO$_2$ | 0 | 0 | 0 | 0 | 0 |
| | | Cr$_2$O$_3$ | 0 | 0 | 0 | 0 | 0 |
| | | Nd$_2$O$_3$ | 0 | 0 | 0 | 0 | 0 |
| | | WO$_3$ | 0 | 0 | 0 | 0 | 0 |
| | | Co$_3$O$_4$ | 0 | 0 | 0 | 0 | 0 |

(continued)

|  |  | No.106 | No.107 | No.108 | No.109 | No110 |
|---|---|---|---|---|---|---|
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.54 | 0.52 | 0.54 | 0.54 | 0.69 |
| Al/(Si+Al+Mg) | | 0.32 | 0.34 | 0.32 | 0.32 | 0.25 |
| Mg/(Si+Al+Mg) | | 0.14 | 0.13 | 0.14 | 0.14 | 0.06 |
| Si/Al | | 1.68 | 1.52 | 1.67 | 1.68 | 2.71 |
| Si/Mg | | 3.84 | 3.92 | 3.85 | 3.86 | 11.49 |
| Al/Mg | | 2.29 | 2.58 | 2.30 | 2.30 | 4.24 |
| (Li+Na+K)/Si | | 0.00039 | 0.00058 | 0.00056 | 0.00056 | 0.01155 |
| Li+Na+K+Ca+Sr+Ba [% by mass] | | 0.12 | 0.77 | 0.14 | 0.12 | 2.09 |
| (Si+Zn)/(Mg+Al) | | 1.17 | 1.10 | 1.17 | 1.17 | 2.19 |
| Zn-(Ti+Zr) [% by mass] | | -0.01 | -0.01 | -0.01 | -0.01 | -4.26 |
| Ti/(Ti+Fe) | | 0.500 | 0.500 | 0.500 | 0.500 | 0.995 |
| As+Sb [% by mass] | | 0 | 0 | 0 | 0 | 0 |
| Sn+As+Sb+Cl [% by mass] | | 0.20 | 0.22 | 0.23 | 0.23 | 0.30 |
| Sn/(Sn+As+Sb+Cl) | | 1 | 1 | 1 | 1 | 1 |
| Metal Al [ppm] | | 0 | 0 | 0 | 0 | 0 |

[Table 44]

| | | No.106 | No.107 | No.108 | No.109 | No.110 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | 35.7 | unmeasured | unmeasured | unmeasured | unmeasured |
| Density [g/cm$^3$] | | unmeasured | unmeasured | unmeasured | unmeasured | unmeasured |
| $\beta$-OH [/mm] | | 0.15 | 0.15 | 0.15 | 0.15 | 0.15 |
| After Crystallization | | | | | | |
| Crystallization Conditions① | | 1210°C-2h | 1210°C-2h | 1210°C-2h | 1210°C-2h | 1210°C-2h |
| Transmittance [%] 4mm thickness | 380nm | unmeasured | 32.8 | unmeasured | unmeasured | unmeasured |
| | 800nm | unmeasured | 58.8 | unmeasured | unmeasured | unmeasured |
| | 1200nm | unmeasured | 64.2 | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |

(continued)

| After Crystallization | | | | | | |
|---|---|---|---|---|---|---|
| Diffuse Trans-mittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | 117 | unmeasured | unmeasured | unmeasured | unmeasured |
| $\alpha$ [$\times 10^{-7}$/°C] 30-380°C | | 8.77 | unmeasured | unmeasured | unmeasured | unmeasured |
| $\alpha$ [$\times 10^{-7}$/°C] 30-750°C | | 23.1 | unmeasured | unmeasured | unmeasured | unmeasured |
| Density [g/cm$^3$] | | unmeasured | unmeasured | unmeasured | unmeasured | unmeasured |
| Average Surface Roughness of Principal Surface Ra [nm] | | unmeasured | unmeasured | unmeasured | unmeasured | unmeasured |
| Average Surface Roughness of End Surface Ra [nm] | | unmeasured | unmeasured | unmeasured | unmeasured | unmeasured |
| Waviness [$\mu$m] | | unmeasured | unmeasured | unmeasured | unmeasured | unmeasured |

[Table 45]

|  |  |  | No.111 | No.112 | No.113 | No.114 | No.115 |
|---|---|---|---|---|---|---|---|
| [% by mass] |  | $SiO_2$ | 60.7 | 65.0 | 65.0 | 58.1 | 59.5 |
|  |  | $Al_2O_3$ | 26 | 20.4 | 20.4 | 26.4 | 25.3 |
|  |  | $MgO$ | 5.4 | 5.5 | 5.5 | 9.8 | 6.2 |
|  |  | $Li_2O$ | 0 | 0 | 0 | 0 | 0 |
|  |  | $Na_2O$ | 0.44 | 0.45 | 1.35 | 0.07 | 0.07 |
|  |  | $K_2O$ | 0.29 | 0.3 | 0.3 | 0 | 0.01 |
|  |  | $CaO$ | 0.14 | 0.14 | 0.14 | 5.35 | 8.58 |
|  |  | $SrO$ | 0 | 0 | 0 | 0 | 0 |
|  |  | $BaO$ | 1.21 | 1.24 | 1.24 | 0 | 0 |
|  |  | $ZnO$ | 0 | 0 | 0 | 0 | 0 |
|  |  | $B_2O_3$ | 0 | 1 | 0 | 0 | 0 |
|  |  | $P_2O_5$ | 1.33 | 1.35 | 1.36 | 0.01 | 0.02 |
|  |  | $TiO_2$ | 1.97 | 2.01 | 2.02 | 0.01 | 0.01 |
|  |  | $ZrO_2$ | 2.22 | 2.26 | 2.27 | 0 | 0 |
|  |  | $HfO_2$ | 0.05 | 0.05 | 0.05 | 0 | 0 |
|  |  | $SnO_2$ | 0.29 | 0.29 | 0.29 | 0.3 | 0.3 |
|  |  | $Fe_2O_3$ | 0.01 | 0.01 | 0.01 | 0.01 | 0.01 |
|  |  | $As_2O_3$ | 0 | 0 | 0 | 0 | 0 |
|  |  | $Sb_2O_3$ | 0 | 0 | 0 | 0 | 0 |
|  |  | $Cl_2$ | 0 | 0 | 0 | 0 | 0 |
|  |  | $MoO_3$ | 0.0002 | 0.0002 | 0.0002 | 0.0002 | 0.0002 |
|  |  | $V_2O_5$ | 0 | 0 | 0 | 0 | 0 |
|  |  | $CuO$ | 0 | 0 | 0 | 0 | 0 |
|  |  | $NiO$ | 0 | 0 | 0 | 0 | 0 |
|  |  | $MnO_2$ | 0 | 0 | 0 | 0 | 0 |
|  |  | $Cr_2O_3$ | 0 | 0 | 0 | 0 | 0 |
|  |  | $Nd_2O_3$ | 0 | 0 | 0 | 0 | 0 |
|  |  | $WO_3$ | 0 | 0 | 0 | 0 | 0 |
|  |  | $Co_3O_4$ | 0 | 0 | 0 | 0 | 0 |
| [ppm] |  | Pt | 0.03 | 0.03 | 0.03 | 0.03 | 0.03 |
|  |  | Rh | 0.02 | 0.02 | 0.02 | 0.02 | 0.02 |
|  |  | Pt+Rh | 0.05 | 0.05 | 0.05 | 0.05 | 0.05 |
| Si/(Si+Al+Mg) |  |  | 0.66 | 0.72 | 0.72 | 0.62 | 0.65 |
| Al/(Si+Al+Mg) |  |  | 0.28 | 0.22 | 0.22 | 0.28 | 0.28 |
| Mg/(Si+Al+Mg) |  |  | 0.06 | 0.06 | 0.06 | 0.10 | 0.07 |
| Si/Al |  |  | 2.33 | 3.19 | 3.19 | 2.20 | 2.35 |
| Si/Mg |  |  | 11.24 | 11.82 | 11.82 | 5.93 | 9.60 |
| Al/Mg |  |  | 4.81 | 3.71 | 3.71 | 2.69 | 4.08 |
| (Li+Na+K)/Si |  |  | 0.01203 | 0.01154 | 0.02538 | 0.00120 | 0.00134 |

69

(continued)

|  | No.111 | No.112 | No.113 | No.114 | No.115 |
|---|---|---|---|---|---|
| Li+Na+K+Ca+Sr+Ba [% by mass] | 2.08 | 2.13 | 3.03 | 5.42 | 8.66 |
| (Si+Zn)/(Mg+Al) | 1.93 | 2.51 | 2.51 | 1.60 | 1.89 |
| Zn-(Ti+Zr) [% by mass] | -4.19 | -4.27 | -4.29 | -0.01 | -0.01 |
| Ti/(Ti+Fe) | 0.995 | 0.995 | 0.995 | 0.500 | 0.500 |
| As+Sb [% by mass] | 0 | 0 | 0 | 0 | 0 |
| Sn+As+Sb+Cl [% by mass] | 0.29 | 0.29 | 0.29 | 0.30 | 0.30 |
| Sn/(Sn+As+Sb+Cl) | 1 | 1 | 1 | 1 | 1 |
| Metal Al [ppm] | 0 | 0 | 0 | 0 | 0 |

[Table 46]

| | | No.111 | No.112 | No.113 | No.114 | No.115 |
|---|---|---|---|---|---|---|
| Before Crystallization | | | | | | |
| Temperature equiv. to High-Temp. Viscosity | $10^4$ [°C] | 1434 | unmeasured | unmeasured | unmeasured | unmeasured |
| | $10^3$ [°C] | 1497 | unmeasured | unmeasured | unmeasured | unmeasured |
| | $10^{2.5}$ [°C] | 1564 | unmeasured | unmeasured | unmeasured | unmeasured |
| | $10^2$ [°C] | 1694 | unmeasured | unmeasured | unmeasured | unmeasured |
| Liquidus Temperature [°C] | | unmeasured | unmeasured | unmeasured | 1249 | unmeasured |
| Liquidus Viscosity [-] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| Density [g/cm$^3$] | | unmeasured | unmeasured | unmeasured | unmeasured | unmeasured |
| $\beta$ -OH [/mm] | | 0.15 | 0.15 | 0.15 | 0.15 | 0.15 |
| After Crystallization | | | | | | |
| Crystallization Conditions① | | 1210°C-2h | 1210°C-2h | 1210°C-2h | 1210°C-2h | 1210°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| $\alpha$ [$\times 10^{-7}$/°C] 30-750°C | | unmeasured | unmeasured | unmeasured | unmeasured | unmeasured |
| Density [g/cm$^3$] | | unmeasured | unmeasured | unmeasured | unmeasured | unmeasured |
| Average Surface Roughness of Principal Surface Ra [nm] | | unmeasured | unmeasured | unmeasured | unmeasured | unmeasured |

(continued)

| After Crystallization | | | | | |
|---|---|---|---|---|---|
| Average Surface Roughness of End Surface Ra [nm] | unmeasured | unmeasured | unmeasured | unmeasured | unmeasured |
| Waviness [$\mu$m] | unmeasured | unmeasured | unmeasured | unmeasured | unmeasured |

[Table 47]

| | | No.116 | No.117 | No.118 | No.119 | No.120 |
|---|---|---|---|---|---|---|
| [% by mass] | $SiO_2$ | 52.1 | 52.5 | 51.6 | 52.0 | 52.5 |
| | $Al_2O_3$ | 32.7 | 31.9 | 34 | 33.2 | 33.6 |
| | MgO | 12.4 | 11.8 | 13.1 | 12.4 | 13.1 |
| | $Li_2O$ | 0 | 0 | 0 | 0 | 0 |
| | $Na_2O$ | 0.03 | 0.02 | 0.03 | 0.04 | 0.03 |
| | $K_2O$ | 0.01 | 0 | 0 | 0 | 0 |
| | CaO | 0.87 | 1.24 | 0.1 | 0.1 | 0.1 |
| | SrO | 0.47 | 0.71 | 0 | 0 | 0 |
| | BaO | 0.05 | 0.07 | 0 | 0 | 0 |
| | ZnO | 0 | 0 | 0.99 | 1.96 | 0.47 |
| | $B_2O_3$ | 1.1 | 1.6 | 0 | 0 | 0 |
| | $P_2O_5$ | 0 | 0 | 0 | 0 | 0 |
| | $TiO_2$ | 0.01 | 0.01 | 0.01 | 0.02 | 0.01 |
| | $ZrO_2$ | 0 | 0 | 0 | 0 | 0 |
| | $HfO_2$ | 0 | 0 | 0 | 0 | 0 |
| | $SnO_2$ | 0.21 | 0.21 | 0.22 | 0.22 | 0.22 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0.0002 | 0.0002 | 0.0002 | 0.0002 | 0.0002 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.54 | 0.55 | 0.52 | 0.53 | 0.53 |
| Al/(Si+Al+Mg) | | 0.34 | 0.33 | 0.34 | 0.34 | 0.34 |

(continued)

|  | No.116 | No.117 | No.118 | No.119 | No.120 |
|---|---|---|---|---|---|
| Mg/(Si+Al+Mg) | 0.13 | 0.12 | 0.13 | 0.13 | 0.13 |
| Si/Al | 1.59 | 1.65 | 1.52 | 1.57 | 1.56 |
| Si/Mg | 4.20 | 4.45 | 3.94 | 4.19 | 4.01 |
| Al/Mg | 2.64 | 2.70 | 2.60 | 2.68 | 2.56 |
| (Li+Na+K)/Si | 0.00077 | 0.00038 | 0.00058 | 0.00077 | 0.00057 |
| Li+Na+K+Ca+Sr+Ba [% by mass] | 1.43 | 2.04 | 0.13 | 0.14 | 0.13 |
| (Si+Zn)/(Mg+Al) | 1.16 | 1.20 | 1.12 | 1.18 | 1.13 |
| Zn-(Ti+Zr) [% by mass] | -0.01 | -0.01 | 0.98 | 1.94 | 0.46 |
| Ti/(Ti+Fe) | 0.500 | 0.500 | 0.500 | 0.667 | 0.500 |
| As+Sb [% by mass] | 0 | 0 | 0 | 0 | 0 |
| Sn+As+Sb+Cl [% by mass] | 0.21 | 0.21 | 0.22 | 0.22 | 0.22 |
| Sn/(Sn+As+Sb+Cl) | 1 | 1 | 1 | 1 | 1 |
| Metal Al [ppm] | 0 | 0 | 0 | 0 | 0 |

[Table 48]

| | | No.116 | No.117 | No.118 | No.119 | No.120 |
|---|---|---|---|---|---|---|
| Before Crystallization | | | | | | |
| Temperature equiv. to High-Temp. Viscosity | 10^4 [°C] | unmeasured | unmeasured | unmeasured | unmeasured | unmeasured |
| | 10^3 [°C] | unmeasured | unmeasured | unmeasured | unmeasured | unmeasured |
| | 10^2.5 [°C] | unmeasured | unmeasured | unmeasured | unmeasured | unmeasured |
| | 10^2 [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [×$10^{-7}$/°C] 30-380°C | | unmeasured | unmeasured | unmeasured | unmeasured | unmeasured |
| Density [g/cm$^3$] | | unmeasured | unmeasured | unmeasured | unmeasured | unmeasured |
| $\beta$ -OH [/mm] | | 0.15 | 0.15 | 0.15 | 0.15 | 0.15 |
| After Crystallization | | | | | | |
| Crystallization Conditions① | | 1210°C-2h | 1210°C-2h | 1210°C-2h | 1055°C-2h | 1140°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | 126 | 126 | 117 | 117 | 126 |

(continued)

| After Crystallization | | | | | |
|---|---|---|---|---|---|
| $\alpha$ [$\times 10^{-7}$/°C] 30-380°C | unmeasured | unmeasured | unmeasured | unmeasured | unmeasured |
| $\alpha$ [$\times 10^{-7}$/°C] 30-750°C | unmeasured | unmeasured | unmeasured | unmeasured | unmeasured |
| Density [g/cm$^3$] | unmeasured | unmeasured | unmeasured | unmeasured | unmeasured |
| Average Surface Roughness of Principal Surface Ra [nm] | unmeasured | unmeasured | unmeasured | unmeasured | unmeasured |
| Average Surface Roughness of End Surface Ra [nm] | unmeasured | unmeasured | unmeasured | unmeasured | unmeasured |
| Waviness [$\mu$m] | unmeasured | unmeasured | unmeasured | unmeasured | unmeasured |

[Table 49]

| | | No.121 | No.122 | No.123 | No.124 | No.125 |
|---|---|---|---|---|---|---|
| [% by mass] | $SiO_2$ | 53.9 | 55.3 | 56.8 | 56.2 | 57.9 |
| | $Al_2O_3$ | 32.4 | 31.3 | 30.1 | 30.8 | 29.5 |
| | MgO | 12.4 | 11.6 | 10.9 | 11.7 | 11 |
| | $Li_2O$ | 0 | 0 | 0 | 0 | 0 |
| | $Na_2O$ | 0.03 | 0.04 | 0.03 | 0.05 | 0.04 |
| | $K_2O$ | 0 | 0.01 | 0.01 | 0.01 | 0.01 |
| | CaO | 0.1 | 0.06 | 0.05 | 0.06 | 0.06 |
| | SrO | 0 | 0 | 0 | 0 | 0 |
| | BaO | 0 | 0 | 0 | 0 | 0 |
| | ZnO | 0.93 | 1.38 | 1.85 | 0.95 | 1.28 |
| | $B_2O_3$ | 0 | 0 | 0 | 0 | 0 |
| | $P_2O_5$ | 0 | 0 | 0 | 0 | 0 |
| | $TiO_2$ | 0.01 | 0.01 | 0.01 | 0.01 | 0.01 |
| | $ZrO_2$ | 0 | 0 | 0 | 0 | 0 |
| | $HfO_2$ | 0 | 0 | 0 | 0 | 0 |
| | $SnO_2$ | 0.22 | 0.23 | 0.23 | 0.23 | 0.24 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0.0002 | 0.0002 | 0.0002 | 0.0002 | 0.0002 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |

(continued)

|  |  | No.121 | No.122 | No.123 | No.124 | No.125 |
|---|---|---|---|---|---|---|
| [ppm] | Pt | 0.03 | 0.03 | 0.03 | 0.03 | 0.03 |
|  | Rh | 0.02 | 0.02 | 0.02 | 0.02 | 0.02 |
|  | Pt+Rh | 0.05 | 0.05 | 0.05 | 0.05 | 0.05 |
| Si/(Si+Al+Mg) | | 0.55 | 0.56 | 0.58 | 0.57 | 0.59 |
| Al/(Si+Al+Mg) | | 0.33 | 0.32 | 0.31 | 0.31 | 0.30 |
| Mg/(Si+Al+Mg) | | 0.13 | 0.12 | 0.11 | 0.12 | 0.11 |
| Si/Al | | 1.66 | 1.77 | 1.89 | 1.82 | 1.96 |
| Si/Mg | | 4.35 | 4.77 | 5.21 | 4.80 | 5.26 |
| Al/Mg | | 2.61 | 2.70 | 2.76 | 2.63 | 2.68 |
| (Li+Na+K)/Si | | 0.00056 | 0.00090 | 0.00070 | 0.00107 | 0.00086 |
| Li+Na+K+Ca+Sr+Ba [% by mass] | | 0.13 | 0.11 | 0.09 | 0.12 | 0.11 |
| (Si+Zn)/(Mg+Al) | | 1.22 | 1.32 | 1.43 | 1.34 | 1.46 |
| Zn-(Ti+Zr) [% by mass] | | 0.92 | 1.37 | 1.84 | 0.94 | 1.27 |
| Ti/(Ti+Fe) | | 0.500 | 0.500 | 0.500 | 0.500 | 0.500 |
| As+Sb [% by mass] | | 0 | 0 | 0 | 0 | 0 |
| Sn+As+Sb+Cl [% by mass] | | 0.22 | 0.23 | 0.23 | 0.23 | 0.24 |
| Sn/(Sn+As+Sb+Cl) | | 1 | 1 | 1 | 1 | 1 |
| Metal Al [ppm] | | 0 | 0 | 0 | 0 | 0 |

[Table 50]

|  |  | No.121 | No.122 | No.123 | No.124 | No.125 |
|---|---|---|---|---|---|---|
| Before Crystallization | | | | | | |
| Temperature equiv. to High-Temp. Viscosity | 10^4 [°C] | unmeasured | unmeasured | 1380 | unmeasured | unmeasured |
|  | 10^3 [°C] | unmeasured | unmeasured | 1413 | unmeasured | unmeasured |
|  | 10^2.5 [°C] | unmeasured | unmeasured | 1453 | unmeasured | unmeasured |
|  | 10^2 [°C] | unmeasured | unmeasured | 1534 | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [×10$^{-7}$/°C] 30-380°C | | unmeasured | unmeasured | unmeasured | unmeasured | unmeasured |
| Density [g/cm$^3$] | | unmeasured | unmeasured | unmeasured | unmeasured | unmeasured |
| $\beta$ -OH [/mm] | | 0.15 | 0.15 | 0.15 | 0.15 | 0.15 |
| After Crystallization | | | | | | |
| Crystallization Conditions① | | 1130°C-2h | 1130°C-2h | 1130°C-2h | 1130°C-2h | 1130°C-2h |
| Transmittance [%] 4mm thickness | 380nm | unmeasured | unmeasured | 16.3 | unmeasured | unmeasured |
|  | 800nm | unmeasured | unmeasured | 63.9 | unmeasured | unmeasured |
|  | 1200nm | unmeasured | unmeasured | 76 | unmeasured | unmeasured |
| L* | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |

(continued)

| After Crystallization | | | | | | |
|---|---|---|---|---|---|---|
| Diffuse Trans-mittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | 126 | unmeasured | 116 | unmeasured | unmeasured |
| $\alpha$ [$\times 10^{-7}$/°C] 30-380°C | | unmeasured | unmeasured | 5.38 | unmeasured | unmeasured |
| $\alpha$ [$\times 10^{-7}$/°C] 30-750°C | | unmeasured | unmeasured | 11.02 | unmeasured | unmeasured |
| Density [g/cm$^3$] | | unmeasured | unmeasured | unmeasured | unmeasured | unmeasured |
| Average Surface Roughness of Principal Surface Ra [nm] | | unmeasured | unmeasured | unmeasured | unmeasured | unmeasured |
| Average Surface Roughness of End Surface Ra [nm] | | unmeasured | unmeasured | unmeasured | unmeasured | unmeasured |
| Waviness [$\mu$m] | | unmeasured | unmeasured | unmeasured | unmeasured | unmeasured |

[Table 51]

|  |  | No.126 | No.127 | No.128 | No.129 | No.130 |
|---|---|---|---|---|---|---|
| [% by mass] | $SiO_2$ | 56.1 | 57.4 | 55.3 | 56.6 | 54.2 |
|  | $Al_2O_3$ | 30.1 | 29 | 29.2 | 28.4 | 30.4 |
|  | $MgO$ | 12.5 | 11.8 | 12.3 | 11.6 | 12.6 |
|  | $Li_2O$ | 0 | 0 | 0 | 0 | 0 |
|  | $Na_2O$ | 0.05 | 0.04 | 0.05 | 0.03 | 0.08 |
|  | $K_2O$ | 0.01 | 0.01 | 0.01 | 0.01 | 0.01 |
|  | $CaO$ | 0.06 | 0.06 | 0.06 | 0.06 | 0.86 |
|  | $SrO$ | 0 | 0 | 0 | 0 | 0.46 |
|  | $BaO$ | 0 | 0 | 0 | 0 | 0.05 |
|  | $ZnO$ | 0.93 | 1.39 | 0.93 | 1.38 | 0 |
|  | $B_2O_3$ | 0 | 0 | 1.9 | 1.7 | 1.1 |
|  | $P_2O_5$ | 0 | 0 | 0 | 0 | 0 |
|  | $TiO_2$ | 0.01 | 0.01 | 0.01 | 0.01 | 0.01 |
|  | $ZrO_2$ | 0 | 0 | 0 | 0 | 0 |
|  | $HfO_2$ | 0 | 0 | 0 | 0 | 0 |
|  | $SnO_2$ | 0.23 | 0.23 | 0.21 | 0.22 | 0.23 |
|  | $Fe_2O_3$ | 0.01 | 0.01 | 0.01 | 0.01 | 0.01 |
|  | $As_2O_3$ | 0 | 0 | 0 | 0 | 0 |
|  | $Sb_2O_3$ | 0 | 0 | 0 | 0 | 0 |
|  | $Cl_2$ | 0 | 0 | 0 | 0 | 0 |
|  | $MoO_3$ | 0.0002 | 0.0002 | 0.0002 | 0.0002 | 0.0002 |
|  | $V_2O_5$ | 0 | 0 | 0 | 0 | 0 |
|  | $CuO$ | 0 | 0 | 0 | 0 | 0 |
|  | $NiO$ | 0 | 0 | 0 | 0 | 0 |
|  | $MnO_2$ | 0 | 0 | 0 | 0 | 0 |
|  | $Cr_2O_3$ | 0 | 0 | 0 | 0 | 0 |
|  | $Nd_2O_3$ | 0 | 0 | 0 | 0 | 0 |
|  | $WO_3$ | 0 | 0 | 0 | 0 | 0 |
|  | $Co_3O_4$ | 0 | 0 | 0 | 0 | 0 |
| [ppm] | $Pt$ | 0.03 | 0.03 | 0.03 | 0.03 | 0.03 |
|  | $Rh$ | 0.02 | 0.02 | 0.02 | 0.02 | 0.02 |
|  | $Pt+Rh$ | 0.05 | 0.05 | 0.05 | 0.05 | 0.05 |
| Si/(Si+Al+Mg) |  | 0.57 | 0.58 | 0.57 | 0.59 | 0.56 |
| Al/(Si+Al+Mg) |  | 0.30 | 0.30 | 0.30 | 0.29 | 0.31 |
| Mg/(Si+Al+Mg) |  | 0.13 | 0.12 | 0.13 | 0.12 | 0.13 |
| Si/Al |  | 1.86 | 1.98 | 1.89 | 1.99 | 1.78 |
| Si/Mg |  | 4.49 | 4.86 | 4.50 | 4.88 | 4.30 |
| Al/Mg |  | 2.41 | 2.46 | 2.37 | 2.45 | 2.41 |
| (Li+Na+K)/Si |  | 0.00107 | 0.00087 | 0.00108 | 0.00071 | 0.00166 |

(continued)

|  | No.126 | No.127 | No.128 | No.129 | No.130 |
|---|---|---|---|---|---|
| Li+Na+K+Ca+Sr+Ba [% by mass] | 0.12 | 0.11 | 0.12 | 0.1 | 1.46 |
| (Si+Zn)/(Mg+Al) | 1.34 | 1.44 | 1.35 | 1.45 | 1.26 |
| Zn-(Ti+Zr) [% by mass] | 0.92 | 1.38 | 0.92 | 1.37 | -0.01 |
| Ti/(Ti+Fe) | 0.500 | 0.500 | 0.500 | 0.500 | 0.500 |
| As+Sb [% by mass] | 0 | 0 | 0 | 0 | 0 |
| Sn+As+Sb+Cl [% by mass] | 0.23 | 0.23 | 0.21 | 0.22 | 0.23 |
| Sn/(Sn+As+Sb+Cl) | 1 | 1 | 1 | 1 | 1 |
| Metal Al [ppm] | 0 | 0 | 0 | 0 | 0 |

[Table 52]

| | | No.126 | No.127 | No.128 | No.129 | No.130 |
|---|---|---|---|---|---|---|
| Before Crystallization | | | | | | |
| Temperature equiv. to High-Temp. Viscosity | $10^4$ [°C] | unmeasured | 1294 | unmeasured | unmeasured | unmeasured |
| | $10^3$ [°C] | unmeasured | 1377 | unmeasured | unmeasured | unmeasured |
| | $10^{2.5}$ [°C] | unmeasured | 1442 | unmeasured | unmeasured | unmeasured |
| | $10^2$ [°C] | unmeasured | 1534 | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^7$/°C] 30-380°C | | unmeasured | unmeasured | unmeasured | unmeasured | unmeasured |
| Density [g/cm$^3$] | | unmeasured | unmeasured | unmeasured | unmeasured | unmeasured |
| $\beta$ -OH [/mm] | | 0.15 | 0.15 | 0.15 | 0.15 | 0.15 |
| After Crystallization | | | | | | |
| Crystallization Conditions① | | 1210°C-2h | 1140°C-2h | 1110°C-2h | 1110°C-2h | 1120°C-2h |
| Transmittance [%] 4mm thickness | 380nm | unmeasured | 19.8 | unmeasured | unmeasured | unmeasured |
| | 800nm | unmeasured | 66.2 | unmeasured | unmeasured | unmeasured |
| | 1200nm | unmeasured | 78.1 | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | unmeasured | unmeasured | unmeasured | unmeasured |
| $\alpha$ [$\times 10^7$/°C] 30-380°C | | unmeasured | 5.86 | unmeasured | unmeasured | unmeasured |
| $\alpha$ [$\times 10^7$/°C] 30-750°C | | unmeasured | 11.65 | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Average Surface Roughness of End Surface R a [nm] | unmeasured | unmeasured | unmeasured | unmeasured | unmeasured |
| Waviness [μm] | unmeasured | unmeasured | unmeasured | unmeasured | unmeasured |

[Table 53]

| | | No.131 | No.132 | No.133 | No.134 | No.135 |
|---|---|---|---|---|---|---|
| [% by mass] | $SiO_2$ | 54.5 | 53.2 | 53.4 | 54.6 | 52.2 |
| | $Al_2O_3$ | 29.7 | 29.9 | 29.3 | 30.6 | 32.2 |
| | MgO | 11.9 | 12.4 | 11.7 | 11.1 | 12.2 |
| | $Li_2O$ | 0 | 0 | 0 | 0 | 0 |
| | $Na_2O$ | 0.08 | 0.08 | 0.08 | 0.05 | 0.05 |
| | $K_2O$ | 0.01 | 0.01 | 0.01 | 0.01 | 0.01 |
| | CaO | 1.25 | 0.86 | 1.26 | 0.85 | 0.06 |
| | SrO | 0.7 | 0.47 | 0.71 | 0.46 | 0 |
| | BaO | 0.07 | 0.05 | 0.07 | 0.05 | 0 |
| | ZnO | 0 | 0 | 0 | 0.94 | 0 |
| | $B_2O_3$ | 1.6 | 2.7 | 3.2 | 1.1 | 1.1 |
| | $P_2O_5$ | 0 | 0 | 0 | 0 | 2.03 |
| | $TiO_2$ | 0.01 | 0.01 | 0.01 | 0.01 | 0.01 |
| | $ZrO_2$ | 0 | 0 | 0 | 0 | 0 |
| | $HfO_2$ | 0 | 0 | 0 | 0 | 0 |
| | $SnO_2$ | 0.22 | 0.22 | 0.21 | 0.23 | 0.23 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0.0002 | 0.0002 | 0.0002 | 0.0002 | 0.0002 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.57 | 0.56 | 0.57 | 0.57 | 0.54 |
| Al/(Si+Al+Mg) | | 0.31 | 0.31 | 0.31 | 0.32 | 0.33 |

(continued)

|  | No.131 | No.132 | No.133 | No.134 | No.135 |
|---|---|---|---|---|---|
| Mg/(Si+Al+Mg) | 0.12 | 0.13 | 0.12 | 0.12 | 0.13 |
| Si/Al | 1.84 | 1.78 | 1.82 | 1.78 | 1.62 |
| Si/Mg | 4.58 | 4.29 | 4.56 | 4.92 | 4.28 |
| Al/Mg | 2.50 | 2.41 | 2.50 | 2.76 | 2.64 |
| (Li+Na+K)/Si | 0.00165 | 0.00169 | 0.00169 | 0.00110 | 0.00115 |
| Li+Na+K+Ca+Sr+Ba [% by mass] | 2.11 | 1.47 | 2.13 | 1.42 | 0.12 |
| (Si+Zn)/(Mg+Al) | 1.31 | 1.26 | 1.30 | 1.33 | 1.18 |
| Zn-(Ti+Zr) [% by mass] | -0.01 | -0.01 | -0.01 | 0.93 | -0.01 |
| Ti/(Ti+Fe) | 0.500 | 0.500 | 0.500 | 0.500 | 0.500 |
| As+Sb [% by mass] | 0 | 0 | 0 | 0 | 0 |
| Sn+As+Sb+Cl [% by mass] | 0.22 | 0.22 | 0.21 | 0.23 | 0.23 |
| Sn/(Sn+As+Sb+Cl) | 1 | 1 | 1 | 1 | 1 |
| Metal Al [ppm] | 0 | 0 | 0 | 0 | 0 |

[Table 54]

| | | No.131 | No.132 | No.133 | No.134 | No.135 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| **Liquidus** Viscosity [-] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| Density [g/cm$^3$] | | unmeasured | unmeasured | unmeasured | unmeasured | unmeasured |
| $\beta$-OH [/mm] | | 0.15 | 0.15 | 0.15 | 0.15 | 0.15 |
| After Crystallization | | | | | | |
| Crystallization Conditions① | | 1130°C-2h | 1130°C-2h | 1130°C-2h | 1130°C-2h | 1130°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | unmeasured | unmeasured | unmeasured |

(continued)

| After Crystallization | | | | | |
|---|---|---|---|---|---|
| $\alpha$ [$\times 10^{-7}$/°C] 30-380°C | unmeasured | unmeasured | unmeasured | unmeasured | unmeasured |
| $\alpha$ [$\times 10^{7}$/°C] 30-750°C | unmeasured | unmeasured | unmeasured | unmeasured | unmeasured |
| Density [g/cm$^3$] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 55]

| | | | No.136 | No.137 | No.138 | No.139 | No.140 |
|---|---|---|---|---|---|---|---|
| [% by mass] | | $SiO_2$ | 51.4 | 56.9 | 58.7 | 48.4 | 54.0 |
| | | $Al_2O_3$ | 31.9 | 25.8 | 27.5 | 34.9 | 31.7 |
| | | MgO | 11.1 | 9.7 | 13.5 | 16.4 | 13.9 |
| | | $Li_2O$ | 0 | 0 | 0 | 0 | 0 |
| | | $Na_2O$ | 0.07 | 0.04 | 0.05 | 0.06 | 0.05 |
| | | $K_2O$ | 0.01 | 0.01 | 0.01 | 0.01 | 0.01 |
| | | CaO | 0.06 | 5.26 | 0.07 | 0.09 | 0.07 |
| | | SrO | 0 | 0 | 0 | 0 | 0 |
| | | BaO | 0 | 0 | 0 | 0 | 0 |
| | | ZnO | 2.22 | 0 | 0 | 0 | 0 |
| | | $B_2O_3$ | 1.1 | 0 | 0 | 0 | 0 |
| | | $P_2O_5$ | 1.92 | 0.02 | 0 | 0 | 0 |
| | | $TiO_2$ | 0.01 | 2 | 0.02 | 0.01 | 0.01 |
| | | $ZrO_2$ | 0 | 0 | 0 | 0 | 0 |
| | | $HfO_2$ | 0 | 0 | 0 | 0 | 0 |
| | | $SnO_2$ | 0.22 | 0.29 | 0.23 | 0.21 | 0.22 |
| | | $Fe_2O_3$ | 0.01 | 0.01 | 0.01 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0.0002 | 0.0002 | 0.0002 | 0.0002 | 0.0002 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |

(continued)

| | | No.136 | No.137 | No.138 | No.139 | No.140 |
|---|---|---|---|---|---|---|
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.54 | 0.62 | 0.59 | 0.49 | 0.54 |
| Al/(Si+Al+Mg) | | 0.34 | 0.28 | 0.28 | 0.35 | 0.32 |
| Mg/(Si+Al+Mg) | | 0.12 | 0.10 | 0.14 | 0.16 | 0.14 |
| Si/Al | | 1.61 | 2.21 | 2.13 | 1.39 | 1.70 |
| Si/Mg | | 4.63 | 5.87 | 4.35 | 2.95 | 3.88 |
| Al/Mg | | 2.87 | 2.66 | 2.04 | 2.13 | 2.28 |
| (Li+Na+K)/Si | | 0.00156 | 0.00088 | 0.00102 | 0.00145 | 0.00111 |
| Li+Na+K+Ca+Sr+Ba [% by mass] | | 0.14 | 5.31 | 0.13 | 0.16 | 0.13 |
| (Si+Zn)/(Mg+Al) | | 1.25 | 1.60 | 1.43 | 0.94 | 1.18 |
| Zn-(Ti+Zr) [% by mass] | | 2.21 | -2 | -0.02 | -0.01 | -0.01 |
| Ti/(Ti+Fe) | | 0.500 | 0.995 | 0.667 | 0.500 | 0.500 |
| As+Sb [% by mass] | | 0 | 0 | 0 | 0 | 0 |
| Sn+As+Sb+Cl [% by mass] | | 0.22 | 0.29 | 0.23 | 0.21 | 0.22 |
| Sn/(Sn+As+Sb+Cl) | | 1 | 1 | 1 | 1 | 1 |
| Metal Al [ppm] | | 0 | 0 | 0 | 0 | 0 |

[Table 56]

| | | No.136 | No.137 | No.138 | No.139 | No.140 |
|---|---|---|---|---|---|---|
| Before Crystallization | | | | | | |
| Temperature equiv. to High-Temp. Viscosity | 10^4 [°C] | unmeasured | unmeasured | 1257 | 1199 | 1246 |
| | 10^3 [°C] | unmeasured | unmeasured | 1371 | 1287 | 1340 |
| | 10^2.5 [°C] | unmeasured | unmeasured | 1448 | 1347 | 1406 |
| | 10^2 [°C] | unmeasured | unmeasured | 1545 | 1425 | 1493 |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| Density [g/cm$^3$] | | unmeasured | unmeasured | unmeasured | unmeasured | unmeasured |
| $\beta$-OH [/mm] | | 0.15 | 0.15 | 0.15 | 0.15 | 0.15 |
| After Crystallization | | | | | | |
| Crystallization Conditions① | | 1140°C-2h | 1140°C-2h | 1140°C-2h | 1140°C-2h | 1140°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b* | | unmeasured | unmeasured | unmeasured | unmeasured | unmeasured |

(continued)

| After Crystallization | | | | | | |
|---|---|---|---|---|---|---|
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| $\alpha$ [$\times 10^{7}$/°C] 30-750°C | | unmeasured | unmeasured | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |
| Average Surface Roughness of End Surface R a [nm] | | unmeasured | unmeasured | unmeasured | unmeasured | unmeasured |
| Waviness [$\mu$m] | | unmeasured | unmeasured | unmeasured | unmeasured | unmeasured |

[Table 57]

| | | No.141 | No.142 | No.143 | No.144 | No.145 |
|---|---|---|---|---|---|---|
| [% by mass] | $SiO_2$ | 53.8 | 61.7 | 49.9 | 50.0 | 58.1 |
| | $Al_2O_3$ | 29.1 | 25.8 | 30.9 | 34.2 | 29.4 |
| | MgO | 16.7 | 12.2 | 18.8 | 13.6 | 12.1 |
| | $Li_2O$ | 0 | 0 | 0 | 0 | 0 |
| | $Na_2O$ | 0.05 | 0.04 | 0.05 | 0.07 | 0.05 |
| | $K_2O$ | 0.01 | 0.01 | 0.01 | 0.01 | 0.01 |
| | CaO | 0.09 | 0.06 | 0.1 | 0.07 | 0.06 |
| | SrO | 0 | 0 | 0 | 0 | 0 |
| | BaO | 0 | 0 | 0 | 0 | 0 |
| | ZnO | 0 | 0 | 0 | 1.83 | 0 |
| | $B_2O_3$ | 0 | 0 | 0 | 0 | 0 |
| | $P_2O_5$ | 0 | 0 | 0 | 0 | 0 |
| | $TiO_2$ | 0.01 | 0.02 | 0.01 | 0.01 | 0.02 |
| | $ZrO_2$ | 0 | 0 | 0 | 0 | 0 |
| | $HfO_2$ | 0 | 0 | 0 | 0 | 0 |
| | $SnO_2$ | 0.23 | 0.23 | 0.23 | 0.23 | 0.24 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0.0002 | 0.0002 | 0.0002 | 0.0002 | 0.0002 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.54 | 0.62 | 0.50 | 0.51 | 0.58 |
| Al/(Si+Al+Mg) | | 0.29 | 0.26 | 0.31 | 0.35 | 0.30 |
| Mg/(Si+Al+Mg) | | 0.17 | 0.12 | 0.19 | 0.14 | 0.12 |
| Si/Al | | 1.85 | 2.39 | 1.61 | 1.46 | 1.98 |
| Si/Mg | | 3.22 | 5.06 | 2.65 | 3.68 | 4.80 |
| Al/Mg | | 1.74 | 2.11 | 1.64 | 2.51 | 2.43 |
| (Li+Na+K)/Si | | 0.00112 | 0.00081 | 0.00120 | 0.00160 | 0.00103 |

(continued)

| | No.141 | No.142 | No.143 | No.144 | No.145 |
|---|---|---|---|---|---|
| Li+Na+K+Ca+Sr+Ba [% by mass] | 0.15 | 0.11 | 0.16 | 0.15 | 0.12 |
| (Si+Zn)/(Mg+Al) | 1.17 | 1.62 | 1.00 | 1.08 | 1.40 |
| Zn-(Ti+Zr) [% by mass] | -0.01 | -0.02 | -0.01 | 1.82 | -0.02 |
| Ti/(Ti+Fe) | 0.500 | 0.667 | 0.500 | 0.500 | 0.667 |
| As+Sb [% by mass] | 0 | 0 | 0 | 0 | 0 |
| Sn+As+Sb+Cl [% by mass] | 0.23 | 0.23 | 0.23 | 0.23 | 0.24 |
| Sn/(Sn+As+Sb+Cl) | 1 | 1 | 1 | 1 | 1 |
| Metal Al [ppm] | 0 | 0 | 0 | 0 | 0 |

[Table 58]

| | | No.141 | No.142 | No.143 | No.144 | No.145 |
|---|---|---|---|---|---|---|
| Before Crystallization | | | | | | |
| Temperature equiv. to High-Temp. Viscosity | 10^4 [°C] | 1211 | 1275 | 1150 | 1246 | 1281 |
| | 10^3 [°C] | 1306 | 1404 | 1257 | 1328 | 1386 |
| | 10^2.5 [°C] | 1375 | 1490 | 1326 | 1386 | 1460 |
| | 10^2 [°C] | 1465 | 1596 | 1411 | 1463 | 1557 |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^7$/°C] 30-380°C | | unmeasured | unmeasured | unmeasured | unmeasured | unmeasured |
| Density [g/cm$^3$] | | unmeasured | unmeasured | unmeasured | unmeasured | unmeasured |
| $\beta$ -OH [/mm] | | 0.15 | 0.15 | 0.15 | 0.15 | 0.15 |
| After Crystallization | | | | | | |
| Crystallization Conditions① | | 1060°C-2h | 1010°C-2h | 1060°C-2h | 1060°C-2h | 1170°C-2h |
| Transmittance [%] 4mm thickness | 380nm | unmeasured | unmeasured | unmeasured | unmeasured | 21.3 |
| | 800nm | unmeasured | unmeasured | unmeasured | unmeasured | 68.6 |
| | 1200nm | unmeasured | unmeasured | unmeasured | unmeasured | 81.5 |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | 40.7 |
| | 800nm | unmeasured | unmeasured | unmeasured | unmeasured | 42.5 |
| | 1200nm | unmeasured | unmeasured | unmeasured | unmeasured | 35.1 |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | unmeasured | unmeasured | unmeasured | unmeasured |
| $\alpha$ [$\times 10^7$/°C] 30-380°C | | unmeasured | unmeasured | unmeasured | unmeasured | 7.71 |
| $\alpha$ [$\times 10^7$/°C] 30-750°C | | unmeasured | unmeasured | unmeasured | unmeasured | 13.69 |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Average Surface Roughness of End Surface R a [nm] | unmeasured | unmeasured | unmeasured | unmeasured | unmeasured |
| Waviness [μm] | unmeasured | unmeasured | unmeasured | unmeasured | unmeasured |

[Table 59]

| | | | No.146 | No.147 | No.148 | No.149 | No.150 |
|---|---|---|---|---|---|---|---|
| [% by mass] | | $SiO_2$ | 52.9 | 56.3 | 57.3 | 57.1 | 56.8 |
| | | $Al_2O_3$ | 31.5 | 28.3 | 28.9 | 28.8 | 28.6 |
| | | MgO | 13.8 | 11.6 | 11.9 | 11.8 | 11.8 |
| | | $Li_2O$ | 0 | 0 | 0.1 | 0.5 | 1 |
| | | $Na_2O$ | 0.07 | 0.06 | 0.06 | 0.07 | 0.07 |
| | | $K_2O$ | 0.01 | 0.01 | 0.01 | 0.01 | 0.01 |
| | | CaO | 0.07 | 0.06 | 0.06 | 0.06 | 0.06 |
| | | SrO | 0 | 0 | 0 | 0 | 0 |
| | | BaO | 0 | 0 | 0 | 0 | 0 |
| | | ZnO | 1.4 | 1.38 | 1.41 | 1.41 | 1.39 |
| | | $B_2O_3$ | 0 | 0 | 0 | 0 | 0 |
| | | $P_2O_5$ | 0 | 0 | 0 | 0 | 0 |
| | | $TiO_2$ | 0.01 | 1.97 | 0.01 | 0.01 | 0.01 |
| | | $ZrO_2$ | 0 | 0 | 0 | 0 | 0 |
| | | $HfO_2$ | 0 | 0 | 0 | 0 | 0 |
| | | $SnO_2$ | 0.23 | 0.24 | 0.23 | 0.23 | 0.23 |
| | | $Fe_2O_3$ | 0.01 | 0.01 | 0.01 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0.0002 | 0.0002 | 0.0002 | 0.0002 | 0.0002 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |
| [ppm] | | Pt | 0.03 | 0.03 | 0.03 | 0.03 | 0.03 |
| | | Rh | 0.02 | 0.02 | 0.02 | 0.02 | 0.02 |
| | | Pt+Rh | 0.05 | 0.05 | 0.05 | 0.05 | 0.05 |
| Si/(Si+Al+Mg) | | | 0.54 | 0.59 | 0.58 | 0.58 | 0.58 |
| Al/(Si+Al+Mg) | | | 0.32 | 0.29 | 0.29 | 0.29 | 0.29 |

(continued)

|  | No.146 | No.147 | No.148 | No.149 | No.150 |
|---|---|---|---|---|---|
| Mg/(Si+Al+Mg) | 0.14 | 0.12 | 0.12 | 0.12 | 0.12 |
| Si/Al | 1.68 | 1.99 | 1.98 | 1.98 | 1.99 |
| Si/Mg | 3.83 | 4.85 | 4.82 | 4.84 | 4.81 |
| Al/Mg | 2.28 | 2.44 | 2.43 | 2.44 | 2.42 |
| (Li+Na+K)/Si | 0.00151 | 0.00124 | 0.00297 | 0.01016 | 0.01901 |
| Li+Na+K+Ca+Sr+Ba [% by mass] | 0.15 | 0.13 | 0.23 | 0.64 | 1.14 |
| (Si+Zn)/(Mg+Al) | 1.20 | 1.45 | 1.44 | 1.44 | 1.44 |
| Zn-(Ti+Zr) [% by mass] | 1.39 | -0.59 | 1.4 | 1.4 | 1.38 |
| Ti/(Ti+Fe) | 0.500 | 0.995 | 0.500 | 0.500 | 0.500 |
| As+Sb [% by mass] | 0 | 0 | 0 | 0 | 0 |
| Sn+As+Sb+Cl [% by mass] | 0.23 | 0.24 | 0.23 | 0.23 | 0.23 |
| Sn/(Sn+As+Sb+Cl) | 1 | 1 | 1 | 1 | 1 |
| Metal Al [ppm] | 0 | 0 | 0 | 0 | 0 |

[Table 60]

| | | No.146 | No.147 | No.148 | No.149 | No.150 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^7$/°C] 30-380°C | | unmeasured | unmeasured | unmeasured | unmeasured | unmeasured |
| Density [g/cm$^3$] | | unmeasured | unmeasured | unmeasured | unmeasured | unmeasured |
| $\beta$-OH [/mm] | | 0.15 | 0.15 | 0.15 | 0.15 | 0.15 |
| After Crystallization | | | | | | |
| Crystallization Conditions① | | 1140°C-2h | 1140°C-2h | 1140°C-2h | 1190°C-2h | 1160°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b* | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | unmeasured | unmeasured | unmeasured |

(continued)

| After Crystallization | | | | | |
|---|---|---|---|---|---|
| $\alpha$ [$\times 10^7$/°C] 30-380°C | unmeasured | unmeasured | 7.19 | 22.89 | unmeasured |
| $\alpha$ [$\times 10^7$/°C] 30-750°C | unmeasured | unmeasured | 13.06 | 26.62 | unmeasured |
| Density [g/cm³] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [μ m] | unmeasured | unmeasured | unmeasured | unmeasured | unmeasured |

[Table 61]

| | | No.151 | No.152 | No.153 | No.154 | No.155 |
|---|---|---|---|---|---|---|
| [% by mass] | $SiO_2$ | 58.6 | 54.8 | 45.9 | 63.3 | 60.5 |
| | $Al_2O_3$ | 31.3 | 33 | 40.1 | 22 | 24.5 |
| | MgO | 9.8 | 11.8 | 13.7 | 14.4 | 14.6 |
| | $Li_2O$ | 0 | 0 | 0 | 0 | 0 |
| | $Na_2O$ | 0.05 | 0.05 | 0.06 | 0.04 | 0.06 |
| | $K_2O$ | 0.01 | 0.01 | 0.01 | 0.01 | 0.01 |
| | CaO | 0.06 | 0.07 | 0.08 | 0.08 | 0.08 |
| | SrO | 0 | 0 | 0 | 0 | 0 |
| | BaO | 0 | 0 | 0 | 0 | 0 |
| | ZnO | 0 | 0 | 0 | 0 | 0 |
| | $B_2O_3$ | 0 | 0 | 0 | 0 | 0 |
| | $P_2O_5$ | 0 | 0 | 0 | 0 | 0 |
| | $TiO_2$ | 0.02 | 0.01 | 0.01 | 0.02 | 0.02 |
| | $ZrO_2$ | 0 | 0 | 0 | 0 | 0 |
| | $HfO_2$ | 0 | 0 | 0 | 0 | 0 |
| | $SnO_2$ | 0.17 | 0.16 | 0.17 | 0.22 | 0.22 |
| | $Fe_2O_3$ | 0.02 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0.0002 | 0.0002 | 0.0002 | 0.0002 | 0.0002 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |

(continued)

|  |  | No.151 | No.152 | No.153 | No.154 | No.155 |
|---|---|---|---|---|---|---|
| [ppm] | Pt | 0.03 | 0.03 | 0.03 | 0.03 | 0.03 |
|  | Rh | 0.02 | 0.02 | 0.02 | 0.02 | 0.02 |
|  | Pt+Rh | 0.05 | 0.05 | 0.05 | 0.05 | 0.05 |
| Si/(Si+Al+Mg) | | 0.59 | 0.55 | 0.46 | 0.63 | 0.61 |
| Al/(Si+Al+Mg) | | 0.31 | 0.33 | 0.40 | 0.22 | 0.25 |
| Mg/(Si+Al+Mg) | | 0.10 | 0.12 | 0.14 | 0.14 | 0.15 |
| Si/Al | | 1.87 | 1.66 | 1.14 | 2.88 | 2.47 |
| Si/Mg | | 5.98 | 4.64 | 3.35 | 4.40 | 4.14 |
| Al/Mg | | 3.19 | 2.80 | 2.93 | 1.53 | 1.68 |
| (Li+Na+K)/Si | | 0.00102 | 0.00109 | 0.00153 | 0.00079 | 0.00116 |
| Li+Na+K+Ca+Sr+Ba [% by mass] | | 0.12 | 0.13 | 0.15 | 0.13 | 0.15 |
| (Si+Zn)/(Mg+Al) | | 1.43 | 1.22 | 0.85 | 1.74 | 1.55 |
| Zn-(Ti+Zr) [% by mass] | | -0.02 | -0.01 | -0.01 | -0.02 | -0.02 |
| Ti/(Ti+Fe) | | 0.500 | 0.500 | 0.500 | 0.667 | 0.667 |
| As+Sb [% by mass] | | 0 | 0 | 0 | 0 | 0 |
| Sn+As+Sb+Cl [% by mass] | | 0.17 | 0.16 | 0.17 | 0.22 | 0.22 |
| Sn/(Sn+As+Sb+Cl) | | 1 | 1 | 1 | 1 | 1 |
| Metal Al [ppm] | | 0 | 0 | 0 | 0 | 0 |

[Table 62]

|  |  | No.151 | No.152 | No.153 | No.154 | No.155 |
|---|---|---|---|---|---|---|
| Before Crystallization | | | | | | |
| Temperature equiv. to High-Temp. Viscosity | $10^4$ [°C] | unmeasured | 1303 | unmeasured | 1254 | unmeasured |
|  | $10^3$ [°C] | unmeasured | 1386 | unmeasured | 1386 | unmeasured |
|  | $10^{2.5}$ [°C] | unmeasured | 1446 | unmeasured | 1472 | unmeasured |
|  | $10^2$ [°C] | unmeasured | 1526 | unmeasured | 1579 | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| Density [g/cm$^3$] | | unmeasured | unmeasured | unmeasured | unmeasured | unmeasured |
| $\beta$-OH [/mm] | | 0.15 | 0.15 | 0.15 | 0.15 | 0.15 |
| After Crystallization | | | | | | |
| Crystallization Conditions(D | | 1140°C-2h | 1140°C-2h | 1140°C-2h | 1140°C-2h | 1140°C-2h |
| Transmittance [%] 4mm thickness | 380nm | unmeasured | unmeasured | unmeasured | unmeasured | unmeasured |
|  | 800nm | unmeasured | unmeasured | unmeasured | unmeasured | unmeasured |
|  | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b* | | unmeasured | unmeasured | unmeasured | unmeasured | unmeasured |

(continued)

| After Crystallization | | | | | | |
|---|---|---|---|---|---|---|
| Diffuse Trans-mittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| $\alpha$ [$\times 10^{7}$/°C] 30-750°C | | unmeasured | unmeasured | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |
| Average Surface Roughness of End Surface R a [nm] | | unmeasured | unmeasured | unmeasured | unmeasured | unmeasured |
| Waviness [$\mu$m] | | unmeasured | unmeasured | unmeasured | unmeasured | unmeasured |

[Table 63]

| | | | No.156 | No.157 | No.158 | No.159 | No.160 |
|---|---|---|---|---|---|---|---|
| [% by mass] | | $SiO_2$ | 59.4 | 55.4 | 51.0 | 57.8 | 60.6 |
| | | $Al_2O_3$ | 31.7 | 34.7 | 38.3 | 27.1 | 25.6 |
| | | $MgO$ | 8.5 | 9.5 | 10.3 | 13.3 | 12 |
| | | $Li_2O$ | 0 | 0 | 0 | 0 | 0 |
| | | $Na_2O$ | 0.07 | 0.08 | 0.08 | 0.08 | 0.07 |
| | | $K_2O$ | 0.01 | 0.01 | 0.01 | 0.01 | 0.01 |
| | | $CaO$ | 0.05 | 0.05 | 0.06 | 0.07 | 0.06 |
| | | $SrO$ | 0 | 0 | 0 | 0 | 0 |
| | | $BaO$ | 0 | 0 | 0 | 0 | 0 |
| | | $ZnO$ | 0 | 0 | 0 | 1.39 | 1.4 |
| | | $B_2O_3$ | 0 | 0 | 0 | 0 | 0 |
| | | $P_2O_5$ | 0 | 0 | 0 | 0 | 0 |
| | | $TiO_2$ | 0.02 | 0.01 | 0.01 | 0.01 | 0.02 |
| | | $ZrO_2$ | 0 | 0 | 0 | 0 | 0 |
| | | $HfO_2$ | 0 | 0 | 0 | 0 | 0 |
| | | $SnO_2$ | 0.21 | 0.19 | 0.18 | 0.24 | 0.24 |
| | | $Fe_2O_3$ | 0.01 | 0.01 | 0.01 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0.0002 | 0.0002 | 0.0002 | 0.0002 | 0.0002 |
| | | $V_2O_5$ | 0 | 0 | 0 | 0 | 0 |
| | | $CuO$ | 0 | 0 | 0 | 0 | 0 |
| | | $NiO$ | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |
| [ppm] | | Pt | 0.03 | 0.03 | 0.03 | 0.03 | 0.03 |
| | | Rh | 0.02 | 0.02 | 0.02 | 0.02 | 0.02 |
| | | Pt+Rh | 0.05 | 0.05 | 0.05 | 0.05 | 0.05 |
| Si/(Si+Al+Mg) | | | 0.60 | 0.56 | 0.51 | 0.59 | 0.62 |
| Al/(Si+Al+Mg) | | | 0.32 | 0.35 | 0.38 | 0.28 | 0.26 |
| Mg/(Si+Al+Mg) | | | 0.09 | 0.10 | 0.10 | 0.14 | 0.12 |
| Si/Al | | | 1.87 | 1.60 | 1.33 | 2.13 | 2.37 |
| Si/Mg | | | 6.99 | 5.83 | 4.95 | 4.35 | 5.05 |
| Al/Mg | | | 3.73 | 3.65 | 3.72 | 2.04 | 2.13 |
| (Li+Na+K)/Si | | | 0.00135 | 0.00162 | 0.00176 | 0.00156 | 0.00132 |

(continued)

|  | No.156 | No.157 | No.158 | No.159 | No.160 |
|---|---|---|---|---|---|
| Li+Na+K+Ca+Sr+Ba [% by mass] | 0.13 | 0.14 | 0.15 | 0.16 | 0.14 |
| (Si+Zn)/(Mg+Al) | 1.48 | 1.25 | 1.05 | 1.47 | 1.65 |
| Zn-(Ti+Zr) [% by mass] | -0.02 | -0.01 | -0.01 | 1.38 | 1.38 |
| Ti/(Ti+Fe) | 0.667 | 0.500 | 0.500 | 0.500 | 0.667 |
| As+Sb [% by mass] | 0 | 0 | 0 | 0 | 0 |
| Sn+As+Sb+Cl [% by mass] | 0.21 | 0.19 | 0.18 | 0.24 | 0.24 |
| Sn/(Sn+As+Sb+Cl) | 1 | 1 | 1 | 1 | 1 |
| Metal Al [ppm] | 0 | 0 | 0 | 0 | 0 |

[Table 64]

| | | No.156 | No.157 | No.158 | No.159 | No.160 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| Density [g/cm$^3$] | | unmeasured | unmeasured | unmeasured | unmeasured | unmeasured |
| $\beta$ -OH [/mm] | | 0.15 | 0.15 | 0.15 | 0.15 | 0.15 |
| After Crystallization | | | | | | |
| Crystallization Conditions① | | 1120°C-2h | 1210°C-2h | 1130°C-2h | 1130°C-2h | 1100°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| $\alpha$ [$\times 10^7$/°C] 30-750°C | | unmeasured | unmeasured | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Average Surface Roughness of End Surface R a [nm] | unmeasured | unmeasured | unmeasured | unmeasured | unmeasured |
| Waviness [μm] | unmeasured | unmeasured | unmeasured | unmeasured | unmeasured |

[Table 65]

| | | No.161 | No.162 | No.163 | No.164 | No.165 |
|---|---|---|---|---|---|---|
| [% by mass] | $SiO_2$ | 59.1 | 56.3 | 53.7 | 56.8 | 56.4 |
| | $Al_2O_3$ | 27.6 | 28.7 | 33 | 29 | 28.7 |
| | MgO | 11.4 | 11.8 | 11.6 | 11.9 | 11.8 |
| | $Li_2O$ | 0 | 0 | 0 | 0 | 0 |
| | $Na_2O$ | 0.07 | 0.09 | 0.09 | 0.07 | 0.08 |
| | $K_2O$ | 0.01 | 0 | 0.01 | 0.01 | 0.01 |
| | CaO | 0.06 | 0.06 | 0.06 | 0.07 | 0.06 |
| | SrO | 0 | 0 | 0 | 1.86 | 0 |
| | BaO | 0 | 0 | 0 | 0 | 2.68 |
| | ZnO | 1.41 | 2.79 | 1.4 | 0 | 0 |
| | $B_2O_3$ | 0 | 0 | 0 | 0 | 0 |
| | $P_2O_5$ | 0 | 0 | 0 | 0 | 0 |
| | $TiO_2$ | 0.02 | 0.01 | 0.01 | 0.02 | 0.02 |
| | $ZrO_2$ | 0 | 0 | 0 | 0 | 0 |
| | $HfO_2$ | 0 | 0 | 0 | 0 | 0 |
| | $SnO_2$ | 0.3 | 0.24 | 0.16 | 0.21 | 0.23 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0.0002 | 0.0002 | 0.0002 | 0.0002 | 0.0002 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.60 | 0.58 | 0.55 | 0.58 | 0.58 |
| Al/(Si+Al+Mg) | | 0.28 | 0.30 | 0.34 | 0.30 | 0.30 |

(continued)

|  | No.161 | No.162 | No.163 | No.164 | No.165 |
|---|---|---|---|---|---|
| Mg/(Si+Al+Mg) | 0.12 | 0.12 | 0.12 | 0.12 | 0.12 |
| Si/Al | 2.14 | 1.96 | 1.63 | 1.96 | 1.97 |
| Si/Mg | 5.18 | 4.77 | 4.63 | 4.77 | 4.78 |
| Al/Mg | 2.42 | 2.43 | 2.84 | 2.44 | 2.43 |
| (Li+Na+K)/Si | 0.00135 | 0.00160 | 0.00186 | 0.00141 | 0.00160 |
| Li+Na+K+Ca+Sr+Ba [% by mass] | 0.14 | 0.15 | 0.16 | 2.01 | 2.83 |
| (Si+Zn)/(Mg+Al) | 1.55 | 1.46 | 1.24 | 1.39 | 1.39 |
| Zn-(Ti+Zr) [% by mass] | 1.39 | 2.78 | 1.39 | -0.02 | -0.02 |
| Ti/(Ti+Fe) | 0.667 | 0.500 | 0.500 | 0.667 | 0.667 |
| As+Sb [% by mass] | 0 | 0 | 0 | 0 | 0 |
| Sn+As+Sb+Cl [% by mass] | 0.30 | 0.24 | 0.16 | 0.21 | 0.23 |
| Sn/(Sn+As+Sb+Cl) | 1 | 1 | 1 | 1 | 1 |
| Metal Al [ppm] | 0 | 0 | 0 | 0 | 0 |

[Table 66]

| | | No.161 | No.162 | No.163 | No.164 | No.165 |
|---|---|---|---|---|---|---|
| Before Crystallization | | | | | | |
| Temperature equiv. to High-Temp. Viscosity | 10^4 [°C] | unmeasured | unmeasured | unmeasured | unmeasured | unmeasured |
| | 10^3 [°C] | unmeasured | unmeasured | unmeasured | unmeasured | unmeasured |
| | 10^2.5 [°C] | unmeasured | unmeasured | unmeasured | unmeasured | unmeasured |
| | 10^2 [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| Density [g/cm$^3$] | | unmeasured | unmeasured | unmeasured | unmeasured | unmeasured |
| $\beta$ -OH [/mm] | | 0.15 | 0.15 | 0.15 | 0.15 | 0.15 |
| After Crystallization | | | | | | |
| Crystallization Conditions① | | 1210°C-2h | 1210°C-2h | 1210°C-2h | 1210°C-2h | 1210°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | unmeasured | unmeasured | unmeasured | unmeasured |

(continued)

| After Crystallization | | | | | |
|---|---|---|---|---|---|
| $\alpha$ [$\times 10^{-7}$/°C] 30-380°C | unmeasured | unmeasured | unmeasured | unmeasured | unmeasured |
| $\alpha$ [$\times 10^{7}$/°C] 30-750°C | unmeasured | unmeasured | unmeasured | unmeasured | unmeasured |
| Density [g/cm$^3$] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 67]

| | | | No.166 | No.167 | No.168 | No.169 | No.170 |
|---|---|---|---|---|---|---|---|
| [% by mass] | | $SiO_2$ | 57.4 | 57.3 | 57.3 | 57.3 | 57.2 |
| | | $Al_2O_3$ | 29.3 | 28.9 | 29 | 29 | 29.1 |
| | | MgO | 12 | 11.9 | 11.9 | 11.8 | 11.9 |
| | | $Li_2O$ | 0 | 0 | 0 | 0 | 0 |
| | | $Na_2O$ | 0.07 | 0.06 | 0.06 | 0.06 | 0.06 |
| | | $K_2O$ | 0.01 | 0.01 | 0.01 | 0.01 | 0.01 |
| | | CaO | 0.94 | 0.06 | 0.06 | 0.06 | 0.06 |
| | | SrO | 0 | 0 | 0 | 0 | 0 |
| | | BaO | 0 | 0 | 0 | 0 | 0 |
| | | ZnO | 0 | 1.41 | 1.38 | 1.38 | 1.39 |
| | | $B_2O_3$ | 0 | 0 | 0 | 0 | 0 |
| | | $P_2O_5$ | 0 | 0 | 0 | 0 | 0 |
| | | $TiO_2$ | 0.01 | 0.01 | 0.01 | 0.01 | 0.01 |
| | | $ZrO_2$ | 0 | 0 | 0 | 0 | 0 |
| | | $HfO_2$ | 0 | 0 | 0 | 0 | 0 |
| | | $SnO_2$ | 0.23 | 0.23 | 0.22 | 0.23 | 0.23 |
| | | $Fe_2O_3$ | 0.01 | 0.01 | 0.01 | 0.01 | 0 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0.0002 | 0 | 0 | 0 | 0 |
| | | $V_2O_5$ | 0 | 0.03 | | 0 | 0 |
| | | CuO | 0 | 0 | 0.10 | 0 | 0 |
| | | NiO | 0 | 0 | 0 | 0.09 | 0 |
| | | $MnO_2$ | 0 | 0 | 0 | 0 | 0.11 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |

(continued)

|  |  | No.166 | No.167 | No.168 | No.169 | No.170 |
|---|---|---|---|---|---|---|
| [ppm] | Pt | 0.03 | 0.03 | 0.03 | 0.03 | 0.03 |
|  | Rh | 0.02 | 0.02 | 0.02 | 0.02 | 0.02 |
|  | Pt+Rh | 0.05 | 0.05 | 0.05 | 0.05 | 0.05 |
| Si/(Si+Al+Mg) | | 0.58 | 0.58 | 0.58 | 0.58 | 0.58 |
| Al/(Si+Al+Mg) | | 0.30 | 0.29 | 0.30 | 0.30 | 0.30 |
| Mg/(Si+Al+Mg) | | 0.12 | 0.12 | 0.12 | 0.12 | 0.12 |
| Si/Al | | 1.96 | 1.98 | 1.98 | 1.98 | 1.97 |
| Si/Mg | | 4.78 | 4.82 | 4.82 | 4.86 | 4.81 |
| Al/Mg | | 2.44 | 2.43 | 2.44 | 2.46 | 2.45 |
| (Li+Na+K)/Si | | 0.00139 | 0.00122 | 0.00122 | 0.00122 | 0.00122 |
| Li+Na+K+Ca+Sr+Ba [% by mass] | | 1.02 | 0.13 | 0.13 | 0.13 | 0.13 |
| (Si+Zn)/(Mg+Al) | | 1.39 | 1.44 | 1.43 | 1.44 | 1.43 |
| Zn-(Ti+Zr) [% by mass] | | -0.01 | 1.4 | 1.37 | 1.37 | 1.38 |
| Ti/(Ti+Fe) | | 0.500 | 0.500 | 0.500 | 0.500 | 1.000 |
| As+Sb [% by mass] | | 0 | 0 | 0 | 0 | 0 |
| Sn+As+Sb+Cl [% by mass] | | 0.23 | 0.23 | 0.22 | 0.23 | 0.23 |
| Sn/(Sn+As+Sb+Cl) | | 1 | 1 | 1 | 1 | 1 |
| Metal Al [ppm] | | 0 | 0 | 0 | 0 | 0 |

[Table 68]

|  |  | No.166 | No.167 | No.168 | No.169 | No.170 |
|---|---|---|---|---|---|---|
| Before Crystallization | | | | | | |
| Temperature equiv. to High-Temp. Viscosity | 10^4 [°C] | unmeasured | unmeasured | unmeasured | unmeasured | unmeasured |
|  | 10^3 [°C] | unmeasured | unmeasured | unmeasured | unmeasured | unmeasured |
|  | 10^2.5 [°C] | unmeasured | unmeasured | unmeasured | unmeasured | unmeasured |
|  | 10^2 [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| Density [g/cm$^3$] | | unmeasured | 2.58 | 2.58 | 2.58 | 2.58 |
| $\beta$-OH [/mm] | | 0.15 | 0.15 | 0.15 | 0.15 | 0.15 |
| After Crystallization | | | | | | |
| Crystallization Conditions(D | | 1210°C-2h | 1150°C-2h | 1110°C-2h | 1100°C-2h | 1110°C-2h |
| Transmittance [%] 4mm thickness | 380nm | unmeasured | unmeasured | unmeasured | unmeasured | unmeasured |
|  | 800nm | unmeasured | unmeasured | unmeasured | unmeasured | unmeasured |
|  | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |

(continued)

| After Crystallization | | | | | | |
|---|---|---|---|---|---|---|
| Diffuse Trans-mittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | 60 | 59 | 60 | 58 |
| $\alpha$ [$\times 10^{-7}$/°C] 30-380°C | | unmeasured | 7.12 | unmeasured | unmeasured | unmeasured |
| $\alpha$ [$\times 10^{7}$/°C] 30-750°C | | unmeasured | 12.98 | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |
| Average Surface Roughness of End Surface R a [nm] | | unmeasured | unmeasured | unmeasured | unmeasured | unmeasured |
| Waviness [$\mu$m] | | unmeasured | unmeasured | unmeasured | unmeasured | unmeasured |

[Table 69]

| | | No.171 | No.172 | No.173 | No.174 | No.175 |
|---|---|---|---|---|---|---|
| [% by mass] | $SiO_2$ | 57.1 | 57.2 | 57.1 | 57.2 | 57.2 |
| | $Al_2O_3$ | 29.1 | 29 | 29.1 | 29 | 29 |
| | MgO | 11.9 | 11.9 | 11.9 | 11.9 | 11.9 |
| | $Li_2O$ | 0 | 0 | 0 | 0 | 0 |
| | $Na_2O$ | 0.08 | 0.08 | 0.08 | 0.08 | 0.08 |
| | $K_2O$ | 0.01 | 0.01 | 0.01 | 0.01 | 0.01 |
| | CaO | 0.06 | 0.06 | 0.06 | 0.06 | 0.06 |
| | SrO | 0 | 0 | 0 | 0 | 0 |
| | BaO | 0 | 0 | 0 | 0 | 0 |
| | ZnO | 1.39 | 1.4 | 1.4 | 1.4 | 1.4 |
| | $B_2O_3$ | 0 | 0 | 0 | 0 | 0 |
| | $P_2O_5$ | 0 | 0 | 0 | 0 | 0 |
| | $TiO_2$ | 0.11 | 0.01 | 0.01 | 0.01 | 0.01 |
| | $ZrO_2$ | 0 | 0 | 0 | 0 | 0 |
| | $HfO_2$ | 0 | 0 | 0 | 0 | 0 |
| | $SnO_2$ | 0.22 | 0.23 | 0.23 | 0.23 | 0.23 |
| | $Fe_2O_3$ | 0.01 | 0.1 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0.11 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0.09 | 0 | 0 |
| | $Nd_2O_3$ | 0 | 0 | 0 | 0.10 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.58 | 0.58 | 0.58 | 0.58 | 0.58 |
| Al/(Si+Al+Mg) | | 0.30 | 0.30 | 0.30 | 0.30 | 0.30 |
| Mg/(Si+Al+Mg) | | 0.12 | 0.12 | 0.12 | 0.12 | 0.12 |
| Si/Al | | 1.96 | 1.97 | 1.96 | 1.97 | 1.97 |
| Si/Mg | | 4.80 | 4.81 | 4.80 | 4.81 | 4.81 |
| Al/Mg | | 2.45 | 2.44 | 2.45 | 2.44 | 2.44 |
| (Li+Na+K)/Si | | 0.00158 | 0.00157 | 0.00158 | 0.00157 | 0.00157 |

(continued)

|  | No.171 | No.172 | No.173 | No.174 | No.175 |
|---|---|---|---|---|---|
| Li+Na+K+Ca+Sr+Ba [% by mass] | 0.15 | 0.15 | 0.15 | 0.15 | 0.15 |
| (Si+Zn)/(Mg+Al) | 1.43 | 1.43 | 1.43 | 1.43 | 1.43 |
| Zn-(Ti+Zr) [% by mass] | 1.28 | 1.39 | 1.39 | 1.39 | 1.39 |
| Ti/(Ti+Fe) | 0.917 | 0.091 | 0.500 | 0.500 | 0.500 |
| As+Sb [% by mass] | 0 | 0 | 0 | 0 | 0 |
| Sn+As+Sb+Cl [% by mass] | 0.22 | 0.23 | 0.23 | 0.23 | 0.23 |
| Sn/(Sn+As+Sb+Cl) | 1 | 1 | 1 | 1 | 1 |
| Metal Al [ppm] | 0 | 0 | 0 | 0 | 0 |

[Table 70]

| | | No.171 | No.172 | No.173 | No.174 | No.175 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [×$10^{-7}$/°C] 30-380°C | | unmeasured | unmeasured | unmeasured | unmeasured | unmeasured |
| Density [g/cm$^3$] | | 2.58 | 2.58 | 2.58 | 2.58 | 2.58 |
| $\beta$ -OH [/mm] | | 0.15 | 0.15 | 0.15 | 0.15 | 0.15 |
| After Crystallization | | | | | | |
| Crystallization Conditions① | | 1100°C-2h | 1140°C-2h | 1130°C-2h | 1130°C-2h | 1130°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L * | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | 59 | 58 | 58 | 59 | 61 |
| $\alpha$ [×$10^{-7}$/°C] 30-380°C | | unmeasured | unmeasured | unmeasured | unmeasured | unmeasured |
| $\alpha$ [×$10^7$/°C] 30-750°C | | unmeasured | unmeasured | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Average Surface Roughness of End Surface R a [nm] | unmeasured | unmeasured | unmeasured | unmeasured | unmeasured |
| Waviness [μm] | unmeasured | unmeasured | unmeasured | unmeasured | unmeasured |

[Table 71]

| | | No.176 | No.177 | No.178 | No.179 | No.180 |
|---|---|---|---|---|---|---|
| [% by mass] | $SiO_2$ | 57.1 | 57.1 | 57.1 | 56.6 | 56.7 |
| | $Al_2O_3$ | 29.1 | 29.1 | 29.1 | 28.8 | 28.8 |
| | MgO | 11.9 | 11.9 | 11.9 | 11.8 | 11.8 |
| | $Li_2O$ | 0 | 0 | 0 | 0 | 0 |
| | $Na_2O$ | 0.08 | 0.08 | 0.08 | 0.08 | 0.08 |
| | $K_2O$ | 0.01 | 0.01 | 0 | 0.01 | 0 |
| | CaO | 0.06 | 0.06 | 0.06 | 0.06 | 0.07 |
| | SrO | 0 | 0 | 0 | 0 | 0 |
| | BaO | 0 | 0 | 0 | 0 | 0 |
| | ZnO | 1.4 | 1.39 | 1.4 | 1.4 | 1.41 |
| | $B_2O_3$ | 0 | 0 | 0 | 0 | 0 |
| | $P_2O_5$ | 0 | 0 | 0 | 0 | 0 |
| | $TiO_2$ | 0.01 | 0.01 | 0.01 | 0.99 | 0.01 |
| | $ZrO_2$ | 0 | 0 | 0 | 0 | 0 |
| | $HfO_2$ | 0 | 0 | 0 | 0 | 0 |
| | $SnO_2$ | 0.23 | 0.22 | 0.22 | 0.23 | 1.09 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0.10 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0.11 | 0 | 0 | 0 | 0 |
| | $Co_3O_4$ | 0 | 0 | 0.11 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.58 | 0.58 | 0.58 | 0.58 | 0.58 |
| Al/(Si+Al+Mg) | | 0.30 | 0.30 | 0.30 | 0.30 | 0.30 |

(continued)

|  | No.176 | No.177 | No.178 | No.179 | No.180 |
|---|---|---|---|---|---|
| Mg/(Si+Al+Mg) | 0.12 | 0.12 | 0.12 | 0.12 | 0.12 |
| Si/Al | 1.96 | 1.96 | 1.96 | 1.97 | 1.97 |
| Si/Mg | 4.80 | 4.80 | 4.80 | 4.80 | 4.81 |
| Al/Mg | 2.45 | 2.45 | 2.45 | 2.44 | 2.44 |
| (Li+Na+K)/Si | 0.00158 | 0.00158 | 0.00140 | 0.00159 | 0.00141 |
| Li+Na+K+Ca+Sr+Ba [% by mass] | 0.15 | 0.15 | 0.14 | 0.15 | 0.15 |
| (Si+Zn)/(Mg+Al) | 1.43 | 1.43 | 1.43 | 1.43 | 1.43 |
| Zn-(Ti+Zr) [% by mass] | 1.39 | 1.38 | 1.39 | 0.41 | 1.4 |
| Ti/(Ti+Fe) | 0.500 | 0.500 | 0.500 | 0.990 | 0.500 |
| As+Sb [% by mass] | 0 | 0 | 0 | 0 | 0 |
| Sn+As+Sb+Cl [% by mass] | 0.23 | 0.22 | 0.22 | 0.23 | 1.09 |
| Sn/(Sn+As+Sb+Cl) | 1 | 1 | 1 | 1 | 1 |
| Metal Al [ppm] | 0 | 0 | 0 | 0 | 0 |

[Table 72]

| | | No.176 | No.177 | No.178 | No.179 | No.180 |
|---|---|---|---|---|---|---|
| Before Crystallization | | | | | | |
| Temperature equiv. to High-Temp. Viscosity | $10^4$ [°C] | unmeasured | unmeasured | unmeasured | 1246 | 1255 |
| | $10^3$ [°C] | unmeasured | unmeasured | unmeasured | 1361 | 1368 |
| | $10^{2.5}$ [°C] | unmeasured | unmeasured | unmeasured | 1437 | 1443 |
| | $10^2$ [°C] | unmeasured | unmeasured | unmeasured | 1533 | 1536 |
| Liquidus Temperature [°C] | | unmeasured | unmeasured | unmeasured | 1448 | 1454 |
| Liquidus Viscosity [-] | | unmeasured | unmeasured | unmeasured | 2.4 | 2.4 |
| $\alpha$ [×$10^7$/°C] 30-380°C | | unmeasured | unmeasured | unmeasured | unmeasured | unmeasured |
| Density [g/cm$^3$] | | 2.59 | 2.58 | 2.59 | 2.59 | 2.60 |
| $\beta$-OH [/mm] | | 0.15 | 0.15 | 0.15 | 0.15 | 0.15 |
| After Crystallization | | | | | | |
| Crystallization Conditions① | | 1130°C-2h | 1110°C-2h | 1110°C-2h | 1110°C-2h | 1085°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L * | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | 59 | 58 | 59 | 61 | 58 |

(continued)

| After Crystallization | | | | | |
|---|---|---|---|---|---|
| Crystallization Conditions① | 1130°C-2h | 1110°C-2h | 1110°C-2h | 1110°C-2h | 1085°C-2h |
| $\alpha$ [$\times 10^7$/°C] 30-380°C | unmeasured | unmeasured | unmeasured | unmeasured | unmeasured |
| $\alpha$ [$\times 10^{-7}$/°C] 30-750°C | unmeasured | unmeasured | unmeasured | unmeasured | unmeasured |
| Density [g/cm$^3$] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 73]

| | | No.181 | No.182 | No.183 | No.184 | No.185 |
|---|---|---|---|---|---|---|
| [% by mass] | $SiO_2$ | 56.6 | 56.6 | 56.7 | 56.7 | 65.1 |
| | $Al_2O_3$ | 28.7 | 28.8 | 28.7 | 28.8 | 19.9 |
| | MgO | 11.8 | 11.8 | 11.8 | 11.7 | 14.6 |
| | $Li_2O$ | 0 | 0 | 0 | 0 | 0 |
| | $Na_2O$ | 0.08 | 0.08 | 0.08 | 0.08 | 0.05 |
| | $K_2O$ | 0.01 | 0.01 | 0.01 | 0.01 | 0.01 |
| | CaO | 0.06 | 0.06 | 0.06 | 0.06 | 0.08 |
| | SrO | 0 | 0 | 0 | 0 | 0 |
| | BaO | 0 | 0 | 0 | 0 | 0 |
| | ZnO | 1.4 | 1.4 | 1.4 | 1.4 | 0 |
| | $B_2O_3$ | 0 | 0 | 0 | 0 | 0 |
| | $P_2O_5$ | 0 | 0.98 | 0 | 0 | 0 |
| | $TiO_2$ | 0.01 | 0.01 | 0.01 | 0.01 | 0.02 |
| | $ZrO_2$ | 1.02 | 0 | 0 | 0 | 0 |
| | $HfO_2$ | 0.02 | 0 | 0 | 0 | 0 |
| | $SnO_2$ | 0.23 | 0.23 | 0.22 | 0.22 | 0.19 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 1.1 | 0 | 0 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 1 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.58 | 0.58 | 0.58 | 0.58 | 0.65 |
| Al/(Si+Al+Mg) | | 0.30 | 0.30 | 0.30 | 0.30 | 0.20 |
| Mg/(Si+Al+Mg) | | 0.12 | 0.12 | 0.12 | 0.12 | 0.15 |
| Si/Al | | 1.97 | 1.97 | 1.98 | 1.97 | 3.27 |
| Si/Mg | | 4.80 | 4.80 | 4.81 | 4.85 | 4.46 |
| Al/Mg | | 2.43 | 2.44 | 2.43 | 2.46 | 1.36 |
| (Li+Na+K)/Si | | 0.00159 | 0.00159 | 0.00159 | 0.00159 | 0.00092 |

(continued)

|  | No.181 | No.182 | No.183 | No.184 | No.185 |
|---|---|---|---|---|---|
| Li+Na+K+Ca+Sr+Ba [% by mass] | 0.15 | 0.15 | 0.15 | 0.15 | 0.14 |
| (Si+Zn)/(Mg+Al) | 1.43 | 1.43 | 1.43 | 1.43 | 1.89 |
| Zn-(Ti+Zr) [% by mass] | 0.37 | 1.39 | 1.39 | 1.39 | -0.02 |
| Ti/(Ti+Fe) | 0.500 | 0.500 | 0.500 | 0.500 | 0.667 |
| As+Sb [% by mass] | 0 | 0 | 0 | 0 | 0 |
| Sn+As+Sb+Cl [% by mass] | 0.23 | 0.23 | 0.22 | 0.22 | 0.19 |
| Sn/(Sn+As+Sb+Cl) | 1 | 1 | 1 | 1 | 1 |
| Metal Al [ppm] | 0 | 0 | 0 | 0 | 0 |

[Table 74]

|  |  | No.181 | No.182 | No.183 | No.184 | No.185 |
|---|---|---|---|---|---|---|
| Before Crystallization | | | | | | |
| Temperature equiv. to High-Temp. Viscosity | $10^4$ [°C] | 1264 | 1253 | 1251 | 1256 | 1273 |
| | $10^3$ [°C] | 1369 | 1372 | 1365 | 1368 | 1416 |
| | $10^{2.5}$ [°C] | 1442 | 1451 | 1442 | 1444 | 1507 |
| | $10^2$ [°C] | 1535 | 1548 | 1537 | 1539 | 1619 |
| Liquidus Temperature [°C] | | 1450 | 1447 | 1450 | 1461 | 1357 |
| Liquidus Viscosity [-] | | 2.5 | 2.5 | 2.5 | 2.4 | 3.38 |
| $\alpha$ [$\times 10^7$/°C] 30-380°C | | unmeasured | unmeasured | unmeasured | unmeasured | 34.9 |
| Density [g/cm$^3$] | | 2.60 | 2.58 | 2.59 | 2.60 | 2.52 |
| $\beta$ -OH [/mm] | | 0.15 | 0.15 | 0.15 | 0.15 | 0.15 |
| After Crystallization | | | | | | |
| Crystallization Conditions① | | 1100°C-2h | 1110°C-2h | 1100°C-2h | 1085°C-2h | 1120°C-2h |
| Transmittance [%] 4mm thickness | 380nm | 19.4 | unmeasured | unmeasured | unmeasured | unmeasured |
| | 800nm | 66.5 | unmeasured | unmeasured | unmeasured | unmeasured |
| | 1200nm | 78.7 | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | 58 | unmeasured | 58 | 50 |
| $\alpha$ [$\times 10^7$/°C] 30-380°C | | 8.24 | unmeasured | 11.63 | unmeasured | unmeasured |
| $\alpha$ [$\times 10^7$/°C] 30-750°C | | 14.1 | unmeasured | 17.71 | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Crystallization Conditions① | 1100°C-2h | 1110°C-2h | 1100°C-2h | 1085°C-2h | 1120°C-2h |
| Average Surface Roughness of End Surface R a [nm] | unmeasured | unmeasured | unmeasured | unmeasured | unmeasured |
| Waviness [μm] | unmeasured | unmeasured | unmeasured | unmeasured | unmeasured |

[Table 75]

| | | | No.186 | No.187 | No.188 | No.189 | No.190 |
|---|---|---|---|---|---|---|---|
| [% by mass] | | $SiO_2$ | 54.6 | 50.7 | 59.7 | 56.8 | 56.2 |
| | | $Al_2O_3$ | 25.4 | 26.8 | 28 | 26.4 | 30.4 |
| | | MgO | 19.6 | 22.1 | 12 | 16.5 | 13 |
| | | $Li_2O$ | 0 | 0 | 0 | 0 | 0 |
| | | $Na_2O$ | 0.07 | 0.07 | 0.06 | 0.06 | 0.07 |
| | | $K_2O$ | 0.01 | 0.01 | 0.01 | 0 | 0.01 |
| | | CaO | 0.1 | 0.12 | 0.06 | 0.08 | 0.07 |
| | | SrO | 0 | 0 | 0 | 0 | 0 |
| | | BaO | 0 | 0 | 0 | 0 | 0 |
| | | ZnO | 0 | 0.01 | 0 | 0 | 0 |
| | | $B_2O_3$ | 0 | 0 | 0 | 0 | 0 |
| | | $P_2O_5$ | 0 | 0.01 | 0 | 0 | 0 |
| | | $TiO_2$ | 0.01 | 0.01 | 0.01 | 0.01 | 0.01 |
| | | $ZrO_2$ | 0 | 0 | 0 | 0 | 0 |
| | | $HfO_2$ | 0 | 0 | 0 | 0 | 0 |
| | | $SnO_2$ | 0.2 | 0.18 | 0.2 | 0.2 | 0.2 |
| | | $Fe_2O_3$ | 0.01 | 0.01 | 0.01 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0 | 0 | 0 | 0 | 0 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |
| [ppm] | | Pt | 0.03 | 0.03 | 0.03 | 0.03 | 0.03 |
| | | Rh | 0.02 | 0.02 | 0.02 | 0.02 | 0.02 |
| | | Pt+Rh | 0.05 | 0.05 | 0.05 | 0.05 | 0.05 |
| Si/(Si+Al+Mg) | | | 0.55 | 0.51 | 0.60 | 0.57 | 0.56 |

(continued)

|  | | No.186 | No.187 | No.188 | No.189 | No.190 |
|---|---|---|---|---|---|---|
| Al/(Si+Al+Mg) | | 0.26 | 0.27 | 0.28 | 0.26 | 0.31 |
| Mg/(Si+Al+Mg) | | 0.20 | 0.22 | 0.12 | 0.17 | 0.13 |
| Si/Al | | 2.15 | 1.89 | 2.13 | 2.15 | 1.85 |
| Si/Mg | | 2.79 | 2.29 | 4.98 | 3.44 | 4.32 |
| Al/Mg | | 1.30 | 1.21 | 2.33 | 1.60 | 2.34 |
| (Li+Na+K)/Si | | 0.00147 | 0.00158 | 0.00117 | 0.00106 | 0.00142 |
| Li+Na+K+Ca+Sr+Ba [% by mass] | | 0.18 | 0.2 | 0.13 | 0.14 | 0.15 |
| (Si+Zn)/(Mg+Al) | | 1.21 | 1.04 | 1.49 | 1.32 | 1.29 |
| Zn-(Ti+Zr) [% by mass] | | -0.01 | 0 | -0.01 | -0.01 | -0.01 |
| Ti/(Ti+Fe) | | 0.500 | 0.500 | 0.500 | 0.500 | 0.500 |
| As+Sb [% by mass] | | 0 | 0 | 0 | 0 | 0 |
| Sn+As+Sb+Cl [% by mass] | | 0.20 | 0.18 | 0.20 | 0.20 | 0.20 |
| Sn/(Sn+As+Sb+Cl) | | 1 | 1 | 1 | 1 | 1 |
| Metal Al [ppm] | | 0 | 0 | 0 | 0 | 0 |

[Table 76]

|  |  | No.186 | No.187 | No.188 | No.189 | No.190 |
|---|---|---|---|---|---|---|
| Before Crystallization | | | | | | |
| Temperature equiv. to High-Temp. Viscosity | $10^4$ [°C] | 1195 | 1159 | 1140 | 1128 | 1183 |
| | $10^3$ [°C] | 1316 | 1264 | 1230 | 1213 | 1298 |
| | $10^{2.5}$ [°C] | 1396 | 1336 | 1294 | 1274 | 1374 |
| | $10^2$ [°C] | 1498 | 1427 | 1378 | 1355 | 1466 |
| Liquidus Temperature [°C] | | 1364 | 1335 | 1348 | 1400 | 1287 |
| Liquidus Viscosity [-] | | 2.69 | 2.51 | 2.16 | 1.78 | 3.1 |
| $\alpha$ [$\times 10^{-7}$/°C] 30-380°C | | 41.2 | unmeasured | unmeasured | 48.2 | 41.3 |
| Density [g/cm$^3$] | | 2.59 | 2.64 | 2.68 | 2.71 | 2.61 |
| $\beta$ -OH [/mm] | | 0.15 | 0.15 | 0.15 | 0.15 | 0.15 |
| After Crystallization | | | | | | |
| Crystallization Conditions① | | 1120°C-2h | 1090°C-2h | 1100°C-2h | 1100°C-2h | 1100°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |

(continued)

| After Crystallization | | | | | |
|---|---|---|---|---|---|
| Crystallization Conditions① | 1120°C-2h | 1090°C-2h | 1100°C-2h | 1100°C-2h | 1100°C-2h |
| Average Crystallite Size [nm] | 37 | 51 | 57 | 56 | 59 |
| $\alpha$ [×10^{-7}/°C] 30-380°C | unmeasured | unmeasured | unmeasured | unmeasured | unmeasured |
| $\alpha$ [×10^{-7}/°C] 30-750°C | unmeasured | unmeasured | unmeasured | unmeasured | unmeasured |
| Density [g/cm³] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [μm] | unmeasured | unmeasured | unmeasured | unmeasured | unmeasured |

[Table 77]

|  |  |  | No.191 | No.192 | No.193 | No.194 | No.195 |
|---|---|---|---|---|---|---|---|
| [% by mass] |  | $SiO_2$ | 57.4 | 56.3 | 53.7 | 56.8 | 56.4 |
|  |  | $Al_2O_3$ | 29.3 | 28.7 | 33 | 29 | 28.7 |
|  |  | MgO | 12 | 11.8 | 11.6 | 11.9 | 11.8 |
|  |  | $Li_2O$ | 0 | 0 | 0 | 0 | 0 |
|  |  | $Na_2O$ | 0.07 | 0.09 | 0.09 | 0.07 | 0.08 |
|  |  | $K_2O$ | 0.01 | 0 | 0.01 | 0.01 | 0.01 |
|  |  | CaO | 0.94 | 0.06 | 0.06 | 0.07 | 0.06 |
|  |  | SrO | 0 | 0 | 0 | 1.86 | 0 |
|  |  | BaO | 0 | 0 | 0 | 0 | 2.68 |
|  |  | ZnO | 0 | 2.79 | 1.4 | 0 | 0 |
|  |  | $B_2O_3$ | 0 | 0 | 0 | 0 | 0 |
|  |  | $P_2O_5$ | 0 | 0 | 0 | 0 | 0 |
|  |  | $TiO_2$ | 0.01 | 0.01 | 0.01 | 0.02 | 0.02 |
|  |  | $ZrO_2$ | 0 | 0 | 0 | 0 | 0 |
|  |  | $HfO_2$ | 0 | 0 | 0 | 0 | 0 |
|  |  | $SnO_2$ | 0.23 | 0.24 | 0.16 | 0.21 | 0.23 |
|  |  | $Fe_2O_3$ | 0.01 | 0.01 | 0.01 | 0.01 | 0.01 |
|  |  | $As_2O_3$ | 0 | 0 | 0 | 0 | 0 |
|  |  | $Sb_2O_3$ | 0 | 0 | 0 | 0 | 0 |
|  |  | $Cl_2$ | 0 | 0 | 0 | 0 | 0 |
|  |  | $MoO_3$ | 0 | 0 | 0 | 0 | 0 |
|  |  | $V_2O_5$ | 0 | 0 | 0 | 0 | 0 |
|  |  | CuO | 0 | 0 | 0 | 0 | 0 |
|  |  | NiO | 0 | 0 | 0 | 0 | 0 |
|  |  | $MnO_2$ | 0 | 0 | 0 | 0 | 0 |
|  |  | $Cr_2O_3$ | 0 | 0 | 0 | 0 | 0 |
|  |  | $Nd_2O_3$ | 0 | 0 | 0 | 0 | 0 |
|  |  | $WO_3$ | 0 | 0 | 0 | 0 | 0 |
|  |  | $Co_3O_4$ | 0 | 0 | 0 | 0 | 0 |
| [ppm] |  | Pt | 0.03 | 0.03 | 0.03 | 0.03 | 0.03 |
|  |  | Rh | 0.02 | 0.02 | 0.02 | 0.02 | 0.02 |
|  |  | Pt+Rh | 0.05 | 0.05 | 0.05 | 0.05 | 0.05 |
| Si/(Si+Al+Mg) |  |  | 0.58 | 0.58 | 0.55 | 0.58 | 0.58 |
| Al/(Si+Al+Mg) |  |  | 0.30 | 0.30 | 0.34 | 0.30 | 0.30 |
| Mg/(Si+Al+Mg) |  |  | 0.12 | 0.12 | 0.12 | 0.12 | 0.12 |
| Si/Al |  |  | 1.96 | 1.96 | 1.63 | 1.96 | 1.97 |
| Si/Mg |  |  | 4.78 | 4.77 | 4.63 | 4.77 | 4.78 |
| Al/Mg |  |  | 2.44 | 2.43 | 2.84 | 2.44 | 2.43 |
| (Li+Na+K)/Si |  |  | 0.00139 | 0.00160 | 0.00186 | 0.00141 | 0.00160 |

(continued)

|  | No.191 | No.192 | No.193 | No.194 | No.195 |
|---|---|---|---|---|---|
| Li+Na+K+Ca+Sr+Ba [% by mass] | 1.02 | 0.15 | 0.16 | 2.01 | 2.83 |
| (Si+Zn)/(Mg+Al) | 1.39 | 1.46 | 1.24 | 1.39 | 1.39 |
| Zn-(Ti+Zr) [% by mass] | -0.01 | 2.78 | 1.39 | -0.02 | -0.02 |
| Ti/(Ti+Fe) | 0.500 | 0.500 | 0.500 | 0.667 | 0.667 |
| As+Sb [% by mass] | 0 | 0 | 0 | 0 | 0 |
| Sn+As+Sb+Cl [% by mass] | 0.23 | 0.24 | 0.16 | 0.21 | 0.23 |
| Sn/(Sn+As+Sb+Cl) | 1 | 1 | 1 | 1 | 1 |
| Metal Al [ppm] | 0 | 0 | 0 | 0 | 0 |

[Table 78]

| | | No.191 | No.192 | No.193 | No.194 | No.195 |
|---|---|---|---|---|---|---|
| Before Crystallization | | | | | | |
| Temperature equiv. to High-Temp. Viscosity | $10^4$ [°C] | 1170 | unmeasured | unmeasured | 1202 | unmeasured |
| | $10^3$ [°C] | 1280 | unmeasured | unmeasured | 1319 | unmeasured |
| | $10^{2.5}$ [°C] | 1350 | unmeasured | unmeasured | 1395 | unmeasured |
| | $10^2$ [°C] | 1441 | unmeasured | unmeasured | 1490 | unmeasured |
| Liquidus Temperature [°C] | | 1314 | unmeasured | unmeasured | 1380 | unmeasured |
| Liquidus Viscosity [-] | | 2.7 | unmeasured | unmeasured | 2.59 | unmeasured |
| $\alpha$ [$\times 10^{-7}$/°C] 30-380°C | | unmeasured | 45.3 | unmeasured | 38.9 | unmeasured |
| Density [g/cm$^3$] | | 2.64 | 2.69 | 2.55 | 2.60 | 2.58 |
| $\beta$ -OH [/mm] | | 0.15 | 0.15 | 0.15 | 0.15 | 0.15 |
| After Crystallization | | | | | | |
| Crystallization Conditions① | | 1110°C-2h | 1100°C-2h | 1200°C-2h | 1110°C-2h | 1110°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | 61 | 58 | 59 | 62 | 59 |
| $\alpha$ [$\times 10^{-7}$/°C] 30-380°C | | unmeasured | unmeasured | unmeasured | unmeasured | unmeasured |
| $\alpha$ [$\times 10^7$/°C] 30-750°C | | unmeasured | unmeasured | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Crystallization Conditions① | 1110°C-2h | 1100°C-2h | 1200°C-2h | 1110°C-2h | 1110°C-2h |
| Average Surface Roughness of End Surface R a [nm] | unmeasured | unmeasured | unmeasured | unmeasured | unmeasured |
| Waviness [μm] | unmeasured | unmeasured | unmeasured | unmeasured | unmeasured |

[Table 79]

| | | No.196 | No.197 | No.198 | No.199 | No.200 |
|---|---|---|---|---|---|---|
| [% by mass] | $SiO_2$ | 54.3 | 54.5 | 57 | 56.7 | 55.5 |
| | $Al_2O_3$ | 32.4 | 32.9 | 28.9 | 28.7 | 32.2 |
| | MgO | 12.9 | 11.8 | 11.8 | 11.8 | 11.9 |
| | $Li_2O$ | 0 | 0 | 0 | 0 | 0 |
| | $Na_2O$ | 0.07 | 0.07 | 0.08 | 0.08 | 0.07 |
| | $K_2O$ | 0.01 | 0.01 | 0.01 | 0.01 | 0.01 |
| | CaO | 0.07 | 0.06 | 0.06 | 0.06 | 0.06 |
| | SrO | 0 | 0 | 0 | 0 | 0 |
| | BaO | 0 | 0 | 0 | 0 | 0 |
| | ZnO | 0 | 0 | 1.4 | 1.4 | 0 |
| | $B_2O_3$ | 0 | 0 | 0 | 0 | 0 |
| | $P_2O_5$ | 0 | 0 | 0 | 0.33 | 0 |
| | $TiO_2$ | 0.01 | 0.49 | 0.5 | 0.33 | 0.01 |
| | $ZrO_2$ | 0 | 0 | 0 | 0.34 | 0 |
| | $HfO_2$ | 0 | 0 | 0 | 0.01 | 0 |
| | $SnO_2$ | 0.19 | 0.17 | 0.23 | 0.2 | 0.19 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.55 | 0.55 | 0.58 | 0.58 | 0.56 |

(continued)

|  | | No.196 | No.197 | No.198 | No.199 | No.200 |
|---|---|---|---|---|---|---|
| Al/(Si+Al+Mg) | | 0.33 | 0.33 | 0.30 | 0.30 | 0.32 |
| Mg/(Si+Al+Mg) | | 0.13 | 0.12 | 0.12 | 0.12 | 0.12 |
| Si/Al | | 1.68 | 1.66 | 1.97 | 1.98 | 1.72 |
| Si/Mg | | 4.21 | 4.62 | 4.83 | 4.81 | 4.66 |
| Al/Mg | | 2.51 | 2.79 | 2.45 | 2.43 | 2.71 |
| (Li+Na+K)/Si | | 0.00147 | 0.00147 | 0.00158 | 0.00159 | 0.00144 |
| Li+Na+K+Ca+Sr+Ba [% by mass] | | 0.15 | 0.14 | 0.15 | 0.15 | 0.14 |
| (Si+Zn)/(Mg+Al) | | 1.20 | 1.22 | 1.43 | 1.43 | 1.26 |
| Zn-(Ti+Zr) [% by mass] | | -0.01 | -0.49 | 0.9 | 0.73 | -0.01 |
| Ti/(Ti+Fe) | | 0.500 | 0.980 | 0.980 | 0.971 | 0.500 |
| As+Sb [% by mass] | | 0 | 0 | 0 | 0 | 0 |
| Sn+As+Sb+Cl [% by mass] | | 0.19 | 0.17 | 0.23 | 0.20 | 0.19 |
| Sn/(Sn+As+Sb+Cl) | | 1 | 1 | 1 | 1 | 1 |
| Metal Al [ppm] | | 0 | 0 | 0 | 0 | 0 |

[Table 80]

|  | | No.196 | No.197 | No.198 | No.199 | No.200 |
|---|---|---|---|---|---|---|
| Before Crystallization | | | | | | |
| Temperature equiv. to High-Temp. Viscosity | $10^4$ [°C] | unmeasured | unmeasured | unmeasured | 1259 | unmeasured |
| | $10^3$ [°C] | unmeasured | unmeasured | unmeasured | 1366 | unmeasured |
| | $10^{2.5}$ [°C] | unmeasured | unmeasured | unmeasured | 1441 | unmeasured |
| | $10^2$ [°C] | unmeasured | unmeasured | unmeasured | 1539 | unmeasured |
| Liquidus Temperature [°C] | | unmeasured | unmeasured | unmeasured | 1443 | unmeasured |
| Liquidus Viscosity [-] | | unmeasured | unmeasured | unmeasured | 2.49 | unmeasured |
| $\alpha$ [$\times 10^{-7}$/°C] 30-380°C | | unmeasured | unmeasured | unmeasured | unmeasured | unmeasured |
| Density [g/cm$^3$] | | 2.60 | 2.59 | 2.59 | 2.59 | 2.58 |
| $\beta$ -OH [/mm] | | 0.15 | 0.15 | 0.15 | 0.15 | 0.15 |
| After Crystallization | | | | | | |
| Crystallization Conditions① | | 1085°C-2h | 1100°C-2h | 1110°C-2h | 1130°C-2h | 1120°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |

(continued)

| After Crystallization | | | | | |
|---|---|---|---|---|---|
| Crystallization Conditions① | 1085°C-2h | 1100°C-2h | 1110°C-2h | 1130°C-2h | 1120°C-2h |
| Average Crystallite Size [nm] | 59 | unmeasured | unmeasured | 59 | unmeasured |
| $\alpha$ [×$10^{-7}$/°C] 30-380°C | unmeasured | unmeasured | unmeasured | 8.6 | unmeasured |
| $\alpha$ [×$10^{7}$/°C] 30-750°C | unmeasured | unmeasured | unmeasured | 14.7 | unmeasured |
| Density [g/cm$^3$] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [μm] | unmeasured | unmeasured | unmeasured | unmeasured | unmeasured |

[Table 81]

| | | No.201 | No.202 | No.203 | No.204 | No.205 |
|---|---|---|---|---|---|---|
| [% by mass] | $SiO_2$ | 55 | 54.5 | 57.7 | 56.8 | 56.5 |
| | $Al_2O_3$ | 32.4 | 32.7 | 29.2 | 29 | 29 |
| | MgO | 12.2 | 12.5 | 12 | 11.9 | 11.9 |
| | $Li_2O$ | 0 | 0 | 0 | 0 | 0 |
| | $Na_2O$ | 0.07 | 0.07 | 0.07 | 0.08 | 0.08 |
| | $K_2O$ | 0.01 | 0.01 | 0.01 | 0.01 | 0.01 |
| | CaO | 0.06 | 0.06 | 0.06 | 0.06 | 0.06 |
| | SrO | 0 | 0 | 0 | 0 | 0 |
| | BaO | 0 | 0 | 0 | 0 | 0 |
| | ZnO | 0 | 0 | 0.71 | 1.39 | 1.39 |
| | $B_2O_3$ | 0 | 0 | 0 | 0 | 0 |
| | $P_2O_5$ | 0 | 0 | 0 | 0 | 0 |
| | $TiO_2$ | 0.01 | 0.01 | 0.01 | 0.01 | 0.01 |
| | $ZrO_2$ | 0 | 0 | 0 | 0 | 0 |
| | $HfO_2$ | 0 | 0 | 0 | 0 | 0 |
| | $SnO_2$ | 0.19 | 0.19 | 0.23 | 0.22 | 0.21 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0.12 | 0.18 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0.39 | 0.57 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.55 | 0.55 | 0.58 | 0.58 | 0.58 |
| Al/(Si+Al+Mg) | | 0.33 | 0.33 | 0.30 | 0.30 | 0.30 |
| Mg/(Si+Al+Mg) | | 0.12 | 0.13 | 0.12 | 0.12 | 0.12 |
| Si/Al | | 1.70 | 1.67 | 1.98 | 1.96 | 1.95 |
| Si/Mg | | 4.51 | 4.36 | 4.81 | 4.77 | 4.75 |
| Al/Mg | | 2.66 | 2.62 | 2.43 | 2.44 | 2.44 |
| (Li+Na+K)/Si | | 0.00145 | 0.00147 | 0.00139 | 0.00158 | 0.00159 |

(continued)

|  | No.201 | No.202 | No.203 | No.204 | No.205 |
|---|---|---|---|---|---|
| Li+Na+K+Ca+Sr+Ba [% by mass] | 0.14 | 0.14 | 0.14 | 0.15 | 0.15 |
| (Si+Zn)/(Mg+Al) | 1.23 | 1.21 | 1.42 | 1.42 | 1.42 |
| Zn-(Ti+Zr) [% by mass] | -0.01 | -0.01 | 0.7 | 1.38 | 1.38 |
| Ti/(Ti+Fe) | 0.500 | 0.500 | 0.500 | 0.500 | 0.500 |
| As+Sb [% by mass] | 0 | 0 | 0 | 0 | 0 |
| Sn+As+Sb+Cl [% by mass] | 0.19 | 0.19 | 0.23 | 0.22 | 0.21 |
| Sn/(Sn+As+Sb+Cl) | 1 | 1 | 1 | 1 | 1 |
| Metal Al [ppm] | 0 | 0 | 0 | 0 | 0 |

[Table 82]

| | | No.201 | No.202 | No.203 | No.204 | No.205 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| Density [g/cm$^3$] | | 2.59 | 2.59 | 2.57 | 2.59 | 2.60 |
| $\beta$ -OH [/mm] | | 0.15 | 0.15 | 0.15 | 0.15 | 0.15 |
| After Crystallization | | | | | | |
| Crystallization Conditions① | | 1120°C-2h | 1110°C-2h | 1130°C-2h | 1110°C-2h | 1100°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| $\alpha$ [$\times 10^{-7}$/°C] 30-750°C | | unmeasured | unmeasured | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 83]

| | | No.206 | No.207 | No.208 | No.209 | No.210 |
|---|---|---|---|---|---|---|
| [% by mass] | $SiO_2$ | 56.3 | 57.2 | 54.7 | 54.8 | 54.8 |
| | $Al_2O_3$ | 28.9 | 31.8 | 30 | 33.1 | 32.6 |
| | MgO | 11.9 | 10.7 | 15 | 11.3 | 11.8 |
| | $Li_2O$ | 0 | 0 | 0 | 0 | 0 |
| | $Na_2O$ | 0.08 | 0.07 | 0.07 | 0.07 | 0.07 |
| | $K_2O$ | 0.01 | 0.01 | 0.01 | 0.01 | 0.01 |
| | CaO | 0.06 | 0.06 | 0.08 | 0.06 | 0.06 |
| | SrO | 0 | 0 | 0 | 0 | 0 |
| | BaO | 0 | 0 | 0 | 0 | 0 |
| | ZnO | 1.4 | 0 | 0 | 0 | 0 |
| | $B_2O_3$ | 0 | 0 | 0 | 0 | 0 |
| | $P_2O_5$ | 0 | 0 | 0 | 0 | 0 |
| | $TiO_2$ | 0.01 | 0.01 | 0.01 | 0.49 | 0.5 |
| | $ZrO_2$ | 0 | 0 | 0 | 0 | 0 |
| | $HfO_2$ | 0 | 0 | 0 | 0 | 0 |
| | $SnO_2$ | 0.22 | 0.18 | 0.2 | 0.17 | 0.16 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0.25 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0.8 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.58 | 0.57 | 0.55 | 0.55 | 0.55 |
| Al/(Si+Al+Mg) | | 0.30 | 0.32 | 0.30 | 0.33 | 0.33 |

(continued)

|  | No.206 | No.207 | No.208 | No.209 | No.210 |
|---|---|---|---|---|---|
| Mg/(Si+Al+Mg) | 0.12 | 0.11 | 0.15 | 0.11 | 0.12 |
| Si/Al | 1.95 | 1.80 | 1.82 | 1.66 | 1.68 |
| Si/Mg | 4.73 | 5.35 | 3.65 | 4.85 | 4.64 |
| Al/Mg | 2.43 | 2.97 | 2.00 | 2.93 | 2.76 |
| (Li+Na+K)/Si | 0.00160 | 0.00140 | 0.00146 | 0.00146 | 0.00146 |
| Li+Na+K+Ca+Sr+Ba [% by mass] | 0.15 | 0.14 | 0.16 | 0.14 | 0.14 |
| (Si+Zn)/(Mg+Al) | 1.41 | 1.35 | 1.22 | 1.23 | 1.23 |
| Zn-(Ti+Zr) [% by mass] | 1.39 | -0.01 | -0.01 | -0.49 | -0.5 |
| Ti/(Ti+Fe) | 0.500 | 0.500 | 0.500 | 0.980 | 0.980 |
| As+Sb [% by mass] | 0 | 0 | 0 | 0 | 0 |
| Sn+As+Sb+Cl [% by mass] | 0.22 | 0.18 | 0.20 | 0.17 | 0.16 |
| Sn/(Sn+As+Sb+Cl) | 1 | 1 | 1 | 1 | 1 |
| Metal Al [ppm] | 0 | 0 | 0 | 0 | 0 |

[Table 84]

| | | No.206 | No.207 | No.208 | No.209 | No.210 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| Density [g/cm$^3$] | | 2.60 | 2.56 | 2.61 | 2.59 | 2.59 |
| $\beta$-OH [/mm] | | 0.15 | 0.15 | 0.15 | 0.15 | 0.15 |
| After Crystallization | | | | | | |
| Crystallization Conditions① | | 1110°C-2h | 1150°C-2h | 1100°C-2h | 1100°C-2h | 1100°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b* | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | unmeasured | unmeasured | unmeasured |

(continued)

| After Crystallization | | | | | |
|---|---|---|---|---|---|
| $\alpha$ [$\times$ 10$^{-7}$/°C] 30-380°C | unmeasured | unmeasured | unmeasured | unmeasured | unmeasured |
| $\alpha$ [$\times$ 10$^{-7}$/°C] 30-750°C | unmeasured | unmeasured | unmeasured | unmeasured | unmeasured |
| Density [g/cm$^3$] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 85]

| | | No.211 | No.212 | No.213 | No.214 | No.215 |
|---|---|---|---|---|---|---|
| [% by mass] | $SiO_2$ | 56.4 | 56.6 | 57 | 57.5 | 57.8 |
| | $Al_2O_3$ | 29.2 | 29.1 | 29 | 29 | 29.3 |
| | MgO | 11.9 | 11.9 | 11.9 | 11.9 | 12 |
| | $Li_2O$ | 0 | 0 | 0 | 0 | 0 |
| | $Na_2O$ | 0.08 | 0.08 | 0.08 | 0.08 | 0.07 |
| | $K_2O$ | 0.01 | 0.01 | 0.01 | 0.01 | 0.01 |
| | CaO | 0.06 | 0.06 | 0.06 | 0.06 | 0.06 |
| | SrO | 0 | 0 | 0 | 0 | 0 |
| | BaO | 0 | 0 | 0 | 0 | 0 |
| | ZnO | 1.41 | 1.41 | 1.41 | 1.41 | 0.71 |
| | $B_2O_3$ | 0 | 0 | 0 | 0 | 0 |
| | $P_2O_5$ | 0.01 | 0.01 | 0 | 0 | 0 |
| | $TiO_2$ | 0.01 | 0.01 | 0.01 | 0.01 | 0.01 |
| | $ZrO_2$ | 0.01 | 0.01 | 0 | 0 | 0 |
| | $HfO_2$ | 0 | 0 | 0 | 0 | 0 |
| | $SnO_2$ | 0.21 | 0.2 | 0.22 | 0 | 0 |
| | $Fe_2O_4$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0.73 | 0.65 | 0.28 | 0 | 0 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |

(continued)

|  |  | No.211 | No.212 | No.213 | No.214 | No.215 |
|---|---|---|---|---|---|---|
| [ppm] | Pt | 0.03 | 0.03 | 0.03 | 0.03 | 0.03 |
|  | Rh | 0.02 | 0.02 | 0.02 | 0.02 | 0.02 |
|  | Pt+Rh | 0.05 | 0.05 | 0.05 | 0.05 | 0.05 |
| Si/(Si+Al+Mg) | | 0.58 | 0.58 | 0.58 | 0.58 | 0.58 |
| Al/(Si+Al+Mg) | | 0.30 | 0.30 | 0.30 | 0.29 | 0.30 |
| Mg/(Si+Al+Mg) | | 0.12 | 0.12 | 0.12 | 0.12 | 0.12 |
| Si/Al | | 1.93 | 1.95 | 1.97 | 1.98 | 1.97 |
| Si/Mg | | 4.74 | 4.76 | 4.79 | 4.83 | 4.82 |
| Al/Mg | | 2.45 | 2.45 | 2.44 | 2.44 | 2.44 |
| (Li+Na+K)/Si | | 0.00160 | 0.00159 | 0.00158 | 0.00157 | 0.00138 |
| Li+Na+K+Ca+Sr+Ba [% by mass] | | 0.15 | 0.15 | 0.15 | 0.15 | 0.14 |
| (Si+Zn)/(Mg+Al) | | 1.41 | 1.41 | 1.43 | 1.44 | 1.42 |
| Zn-(Ti+Zr) [% by mass] | | 1.39 | 1.39 | 1.4 | 1.4 | 0.7 |
| Ti/(Ti+Fe) | | 0.500 | 0.500 | 0.500 | 0.500 | 0.500 |
| As+Sb [% by mass] | | 0 | 0 | 0 | 0 | 0 |
| Sn+As+Sb+Cl [% by mass] | | 0.21 | 0.20 | 0.22 | 0.00 | 0.00 |
| Sn/(Sn+As+Sb+Cl) | | 1 | 1 | 1 | - | - |
| Metal Al [ppm] | | 0 | 0 | 0 | 0 | 0 |

[Table 86]

| | | No.211 | No.212 | No.213 | No.214 | No.215 |
|---|---|---|---|---|---|---|
| Before Crystallization | | | | | | |
| Temperature equiv. to High-Temp. Viscosity | 10^4 [°C] | unmeasured | unmeasured | unmeasured | unmeasured | unmeasured |
| | 10^3 [°C] | unmeasured | unmeasured | unmeasured | unmeasured | unmeasured |
| | 10^2.5 [°C] | unmeasured | unmeasured | unmeasured | unmeasured | unmeasured |
| | 10^2 [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| Density [g/cm$^3$] | | 2.59 | 2.59 | 2.59 | 2.58 | 2.57 |
| $\beta$ -OH [/mm] | | 0.15 | 0.15 | 0.15 | 0.15 | 0.15 |
| After Crystallization | | | | | | |
| Crystallization Conditions① | | 1100°C-2h | 1100°C-2h | 1100°C-2h | 1130°C-2h | 1130°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |

(continued)

| After Crystallization | | | | | | |
|---|---|---|---|---|---|---|
| Diffuse Trans-mittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| $\alpha$ [$\times 10^{7}$/°C] 30-750°C | | unmeasured | unmeasured | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |
| Average Surface Roughness of End Surface R a [nm] | | unmeasured | unmeasured | unmeasured | unmeasured | unmeasured |
| Waviness [$\mu$m] | | unmeasured | unmeasured | unmeasured | unmeasured | unmeasured |

[Table 87]

| | | No.216 | No.217 | No.218 | No.219 | No.220 |
|---|---|---|---|---|---|---|
| [% by mass] | $SiO_2$ | 58.2 | 54.3 | 54.6 | 54.3 | 54.1 |
| | $Al_2O_3$ | 29.5 | 32.6 | 33 | 33 | 33 |
| | $MgO$ | 12.1 | 12.9 | 11.8 | 11.9 | 11.9 |
| | $Li_2O$ | 0 | 0 | 0 | 0 | 0 |
| | $Na_2O$ | 0.06 | 0.07 | 0.07 | 0.07 | 0.07 |
| | $K_2O$ | 0.01 | 0.01 | 0.01 | 0.01 | 0.01 |
| | $CaO$ | 0.06 | 0.07 | 0.06 | 0.06 | 0.06 |
| | $SrO$ | 0 | 0 | 0 | 0 | 0 |
| | $BaO$ | 0 | 0 | 0 | 0 | 0 |
| | $ZnO$ | 0 | 0 | 0.01 | 0 | 0 |
| | $B_2O_3$ | 0 | 0 | 0 | 0 | 0 |
| | $P_2O_5$ | 0 | 0 | 0 | 0 | 0 |
| | $TiO_2$ | 0.02 | 0.01 | 0.01 | 0.01 | 0.01 |
| | $ZrO_2$ | 0 | 0 | 0 | 0 | 0 |
| | $HfO_2$ | 0 | 0 | 0 | 0 | 0 |
| | $SnO_2$ | 0 | 0 | 0.13 | 0.13 | 0.13 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0.28 | 0.54 | 0.80 |
| | $V_2O_5$ | 0 | 0 | 0 | 0 | 0 |
| | $CuO$ | 0 | 0 | 0 | 0 | 0 |
| | $NiO$ | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.58 | 0.54 | 0.55 | 0.55 | 0.55 |
| Al/(Si+Al+Mg) | | 0.30 | 0.33 | 0.33 | 0.33 | 0.33 |
| Mg/(Si+Al+Mg) | | 0.12 | 0.13 | 0.12 | 0.12 | 0.12 |
| Si/Al | | 1.97 | 1.67 | 1.65 | 1.65 | 1.64 |
| Si/Mg | | 4.81 | 4.21 | 4.63 | 4.56 | 4.55 |
| Al/Mg | | 2.44 | 2.53 | 2.80 | 2.77 | 2.77 |
| (Li+Na+K)/Si | | 0.00120 | 0.00147 | 0.00147 | 0.00147 | 0.00148 |

(continued)

|  | No.216 | No.217 | No.218 | No.219 | No.220 |
|---|---|---|---|---|---|
| Li+Na+K+Ca+Sr+Ba [% by mass] | 0.13 | 0.15 | 0.14 | 0.14 | 0.14 |
| (Si+Zn)/(Mg+Al) | 1.40 | 1.19 | 1.22 | 1.21 | 1.20 |
| Zn-(Ti+Zr) [% by mass] | -0.02 | -0.01 | 0 | -0.01 | -0.01 |
| Ti/(Ti+Fe) | 0.667 | 0.500 | 0.500 | 0.500 | 0.500 |
| As+Sb [% by mass] | 0 | 0 | 0 | 0 | 0 |
| Sn+As+Sb+Cl [% by mass] | 0.00 | 0.00 | 0.13 | 0.13 | 0.13 |
| Sn/(Sn+As+Sb+Cl) | - | - | 1 | 1 | 1 |
| Metal Al [ppm] | 0 | 0 | 0 | 0 | 0 |

[Table 88]

|  |  | No.216 | No.217 | No.218 | No.219 | No.220 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| Density [g/cm$^3$] | | 2.56 | 2.59 | 2.59 | 2.59 | 2.59 |
| $\beta$ -OH [/mm] | | 0.15 | 0.15 | 0.15 | 0.15 | 0.15 |
| After Crystallization | | | | | | |
| Crystallization Conditions① | | 1130°C-2h | 1130°C-2h | 1130°C-2h | 1130°C-2h | 1130°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| $\alpha$ [$\times 10^{-7}$/°C] 30-750°C | | unmeasured | unmeasured | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 89]

| | | No.221 | No.222 | No.223 | No.224 | No.225 |
|---|---|---|---|---|---|---|
| [% by mass] | $SiO_2$ | 53.9 | 57 | 57.4 | 57.8 | 59.4 |
| | $Al_2O_3$ | 33 | 25.2 | 25.4 | 25.7 | 22.9 |
| | MgO | 11.9 | 14.8 | 15 | 15.1 | 14.6 |
| | $Li_2O$ | 0 | 0 | 0 | 0 | 0 |
| | $Na_2O$ | 0.07 | 0.06 | 0.06 | 0.06 | 0.06 |
| | $K_2O$ | 0.01 | 0.01 | 0 | 0 | 0.01 |
| | CaO | 0.06 | 0.08 | 0.08 | 0.08 | 0.07 |
| | SrO | 0 | 0 | 0 | 0 | 0 |
| | BaO | 0 | 0 | 0 | 0 | 0 |
| | ZnO | 0 | 0 | 0 | 0 | 0 |
| | $B_2O_3$ | 0 | 2.6 | 1.9 | 1.1 | 2.6 |
| | $P_2O_5$ | 0 | 0 | 0 | 0 | 0 |
| | $TiO_2$ | 0.01 | 0.01 | 0.01 | 0.01 | 0.01 |
| | $ZrO_2$ | 0 | 0 | 0 | 0 | 0 |
| | $HfO_2$ | 0 | 0 | 0 | 0 | 0 |
| | $SnO_2$ | 0.12 | 0.19 | 0.2 | 0.22 | 0.26 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 1.01 | 0 | 0 | 0 | 0 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.55 | 0.59 | 0.59 | 0.59 | 0.61 |
| Al/(Si+Al+Mg) | | 0.33 | 0.26 | 0.26 | 0.26 | 0.24 |

(continued)

|  | No.221 | No.222 | No.223 | No.224 | No.225 |
|---|---|---|---|---|---|
| Mg/(Si+Al+Mg) | 0.12 | 0.15 | 0.15 | 0.15 | 0.15 |
| Si/Al | 1.63 | 2.26 | 2.26 | 2.25 | 2.59 |
| Si/Mg | 4.53 | 3.85 | 3.83 | 3.83 | 4.07 |
| Al/Mg | 2.77 | 1.70 | 1.69 | 1.70 | 1.57 |
| (Li+Na+K)/Si | 0.00148 | 0.00123 | 0.00105 | 0.00104 | 0.00118 |
| Li+Na+K+Ca+Sr+Ba [% by mass] | 0.14 | 0.15 | 0.14 | 0.14 | 0.14 |
| (Si+Zn)/(Mg+Al) | 1.20 | 1.43 | 1.42 | 1.42 | 1.58 |
| Zn-(Ti+Zr) [% by mass] | -0.01 | -0.01 | -0.01 | -0.01 | -0.01 |
| Ti/(Ti+Fe) | 0.500 | 0.500 | 0.500 | 0.500 | 0.500 |
| As+Sb [% by mass] | 0 | 0 | 0 | 0 | 0 |
| Sn+As+Sb+Cl [% by mass] | 0.12 | 0.19 | 0.20 | 0.22 | 0.26 |
| Sn/(Sn+As+Sb+Cl) | 1 | 1 | 1 | 1 | 1 |
| Metal Al [ppm] | 0 | 0 | 0 | 0 | 0 |

[Table 90]

| | | No.221 | No.222 | No.223 | No.224 | No.225 |
|---|---|---|---|---|---|---|
| Before Crystallization | | | | | | |
| Temperature equiv. to High-Temp. Viscosity | 10^4 [°C] | unmeasured | unmeasured | unmeasured | unmeasured | unmeasured |
| | 10^3 [°C] | unmeasured | unmeasured | unmeasured | unmeasured | unmeasured |
| | 10^2.5 [°C] | unmeasured | unmeasured | unmeasured | unmeasured | unmeasured |
| | 10^2 [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times$ 10$^7$/°C] 30-380°C | | unmeasured | unmeasured | unmeasured | unmeasured | unmeasured |
| Density [g/cm$^3$] | | 2.60 | 2.55 | 2.58 | 2.57 | 2.53 |
| $\beta$-OH [/mm] | | 0.15 | 0.15 | 0.15 | 0.15 | 0.15 |
| After Crystallization | | | | | | |
| Crystallization Conditions① | | 1130°C-2h | 1250°C-2h | 1250°C-2h | 1250°C-2h | 1130°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L * | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | 63 | 62 | 61 | unmeasured |

(continued)

| After Crystallization | | | | | |
|---|---|---|---|---|---|
| $\alpha$ [$\times 10^7$/°C] 30-380°C | unmeasured | unmeasured | 20.2 | 19.7 | unmeasured |
| $\alpha$ [$\times 10^{-7}$/°C] 30-750°C | unmeasured | unmeasured | 28.1 | 26.7 | unmeasured |
| Density [g/cm$^3$] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 91]

| | | No.226 | No.227 | No.228 | No.229 | No.230 |
|---|---|---|---|---|---|---|
| [% by mass] | $SiO_2$ | 55.3 | 53.2 | 57.3 | 57.2 | 60.4 |
| | $Al_2O_3$ | 29 | 29 | 27 | 25 | 26.8 |
| | MgO | 11.9 | 12 | 11.9 | 12 | 11 |
| | $Li_2O$ | 0 | 0 | 0 | 0 | 0 |
| | $Na_2O$ | 0.08 | 0.08 | 0.08 | 0.07 | 0.07 |
| | $K_2O$ | 0.01 | 0.01 | 0.01 | 0.01 | 0.01 |
| | CaO | 0.06 | 0.06 | 0.06 | 0.06 | 0.05 |
| | SrO | 0 | 0 | 0 | 0 | 0 |
| | BaO | 0 | 0 | 0 | 0 | 0 |
| | ZnO | 1.42 | 1.42 | 1.42 | 1.42 | 1.4 |
| | $B_2O_3$ | 0 | 0 | 0 | 0 | 0 |
| | $P_2O_5$ | 2.01 | 4.02 | 2.01 | 4.02 | 0 |
| | $TiO_2$ | 0.01 | 0.01 | 0.01 | 0.01 | 0.01 |
| | $ZrO_2$ | 0 | 0 | 0 | 0 | 0 |
| | $HfO_2$ | 0 | 0 | 0 | 0 | 0 |
| | $SnO_2$ | 0.23 | 0.23 | 0.22 | 0.24 | 0.2 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |

(continued)

|  |  | No.226 | No.227 | No.228 | No.229 | No.230 |
|---|---|---|---|---|---|---|
| [ppm] | Pt | 0.03 | 0.03 | 0.03 | 0.03 | 0.03 |
|  | Rh | 0.02 | 0.02 | 0.02 | 0.02 | 0.02 |
|  | Pt+Rh | 0.05 | 0.05 | 0.05 | 0.05 | 0.05 |
| Si/(Si+Al+Mg) | | 0.57 | 0.56 | 0.60 | 0.61 | 0.62 |
| Al/(Si+Al+Mg) | | 0.30 | 0.31 | 0.28 | 0.27 | 0.27 |
| Mg/(Si+Al+Mg) | | 0.12 | 0.13 | 0.12 | 0.13 | 0.11 |
| Si/Al | | 1.91 | 1.83 | 2.12 | 2.29 | 2.25 |
| Si/Mg | | 4.65 | 4.43 | 4.82 | 4.77 | 5.49 |
| Al/Mg | | 2.44 | 2.42 | 2.27 | 2.08 | 2.44 |
| (Li+Na+K)/Si | | 0.00163 | 0.00169 | 0.00157 | 0.00140 | 0.00132 |
| Li+Na+K+Ca+Sr+Ba [% by mass] | | 0.15 | 0.15 | 0.15 | 0.14 | 0.13 |
| (Si+Zn)/(Mg+Al) | | 1.39 | 1.33 | 1.51 | 1.58 | 1.63 |
| Zn-(Ti+Zr) [% by mass] | | 1.41 | 1.41 | 1.41 | 1.41 | 1.39 |
| Ti/(Ti+Fe) | | 0.500 | 0.500 | 0.500 | 0.500 | 0.500 |
| As+Sb [% by mass] | | 0 | 0 | 0 | 0 | 0 |
| Sn+As+Sb+Cl [% by mass] | | 0.23 | 0.23 | 0.22 | 0.24 | 0.20 |
| Sn/(Sn+As+Sb+Cl) | | 1 | 1 | 1 | 1 | 1 |
| Metal Al [ppm] | | 0 | 0 | 0 | 0 | 0 |

[Table 92]

| No.226 No.227 No.228 No.229 No.230 | | | | | | |
|---|---|---|---|---|---|---|
| Before Crystallization | | | | | | |
| Temperature equiv. to High-Temp. Viscosity | 10^4 [°C] | 1277 | 1248 | 1252 | 1259 | 1291 |
|  | 10^3 [°C] | 1375 | 1363 | 1379 | 1392 | 1404 |
|  | 10^2.5 [°C] | 1447 | 1440 | 1462 | 1479 | 1482 |
|  | 10^2 [°C] | 1546 | 1536 | 1564 | 1583 | 1585 |
| Liquidus Temperature [°C] | | 1456 | 1438 | 1402 | 1291 | 1441 |
| Liquidus Viscosity [-] | | 2.45 | 2.51 | 2.85 | 3.73 | 2.75 |
| $\alpha$ [× $10^{-7}$/°C] 30-380°C | | unmeasured | unmeasured | unmeasured | unmeasured | unmeasured |
| Density [g/cm$^3$] | | 2.58 | 2.58 | 2.56 | 2.55 | 2.55 |
| $\beta$-OH [/mm] | | 0.15 | 0.15 | 0.15 | 0.15 | 0.15 |
| After Crystallization | | | | | | |
| Crystallization Conditions① | | 1130°C-2h | 1130°C-2h | 1250°C-2h | 1130°C-2h | 1150°C-2h |
| Transmittance [%] 4mm thickness | 380nm | unmeasured | unmeasured | unmeasured | unmeasured | unmeasured |
|  | 800nm | unmeasured | unmeasured | unmeasured | unmeasured | unmeasured |
|  | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |

(continued)

| After Crystallization | | | | | | |
|---|---|---|---|---|---|---|
| Diffuse Trans-mittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | unmeasured | unmeasured | unmeasured | 52 |
| $\alpha$ [$\times 10^{-7}$/°C] 30-380°C | | unmeasured | unmeasured | 19.3 | unmeasured | 14 |
| $\alpha$ [$\times 10^{-7}$/°C] 30-750°C | | unmeasured | unmeasured | 26.2 | unmeasured | 17.8 |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |
| Average Surface Roughness of End Surface R a [nm] | | unmeasured | unmeasured | unmeasured | unmeasured | unmeasured |
| Waviness [$\mu$m] | | unmeasured | unmeasured | unmeasured | unmeasured | unmeasured |

[Table 93]

| | | No.231 | No.232 | No.233 | No.234 | No.235 |
|---|---|---|---|---|---|---|
| [% by mass] | $SiO_2$ | 62.9 | 65.3 | 68.2 | 63.8 | 63.8 |
| | $Al_2O_3$ | 25 | 23.3 | 21.3 | 19.5 | 19.5 |
| | MgO | 10.3 | 9.7 | 8.8 | 14.3 | 14.3 |
| | $Li_2O$ | 0 | 0 | 0 | 0 | 0 |
| | $Na_2O$ | 0.07 | 0.07 | 0.06 | 0.05 | 0.05 |
| | $K_2O$ | 0.01 | 0.01 | 0.01 | 0.01 | 0.01 |
| | CaO | 0.05 | 0.05 | 0.04 | 0.07 | 0.07 |
| | SrO | 0 | 0 | 0 | 0 | 0 |
| | BaO | 0 | 0 | 0 | 0 | 0 |
| | ZnO | 1.4 | 1.41 | 1.4 | 0 | 0 |
| | $B_2O_3$ | 0 | 0 | 0 | 0 | 0 |
| | $P_2O_5$ | 0 | 0 | 0 | 0.01 | 0 |
| | $TiO_2$ | 0.01 | 0.01 | 0.02 | 1.99 | 0.03 |
| | $ZrO_2$ | 0 | 0 | 0 | 0 | 1.99 |
| | $HfO_2$ | 0 | 0 | 0 | 0 | 0.04 |
| | $SnO_2$ | 0.19 | 0.19 | 0.17 | 0.19 | 0.18 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.64 | 0.66 | 0.69 | 0.65 | 0.65 |
| Al/(Si+Al+Mg) | | 0.25 | 0.24 | 0.22 | 0.20 | 0.20 |
| Mg/(Si+Al+Mg) | | 0.10 | 0.10 | 0.09 | 0.15 | 0.15 |
| Si/Al | | 2.52 | 2.80 | 3.20 | 3.27 | 3.27 |
| Si/Mg | | 6.11 | 6.73 | 7.75 | 4.46 | 4.46 |
| Al/Mg | | 2.43 | 2.40 | 2.42 | 1.36 | 1.36 |
| (Li+Na+K)/Si | | 0.00127 | 0.00123 | 0.00103 | 0.00094 | 0.00094 |

(continued)

|  | No.231 | No.232 | No.233 | No.234 | No.235 |
|---|---|---|---|---|---|
| Li+Na+K+Ca+Sr+Ba [% by mass] | 0.13 | 0.13 | 0.11 | 0.13 | 0.13 |
| (Si+Zn)/(Mg+Al) | 1.82 | 2.02 | 2.31 | 1.89 | 1.89 |
| Zn-(Ti+Zr) [% by mass] | 1.39 | 1.4 | 1.38 | -1.99 | -2.02 |
| Ti/(Ti+Fe) | 0.500 | 0.500 | 0.667 | 0.995 | 0.750 |
| As+Sb [% by mass] | 0 | 0 | 0 | 0 | 0 |
| Sn+As+Sb+Cl [% by mass] | 0.19 | 0.19 | 0.17 | 0.19 | 0.18 |
| Sn/(Sn+As+Sb+Cl) | 1 | 1 | 1 | 1 | 1 |
| Metal Al [ppm] | 0 | 0 | 0 | 0 | 0 |

[Table 94]

| | | No.231 | No.232 | No.233 | No.234 | No.235 |
|---|---|---|---|---|---|---|
| Before Crystallization | | | | | | |
| Temperature equiv. to High-Temp. Viscosity | $10^4$ [°C] | 1301 | 1321 | 1351 | 1254 | 1264 |
| | $10^3$ [°C] | 1433 | 1465 | 1503 | 1391 | 1401 |
| | $10^{2.5}$ [°C] | 1521 | 1559 | 1601 | 1480 | 1489 |
| | $10^2$ [°C] | 1632 | 1673 | 1720 | 1591 | 1597 |
| Liquidus Temperature [°C] | | 1405 | 1396 | 1370 | 1421 | unmeasured |
| Liquidus Viscosity [-] | | 3.18 | 3.44 | 3.86 | 2.82 | unmeasured |
| $\alpha$ [$\times 10^{-7}$/°C] 30-380°C | | unmeasured | unmeasured | 28.1 | unmeasured | unmeasured |
| Density [g/cm$^3$] | | 2.52 | 2.50 | 2.47 | 2.53 | 1.27 |
| $\beta$ -OH [/mm] | | 0.15 | 0.15 | 0.15 | 0.15 | 0.15 |
| After Crystallization | | | | | | |
| Crystallization Conditions① | | 1150°C-2h | 1200°C-2h | 1250°C-2h | 1130°C-2h | 1130°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | unmeasured | unmeasured | unmeasured | unmeasured |
| $\alpha$ [$\times 10^{-7}$/°C] 30-380°C | | unmeasured | 21.7 | unmeasured | unmeasured | unmeasured |
| $\alpha$ [$\times 10^{-7}$/°C] 30-750°C | | unmeasured | 22.6 | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | |
|---|---|---|---|---|
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 95]

| | | | No.236 | No.237 | No.238 | No.239 | No.240 |
|---|---|---|---|---|---|---|---|
| [% by mass] | | $SiO_2$ | 64.1 | 64.6 | 60.5 | 60.5 | 60.4 |
| | | $Al_2O_3$ | 19.6 | 19.7 | 25.2 | 25.2 | 25.5 |
| | | MgO | 14.3 | 14.4 | 11.9 | 11.9 | 12 |
| | | $Li_2O$ | 0 | 0 | 0 | 0 | 0 |
| | | $Na_2O$ | 0.05 | 0.06 | 0.06 | 0.06 | 0.06 |
| | | $K_2O$ | 0.01 | 0.94 | 0.01 | 0.01 | 0.01 |
| | | CaO | 0.07 | 0.07 | 0.06 | 0.06 | 0.06 |
| | | SrO | 0 | 0 | 0 | 0 | 0 |
| | | BaO | 0 | 0 | 0 | 0 | 0 |
| | | ZnO | 0 | 0 | 0 | 0 | 0 |
| | | $B_2O_3$ | 1.7 | 0 | 0 | 0 | 1.71 |
| | | $P_2O_5$ | 0 | 0 | 0.01 | 0 | 0 |
| | | $TiO_2$ | 0.02 | 0.02 | 1.98 | 0.02 | 0.02 |
| | | $ZrO_2$ | 0 | 0 | 0 | 1.95 | 0 |
| | | $HfO_2$ | 0 | 0 | 0 | 0.04 | 0 |
| | | $SnO_2$ | 0.18 | 0.18 | 0.22 | 0.2 | 0.22 |
| | | $Fe_2O_3$ | 0.01 | 0.01 | 0.01 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0 | 0 | 0 | 0 | 0 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |
| [ppm] | | Pt | 0.03 | 0.03 | 0.03 | 0.03 | 0.03 |
| | | Rh | 0.02 | 0.02 | 0.02 | 0.02 | 0.02 |
| | | Pt+Rh | 0.05 | 0.05 | 0.05 | 0.05 | 0.05 |
| Si/(Si+Al+Mg) | | | 0.65 | 0.65 | 0.62 | 0.62 | 0.62 |
| Al/(Si+Al+Mg) | | | 0.20 | 0.20 | 0.26 | 0.26 | 0.26 |

(continued)

|  | No.236 | No.237 | No.238 | No.239 | No.240 |
|---|---|---|---|---|---|
| Mg/(Si+Al+Mg) | 0.15 | 0.15 | 0.12 | 0.12 | 0.12 |
| Si/Al | 3.27 | 3.28 | 2.40 | 2.40 | 2.37 |
| Si/Mg | 4.48 | 4.49 | 5.08 | 5.08 | 5.03 |
| Al/Mg | 1.37 | 1.37 | 2.12 | 2.12 | 2.13 |
| (Li+Na+K)/Si | 0.00094 | 0.01548 | 0.00116 | 0.00116 | 0.00116 |
| Li+Na+K+Ca+Sr+Ba [% by mass] | 0.13 | 1.07 | 0.13 | 0.13 | 0.13 |
| (Si+Zn)/(Mg+Al) | 1.89 | 1.89 | 1.63 | 1.63 | 1.61 |
| Zn-(Ti+Zr) [% by mass] | -0.02 | -0.02 | -1.98 | -1.97 | -0.02 |
| Ti/(Ti+Fe) | 0.667 | 0.667 | 0.995 | 0.667 | 0.667 |
| As+Sb [% by mass] | 0 | 0 | 0 | 0 | 0 |
| Sn+As+Sb+Cl [% by mass] | 0.18 | 0.18 | 0.22 | 0.20 | 0.22 |
| Sn/(Sn+As+Sb+Cl) | 1 | 1 | 1 | 1 | 1 |
| Metal Al [ppm] | 0 | 0 | 0 | 0 | 0 |

[Table 96]

| | | No.236 | No.237 | No.238 | No.239 | No.240 |
|---|---|---|---|---|---|---|
| Before Crystallization | | | | | | |
| Temperature equiv. to High-Temp. Viscosity | $10^4$ [°C] | 1256 | 1271 | 1256 | 1265 | 1256 |
| | $10^3$ [°C] | 1394 | 1412 | 1386 | 1395 | 1386 |
| | $10^{2.5}$ [°C] | 1483 | 1505 | 1471 | 1479 | 1470 |
| | $10^2$ [°C] | 1592 | 1616 | 1578 | 1581 | 1574 |
| Liquidus Temperature [°C] | | unmeasured | unmeasured | 1378 | 1369 | 1377 |
| Liquidus Viscosity [-] | | unmeasured | unmeasured | 3.05 | 3.18 | 3.06 |
| $\alpha$ [× $10^{-7}$/°C] 30-380°C | | unmeasured | unmeasured | unmeasured | unmeasured | unmeasured |
| Density [g/cm$^3$] | | 2.50 | 2.52 | 2.55 | 2.56 | 2.52 |
| $\beta$ -OH [/mm] | | 0.15 | 0.15 | 0.15 | 0.15 | 0.15 |
| After Crystallization | | | | | | |
| Crystallization Conditions① | | 1010°C-2h | 1130°C-2h | 1120°C-2h | 1120°C-2h | 1120°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | unmeasured | unmeasured | unmeasured | unmeasured |

(continued)

| After Crystallization | | | | | |
|---|---|---|---|---|---|
| [× 10⁻⁷/°C] 30-380°C | unmeasured | unmeasured | 11.7 | 11.8 | unmeasured |
| $\alpha$ [× 10⁻⁷/°C] 30-750°C | unmeasured | unmeasured | 16.4 | 16.8 | unmeasured |
| Density [g/cm³] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [μm] | unmeasured | unmeasured | unmeasured | unmeasured | unmeasured |

[Table 97]

| | | No.241 | No.242 | No.243 | No.244 | No.245 |
|---|---|---|---|---|---|---|
| [% by mass] | $SiO_2$ | 61.1 | 57.4 | 57.4 | 57.4 | 61.5 |
| | $Al_2O_3$ | 25.6 | 29 | 29 | 29 | 21.8 |
| | $MgO$ | 12 | 11.8 | 11.8 | 11.8 | 14.3 |
| | $Li_2O$ | 0 | 0 | 0 | 0 | 0 |
| | $Na_2O$ | 0.06 | 0.04 | 0.04 | 0.04 | 0.05 |
| | $K_2O$ | 0.94 | 0.01 | 0.01 | 0.01 | 0.01 |
| | $CaO$ | 0.06 | 0.06 | 0.06 | 0.06 | 0.07 |
| | $SrO$ | 0 | 0 | 0 | 0 | 0 |
| | $BaO$ | 0 | 0 | 0 | 0 | 0 |
| | $ZnO$ | 0 | 1.39 | 1.39 | 1.39 | 0 |
| | $B_2O_3$ | 0 | 0 | 0 | 0 | 0 |
| | $P_2O_5$ | 0 | 0 | 0 | 0 | 0.01 |
| | $TiO_2$ | 0.01 | 0.01 | 0.01 | 0.01 | 2 |
| | $ZrO_2$ | 0 | 0 | 0 | 0 | 0 |
| | $HfO_2$ | 0 | 0 | 0 | 0 | 0 |
| | $SnO_2$ | 0.2 | 0.23 | 0.23 | 0.23 | 0.23 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | $CuO$ | 0 | 0 | 0 | 0 | 0 |
| | $NiO$ | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |

(continued)

|  |  | No.241 | No.242 | No.243 | No.244 | No.245 |
|---|---|---|---|---|---|---|
| [ppm] | Pt | 0.03 | 50 | 0.03 | 50 | 0.03 |
|  | Rh | 0.02 | 0.02 | 0.02 | 0.02 | 0.02 |
|  | Pt+Rh | 0.05 | 50.02 | 0.05 | 50.02 | 0.05 |
| Si/(Si+Al+Mg) | | 0.62 | 0.58 | 0.58 | 0.58 | 0.63 |
| Al/(Si+Al+Mg) | | 0.26 | 0.30 | 0.30 | 0.30 | 0.22 |
| Mg/(Si+Al+Mg) | | 0.12 | 0.12 | 0.12 | 0.12 | 0.15 |
| Si/Al | | 2.39 | 1.98 | 1.98 | 1.98 | 2.82 |
| Si/Mg | | 5.09 | 4.86 | 4.86 | 4.86 | 4.30 |
| Al/Mg | | 2.13 | 2.46 | 2.46 | 2.46 | 1.52 |
| (Li+Na+K)/Si | | 0.01637 | 0.00087 | 0.00087 | 0.00087 | 0.00098 |
| Li+Na+K+Ca+Sr+Ba [% by mass] | | 1.06 | 0.11 | 0.11 | 0.11 | 0.13 |
| (Si+Zn)/(Mg+Al) | | 1.63 | 1.44 | 1.44 | 1.44 | 1.70 |
| Zn-(Ti+Zr) [% by mass] | | -0.01 | 1.38 | 1.38 | 1.38 | -2 |
| Ti/(Ti+Fe) | | 0.500 | 0.500 | 0.500 | 0.500 | 0.995 |
| As+Sb [% by mass] | | 0 | 0 | 0 | 0 | 0 |
| Sn+As+Sb+Cl [% by mass] | | 0.20 | 0.23 | 0.23 | 0.23 | 0.23 |
| Sn/(Sn+As+Sb+Cl) | | 1 | 1 | 1 | 1 | 1 |
| Metal Al [ppm] | | 0 | 0 | 500 | 500 | 0 |

[Table 98]

| | | No.241 | No.242 | No.243 | No.244 | No.245 |
|---|---|---|---|---|---|---|
| Before Crystallization | | | | | | |
| Temperature equiv. to High-Temp. Viscosity | $10^4$ [°C] | 1275 | unmeasured | unmeasured | unmeasured | 1237 |
| | $10^3$ [°C] | 1408 | unmeasured | unmeasured | unmeasured | 1367 |
| | $10^{2.5}$ [°C] | 1494 | unmeasured | unmeasured | unmeasured | 1452 |
| | $10^2$ [°C] | 1600 | unmeasured | unmeasured | unmeasured | 1555 |
| Liquidus Temperature [°C] | | unmeasured | unmeasured | unmeasured | unmeasured | 1314 |
| Liquidus Viscosity [-] | | unmeasured | unmeasured | unmeasured | unmeasured | 3.37 |
| $\alpha$ [× $10^{-7}$/°C] 30-380°C | | unmeasured | unmeasured | unmeasured | unmeasured | unmeasured |
| Density [g/cm$^3$] | | 2.53 | 2.58 | 2.58 | 2.58 | 2.55 |
| $\beta$ -OH [/mm] | | 0.15 | 0.15 | 0.15 | 0.15 | 0.15 |
| After Crystallization | | | | | | |
| Crystallization Conditions① | | 1130°C-2h | 1130°C-2h | 1130°C-2h | 1130°C-2h | 1130°C-2h |
| Transmittance [%] 4mm thickness | 380nm | unmeasured | unmeasured | 26.6 | unmeasured | unmeasured |
| | 800nm | unmeasured | unmeasured | 65 | unmeasured | unmeasured |
| | 1200nm | unmeasured | unmeasured | 76.6 | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |

(continued)

| After Crystallization | | | | | | |
|---|---|---|---|---|---|---|
| Diffuse Trans-mittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | 48 | 49 | 48 | unmeasured |
| $\alpha$ [$\times$ 10$^{-7}$/°C] 30-380°C | | unmeasured | 6.69 | 7.1 | 6.93 | unmeasured |
| $\alpha$ [$\times$ 10$^{-7}$/°C] 30-750°C | | unmeasured | 12.5 | 12.9 | 13 | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |
| Average Surface Roughness of End Surface R a [nm] | | unmeasured | unmeasured | unmeasured | unmeasured | unmeasured |
| Waviness [$\mu$ m] | | unmeasured | unmeasured | unmeasured | unmeasured | unmeasured |

[Table 99]

| | | No.246 | No.247 | No.248 | No.249 | No.250 |
|---|---|---|---|---|---|---|
| [% by mass] | $SiO_2$ | 61.5 | 61.6 | 62.2 | 64.5 | 64 |
| | $Al_2O_3$ | 21.8 | 21.8 | 22 | 19.7 | 19.4 |
| | $MgO$ | 14.3 | 14.3 | 14.4 | 14.4 | 14.2 |
| | $Li_2O$ | 0 | 0 | 0 | 0 | 0 |
| | $Na_2O$ | 0.05 | 0.05 | 0.06 | 0.05 | 0.06 |
| | $K_2O$ | 0.01 | 0.01 | 0.94 | 0.01 | 0.01 |
| | $CaO$ | 0.07 | 0.07 | 0.07 | 0.07 | 0.07 |
| | $SrO$ | 0 | 0 | 0 | 0 | 0 |
| | $BaO$ | 0 | 0 | 0 | 0 | 2.04 |
| | $ZnO$ | 0 | 0 | 0 | 0 | 0 |
| | $B_2O_3$ | 0 | 1.8 | 0 | 1 | 0 |
| | $P_2O_5$ | 0 | 0 | 0 | 0 | 0 |
| | $TiO_2$ | 0.03 | 0.02 | 0.02 | 0.02 | 0.02 |
| | $ZrO_2$ | 1.98 | 0 | 0 | 0 | 0 |
| | $HfO_2$ | 0.04 | 0 | 0 | 0 | 0 |
| | $SnO_2$ | 0.22 | 0.22 | 0.21 | 0.19 | 0.18 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | $CuO$ | 0 | 0 | 0 | 0 | 0 |
| | $NiO$ | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.63 | 0.63 | 0.63 | 0.65 | 0.66 |
| Al/(Si+Al+Mg) | | 0.22 | 0.22 | 0.22 | 0.20 | 0.20 |
| Mg/(Si+Al+Mg) | | 0.15 | 0.15 | 0.15 | 0.15 | 0.15 |
| Si/Al | | 2.82 | 2.83 | 2.83 | 3.27 | 3.30 |
| Si/Mg | | 4.30 | 4.31 | 4.32 | 4.48 | 4.51 |
| Al/Mg | | 1.52 | 1.52 | 1.53 | 1.37 | 1.37 |
| (Li+Na+K)/Si | | 0.00098 | 0.00097 | 0.01608 | 0.00093 | 0.00109 |

(continued)

|  | No.246 | No.247 | No.248 | No.249 | No.250 |
|---|---|---|---|---|---|
| Li+Na+K+Ca+Sr+Ba [% by mass] | 0.13 | 0.13 | 1.07 | 0.13 | 2.18 |
| (Si+Zn)/(Mg+Al) | 1.70 | 1.71 | 1.71 | 1.89 | 1.90 |
| Zn-(Ti+Zr) [% by mass] | -2.01 | -0.02 | -0.02 | -0.02 | -0.02 |
| Ti/(Ti+Fe) | 0.750 | 0.667 | 0.667 | 0.667 | 0.667 |
| As+Sb [% by mass] | 0 | 0 | 0 | 0 | 0 |
| Sn+As+Sb+Cl [% by mass] | 0.22 | 0.22 | 0.21 | 0.19 | 0.18 |
| Sn/(Sn+As+Sb+Cl) | 1 | 1 | 1 | 1 | 1 |
| Metal Al [ppm] | 0 | 0 | 0 | 0 | 0 |

[Table 100]

| | | No.246 | No.247 | No.248 | No.249 | No.250 |
|---|---|---|---|---|---|---|
| Before Crystallization | | | | | | |
| Temperature equiv. to High-Temp. Viscosity | $10^4$ [°C] | 1248 | 1239 | 1253 | unmeasured | 1268 |
| | $10^3$ [°C] | 1378 | 1371 | 1387 | unmeasured | 1405 |
| | $10^{2.5}$ [°C] | 1464 | 1456 | 1475 | unmeasured | 1494 |
| | $10^2$ [°C] | 1567 | 1561 | 1581 | unmeasured | 1605 |
| Liquidus Temperature [°C] | | 1301 | 1258 | unmeasured | unmeasured | unmeasured |
| Liquidus Viscosity [-] | | 3.55 | 3.84 | unmeasured | unmeasured | unmeasured |
| $\alpha$ [× $10^{-7}$/°C] 30-380°C | | unmeasured | unmeasured | unmeasured | unmeasured | unmeasured |
| Density [g/cm$^3$] | | 2.57 | 2.52 | 2.53 | 2.51 | 2.55 |
| $\beta$ -OH [/mm] | | 0.15 | 0.15 | 0.15 | 0.15 | 0.15 |
| After Crystallization | | | | | | |
| Crystallization Conditions① | | 1130°C-2h | 1130°C-2h | 1130°C-2h | 1130°C-2h | 1130°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | unmeasured | unmeasured | unmeasured | unmeasured |
| $\alpha$ [× $10^{-7}$/°C] 30-380°C | | unmeasured | unmeasured | unmeasured | unmeasured | unmeasured |
| $\alpha$ [× $10^{-7}$/°C] 30-750°C | | unmeasured | unmeasured | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Average Surface Roughness of End Surface R a [nm] | unmeasured | unmeasured | unmeasured | unmeasured | unmeasured |
| Waviness [$\mu$ m] | unmeasured | unmeasured | unmeasured | unmeasured | unmeasured |

[Table 101]

| | | No.251 | No.252 | No.253 | No.254 | No.255 |
|---|---|---|---|---|---|---|
| [% by mass] | $SiO_2$ | 63.8 | 63.9 | 54.9 | 55.9 | 55.5 |
| | $Al_2O_3$ | 19.5 | 19.5 | 27.7 | 28.3 | 28.1 |
| | MgO | 14.3 | 14.3 | 11.4 | 11.7 | 11.6 |
| | $Li_2O$ | 0 | 0 | 0 | 0 | 0 |
| | $Na_2O$ | 0.05 | 0.05 | 0.07 | 0.08 | 0.07 |
| | $K_2O$ | 0.01 | 0.01 | 0.01 | 0.01 | 0.01 |
| | CaO | 0.07 | 0.07 | 0.06 | 0.06 | 0.06 |
| | SrO | 0 | 0 | 0 | 0 | 0 |
| | BaO | 0 | 0 | 0 | 0 | 0 |
| | ZnO | 0 | 0 | 1.36 | 1.4 | 1.39 |
| | $B_2O_3$ | 1 | 0 | 0 | 0 | 0 |
| | $P_2O_5$ | 0.01 | 1.97 | 0.01 | 0 | 0 |
| | $TiO_2$ | 1 | 0.02 | 1.97 | 0.03 | 0.03 |
| | $ZrO_2$ | 0 | 0 | 2.28 | 2.22 | 3.04 |
| | $HfO_2$ | 0 | 0 | 0.04 | 0.04 | 0.06 |
| | $SnO_2$ | 0.19 | 0.19 | 0.21 | 0.24 | 0.22 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.65 | 0.65 | 0.58 | 0.58 | 0.58 |
| Al/(Si+Al+Mg) | | 0.20 | 0.20 | 0.29 | 0.30 | 0.30 |

(continued)

|  | No.251 | No.252 | No.253 | No.254 | No.255 |
|---|---|---|---|---|---|
| Mg/(Si+Al+Mg) | 0.15 | 0.15 | 0.12 | 0.12 | 0.12 |
| Si/Al | 3.27 | 3.28 | 1.98 | 1.98 | 1.98 |
| Si/Mg | 4.46 | 4.47 | 4.82 | 4.78 | 4.78 |
| Al/Mg | 1.36 | 1.36 | 2.43 | 2.42 | 2.42 |
| (Li+Na+K)/Si | 0.00094 | 0.00094 | 0.00146 | 0.00161 | 0.00144 |
| Li+Na+K+Ca+Sr+Ba [% by mass] | 0.13 | 0.13 | 0.14 | 0.15 | 0.14 |
| (Si+Zn)/(Mg+Al) | 1.89 | 1.89 | 1.44 | 1.43 | 1.43 |
| Zn-(Ti+Zr) [% by mass] | -1 | -0.02 | -2.89 | -0.85 | -1.68 |
| Ti/(Ti+Fe) | 0.990 | 0.667 | 0.995 | 0.750 | 0.750 |
| As+Sb [% by mass] | 0 | 0 | 0 | 0 | 0 |
| Sn+As+Sb+Cl [% by mass] | 0.19 | 0.19 | 0.21 | 0.24 | 0.22 |
| Sn/(Sn+As+Sb+Cl) | 1 | 1 | 1 | 1 | 1 |
| Metal Al [ppm] | 0 | 0 | 0 | 0 | 0 |

[Table 102]

| | | No.251 | No.252 | No.253 | No.254 | No.255 |
|---|---|---|---|---|---|---|
| Before Crystallization | | | | | | |
| Temperature equiv. to High-Temp. Viscosity | $10^4$ [°C] | 1254 | 1277 | unmeasured | unmeasured | unmeasured |
| | $10^3$ [°C] | 1391 | 1418 | unmeasured | unmeasured | unmeasured |
| | $10^{2.5}$ [°C] | 1479 | 1510 | unmeasured | unmeasured | unmeasured |
| | $10^2$ [°C] | 1586 | 1621 | unmeasured | unmeasured | unmeasured |
| Liquidus Temperature [°C] | | unmeasured | 1399 | unmeasured | unmeasured | unmeasured |
| Liquidus Viscosity [-] | | unmeasured | 3.12 | unmeasured | unmeasured | unmeasured |
| $\alpha$ [ $\times 10^{-7}$/°C] 30-380°C | | unmeasured | unmeasured | unmeasured | unmeasured | unmeasured |
| Density [g/cm$^3$] | | 2.52 | 2.51 | 2.63 | 2.62 | 2.63 |
| $\beta$ -OH [/mm] | | 0.15 | 0.15 | 0.15 | 0.15 | 0.15 |
| After Crystallization | | | | | | |
| Crystallization Conditions① | | 1130°C-2h | 1130°C-2h | 1130°C-2h | 1130°C-2h | 1130°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L * | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | unmeasured | unmeasured | unmeasured |

(continued)

| After Crystallization | | | | | |
|---|---|---|---|---|---|
| $\alpha$ [$\times 10^{-7}$/°C] 30-380°C | unmeasured | unmeasured | unmeasured | unmeasured | unmeasured |
| $\alpha$ [$\times 10^{-7}$/°C] 30-750°C | unmeasured | unmeasured | unmeasured | unmeasured | unmeasured |
| Density [g/cm$^3$] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [μm] | unmeasured | unmeasured | unmeasured | unmeasured | unmeasured |

[Table 103]

| | | | No.256 | No.257 | No.258 | No.259 | No.260 |
|---|---|---|---|---|---|---|---|
| [% by mass] | | $SiO_2$ | 55 | 57.2 | 57 | 54.6 | 64.5 |
| | | $Al_2O_3$ | 27.8 | 29.1 | 28.7 | 33.4 | 19.5 |
| | | MgO | 11.4 | 11.9 | 11.8 | 11.7 | 14.1 |
| | | $Li_2O$ | 0 | 0 | 0 | 0 | 0 |
| | | $Na_2O$ | 0.07 | 0.08 | 0.08 | 0.07 | 0.05 |
| | | $K_2O$ | 0 | 0.01 | 0.01 | 0.01 | 0.01 |
| | | CaO | 0.06 | 0.06 | 0.06 | 0.06 | 0.07 |
| | | SrO | 0 | 0 | 0 | 0 | 0 |
| | | BaO | 0 | 0 | 0 | 0 | 0 |
| | | ZnO | 1.37 | 1.39 | 1.4 | 0 | 0 |
| | | $B_2O_3$ | 0 | 0 | 0 | 0 | 1.6 |
| | | $P_2O_5$ | 0 | 0 | 0 | 0 | 0 |
| | | $TiO_2$ | 0.03 | 0.02 | 0.02 | 0.02 | 0.02 |
| | | $ZrO_2$ | 3.03 | 0 | 0 | 0 | 0 |
| | | $HfO_2$ | 0.06 | 0 | 0 | 0 | 0 |
| | | $SnO_2$ | 1.23 | 0.19 | 0.94 | 0.14 | 0.16 |
| | | $Fe_2O_3$ | 0.01 | 0.01 | 0.01 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0 | 0 | 0 | 0 | 0 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |

(continued)

|  | | No.256 | No.257 | No.258 | No.259 | No.260 |
|---|---|---|---|---|---|---|
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.58 | 0.58 | 0.58 | 0.55 | 0.66 |
| Al/(Si+Al+Mg) | | 0.30 | 0.30 | 0.29 | 0.34 | 0.20 |
| Mg/(Si+Al+Mg) | | 0.12 | 0.12 | 0.12 | 0.12 | 0.14 |
| Si/Al | | 1.98 | 1.97 | 1.99 | 1.63 | 3.31 |
| Si/Mg | | 4.82 | 4.81 | 4.83 | 4.67 | 4.57 |
| Al/Mg | | 2.44 | 2.45 | 2.43 | 2.85 | 1.38 |
| (Li+Na+K)/Si | | 0.00127 | 0.00157 | 0.00158 | 0.00147 | 0.00093 |
| Li+Na+K+Ca+Sr+Ba [% by mass] | | 0.13 | 0.15 | 0.15 | 0.14 | 0.13 |
| (Si+Zn)/(Mg+Al) | | 1.44 | 1.43 | 1.44 | 1.21 | 1.92 |
| Zn-(Ti+Zr) [% by mass] | | -1.69 | 1.37 | 1.38 | -0.02 | -0.02 |
| Ti/(Ti+Fe) | | 0.750 | 0.667 | 0.667 | 0.667 | 0.667 |
| As+Sb [% by mass] | | 0 | 0 | 0 | 0 | 0 |
| Sn+As+Sb+Cl [% by mass] | | 1.23 | 0.19 | 0.94 | 0.14 | 0.16 |
| Sn/(Sn+As+Sb+Cl) | | 1 | 1 | 1 | 1 | 1 |
| Metal Al [ppm] | | 0 | 1000 | 500 | 500 | 500 |

[Table 104]

| | | No.256 | No.257 | No.258 | No.259 | No.260 |
|---|---|---|---|---|---|---|
| Before Crystallization | | | | | | |
| Temperature equiv. to High-Temp. Viscosity | $10^4$ [°C] | unmeasured | unmeasured | unmeasured | unmeasured | unmeasured |
| | $10^3$ [°C] | unmeasured | unmeasured | unmeasured | unmeasured | unmeasured |
| | $10^{2.5}$ [°C] | unmeasured | unmeasured | unmeasured | unmeasured | unmeasured |
| | $10^2$ [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| Density [g/cm$^3$] | | 2.65 | 2.58 | 2.60 | 2.59 | 2.50 |
| $\beta$-OH [/mm] | | 0.15 | 0.15 | 0.15 | 0.15 | 0.15 |
| After Crystallization | | | | | | |
| Crystallization Conditions(D | | 1130°C-2h | 1130°C-2h | 1130°C-2h | 1130°C-2h | 1130°C-2h |
| Transmittance [%] 4mm thickness | 380nm | unmeasured | 36.3 | unmeasured | unmeasured | unmeasured |
| | 800nm | unmeasured | 67.9 | unmeasured | unmeasured | unmeasured |
| | 1200nm | unmeasured | 77.9 | unmeasured | unmeasured | unmeasured |
| L * | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |

(continued)

| After Crystallization | | | | | | |
|---|---|---|---|---|---|---|
| Diffuse Trans-mittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | unmeasured | unmeasured | unmeasured |
| $\alpha$ [$\times 10^{-7}$/°C] 30-380°C | | unmeasured | 7.6 | unmeasured | unmeasured | unmeasured |
| $\alpha$ [$\times 10^{-7}$/°C] 30-750°C | | unmeasured | 14 | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |
| Average Surface Roughness of End Surface R a [nm] | | unmeasured | unmeasured | unmeasured | unmeasured | unmeasured |
| Waviness [$\mu$m] | | unmeasured | unmeasured | unmeasured | unmeasured | unmeasured |

EP 4 650 331 A1

[Table 105]

| | | No.261 | No.262 | No.263 | No.264 | No.265 |
|---|---|---|---|---|---|---|
| [% by mass] | $SiO_2$ | 64.7 | 64 | 64.1 | 60.4 | 60.5 |
| | $Al_2O_3$ | 19.7 | 19.4 | 19.5 | 25.3 | 25.2 |
| | MgO | 14.4 | 14.2 | 14.2 | 12 | 11.9 |
| | $Li_2O$ | 0 | 0 | 0 | 0 | 0 |
| | $Na_2O$ | 0.97 | 0.06 | 0.04 | 0.06 | 0.07 |
| | $K_2O$ | 0.01 | 0.01 | 0.01 | 0.01 | 0.01 |
| | CaO | 0.07 | 0.07 | 1.93 | 0.06 | 0.06 |
| | SrO | 0 | 2.06 | 0 | 0 | 0 |
| | BaO | 0 | 0 | 0 | 0 | 2.05 |
| | ZnO | 0 | 0 | 0 | 0 | 0 |
| | $B_2O_3$ | 0 | 0 | 0 | 0 | 0 |
| | $P_2O_5$ | 0 | 0 | 0.01 | 1.96 | 0 |
| | $TiO_2$ | 0.02 | 0.02 | 0.02 | 0.02 | 0.02 |
| | $ZrO_2$ | 0 | 0 | 0 | 0 | 0 |
| | $HfO_2$ | 0 | 0 | 0 | 0 | 0 |
| | $SnO_2$ | 0.18 | 0.18 | 0.18 | 0.23 | 0.21 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.65 | 0.66 | 0.66 | 0.62 | 0.62 |
| Al/(Si+Al+Mg) | | 0.20 | 0.20 | 0.20 | 0.26 | 0.26 |
| Mg/(Si+Al+Mg) | | 0.15 | 0.15 | 0.15 | 0.12 | 0.12 |
| Si/Al | | 3.28 | 3.30 | 3.29 | 2.39 | 2.40 |
| Si/Mg | | 4.49 | 4.51 | 4.51 | 5.03 | 5.08 |
| Al/Mg | | 1.37 | 1.37 | 1.37 | 2.11 | 2.12 |
| (Li+Na+K)/Si | | 0.01515 | 0.00109 | 0.00078 | 0.00116 | 0.00132 |

140

(continued)

|  | No.261 | No.262 | No.263 | No.264 | No.265 |
|---|---|---|---|---|---|
| Li+Na+K+Ca+Sr+Ba [% by mass] | 1.05 | 2.2 | 1.98 | 0.13 | 2.19 |
| (Si+Zn)/(Mg+Al) | 1.90 | 1.90 | 1.90 | 1.62 | 1.63 |
| Zn-(Ti+Zr) [% by mass] | -0.02 | -0.02 | -0.02 | -0.02 | -0.02 |
| Ti/(Ti+Fe) | 0.667 | 0.667 | 0.667 | 0.667 | 0.667 |
| As+Sb [% by mass] | 0 | 0 | 0 | 0 | 0 |
| Sn+As+Sb+Cl [% by mass] | 0.18 | 0.18 | 0.18 | 0.23 | 0.21 |
| Sn/(Sn+As+Sb+Cl) | 1 | 1 | 1 | 1 | 1 |
| Metal Al [ppm] | 0 | 0 | 0 | 0 | 0 |

[Table 106]

| | | No.261 | No.262 | No.263 | No.264 | No.265 |
|---|---|---|---|---|---|---|
| Before Crystallization | | | | | | |
| Temperature equiv. to High-Temp. Viscosity | $10^4$ [°C] | 1258 | 1260 | 1252 | 1278 | 1270 |
| | $10^3$ [°C] | 1399 | 1395 | 1388 | 1412 | 1402 |
| | $10^{2.5}$ [°C] | 1490 | 1483 | 1477 | 1498 | 1488 |
| | $10^2$ [°C] | 1601 | 1590 | 1585 | 1604 | 1592 |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| Density [g/cm$^3$] | | 2.52 | 2.55 | 2.54 | 2.52 | 2.56 |
| $\beta$-OH [/mm] | | 0.15 | 0.15 | 0.15 | 0.15 | 0.15 |
| After Crystallization | | | | | | |
| Crystallization Conditions① | | 1130°C-2h | 1130°C-2h | 1130°C-2h | 1130°C-2h | 1130°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| $\alpha$ [$\times 10^{-7}$/°C] 30-750°C | | unmeasured | unmeasured | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | |
|---|---|---|---|---|
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 107]

| | | | No.266 | No.267 | No.268 | No.269 | No.270 |
|---|---|---|---|---|---|---|---|
| [% by mass] | | $SiO_2$ | 61.2 | 60.5 | 60.5 | 61.7 | 61.6 |
| | | $Al_2O_3$ | 25.5 | 25.2 | 25.3 | 21.8 | 21.8 |
| | | MgO | 12 | 11.9 | 11.9 | 14.2 | 14.2 |
| | | $Li_2O$ | 0 | 0 | 0 | 0 | 0 |
| | | $Na_2O$ | 0.97 | 0.07 | 0.06 | 0.05 | 0.07 |
| | | $K_2O$ | 0.01 | 0.01 | 0.01 | 0.01 | 0.01 |
| | | CaO | 0.06 | 0.06 | 1.94 | 0.07 | 0.07 |
| | | SrO | 0 | 2.08 | 0 | 0 | 0 |
| | | BaO | 0 | 0 | 0 | 0 | 2.04 |
| | | ZnO | 0 | 0 | 0 | 0 | 0 |
| | | $B_2O_3$ | 0 | 0 | 0 | 0 | 0 |
| | | $P_2O_5$ | 0 | 0 | 0 | 1.96 | 0 |
| | | $TiO_2$ | 0.02 | 0.02 | 0.02 | 0.02 | 0.02 |
| | | $ZrO_2$ | 0 | 0 | 0 | 0 | 0 |
| | | $HfO_2$ | 0 | 0 | 0 | 0 | 0 |
| | | $SnO_2$ | 0.22 | 0.21 | 0.23 | 0.22 | 0.21 |
| | | $Fe_2O_3$ | 0.01 | 0.01 | 0.01 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0 | 0 | 0 | 0 | 0 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |
| [ppm] | | Pt | 0.03 | 0.03 | 0.03 | 0.03 | 0.03 |
| | | Rh | 0.02 | 0.02 | 0.02 | 0.02 | 0.02 |
| | | Pt+Rh | 0.05 | 0.05 | 0.05 | 0.05 | 0.05 |
| Si/(Si+Al+Mg) | | | 0.62 | 0.62 | 0.62 | 0.63 | 0.63 |
| Al/(Si+Al+Mg) | | | 0.26 | 0.26 | 0.26 | 0.22 | 0.22 |

(continued)

|  | | No.266 | No.267 | No.268 | No.269 | No.270 |
|---|---|---|---|---|---|---|
| Mg/(Si+Al+Mg) | | 0.12 | 0.12 | 0.12 | 0.15 | 0.15 |
| Si/Al | | 2.40 | 2.40 | 2.39 | 2.83 | 2.83 |
| Si/Mg | | 5.10 | 5.08 | 5.08 | 4.35 | 4.34 |
| Al/Mg | | 2.13 | 2.12 | 2.13 | 1.54 | 1.54 |
| (Li+Na+K)/Si | | 0.01601 | 0.00132 | 0.00116 | 0.00097 | 0.00130 |
| Li+Na+K+Ca+Sr+Ba [% by mass] | | 1.04 | 2.22 | 2.01 | 0.13 | 2.19 |
| (Si+Zn)/(Mg+Al) | | 1.63 | 1.63 | 1.63 | 1.71 | 1.71 |
| Zn-(Ti+Zr) [% by mass] | | -0.02 | -0.02 | -0.02 | -0.02 | -0.02 |
| Ti/(Ti+Fe) | | 0.667 | 0.667 | 0.667 | 0.667 | 0.667 |
| As+Sb [% by mass] | | 0 | 0 | 0 | 0 | 0 |
| Sn+As+Sb+Cl [% by mass] | | 0.22 | 0.21 | 0.23 | 0.22 | 0.21 |
| Sn/(Sn+As+Sb+Cl) | | 1 | 1 | 1 | 1 | 1 |
| Metal Al [ppm] | | 0 | 0 | 0 | 0 | 0 |

[Table 108]

| | | No.266 | No.267 | No.268 | No.269 | No.270 |
|---|---|---|---|---|---|---|
| Before Crystallization | | | | | | |
| Temperature equiv. to High-Temp. Viscosity | $10^4$ [°C] | 1265 | 1266 | 1258 | 1258 | 1251 |
| | $10^3$ [°C] | 1399 | 1398 | 1389 | 1394 | 1384 |
| | $10^{2.5}$ [°C] | 1486 | 1484 | 1473 | 1481 | 1471 |
| | $10^2$ [°C] | 1592 | 1589 | 1577 | 1587 | 1577 |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| Density [g/cm$^3$] | | 2.53 | 2.56 | 2.55 | 2.53 | 2.57 |
| $\beta$-OH [/mm] | | 0.15 | 0.15 | 0.15 | 0.15 | 0.15 |
| After Crystallization | | | | | | |
| Crystallization Conditions① | | 1130°C-2h | 1130°C-2h | 1130°C-2h | 1130°C-2h | 1130°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | unmeasured | unmeasured | unmeasured |

(continued)

| After Crystallization | | | | | |
|---|---|---|---|---|---|
| $\alpha$ [$\times 10^{-7}$/°C] 30-380°C | unmeasured | unmeasured | unmeasured | unmeasured | unmeasured |
| $\alpha$ [$\times 10^{-7}$/°C] 30-750°C | unmeasured | unmeasured | unmeasured | unmeasured | unmeasured |
| Density [g/cm$^3$] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 109]

| | | | No.271 | No.272 | No.273 | No.274 | No.275 |
|---|---|---|---|---|---|---|---|
| [% by mass] | | $SiO_2$ | 62.3 | 61.7 | 61.7 | 65.1 | 67.4 |
| | | $Al_2O_3$ | 22 | 21.7 | 21.8 | 9.7 | 15.8 |
| | | MgO | 14.4 | 14.2 | 14.2 | 24.7 | 16.5 |
| | | $Li_2O$ | 0 | 0 | 0 | 0 | 0 |
| | | $Na_2O$ | 0.97 | 0.06 | 0.05 | 0.03 | 0.03 |
| | | $K_2O$ | 0.01 | 0.01 | 0.01 | 0.01 | 0.01 |
| | | CaO | 0.07 | 0.07 | 1.94 | 0.13 | 0.08 |
| | | SrO | 0 | 2.07 | 0 | 0 | 0 |
| | | BaO | 0 | 0 | 0 | 0 | 0 |
| | | ZnO | 0 | 0 | 0 | 0 | 0 |
| | | $B_2O_3$ | 0 | 0 | 0 | 0 | 0 |
| | | $P_2O_5$ | 0 | 0.01 | 0.01 | 0.01 | 0 |
| | | $TiO_2$ | 0.02 | 0.02 | 0.02 | 0.02 | 0.02 |
| | | $ZrO_2$ | 0 | 0 | 0 | 0 | 0 |
| | | $HfO_2$ | 0 | 0 | 0 | 0 | 0 |
| | | $SnO_2$ | 0.21 | 0.21 | 0.22 | 0.2 | 0.21 |
| | | $Fe_2O_3$ | 0.01 | 0.01 | 0.01 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0 | 0 | 0 | 0 | 0 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |

(continued)

| | | No.271 | No.272 | No.273 | No.274 | No.275 |
|---|---|---|---|---|---|---|
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.63 | 0.63 | 0.63 | 0.65 | 0.68 |
| Al/(Si+Al+Mg) | | 0.22 | 0.22 | 0.22 | 0.10 | 0.16 |
| Mg/(Si+Al+Mg) | | 0.15 | 0.15 | 0.15 | 0.25 | 0.17 |
| Si/Al | | 2.83 | 2.84 | 2.83 | 6.71 | 4.27 |
| Si/Mg | | 4.33 | 4.35 | 4.35 | 2.64 | 4.08 |
| Al/Mg | | 1.53 | 1.53 | 1.54 | 0.39 | 0.96 |
| (Li+Na+K)/Si | | 0.01573 | 0.00113 | 0.00097 | 0.00061 | 0.00059 |
| Li+Na+K+Ca+Sr+Ba [% by mass] | | 1.05 | 2.21 | 2 | 0.17 | 0.12 |
| (Si+Zn)/(Mg+Al) | | 1.71 | 1.72 | 1.71 | 1.89 | 2.09 |
| Zn-(Ti+Zr) [% by mass] | | -0.02 | -0.02 | -0.02 | -0.02 | -0.02 |
| Ti/(Ti+Fe) | | 0.667 | 0.667 | 0.667 | 0.667 | 0.667 |
| As+Sb [% by mass] | | 0 | 0 | 0 | 0 | 0 |
| Sn+As+Sb+Cl [% by mass] | | 0.21 | 0.21 | 0.22 | 0.20 | 0.21 |
| Sn/(Sn+As+Sb+Cl) | | 1 | 1 | 1 | 1 | 1 |
| Metal Al [ppm] | | 0 | 0 | 0 | 0 | 0 |

[Table 110]

| | | No.271 | No.272 | No.273 | No.274 | No.275 |
|---|---|---|---|---|---|---|
| Before Crystallization | | | | | | |
| Temperature equiv. to High-Temp. Viscosity | 10^4 [°C] | unmeasured | 1247 | 1237 | 1176 | 1259 |
| | 10^3 [°C] | unmeasured | 1378 | 1366 | 1278 | 1397 |
| | 10^2.5 [°C] | unmeasured | 1464 | 1451 | 1350 | 1487 |
| | 10^2 [°C] | unmeasured | 1568 | 1554 | 1444 | 1598 |
| Liquidus Temperature [°C] | | unmeasured | unmeasured | unmeasured | unmeasured | 1436 |
| Liquidus Viscosity [-] | | unmeasured | unmeasured | unmeasured | unmeasured | 2.77 |
| $\alpha$ [$\times 10^{-7}$/°C] 30-380°C | | unmeasured | unmeasured | unmeasured | unmeasured | 36.5 |
| Density [g/cm$^3$] | | 2.54 | 2.57 | 2.56 | 2.61 | 2.52 |
| $\beta$ -OH [/mm] | | 0.15 | 0.15 | 0.15 | 0.15 | 0.15 |
| After Crystallization | | | | | | |
| Crystallization Conditions① | | 1130°C-2h | 1130°C-2h | 1130°C-2h | 1130°C-2h | 1130°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |

(continued)

| After Crystallization | | | | | | |
|---|---|---|---|---|---|---|
| Diffuse Trans-mittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| $\alpha$ [$\times 10^{-7}$/°C] 30-750°C | | unmeasured | unmeasured | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |
| Average Surface Roughness of End Surface R a [nm] | | unmeasured | unmeasured | unmeasured | unmeasured | unmeasured |
| Waviness [$\mu$m] | | unmeasured | unmeasured | unmeasured | unmeasured | unmeasured |

EP 4 650 331 A1

[Table 111]

| | | No.276 | No.277 | No.278 | No.279 | No.280 |
|---|---|---|---|---|---|---|
| [% by mass] | $SiO_2$ | 67.2 | 67.3 | 64.5 | 61.9 | 63.9 |
| | $Al_2O_3$ | 22.4 | 23.2 | 25.1 | 27 | 22.4 |
| | $MgO$ | 10 | 9.2 | 10 | 10.7 | 9 |
| | $Li_2O$ | 0 | 0 | 0 | 0 | 0 |
| | $Na_2O$ | 0.05 | 0.05 | 0.06 | 0.06 | 0.05 |
| | $K_2O$ | 0.01 | 0.01 | 0.01 | 0.01 | 0.01 |
| | $CaO$ | 0.05 | 0.04 | 0.05 | 0.05 | 0.04 |
| | $SrO$ | 0 | 0 | 0 | 0 | 0 |
| | $BaO$ | 0 | 0 | 0 | 0 | 0 |
| | $ZnO$ | 0 | 0 | 0 | 0 | 0 |
| | $B_2O_3$ | 0 | 0 | 0 | 0 | 0 |
| | $P_2O_5$ | 0 | 0 | 0 | 0 | 0.02 |
| | $TiO_2$ | 0.02 | 0.02 | 0.02 | 0.02 | 1.98 |
| | $ZrO_2$ | 0 | 0 | 0 | 0 | 2.34 |
| | $HfO_2$ | 0 | 0 | 0 | 0 | 0.05 |
| | $SnO_2$ | 0.19 | 0.21 | 0.21 | 0.22 | 0.23 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | $CuO$ | 0 | 0 | 0 | 0 | 0 |
| | $NiO$ | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.67 | 0.68 | 0.65 | 0.62 | 0.67 |
| Al/(Si+Al+Mg) | | 0.22 | 0.23 | 0.25 | 0.27 | 0.24 |
| Mg/(Si+Al+Mg) | | 0.10 | 0.09 | 0.10 | 0.11 | 0.09 |
| Si/Al | | 3.00 | 2.90 | 2.57 | 2.29 | 2.85 |
| Si/Mg | | 6.72 | 7.32 | 6.45 | 5.79 | 7.10 |
| Al/Mg | | 2.24 | 2.52 | 2.51 | 2.52 | 2.49 |
| (Li+Na+K)/Si | | 0.00089 | 0.00089 | 0.00109 | 0.00113 | 0.00094 |

147

(continued)

|  | No.276 | No.277 | No.278 | No.279 | No.280 |
|---|---|---|---|---|---|
| Li+Na+K+Ca+Sr+Ba [% by mass] | 0.11 | 0.1 | 0.12 | 0.12 | 0.1 |
| (Si+Zn)/(Mg+Al) | 2.07 | 2.08 | 1.84 | 1.64 | 2.04 |
| Zn-(Ti+Zr) [% by mass] | -0.02 | -0.02 | -0.02 | -0.02 | -4.32 |
| Ti/(Ti+Fe) | 0.667 | 0.667 | 0.667 | 0.667 | 0.995 |
| As+Sb [% by mass] | 0 | 0 | 0 | 0 | 0 |
| Sn+As+Sb+Cl [% by mass] | 0.19 | 0.21 | 0.21 | 0.22 | 0.23 |
| Sn/(Sn+As+Sb+Cl) | 1 | 1 | 1 | 1 | 1 |
| Metal Al [ppm] | 0 | 0 | 0 | 0 | 0 |

[Table 112]

| | | No.276 | No.277 | No.278 | No.279 | No.280 |
|---|---|---|---|---|---|---|
| Before Crystallization | | | | | | |
| Temperature equiv. to High-Temp. Viscosity | $10^4$ [°C] | 1336 | 1341 | 1310 | 1290 | 1305 |
| | $10^3$ [°C] | 1487 | 1489 | 1451 | 1422 | 1449 |
| | $10^{2.5}$ [°C] | 1582 | 1583 | 1541 | 1507 | 1541 |
| | $10^2$ [°C] | 1693 | 1696 | 1649 | 1612 | 1652 |
| Liquidus Temperature [°C] | | 1386 | 1429 | unmeasured | 1460 | 1409 |
| Liquidus Viscosity [-] | | 3.64 | 3.37 | unmeasured | 2.76 | 3.25 |
| $\alpha$ [$\times 10^{-7}$/°C] 30-380°C | | unmeasured | 28.3 | 29.5 | 29.9 | 28.7 |
| Density [g/cm$^3$] | | 2.47 | 2.47 | 2.49 | 2.52 | 2.52 |
| $\beta$-OH [/mm] | | 0.15 | 0.15 | 0.15 | 0.15 | 0.15 |
| After Crystallization | | | | | | |
| Crystallization Conditions① | | 1130°C-2h | 1150°C-12h | 1230°C-6h | 1150°C-12h | 1150°C-12h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L * | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | unmeasured | unmeasured | unmeasured |
| $\alpha$ [$\times 10^{-7}$/°C] 30-380°C | | unmeasured | unmeasured | 13.3 | 19.6 | 21.0 |
| $\alpha$ [$\times 10^{-7}$/°C] 30-750°C | | unmeasured | unmeasured | 18 | 23.5 | 25.7 |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Crystallization Conditions① | 1130°C-2h | 1150°C-12h | 1230°C-6h | 1150°C-12h | 1150°C-12h |
| Average Surface Roughness of End Surface R a [nm] | unmeasured | unmeasured | unmeasured | unmeasured | unmeasured |
| Waviness [μm] | unmeasured | unmeasured | unmeasured | unmeasured | unmeasured |

[Table 113]

| | | | No.281 | No.282 | No.283 | No.284 | No.285 |
|---|---|---|---|---|---|---|---|
| [% by mass] | | $SiO_2$ | 61.8 | 59.1 | 64.4 | 61.7 | 59.3 |
| | | $Al_2O_3$ | 24 | 25.9 | 22.2 | 24.1 | 25.9 |
| | | MgO | 9.5 | 10.3 | 8.8 | 9.6 | 10.3 |
| | | $Li_2O$ | 0 | 0 | 0 | 0 | 0 |
| | | $Na_2O$ | 0.06 | 0.06 | 0.05 | 0.05 | 0.06 |
| | | $K_2O$ | 0.01 | 0.01 | 0.01 | 0.01 | 0.01 |
| | | CaO | 0.05 | 0.05 | 0.05 | 0.06 | 0.06 |
| | | SrO | 0 | 0 | 0 | 0 | 0 |
| | | BaO | 0 | 0 | 0 | 0 | 0 |
| | | ZnO | 0 | 0 | 0 | 0 | 0 |
| | | $B_2O_3$ | 0 | 0 | 0 | 0 | 0 |
| | | $P_2O_5$ | 0.02 | 0.02 | 0.01 | 0.01 | 0.02 |
| | | $TiO_2$ | 1.94 | 1.96 | 0.04 | 0.04 | 0.04 |
| | | $ZrO_2$ | 2.31 | 2.32 | 3.07 | 3.08 | 3.05 |
| | | $HfO_2$ | 0.05 | 0.05 | 0.07 | 0.07 | 0.06 |
| | | $SnO_2$ | 0.22 | 0.23 | 1.23 | 1.24 | 1.22 |
| | | $Fe_2O_3$ | 0.01 | 0.01 | 0.01 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 0 | 0 | 0 | 0 | 0 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |
| [ppm] | | Pt | 0.03 | 0.03 | 0.03 | 0.03 | 0.03 |
| | | Rh | 0.02 | 0.02 | 0.02 | 0.02 | 0.02 |
| | | Pt+Rh | 0.05 | 0.05 | 0.05 | 0.05 | 0.05 |
| Si/(Si+Al+Mg) | | | 0.65 | 0.62 | 0.68 | 0.65 | 0.62 |

(continued)

|  | No.281 | No.282 | No.283 | No.284 | No.285 |
|---|---|---|---|---|---|
| Al/(Si+Al+Mg) | 0.25 | 0.27 | 0.23 | 0.25 | 0.27 |
| Mg/(Si+Al+Mg) | 0.10 | 0.11 | 0.09 | 0.10 | 0.11 |
| Si/Al | 2.58 | 2.28 | 2.90 | 2.56 | 2.29 |
| Si/Mg | 6.51 | 5.74 | 7.32 | 6.43 | 5.76 |
| Al/Mg | 2.53 | 2.51 | 2.52 | 2.51 | 2.51 |
| (Li+Na+K)/Si | 0.00113 | 0.00118 | 0.00093 | 0.00097 | 0.00118 |
| Li+Na+K+Ca+Sr+Ba [% by mass] | 0.12 | 0.12 | 0.11 | 0.12 | 0.13 |
| (Si+Zn)/(Mg+Al) | 1.84 | 1.63 | 2.08 | 1.83 | 1.64 |
| Zn-(Ti+Zr) [% by mass] | -4.25 | -4.28 | -3.11 | -3.12 | -3.09 |
| Ti/(Ti+Fe) | 0.995 | 0.995 | 0.800 | 0.800 | 0.800 |
| As+Sb [% by mass] | 0 | 0 | 0 | 0 | 0 |
| Sn+As+Sb+Cl [% by mass] | 0.22 | 0.23 | 1.23 | 1.24 | 1.22 |
| Sn/(Sn+As+Sb+Cl) | 1 | 1 | 1 | 1 | 1 |
| Metal Al [ppm] | 0 | 0 | 0 | 0 | 0 |

[Table 114]

| | | No.281 | No.282 | No.283 | No.284 | No.285 |
|---|---|---|---|---|---|---|
| Before Crystallization | | | | | | |
| Temperature equiv. to High-Temp. Viscosity | 10^4 [°C] | unmeasured | unmeasured | unmeasured | unmeasured | unmeasured |
| | 10^3 [°C] | unmeasured | unmeasured | unmeasured | unmeasured | unmeasured |
| | 10^2.5 [°C] | unmeasured | unmeasured | unmeasured | unmeasured | unmeasured |
| | 10^2 [°C] | unmeasured | unmeasured | unmeasured | unmeasured | unmeasured |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | unmeasured | 32.2 | 29 | unmeasured | unmeasured |
| Density [g/cm$^3$] | | 2.54 | 2.57 | 2.53 | 2.56 | 2.59 |
| $\beta$-OH [/mm] | | 0.15 | 0.15 | 0.15 | 0.15 | 0.15 |
| After Crystallization | | | | | | |
| Crystallization Conditions① | | 1150°C-12h | 1150°C-12h | 1150°C-12h | 1150°C-12h | 1150°C-12h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L * | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |

(continued)

| After Crystallization | | | | | |
|---|---|---|---|---|---|
| Crystallization Conditions① | 1150°C-12h | 1150°C-12h | 1150°C-12h | 1150°C-12h | 1150°C-12h |
| Average Crystallite Size [nm] | unmeasured | unmeasured | unmeasured | unmeasured | unmeasured |
| $\alpha$ [$\times 10^{-7}$/°C] 30-380°C | 18.6 | 16.3 | unmeasured | unmeasured | 11.7 |
| $\alpha$ [$\times 10^{-7}$/°C] 30-750°C | 22 | 21.4 | unmeasured | unmeasured | 17.9 |
| Density [g/cm$^3$] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 115]

| | | No.286 | No.287 | No.288 | No.289 | No.290 |
|---|---|---|---|---|---|---|
| [% by mass] | $SiO_2$ | 63 | 60.3 | 57.7 | 63.1 | 60.5 |
| | $Al_2O_3$ | 21.7 | 23.6 | 25.5 | 21.8 | 23.6 |
| | MgO | 8.6 | 9.4 | 10.1 | 8.7 | 9.4 |
| | $Li_2O$ | 0 | 0 | 0 | 0 | 0 |
| | $Na_2O$ | 0.05 | 0.05 | 0.06 | 0.05 | 0.05 |
| | $K_2O$ | 0.01 | 0.01 | 0.01 | 0 | 0 |
| | CaO | 0.04 | 0.05 | 0.05 | 0.05 | 0.05 |
| | SrO | 0 | 0 | 0 | 0 | 0 |
| | BaO | 0 | 0 | 0 | 0 | 0 |
| | ZnO | 0 | 0 | 0 | 0 | 0 |
| | $B_2O_3$ | 0 | 0 | 0 | 0 | 0 |
| | $P_2O_5$ | 1.97 | 1.99 | 2.01 | 1.97 | 1.98 |
| | $TiO_2$ | 1.95 | 1.96 | 1.98 | 0.04 | 0.04 |
| | $ZrO_2$ | 2.31 | 2.32 | 2.34 | 3.1 | 3.11 |
| | $HfO_2$ | 0.05 | 0.05 | 0.05 | 0.06 | 0.06 |
| | $SnO_2$ | 0.22 | 0.21 | 0.22 | 1.22 | 1.24 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.68 | 0.65 | 0.62 | 0.67 | 0.65 |
| Al/(Si+Al+Mg) | | 0.23 | 0.25 | 0.27 | 0.23 | 0.25 |
| Mg/(Si+Al+Mg) | | 0.09 | 0.10 | 0.11 | 0.09 | 0.10 |
| Si/Al | | 2.90 | 2.56 | 2.26 | 2.89 | 2.56 |
| Si/Mg | | 7.33 | 6.41 | 5.71 | 7.25 | 6.44 |
| Al/Mg | | 2.52 | 2.51 | 2.52 | 2.51 | 2.51 |
| (Li+Na+K)/Si | | 0.00095 | 0.00100 | 0.00121 | 0.00079 | 0.00083 |

(continued)

|  | No.286 | No.287 | No.288 | No.289 | No.290 |
|---|---|---|---|---|---|
| Li+Na+K+Ca+Sr+Ba [% by mass] | 0.1 | 0.11 | 0.12 | 0.1 | 0.1 |
| (Si+Zn)/(Mg+Al) | 2.08 | 1.83 | 1.62 | 2.07 | 1.83 |
| Zn-(Ti+Zr) [% by mass] | -4.26 | -4.28 | -4.32 | -3.14 | -3.15 |
| Ti/(Ti+Fe) | 0.995 | 0.995 | 0.995 | 0.800 | 0.800 |
| As+Sb [% by mass] | 0 | 0 | 0 | 0 | 0 |
| Sn+As+Sb+Cl [% by mass] | 0.22 | 0.21 | 0.22 | 1.22 | 1.24 |
| Sn/(Sn+As+Sb+Cl) | 1 | 1 | 1 | 1 | 1 |
| Metal Al [ppm] | 0 | 0 | 0 | 0 | 0 |

[Table 116]

| | | No.286 | No.287 | No.288 | No.289 | No.290 |
|---|---|---|---|---|---|---|
| Before Crystallization | | | | | | |
| Temperature equiv. to High-Temp. Viscosity | 10^4 [°C] | 1312 | 1285 | 1272 | 1319 | 1293 |
| | 10^3 [°C] | 1460 | 1418 | 1394 | 1464 | 1430 |
| | 10^2.5 [°C] | 1554 | 1506 | 1477 | 1558 | 1519 |
| | 10^2 [°C] | 1668 | 1614 | 1581 | 1671 | 1627 |
| Liquidus Temperature [°C] | | 1385 | 1396 | 1418 | 1375 | 1396 |
| Liquidus Viscosity [-] | | 3.47 | 3.14 | 2.84 | 3.57 | 3.22 |
| $\alpha$ [×10$^{-7}$/°C] 30-380°C | | unmeasured | unmeasured | unmeasured | unmeasured | unmeasured |
| Density [g/cm$^3$] | | 2.51 | 2.53 | 2.56 | 2.52 | 2.55 |
| $\beta$-OH [/mm] | | 0.15 | 0.15 | 0.15 | 0.15 | 0.15 |
| After Crystallization | | | | | | |
| Crystallization Conditions① | | 1150°C-12h | 1150°C-12h | 1150°C-12h | 1150°C-12h | 1150°C-12h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L * | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | unmeasured | unmeasured | unmeasured |
| $\alpha$ [×10$^{-7}$/°C] 30-380°C | | unmeasured | unmeasured | unmeasured | unmeasured | unmeasured |
| $\alpha$ [×10$^{-7}$/°C] 30-750°C | | unmeasured | unmeasured | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Crystallization Conditions① | 1150°C-12h | 1150°C-12h | 1150°C-12h | 1150°C-12h | 1150°C-12h |
| Average Surface Roughness of End Surface R a [nm] | unmeasured | unmeasured | unmeasured | unmeasured | unmeasured |
| Waviness [μm] | unmeasured | unmeasured | unmeasured | unmeasured | unmeasured |

[Table 117]

| | | | No.291 | No.292 | No.293 | No.294 | No.295 |
|---|---|---|---|---|---|---|---|
| [% by mass] | | $SiO_2$ | 58 | 57.6 | 64.4 | 64.4 | 64.4 |
| | | $Al_2O_3$ | 25.4 | 29.2 | 25.2 | 25.2 | 25.2 |
| | | MgO | 10.1 | 11.5 | 10 | 10 | 10 |
| | | $Li_2O$ | 0 | 0 | 0 | 0 | 0 |
| | | $Na_2O$ | 0.06 | 0.02 | 0.06 | 0.06 | 0.06 |
| | | $K_2O$ | 0 | 0.01 | 0.01 | 0.01 | 0.01 |
| | | CaO | 0.06 | 0.06 | 0.05 | 0.05 | 0.05 |
| | | SrO | 0 | 0 | 0 | 0 | 0 |
| | | BaO | 0 | 0 | 0 | 0 | 0 |
| | | ZnO | 0 | 1.38 | 0 | 0 | 0 |
| | | $B_2O_3$ | 0 | 0 | 0 | 0 | 0 |
| | | $P_2O_5$ | 1.98 | 0 | 0 | 0 | 0 |
| | | $TiO_2$ | 0.03 | 0.02 | 0.02 | 0.02 | 0.02 |
| | | $ZrO_2$ | 3.09 | 0 | 0 | 0 | 0 |
| | | $HfO_2$ | 0.06 | 0 | 0 | 0 | 0 |
| | | $SnO_2$ | 1.24 | 0.21 | 0 | 0 | 0 |
| | | $Fe_2O_3$ | 0.01 | 0.01 | 0.01 | 0.01 | 0.01 |
| | | $As_2O_3$ | 0 | 0 | 0.25 | 0 | 0 |
| | | $Sb_2O_3$ | 0 | 0 | 0 | 0.25 | 0 |
| | | $Cl_2$ | 0 | 0 | 0 | 0 | 0.25 |
| | | $MoO_3$ | 0 | 0 | 0 | 0 | 0 |
| | | $V_2O_5$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |
| [ppm] | | Pt | 0.03 | 0.03 | 0.03 | 0.03 | 0.03 |
| | | Rh | 0.02 | 0.02 | 0.02 | 0.02 | 0.02 |
| | | Pt+Rh | 0.05 | 0.05 | 0.05 | 0.05 | 0.05 |
| Si/(Si+Al+Mg) | | | 0.62 | 0.59 | 0.65 | 0.65 | 0.65 |

(continued)

|  | No.291 | No.292 | No.293 | No.294 | No.295 |
|---|---|---|---|---|---|
| Al/(Si+Al+Mg) | 0.27 | 0.30 | 0.25 | 0.25 | 0.25 |
| Mg/(Si+Al+Mg) | 0.11 | 0.12 | 0.10 | 0.10 | 0.10 |
| Si/Al | 2.28 | 1.97 | 2.56 | 2.56 | 2.56 |
| Si/Mg | 5.74 | 5.01 | 6.44 | 6.44 | 6.44 |
| Al/Mg | 2.51 | 2.54 | 2.52 | 2.52 | 2.52 |
| (Li+Na+K)/Si | 0.00103 | 0.00052 | 0.00109 | 0.00109 | 0.00109 |
| Li+Na+K+Ca+Sr+Ba [% by mass] | 0.12 | 0.09 | 0.12 | 0.12 | 0.12 |
| (Si+Zn)/(Mg+Al) | 1.63 | 1.45 | 1.83 | 1.83 | 1.83 |
| Zn-(Ti+Zr) [% by mass] | -3.12 | 1.36 | -0.02 | -0.02 | -0.02 |
| Ti/(Ti+Fe) | 0.750 | 0.667 | 0.667 | 0.667 | 0.667 |
| As+Sb [% by mass] | 0 | 0 | 0.25 | 0.25 | 0 |
| Sn+As+Sb+Cl [% by mass] | 1.24 | 0.21 | 0.25 | 0.25 | 0.25 |
| Sn/(Sn+As+Sb+Cl) | 1 | 1 | 0 | 0 | 0 |
| Metal Al [ppm] | 0 | 1000 | 1000 | 1000 | 1000 |

[Table 118]

|  |  | No.291 | No.292 | No.293 | No.294 | No.295 |
|---|---|---|---|---|---|---|
| Before Crystallization | | | | | | |
| Temperature equiv. to High-Temp. Viscosity | $10^4$ [°C] | 1278 | unmeasured | unmeasured | unmeasured | unmeasured |
| | $10^3$ [°C] | 1399 | unmeasured | unmeasured | unmeasured | unmeasured |
| | $10^{2.5}$ [°C] | 1481 | unmeasured | unmeasured | unmeasured | unmeasured |
| | $10^2$ [°C] | 1585 | unmeasured | unmeasured | unmeasured | unmeasured |
| Liquidus Temperature [°C] | | 1415 | unmeasured | unmeasured | unmeasured | unmeasured |
| Liquidus Viscosity [-] | | 2.89 | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| Density [g/cm$^3$] | | 2.57 | 2.58 | unmeasured | unmeasured | unmeasured |
| $\beta$-OH [/mm] | | 0.15 | 0.15 | 0.15 | 0.15 | 0.15 |
| After Crystallization | | | | | | |
| Crystallization Conditions① | | 1150°C-12h | 1150°C-12h | 1150°C-12h | 1150°C-12h | 1150°C-12h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L * | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor | $\alpha$-Cor | $\alpha$-Cor |

# EP 4 650 331 A1

(continued)

| After Crystallization | | | | | |
|---|---|---|---|---|---|
| Crystallization Conditions① | 1150°C-12h | 1150°C-12h | 1150°C-12h | 1150°C-12h | 1150°C-12h |
| Average Crystallite Size [nm] | unmeasured | unmeasured | unmeasured | unmeasured | unmeasured |
| $\alpha$ [×10$^{-7}$/°C] 30-380°C | unmeasured | 12.7 | unmeasured | unmeasured | unmeasured |
| $\alpha$ [×10$^{-7}$/°C] 30-750°C | unmeasured | 16.5 | unmeasured | unmeasured | unmeasured |
| Density [g/cm$^3$] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 119]

| | | No.296 | No.297 | No.298 | No.299 | No.300 |
|---|---|---|---|---|---|---|
| [% by mass] | $SiO_2$ | 64.4 | 68.2 | 68.1 | 68.1 | 65.9 |
| | $Al_2O_3$ | 25.2 | 21.2 | 21.2 | 21.2 | 21.2 |
| | $MgO$ | 10 | 8.7 | 8.7 | 8.7 | 8.7 |
| | $Li_2O$ | 0 | 0 | 0 | 0 | 0 |
| | $Na_2O$ | 0.06 | 0.06 | 0.06 | 0.06 | 0.06 |
| | $K_2O$ | 0.01 | 0.01 | 0.01 | 0.01 | 0.01 |
| | $CaO$ | 0.05 | 0.04 | 0.04 | 0.04 | 0.04 |
| | $SrO$ | 0 | 0 | 0 | 0 | 0 |
| | $BaO$ | 0 | 0 | 0 | 0 | 0 |
| | $ZnO$ | 0 | 1.39 | 1.38 | 1.38 | 1.38 |
| | $B_2O_3$ | 0 | 0 | 0 | 0 | 0 |
| | $P_2O_5$ | 0 | 0 | 0 | 0 | 0.01 |
| | $TiO_2$ | 0.02 | 0.02 | 0.02 | 0.02 | 2.5 |
| | $ZrO_2$ | 0 | 0 | 0 | 0 | 0 |
| | $HfO_2$ | 0 | 0 | 0 | 0 | 0 |
| | $SnO_2$ | 0 | 0.17 | 0.17 | 0.17 | 0.16 |
| | $Fe_2O_3$ | 0.01 | 0.01 | 0.01 | 0.01 | 0.01 |
| | $As_2O_3$ | 0.14 | 0 | 0 | 0 | 0 |
| | $Sb_2O_3$ | 0.14 | 0 | 0 | 0 | 0 |
| | $Cl_2$ | 0 | 0 | 0 | 0 | 0 |
| | $MoO_3$ | 0 | 0.2 | 0.3 | 0.4 | 0 |
| | $V_2O_5$ | 0 | 0 | 0 | 0 | 0 |
| | $CuO$ | 0 | 0 | 0 | 0 | 0 |
| | $NiO$ | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.65 | 0.70 | 0.69 | 0.69 | 0.69 |
| Al/(Si+Al+Mg) | | 0.25 | 0.22 | 0.22 | 0.22 | 0.22 |
| Mg/(Si+Al+Mg) | | 0.10 | 0.09 | 0.09 | 0.09 | 0.09 |
| Si/Al | | 2.56 | 3.22 | 3.21 | 3.21 | 3.11 |
| Si/Mg | | 6.44 | 7.84 | 7.83 | 7.83 | 7.57 |
| Al/Mg | | 2.52 | 2.44 | 2.44 | 2.44 | 2.44 |
| (Li+Na+K)/Si | | 0.00109 | 0.00103 | 0.00103 | 0.00103 | 0.00106 |

(continued)

|  | No.296 | No.297 | No.298 | No.299 | No.300 |
|---|---|---|---|---|---|
| Li+Na+K+Ca+Sr+Ba [% by mass] | 0.12 | 0.11 | 0.11 | 0.11 | 0.11 |
| (Si+Zn)/(Mg+Al) | 1.83 | 2.33 | 2.32 | 2.32 | 2.25 |
| Zn-(Ti+Zr) [% by mass] | -0.02 | 1.37 | 1.36 | 1.36 | -1.12 |
| Ti/(Ti+Fe) | 0.667 | 0.667 | 0.667 | 0.667 | 0.996 |
| As+Sb [% by mass] | 0.28 | 0 | 0 | 0 | 0 |
| Sn+As+Sb+Cl [% by mass] | 0.28 | 0.17 | 0.17 | 0.17 | 0.16 |
| Sn/(Sn+As+Sb+Cl) | 0 | 1 | 1 | 1 | 1 |
| Metal Al [ppm] | 1000 | 0 | 0 | 0 | 0 |

[Table 120]

| | | No.296 | No.297 | No.298 | No.299 | No.300 |
|---|---|---|---|---|---|---|
| Before Crystallization | | | | | | |
| Temperature equiv. to High-Temp. Viscosity | 10^4 [°C] | unmeasured | unmeasured | unmeasured | unmeasured | 1317 |
| | 10^3 [°C] | unmeasured | unmeasured | unmeasured | unmeasured | 1468 |
| | 10^2.5 [°C] | unmeasured | unmeasured | unmeasured | unmeasured | 1564 |
| | 10^2 [°C] | unmeasured | unmeasured | unmeasured | unmeasured | 1674 |
| Liquidus Temperature [°C] | | unmeasured | unmeasured | unmeasured | unmeasured | 1386 |
| Liquidus Viscosity [-] | | unmeasured | unmeasured | unmeasured | unmeasured | 3.5 |
| $\alpha$ [$\times 10^{-7}$/°C] 30-380°C | | unmeasured | unmeasured | unmeasured | unmeasured | 28.5 |
| Density [g/cm$^3$] | | unmeasured | unmeasured | unmeasured | unmeasured | 2.49 |
| $\beta$-OH [/mm] | | 0.15 | unmeasured | unmeasured | unmeasured | 0.15 |
| After Crystallization | | | | | | |
| Crystallization Conditions① | | 1150°C-12h | 1150°C-12h | 1150°C-12h | 1150°C-12h | 850°C-6h 1230°C-1h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L * | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor | $\alpha$-Cor. | $\alpha$-Cor. | $\alpha$-Cor. | $\alpha$-Cor. |
| Average Crystallite Size [nm] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| $\alpha$ [$\times 10^{-7}$/°C] 30-750°C | | unmeasured | unmeasured | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Crystallization Conditions① | 1150°C-12h | 1150°C-12h | 1150°C-12h | 1150°C-12h | 850°C-6h 1230°C-1h |
| Average Surface Roughness of End Surface R a [nm] | unmeasured | unmeasured | unmeasured | unmeasured | unmeasured |
| Waviness [μm] | unmeasured | unmeasured | unmeasured | unmeasured | unmeasured |

[Table 121]

| | | No.301 | No.302 | No.303 | No.304 | No.305 |
|---|---|---|---|---|---|---|
| [% by mass] | $SiO_2$ | 64.9 | 65.4 | 67 | 66.6 | 66.8 |
| | $Al_2O_3$ | 20.9 | 21 | 21.3 | 21.1 | 21.2 |
| | MgO | 8.6 | 8.6 | 8.7 | 8.7 | 8.7 |
| | $Li_2O$ | 0 | 0 | 0 | 0 | 0 |
| | $Na_2O$ | 0.06 | 0.06 | 0.06 | 0.06 | 0.06 |
| | $K_2O$ | 0.01 | 0.01 | 0.01 | 0.01 | 0.01 |
| | CaO | 0.04 | 0.04 | 0.04 | 0.04 | 0.04 |
| | SrO | 0 | 0 | 0 | 0 | 0 |
| | BaO | 0 | 0 | 0 | 0 | 0 |
| | ZnO | 1.38 | 1.38 | 1.39 | 1.35 | 1.36 |
| | $B_2O_3$ | 0 | 0 | 0 | 0 | 0 |
| | $P_2O_5$ | 0.01 | 0.01 | 0 | 0 | 0 |
| | $TiO_2$ | 0.04 | 1.26 | 1.25 | 0.03 | 0.64 |
| | $ZrO_2$ | 3.86 | 1.95 | 0 | 1.96 | 0.98 |
| | $HfO_2$ | 0.08 | 0.04 | 0 | 0.04 | 0.02 |
| | $SnO_2$ | 0.16 | 0.16 | 0.16 | 0.16 | 0.17 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |

(continued)

|  | No.301 | No.302 | No.303 | No.304 | No.305 |
|---|---|---|---|---|---|
| Si/(Si+Al+Mg) | 0.69 | 0.69 | 0.69 | 0.69 | 0.69 |
| Al/(Si+Al+Mg) | 0.22 | 0.22 | 0.22 | 0.22 | 0.22 |
| Mg/(Si+Al+Mg) | 0.09 | 0.09 | 0.09 | 0.09 | 0.09 |
| Si/Al | 3.11 | 3.11 | 3.15 | 3.16 | 3.15 |
| Si/Mg | 7.55 | 7.60 | 7.70 | 7.66 | 7.68 |
| Al/Mg | 2.43 | 2.44 | 2.45 | 2.43 | 2.44 |
| (Li+Na+K)/Si | 0.00108 | 0.00107 | 0.00104 | 0.00105 | 0.00105 |
| Li+Na+K+Ca+Sr+Ba [% by mass] | 0.11 | 0.11 | 0.11 | 0.11 | 0.11 |
| (Si+Zn)/(Mg+Al) | 2.25 | 2.26 | 2.28 | 2.28 | 2.28 |
| Zn-(Ti+Zr) [% by mass] | -2.52 | -1.83 | 0.14 | -0.64 | -0.26 |
| Ti/(Ti+Fe) | 0.800 | 0.992 | 0.992 | 0.750 | 0.985 |
| As+Sb [% by mass] | 0 | 0 | 0 | 0 | 0 |
| Sn+As+Sb+Cl [% by mass] | 0.16 | 0.16 | 0.16 | 0.16 | 0.17 |
| Sn/(Sn+As+Sb+Cl) | 1 | 1 | 1 | 1 | 1 |
| Metal Al [ppm] | 0 | 0 | 0 | 0 | 0 |

[Table 122]

|  |  | No.301 | No.302 | No.303 | No.304 | No.305 |
|---|---|---|---|---|---|---|
| Before Crystallization | | | | | | |
| Temperature equiv. to High-Temp. Viscosity | $10^4$ [°C] | 1322 | 1316 | 1336 | 1339 | 1337 |
| | $10^3$ [°C] | 1469 | 1465 | 1488 | 1491 | 1489 |
| | $10^{2.5}$ [°C] | 1564 | 1560 | 1584 | 1587 | 1586 |
| | $10^2$ [°C] | 1673 | 1671 | 1695 | 1699 | 1697 |
| Liquidus Temperature [°C] | | 1354 | 1358 | 1361 | 1376 | 1368 |
| Liquidus Viscosity [-] | | 3.75 | 3.69 | 3.81 | 3.73 | 3.77 |
| $\alpha$ [× $10^{-7}$/°C] 30-380°C | | 28.9 | 29.2 | 28.1 | 28.4 | 28.4 |
| Density [g/cm$^3$] | | 2.52 | 2.54 | 2.48 | 2.50 | 2.49 |
| $\beta$ -OH [/mm] | | 0.15 | 0.15 | 0.15 | 0.15 | 0.15 |
| After Crystallization | | | | | | |
| Crystallization Conditions① | | 850°C-6h 1230°C-1h | 850°C-6h 1230°C-1h | 850°C-6h 1230°C-1h | 850°C-6h 1230°C-1h | 850°C-6h 1230°C-1h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |

(continued)

| After Crystallization | | | | | |
|---|---|---|---|---|---|
| Precipitated Crystals | $\alpha$-Cor. | $\alpha$-Cor. | $\alpha$-Cor. | $\alpha$-Cor. | $\alpha$-Cor. |
| Average Crystallite Size [nm] | unmeasured | unmeasured | unmeasured | unmeasured | unmeasured |
| $\alpha$ [$\times 10^{-7}$/°C] 30-380°C | unmeasured | unmeasured | unmeasured | unmeasured | unmeasured |
| $\alpha$ [$\times 10^{-7}$/°C] 30-750°C | unmeasured | unmeasured | unmeasured | unmeasured | unmeasured |
| Density [g/cm$^3$] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 123]

| | | No.306 | No.307 | No.308 | No.309 | No.310 |
|---|---|---|---|---|---|---|
| [% by mass] | $SiO_2$ | 63.6 | 65.7 | 65.2 | 66.6 | 65 |
| | $Al_2O_3$ | 21 | 21.1 | 20.7 | 21.1 | 20.9 |
| | MgO | 8.7 | 8.7 | 8.5 | 8.7 | 8.6 |
| | $Li_2O$ | 0 | 0 | 0 | 0 | 0 |
| | $Na_2O$ | 0.06 | 0.06 | 0.06 | 0.06 | 0.06 |
| | $K_2O$ | 0.02 | 0.01 | 0.01 | 0.01 | 0.01 |
| | CaO | 0.04 | 0.04 | 0.05 | 0.04 | 0.04 |
| | SrO | 0 | 0 | 0 | 0 | 0 |
| | BaO | 0 | 0 | 0 | 0 | 0 |
| | ZnO | 1.35 | 1.36 | 1.35 | 1.38 | 1.37 |
| | $B_2O_3$ | 0 | 0 | 0 | 0 | 0 |
| | $P_2O_5$ | 0.02 | 0.01 | 0.01 | 0 | 0.01 |
| | $TiO_2$ | 4.97 | 1.88 | 0.04 | 0.03 | 0.04 |
| | $ZrO_2$ | 0 | 0.98 | 2.88 | 1.47 | 3.36 |
| | $HfO_2$ | 0 | 0.02 | 0.06 | 0.03 | 0.07 |
| | $SnO_2$ | 0.17 | 0.17 | 1.11 | 0.57 | 0.56 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.68 | 0.69 | 0.69 | 0.69 | 0.69 |
| Al/(Si+Al+Mg) | | 0.23 | 0.22 | 0.22 | 0.22 | 0.22 |
| Mg/(Si+Al+Mg) | | 0.09 | 0.09 | 0.09 | 0.09 | 0.09 |
| Si/Al | | 3.03 | 3.11 | 3.15 | 3.16 | 3.11 |
| Si/Mg | | 7.31 | 7.55 | 7.67 | 7.66 | 7.56 |
| Al/Mg | | 2.41 | 2.43 | 2.44 | 2.43 | 2.43 |
| (Li+Na+K)/Si | | 0.00126 | 0.00107 | 0.00107 | 0.00105 | 0.00108 |

(continued)

|  | No.306 | No.307 | No.308 | No.309 | No.310 |
|---|---|---|---|---|---|
| Li+Na+K+Ca+Sr+Ba [% by mass] | 0.12 | 0.11 | 0.12 | 0.11 | 0.11 |
| (Si+Zn)/(Mg+Al) | 2.19 | 2.25 | 2.28 | 2.28 | 2.25 |
| Zn-(Ti+Zr) [% by mass] | -3.62 | -1.5 | -1.57 | -0.12 | -2.03 |
| Ti/(Ti+Fe) | 0.998 | 0.995 | 0.800 | 0.750 | 0.800 |
| As+Sb [% by mass] | 0 | 0 | 0 | 0 | 0 |
| Sn+As+Sb+Cl [% by mass] | 0.17 | 0.17 | 1.11 | 0.57 | 0.56 |
| Sn/(Sn+As+Sb+Cl) | 1 | 1 | 1 | 1 | 1 |
| Metal Al [ppm] | 0 | 0 | 0 | 0 | 0 |

[Table 124]

| | | No.306 | No.307 | No.308 | No.309 | No.310 |
|---|---|---|---|---|---|---|
| Before Crystallization | | | | | | |
| Temperature equiv. to High-Temp. Viscosity | 10^4 [°C] | 1287 | 1318 | 1319 | 1336 | 1321 |
| | 10^3 [°C] | 1432 | 1467 | 1466 | 1487 | 1469 |
| | 10^2.5 [°C] | 1527 | 1562 | 1560 | 1583 | 1563 |
| | 10^2 [°C] | 1635 | 1673 | 1670 | 1694 | 1669 |
| Liquidus Temperature [°C] | | 1350 | 1362 | 1373 | 1386 | 1366 |
| Liquidus Viscosity [-] | | 3.52 | 3.67 | 3.6 | 3.63 | 3.66 |
| $\alpha$ [×10$^{-7}$/°C] 30-380°C | | 29 | 28.6 | 28.9 | 28.6 | 28.9 |
| Density [g/cm$^3$] | | 2.52 | 2.50 | 2.54 | 2.50 | 2.54 |
| $\beta$ -OH [/mm] | | 0.15 | 0.15 | 0.15 | 0.15 | 0.15 |
| After Crystallization | | | | | | |
| Crystallization Conditions① | | 850°C-6h 1230°C-1h | 850°C-6h 1230°C-1h | 850°C-6h 1230°C-1h | 850°C-6h 1230°C-1h | 850°C-6h 1230°C-1h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | unmeasured | unmeasured | unmeasured | unmeasured |
| $\alpha$ [×10$^{-7}$/°C] 30-380°C | | -2.3 | unmeasured | unmeasured | unmeasured | unmeasured |
| $\alpha$ [×10$^{-7}$/°C] 30-750°C | | 3.07 | unmeasured | unmeasured | unmeasured | unmeasured |
| Density [g/cm$^3$] | | 2.45 | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 125]

| | | No.311 | No.312 | No.313 | No.314 | No.315 |
|---|---|---|---|---|---|---|
| [% by mass] | $SiO_2$ | 64.8 | 54.8 | 56.1 | 54.8 | 56.1 |
| | $Al_2O_3$ | 20.9 | 27.6 | 28.2 | 27.6 | 28.3 |
| | MgO | 8.6 | 11.3 | 11.5 | 11.3 | 11.5 |
| | $Li_2O$ | 0 | 0 | 0 | 0 | 0 |
| | $Na_2O$ | 0.06 | 0.06 | 0.06 | 0.06 | 0.06 |
| | $K_2O$ | 0 | 0.02 | 0.02 | 0.02 | 0.02 |
| | CaO | 0.05 | 0.04 | 0.04 | 0.04 | 0.04 |
| | SrO | 0 | 0 | 0 | 0 | 0 |
| | BaO | 0 | 0 | 0 | 0 | 0 |
| | ZnO | 1.37 | 1.34 | 1.37 | 1.34 | 1.38 |
| | $B_2O_3$ | 0 | 0 | 0 | 0 | 0 |
| | $P_2O_5$ | 0.01 | 0 | 0 | 0 | 0 |
| | $TiO_2$ | 0.03 | 4.57 | 2.34 | 4.57 | 2.34 |
| | $ZrO_2$ | 2.42 | 0 | 0 | 0 | 0 |
| | $HfO_2$ | 0.05 | 0 | 0 | 0 | 0 |
| | $SnO_2$ | 1.7 | 0.22 | 0.23 | 0.22 | 0.23 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0.1 | 0.1 | 0.03 | 0.03 |
| | CuO | 0 | 0.1 | 0.1 | 0.03 | 0.03 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.69 | 0.58 | 0.59 | 0.58 | 0.58 |
| Al/(Si+Al+Mg) | | 0.22 | 0.29 | 0.29 | 0.29 | 0.30 |

(continued)

|  | No.311 | No.312 | No.313 | No.314 | No.315 |
|---|---|---|---|---|---|
| Mg/(Si+Al+Mg) | 0.09 | 0.12 | 0.12 | 0.12 | 0.12 |
| Si/Al | 3.10 | 1.99 | 1.99 | 1.99 | 1.98 |
| Si/Mg | 7.53 | 4.85 | 4.88 | 4.85 | 4.88 |
| Al/Mg | 2.43 | 2.44 | 2.45 | 2.44 | 2.46 |
| (Li+Na+K)/Si | 0.00093 | 0.00146 | 0.00143 | 0.00146 | 0.00143 |
| Li+Na+K+Ca+Sr+Ba [% by mass] | 0.11 | 0.12 | 0.12 | 0.12 | 0.12 |
| (Si+Zn)/(Mg+Al) | 2.24 | 1.44 | 1.45 | 1.44 | 1.44 |
| Zn-(Ti+Zr) [% by mass] | -1.08 | -3.23 | -0.97 | -3.23 | -0.96 |
| Ti/(Ti+Fe) | 0.750 | 0.998 | 0.996 | 0.998 | 0.996 |
| As+Sb [% by mass] | 0 | 0 | 0 | 0 | 0 |
| Sn+As+Sb+Cl [% by mass] | 1.70 | 0.22 | 0.23 | 0.22 | 0.23 |
| Sn/(Sn+As+Sb+Cl) | 1 | 1 | 1 | 1 | 1 |
| Metal Al [ppm] | 0 | 0 | 0 | 0 | 0 |

[Table 126]

| | | No.311 | No.312 | No.313 | No.314 | No.315 |
|---|---|---|---|---|---|---|
| Before Crystallization | | | | | | |
| Temperature equiv. to High-Temp. Viscosity | $10^4$ [°C] | 1322 | unmeasured | unmeasured | unmeasured | unmeasured |
| | $10^3$ [°C] | 1470 | unmeasured | unmeasured | unmeasured | unmeasured |
| | $10^{2.5}$ [°C] | 1565 | unmeasured | unmeasured | unmeasured | unmeasured |
| | $10^2$ [°C] | 1677 | unmeasured | unmeasured | unmeasured | unmeasured |
| Liquidus Temperature [°C] | | 1360 | unmeasured | unmeasured | unmeasured | unmeasured |
| Liquidus Viscosity [-] | | 3.71 | unmeasured | unmeasured | unmeasured | unmeasured |
| $\alpha$ [$\times 10^{-7}$/°C] 30-380°C | | 28.7 | unmeasured | unmeasured | unmeasured | unmeasured |
| Density [g/cm$^3$] | | 2.54 | unmeasured | unmeasured | unmeasured | unmeasured |
| $\beta$-OH [/mm] | | 0.15 | unmeasured | unmeasured | unmeasured | unmeasured |
| After Crystallization | | | | | | |
| Crystallization Conditions① | | 850°C-6h 1230°C-1h | 850°C-6h 1230°C-1h | 850°C-6h 1230°C-1h | 850°C-6h 1230°C-1h | 850°C-6h 1230°C-1h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b* | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | unmeasured | unmeasured | unmeasured |

(continued)

| After Crystallization | | | | | |
|---|---|---|---|---|---|
| $\alpha$ [$\times 10^{-7}$/°C] 30-380°C | unmeasured | unmeasured | unmeasured | unmeasured | unmeasured |
| $\alpha$ [$\times 10^{-7}$/°C] 30-750°C | unmeasured | unmeasured | unmeasured | unmeasured | unmeasured |
| Density [g/cm$^3$] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 127]

| | | No.316 | No.317 | No.318 | No.319 | No.320 |
|---|---|---|---|---|---|---|
| | $SiO_2$ | 63.8 | 63.9 | 61.3 | 63.6 | 58.7 |
| | $Al_2O_3$ | 22.1 | 22.2 | 24 | 20.8 | 25.8 |
| | $MgO$ | 8.8 | 8.8 | 9.6 | 8.6 | 10.3 |
| | $Li_2O$ | 0 | 0 | 0 | 0 | 0 |
| | $Na_2O$ | 0.05 | 0.05 | 0.05 | 0.06 | 0.06 |
| | $K_2O$ | 0.01 | 0 | 0 | 0.02 | 0.01 |
| | $CaO$ | 0.04 | 0.05 | 0.06 | 0.04 | 0.05 |
| | $SrO$ | 0 | 0 | 0 | 0 | 0 |
| | $BaO$ | 0 | 0 | 0 | 0 | 0 |
| | $ZnO$ | 0 | 0 | 0 | 1.35 | 0 |
| | $B_2O_3$ | 0 | 0 | 0 | 0 | 0 |
| | $P_2O_5$ | 0.02 | 0.01 | 0.01 | 0.02 | 0.02 |
| | $TiO_2$ | 1.96 | 0.04 | 0.04 | 4.91 | 1.97 |
| | $ZrO_2$ | 2.29 | 3.04 | 3.09 | 0 | 2.3 |
| [% by mass] | $HfO_2$ | 0.05 | 0.06 | 0.06 | 0 | 0.05 |
| | $SnO_2$ | 0.21 | 1.2 | 1.23 | 0.14 | 0.21 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0.56 | 0.55 | 0.56 | 0.51 | 0.54 |
| | $V_2O_5$ | 0 | 0 | 0 | 0 | 0 |
| | $CuO$ | 0 | 0 | 0 | 0 | 0 |
| | $NiO$ | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |

(continued)

|  |  | No.316 | No.317 | No.318 | No.319 | No.320 |
|---|---|---|---|---|---|---|
| [ppm] | Pt | 0.03 | 0.03 | 0.03 | 0.03 | 0.03 |
|  | Rh | 0.02 | 0.02 | 0.02 | 0.02 | 0.02 |
|  | Pt+Rh | 0.05 | 0.05 | 0.05 | 0.05 | 0.05 |
| Si/(Si+Al+Mg) | | 0.67 | 0.67 | 0.65 | 0.68 | 0.62 |
| Al/(Si+Al+Mg) | | 0.23 | 0.23 | 0.25 | 0.22 | 0.27 |
| Mg/(Si+Al+Mg) | | 0.09 | 0.09 | 0.10 | 0.09 | 0.11 |
| Si/Al | | 2.89 | 2.88 | 2.55 | 3.06 | 2.28 |
| Si/Mg | | 7.25 | 7.26 | 6.39 | 7.40 | 5.70 |
| Al/Mg | | 2.51 | 2.52 | 2.50 | 2.42 | 2.50 |
| (Li+Na+K)/Si | | 0.00094 | 0.00078 | 0.00082 | 0.00126 | 0.00119 |
| Li+Na+K+Ca+Sr+Ba [% by mass] | | 0.1 | 0.1 | 0.11 | 0.12 | 0.12 |
| (Si+Zn)/(Mg+Al) | | 2.06 | 2.06 | 1.82 | 2.21 | 1.63 |
| Zn-(Ti+Zr) [% by mass] | | -4.25 | -3.08 | -3.13 | -3.56 | -4.27 |
| Ti/(Ti+Fe) | | 0.995 | 0.800 | 0.800 | 0.998 | 0.995 |
| As+Sb [% by mass] | | 0 | 0 | 0 | 0 | 0 |
| Sn+As+Sb+Cl [% by mass] | | 0.21 | 1.20 | 1.23 | 0.14 | 0.21 |
| Sn/(Sn+As+Sb+Cl) | | 1 | 1 | 1 | 1 | 1 |
| Metal Al [ppm] | | 0 | 0 | 0 | 0 | 0 |

[Table 128]

| | | No.316 | No.317 | No.318 | No.319 | No.320 |
|---|---|---|---|---|---|---|
| Before Crystallization | | | | | | |
| Temperature equiv. to High-Temp. Viscosity | 10^4 [°C] | unmeasured | unmeasured | unmeasured | 1282 | unmeasured |
| | 10^3 [°C] | unmeasured | unmeasured | unmeasured | 1428 | unmeasured |
| | 10^2.5 [°C] | unmeasured | unmeasured | unmeasured | 1521 | unmeasured |
| | 10^2 [°C] | unmeasured | unmeasured | unmeasured | 1630 | unmeasured |
| Liquidus Temperature [°C] | | unmeasured | unmeasured | unmeasured | 1355 | unmeasured |
| Liquidus Viscosity [-] | | unmeasured | unmeasured | unmeasured | 3.46 | unmeasured |
| $\alpha$ [$\times 10^{-7}$/°C] 30-380°C | | unmeasured | unmeasured | unmeasured | 29.2 | unmeasured |
| Density [g/cm$^3$] | | 2.52 | 2.53 | 2.56 | 2.52 | 2.57 |
| $\beta$ -OH [/mm] | | unmeasured | unmeasured | unmeasured | unmeasured | unmeasured |
| After Crystallization | | | | | | |
| Crystallization Conditions① | | 850°C-6h 1230°C-1h | 850°C-6h 1230°C-1h | 850°C-6h 1230°C-1h | 850°C-6h 1230°C-1h | 850°C-6h 1230°C-1h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |

(continued)

| After Crystallization | | | | | | |
|---|---|---|---|---|---|---|
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | unmeasured | unmeasured | unmeasured | unmeasured |
| $\alpha$ [$\times 10^{-7}$/°C] 30-380°C | | unmeasured | unmeasured | unmeasured | -1.08 | unmeasured |
| $\alpha$ [$\times 10^{-7}$/°C] 30-750°C | | unmeasured | unmeasured | unmeasured | 4.08 | unmeasured |
| Density [g/cm$^3$] | | unmeasured | unmeasured | unmeasured | 2.45 | unmeasured |
| Average Surface Roughness of Principal Surface R a [nm] | | unmeasured | unmeasured | unmeasured | unmeasured | unmeasured |
| Average Surface Roughness of End Surface R a [nm] | | unmeasured | unmeasured | unmeasured | unmeasured | unmeasured |
| Waviness [$\mu$m] | | unmeasured | unmeasured | unmeasured | unmeasured | unmeasured |

[Table 129]

| | | No.321 | No.322 | No.323 | No.324 | No.325 |
|---|---|---|---|---|---|---|
| [% by mass] | $SiO_2$ | 64.2 | 64.0 | 61.2 | 61.9 | 62.8 |
| | $Al_2O_3$ | 21.2 | 21.1 | 20.1 | 20.4 | 20.6 |
| | MgO | 9.3 | 9.0 | 4.2 | 8.4 | 8.5 |
| | $Li_2O$ | 0 | 0 | 0 | 0 | 0 |
| | $Na_2O$ | 0.05 | 0.05 | 0.04 | 0.05 | 0.05 |
| | $K_2O$ | 0.02 | 0.02 | 0.02 | 0.01 | 0.01 |
| | CaO | 0.04 | 0.04 | 0.01 | 0.04 | 0.04 |
| | SrO | 0 | 0 | 0 | 0 | 0 |
| | BaO | 0 | 0 | 0 | 0 | 0 |
| | ZnO | 0 | 0.69 | 9.57 | 1.32 | 1.34 |
| | $B_2O_3$ | 0 | 0 | 0 | 0 | 0 |
| | $P_2O_5$ | 0.02 | 0.02 | 0.02 | 0.02 | 0.02 |
| | $TiO_2$ | 4.97 | 4.96 | 4.74 | 0.07 | 2.47 |
| | $ZrO_2$ | 0 | 0 | 0 | 7.46 | 3.9 |
| | $HfO_2$ | 0 | 0 | 0 | 0.16 | 0.08 |
| | $SnO_2$ | 0.16 | 0.17 | 0.16 | 0.16 | 0.16 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.68 | 0.68 | 0.72 | 0.68 | 0.68 |
| Al/(Si+Al+Mg) | | 0.22 | 0.22 | 0.24 | 0.22 | 0.22 |
| Mg/(Si+Al+Mg) | | 0.10 | 0.10 | 0.05 | 0.09 | 0.09 |
| Si/Al | | 3.03 | 3.03 | 3.04 | 3.03 | 3.05 |
| Si/Mg | | 6.90 | 7.11 | 14.57 | 7.37 | 7.39 |
| Al/Mg | | 2.28 | 2.34 | 4.79 | 2.43 | 2.42 |
| (Li+Na+K)/Si | | 0.00109 | 0.00109 | 0.00098 | 0.00097 | 0.00096 |

(continued)

|  | No.321 | No.322 | No.323 | No.324 | No.325 |
|---|---|---|---|---|---|
| Li+Na+K+Ca+Sr+Ba [% by mass] | 0.11 | 0.11 | 0.07 | 0.1 | 0.1 |
| (Si+Zn)/(Mg+Al) | 2.10 | 2.15 | 2.91 | 2.20 | 2.20 |
| Zn-(Ti+Zr) [% by mass] | -4.97 | -4.27 | 4.83 | -6.21 | -5.03 |
| Ti/(Ti+Fe) | 0.998 | 0.998 | 0.998 | 0.875 | 0.996 |
| As+Sb [% by mass] | 0 | 0 | 0 | 0 | 0 |
| Sn+As+Sb+Cl [% by mass] | 0.16 | 0.17 | 0.16 | 0.16 | 0.16 |
| Sn/(Sn+As+Sb+Cl) | 1 | 1 | 1 | 1 | 1 |
| Metal Al [ppm] | 0 | 0 | 0 | 0 | 0 |

[Table 130]

| | | No.321 | No.322 | No.323 | No.324 | No.325 |
|---|---|---|---|---|---|---|
| Before Crystallization | | | | | | |
| Temperature equiv. to High-Temp. Viscosity | $10^4$ [°C] | 1287 | 1285 | 1273 | 1305 | 1291 |
| | $10^3$ [°C] | 1433 | 1431 | 1417 | 1436 | 1432 |
| | $10^{2.5}$ [°C] | 1527 | 1524 | 1512 | 1523 | 1522 |
| | $10^2$ [°C] | 1636 | 1634 | 1623 | 1630 | 1631 |
| Liquidus Temperature [°C] | | 1353 | 1349 | 1386 | unmeasured | 1349 |
| Liquidus Viscosity [-] | | 3.51 | 3.52 | 3.6 | unmeasured | 3.55 |
| $\alpha$ [$\times 10^{-7}$/°C] 30-380°C | | unmeasured | unmeasured | unmeasured | unmeasured | unmeasured |
| Density [g/cm$^3$] | | 2.50 | 2.51 | 2.62 | 2.61 | 2.57 |
| $\beta$ -OH [/mm] | | unmeasured | unmeasured | unmeasured | unmeasured | unmeasured |
| After Crystallization | | | | | | |
| Crystallization Conditions① | | 850°C-6h 1230°C-1h | 850°C-6h 1230°C-1h | 850°C-6h 1230°C-1h | 850°C-6h 1230°C-1h | 850°C-6h 1230°C-1h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | unmeasured | unmeasured | unmeasured | unmeasured |
| $\alpha$ [$\times 10^{-7}$/°C] 30-380°C | | -1.3 | -0.03 | unmeasured | unmeasured | unmeasured |
| $\alpha$ [$\times 10^{-7}$/°C] 30-750°C | | 4.5 | 5.3 | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |

(continued)

| After Crystallization | | | | | |
|---|---|---|---|---|---|
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 131]

| | | No.326 | No.327 | No.328 | No.329 | No.330 |
|---|---|---|---|---|---|---|
| [% by mass] | $SiO_2$ | 63.3 | 62.3 | 66.2 | 67.9 | 69.5 |
| | $Al_2O_3$ | 20.8 | 20.6 | 20.4 | 19.3 | 18.2 |
| | MgO | 8.5 | 8.4 | 8.1 | 7.6 | 7.2 |
| | $Li_2O$ | 0 | 0 | 0 | 0 | 0 |
| | $Na_2O$ | 0.05 | 0.05 | 0.05 | 0.05 | 0.05 |
| | $K_2O$ | 0.01 | 0.01 | 0.02 | 0.02 | 0.02 |
| | CaO | 0.04 | 0.04 | 0.04 | 0.03 | 0.03 |
| | SrO | 0 | 0 | 0 | 0 | 0 |
| | BaO | 0 | 0 | 0 | 0 | 0 |
| | ZnO | 1.35 | 1.34 | 0 | 0 | 0 |
| | $B_2O_3$ | 0 | 0 | 0 | 0 | 0 |
| | $P_2O_5$ | 0.02 | 0.02 | 0.02 | 0.02 | 0.02 |
| | $TiO_2$ | 3.69 | 1.25 | 4.92 | 4.9 | 4.86 |
| | $ZrO_2$ | 2.0 | 5.73 | 0 | 0 | 0 |
| | $HfO_2$ | 0.04 | 0.12 | 0 | 0 | 0 |
| | $SnO_2$ | 0.17 | 0.16 | 0.17 | 0.16 | 0.16 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.68 | 0.68 | 0.70 | 0.72 | 0.73 |
| Al/(Si+Al+Mg) | | 0.22 | 0.23 | 0.22 | 0.20 | 0.19 |

(continued)

|  | No.326 | No.327 | No.328 | No.329 | No.330 |
|---|---|---|---|---|---|
| Mg/(Si+Al+Mg) | 0.09 | 0.09 | 0.09 | 0.08 | 0.08 |
| Si/Al | 3.04 | 3.02 | 3.25 | 3.52 | 3.82 |
| Si/Mg | 7.45 | 7.42 | 8.17 | 8.93 | 9.65 |
| Al/Mg | 2.45 | 2.45 | 2.52 | 2.54 | 2.53 |
| (Li+Na+K)/Si | 0.00095 | 0.00096 | 0.00106 | 0.00103 | 0.00101 |
| Li+Na+K+Ca+Sr+Ba [% by mass] | 0.1 | 0.1 | 0.11 | 0.1 | 0.1 |
| (Si+Zn)/(Mg+Al) | 2.21 | 2.19 | 2.32 | 2.52 | 2.74 |
| Zn-(Ti+Zr) [% by mass] | -4.34 | -5.64 | -4.92 | -4.9 | -4.86 |
| Ti/(Ti+Fe) | 0.997 | 0.992 | 0.998 | 0.998 | 0.998 |
| As+Sb [% by mass] | 0 | 0 | 0 | 0 | 0 |
| Sn+As+Sb+Cl [% by mass] | 0.17 | 0.16 | 0.17 | 0.16 | 0.16 |
| Sn/(Sn+As+Sb+Cl) | 1 | 1 | 1 | 1 | 1 |
| Metal Al [ppm] | 0 | 0 | 0 | 0 | 0 |

[Table 132]

| | | No.326 | No.327 | No.328 | No.329 | No.330 |
|---|---|---|---|---|---|---|
| Before Crystallization | | | | | | |
| Temperature equiv. to High-Temp. Viscosity | $10^4$ [°C] | 1285 | 1292 | 1323 | 1342 | 1359 |
| | $10^3$ [°C] | 1428 | 1431 | 1474 | 1496 | 1517 |
| | $10^{2.5}$ [°C] | 1517 | 1520 | 1569 | 1594 | 1617 |
| | $10^2$ [°C] | 1624 | 1627 | 1682 | 1709 | 1735 |
| Liquidus Temperature [°C] | | 1375 | unmeasured | 1379 | 1384 | 1387 |
| Liquidus Viscosity [-] | | 3.34 | unmeasured | 3.59 | 3.7 | 3.8 |
| $\alpha$ [$\times 10^{-7}$/°C] 30-380°C | | unmeasured | unmeasured | unmeasured | unmeasured | unmeasured |
| Density [g/cm$^3$] | | 2.54 | 2.59 | 2.48 | 2.46 | 2.45 |
| $\beta$-OH [/mm] | | unmeasured | unmeasured | unmeasured | unmeasured | unmeasured |
| After Crystallization | | | | | | |
| Crystallization Conditions① | | 850°C-6h 1230°C-1h | 850°C-6h 1230°C-1h | 850°C-6h 1230°C-1h | 850°C-6h 1230°C-1h | 850°C-6h 1230°C-1h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b* | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | unmeasured | unmeasured | unmeasured |

(continued)

| After Crystallization | | | | | |
|---|---|---|---|---|---|
| $\alpha$ [$\times 10^{-7}$/°C] 30-380°C | unmeasured | unmeasured | -0.41 | 6.43 | 7.44 |
| $\alpha$ [$\times 10^{-7}$/°C] 30-750°C | unmeasured | unmeasured | 4.32 | 9.78 | 10.85 |
| Density [g/cm$^3$] | unmeasured | unmeasured | unmeasured | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 133]

| | | No.331 | No.332 | No.333 | No.334 | No.335 |
|---|---|---|---|---|---|---|
| [% by mass] | $SiO_2$ | 69.9 | 72.8 | 76.3 | 68.0 | 63.7 |
| | $Al_2O_3$ | 21.4 | 19.3 | 17.8 | 18.2 | 21 |
| | MgO | 8.5 | 7.7 | 5.6 | 7.3 | 8.6 |
| | $Li_2O$ | 0 | 0 | 0 | 0 | 0 |
| | $Na_2O$ | 0.05 | 0.04 | 0.04 | 0.06 | 0.06 |
| | $K_2O$ | 0 | 0 | 0 | 0.02 | 0.02 |
| | CaO | 0.04 | 0.04 | 0.02 | 0.03 | 0.04 |
| | SrO | 0 | 0 | 0 | 0 | 0 |
| | BaO | 0 | 0 | 0 | 0 | 0 |
| | ZnO | 0 | 0 | 0 | 1.36 | 1.37 |
| | $B_2O_3$ | 0 | 0 | 0 | 0 | 0 |
| | $P_2O_5$ | 0 | 0 | 0 | 0.02 | 0 |
| | $TiO_2$ | 0.02 | 0.02 | 0.02 | 4.89 | 4.98 |
| | $ZrO_2$ | 0 | 0 | 0 | 0 | 0 |
| | $HfO_2$ | 0 | 0 | 0 | 0 | 0 |
| | $SnO_2$ | 0.16 | 0.17 | 0.17 | 0.16 | 0.17 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |

(continued)

| | | No.331 | No.332 | No.333 | No.334 | No.335 |
|---|---|---|---|---|---|---|
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.70 | 0.73 | 0.77 | 0.73 | 0.68 |
| Al/(Si+Al+Mg) | | 0.21 | 0.19 | 0.18 | 0.19 | 0.23 |
| Mg/(Si+Al+Mg) | | 0.09 | 0.08 | 0.06 | 0.08 | 0.09 |
| Si/Al | | 3.27 | 3.77 | 4.29 | 3.74 | 3.03 |
| Si/Mg | | 8.22 | 9.45 | 13.63 | 9.32 | 7.41 |
| Al/Mg | | 2.52 | 2.51 | 3.18 | 2.49 | 2.44 |
| (Li+Na+K)/Si | | 0.00072 | 0.00055 | 0.00052 | 0.00118 | 0.00126 |
| Li+Na+K+Ca+Sr+Ba [% by mass] | | 0.09 | 0.08 | 0.06 | 0.11 | 0.12 |
| (Si+Zn)/(Mg+Al) | | 2.34 | 2.70 | 3.26 | 2.72 | 2.20 |
| Zn-(Ti+Zr) [% by mass] | | -0.02 | -0.02 | -0.02 | -3.53 | -3.61 |
| Ti/(Ti+Fe) | | 0.667 | 0.667 | 0.667 | 0.998 | 0.998 |
| As+Sb [% by mass] | | 0 | 0 | 0 | 0 | 0 |
| Sn+As+Sb+Cl [% by mass] | | 0.16 | 0.17 | 0.17 | 0.16 | 0.17 |
| Sn/(Sn+As+Sb+Cl) | | 1 | 1 | 1 | 1 | 1 |
| Metal Al [ppm] | | 0 | 0 | 0 | 0 | 1000 |

[Table 134]

| | | No.331 | No.332 | No.333 | No.334 | No.335 |
|---|---|---|---|---|---|---|
| Before Crystallization | | | | | | |
| Temperature equiv. to High-Temp. Viscosity | 10^4 [°C] | 1374 | 1418 | 1489 | 1345 | unmeasured |
| | 10^3 [°C] | 1529 | 1583 | 1662 | 1504 | unmeasured |
| | 10^2.5 [°C] | 1628 | 1684 | 1768 | 1605 | unmeasured |
| | 10^2 [°C] | 1746 | 1801 | 1893 | 1726 | unmeasured |
| Liquidus Temperature [°C] | | 1401 | unmeasured | 1464 | unmeasured | unmeasured |
| Liquidus Viscosity [-] | | 3.8 | unmeasured | 4.17 | unmeasured | unmeasured |
| $\alpha$ [×10⁻⁷/°C] 30-380°C | | 26.6 | 25 | 21.2 | 26 | 28.6 |
| Density [g/cm³] | | 2.44 | 2.42 | 2.37 | 2.47 | 2.52 |
| $\beta$-OH [/mm] | | unmeasured | unmeasured | unmeasured | unmeasured | unmeasured |
| After Crystallization | | | | | | |
| Crystallization Conditions① | | 850°C-6h 1230°C-1h | 850°C-6h 1230°C-1h | 850°C-6h 1230°C-1h | 850°C-6h 1230°C-1h | 805°C-60h 1075°C-30min 1120°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L * | | unmeasured | unmeasured | unmeasured | unmeasured | unmeasured |

(continued)

| After Crystallization | | | | | | |
|---|---|---|---|---|---|---|
| a* | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| $\alpha$ [$\times 10^{-7}$/°C] 30-750°C | | unmeasured | unmeasured | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | 0.5 |
| Average Surface Roughness of End Surface R a [nm] | | unmeasured | unmeasured | unmeasured | unmeasured | 0.1 |
| Waviness [$\mu$m] | | unmeasured | unmeasured | unmeasured | unmeasured | 0.01 |

[Table 135]

| | | No.336 | No.337 | No.338 | No.339 | No.340 |
|---|---|---|---|---|---|---|
| [% by mass] | $SiO_2$ | 69.6 | 62.5 | 69.2 | 70.3 | 67.4 |
| | $Al_2O_3$ | 18.8 | 18.5 | 19.1 | 19.2 | 18.9 |
| | $MgO$ | 7.4 | 7.3 | 7.6 | 7.6 | 7.6 |
| | $Li_2O$ | 0 | 0 | 0 | 0 | 0 |
| | $Na_2O$ | 0.04 | 0.04 | 0.04 | 0.04 | 0.04 |
| | $K_2O$ | 0 | 0 | 0.02 | 0.01 | 0.01 |
| | $CaO$ | 0.04 | 0.04 | 0.05 | 0.05 | 0.05 |
| | $SrO$ | 0 | 0 | 0 | 0 | 0 |
| | $BaO$ | 0 | 0 | 0 | 0 | 0 |
| | $ZnO$ | 0 | 0 | 0 | 0 | 0 |
| | $B_2O_3$ | 0 | 0 | 0 | 0 | 0 |
| | $P_2O_5$ | 0 | 0 | 0.02 | 0.01 | 0.02 |
| | $TiO_2$ | 0 | 6.7 | 3.75 | 2.51 | 3.42 |
| | $ZrO_2$ | 0 | 4.51 | 0 | 0 | 2.34 |
| | $HfO_2$ | 3.91 | 0.12 | 0 | 0 | 0.05 |
| | $SnO_2$ | 0.17 | 0.17 | 0.16 | 0.16 | 0.17 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | $CuO$ | 0 | 0 | 0 | 0 | 0 |
| | $NiO$ | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.73 | 0.71 | 0.72 | 0.72 | 0.72 |
| Al/(Si+Al+Mg) | | 0.20 | 0.21 | 0.20 | 0.20 | 0.20 |
| Mg/(Si+Al+Mg) | | 0.08 | 0.08 | 0.08 | 0.08 | 0.08 |
| Si/Al | | 3.70 | 3.38 | 3.62 | 3.66 | 3.57 |
| Si/Mg | | 9.41 | 8.56 | 9.11 | 9.25 | 8.87 |
| Al/Mg | | 2.54 | 2.53 | 2.51 | 2.53 | 2.49 |
| (Li+Na+K)/Si | | 0.00057 | 0.00064 | 0.00087 | 0.00071 | 0.00074 |

(continued)

|  | No.336 | No.337 | No.338 | No.339 | No.340 |
|---|---|---|---|---|---|
| Li+Na+K+Ca+Sr+Ba [% by mass] | 0.08 | 0.08 | 0.11 | 0.1 | 0.1 |
| (Si+Zn)/(Mg+Al) | 2.66 | 2.42 | 2.59 | 2.62 | 2.54 |
| Zn-(Ti+Zr) [% by mass] | 0 | -11.21 | -3.75 | -2.51 | -5.76 |
| Ti/(Ti+Fe) | 0.000 | 0.999 | 0.997 | 0.996 | 0.997 |
| As+Sb [% by mass] | 0 | 0 | 0 | 0 | 0 |
| Sn+As+Sb+Cl [% by mass] | 0.17 | 0.17 | 0.16 | 0.16 | 0.17 |
| Sn/(Sn+As+Sb+Cl) | 1 | 1 | 1 | 1 | 1 |
| Metal Al [ppm] | 0 | 0 | 0 | 0 | 0 |

[Table 136]

|  |  | No.336 | No.337 | No.338 | No.339 | No.340 |
|---|---|---|---|---|---|---|
| Before Crystallization | | | | | | |
| Temperature equiv. to High-Temp. Viscosity | $10^4$ [°C] | unmeasured | unmeasured | 1361 | 1378 | 1344 |
| | $10^3$ [°C] | unmeasured | unmeasured | 1519 | 1538 | 1498 |
| | $10^{2.5}$ [°C] | unmeasured | unmeasured | 1620 | 1640 | 1596 |
| | $10^2$ [°C] | unmeasured | unmeasured | 1742 | 1761 | 1713 |
| Liquidus Temperature [°C] | | unmeasured | unmeasured | 1383 | 1398 | unmeasured |
| Liquidus Viscosity [-] | | unmeasured | unmeasured | 3.84 | 3.86 | unmeasured |
| $\alpha$ [$\times 10^{-7}$/°C] 30-380°C | | unmeasured | unmeasured | 25.6 | 25.2 | 26.4 |
| Density [g/cm$^3$] | | 2.49 | 2.57 | 2.52 | 2.53 | 2.49 |
| $\beta$-OH [/mm] | | unmeasured | unmeasured | 0.15 | unmeasured | unmeasured |
| After Crystallization | | | | | | |
| Crystallization Conditions① | | 805°C-60h 1075°C-30-min 1120°C-2h | 700°C-2h 1200°C-20h | 805°C-60h 1075°C-30min 1120°C-2h | 805°C-60h 1075°C-30min 1120°C-2h | 805°C-60h 1075°C-30min 1120°C-2h |
| Transmittance [%] 4mm thickness | 380nm | unmeasured | unmeasured | unmeasured | unmeasured | unmeasured |
| | 800nm | unmeasured | unmeasured | 34.8 | unmeasured | unmeasured |
| | 1200nm | unmeasured | unmeasured | 45.2 | unmeasured | unmeasured |
| L * | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | 37 | unmeasured | unmeasured |
| $\alpha$ [$\times 10^{-7}$/°C] 30-380°C | | unmeasured | unmeasured | 8.8 | unmeasured | unmeasured |

(continued)

| After Crystallization | | | | | |
|---|---|---|---|---|---|
| $\alpha$ [$\times 10^{-7}$/°C] 30-750°C | unmeasured | unmeasured | 12.1 | unmeasured | unmeasured |
| Density [g/cm$^3$] | unmeasured | unmeasured | 2.39 | unmeasured | unmeasured |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 137]

| | | No.341 | No.342 | No.343 | No.344 | No.345 |
|---|---|---|---|---|---|---|
| [% by mass] | $SiO_2$ | 69.2 | 54.8 | 68.3 | 68.6 | 68.9 |
| | $Al_2O_3$ | 19 | 27.6 | 19.1 | 19.1 | 19.1 |
| | MgO | 7.6 | 11.3 | 7.6 | 7.6 | 7.6 |
| | $Li_2O$ | 0 | 0 | 0 | 0 | 0 |
| | $Na_2O$ | 0.04 | 0.04 | 0.04 | 0.04 | 0.04 |
| | $K_2O$ | 0.01 | 0 | 0.01 | 0.01 | 0.01 |
| | CaO | 0.05 | 0.04 | 0.05 | 0.05 | 0.05 |
| | SrO | 0 | 0 | 0 | 0 | 0 |
| | BaO | 0 | 0 | 0 | 0 | 0 |
| | ZnO | 0 | 1.34 | 0.01 | 0 | 0 |
| | $B_2O_3$ | 0 | 0 | 0 | 0 | 0 |
| | $P_2O_5$ | 0.02 | 0 | 0.02 | 0.02 | 0.02 |
| | $TiO_2$ | 2.29 | 4.73 | 4.66 | 4.37 | 4.06 |
| | $ZrO_2$ | 1.57 | 0 | 0 | 0 | 0 |
| | $HfO_2$ | 0.03 | 0 | 0 | 0 | 0 |
| | $SnO_2$ | 0.16 | 0.22 | 0.16 | 0.17 | 0.17 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |

(continued)

|  |  | No.341 | No.342 | No.343 | No.344 | No.345 |
|---|---|---|---|---|---|---|
| [ppm] | Pt | 0.03 | 0.03 | 0.03 | 0.03 | 0.03 |
|  | Rh | 0.02 | 0.02 | 0.02 | 0.02 | 0.02 |
|  | Pt+Rh | 0.05 | 0.05 | 0.05 | 0.05 | 0.05 |
| Si/(Si+Al+Mg) | | 0.72 | 0.58 | 0.72 | 0.72 | 0.72 |
| Al/(Si+Al+Mg) | | 0.20 | 0.29 | 0.20 | 0.20 | 0.20 |
| Mg/(Si+Al+Mg) | | 0.08 | 0.12 | 0.08 | 0.08 | 0.08 |
| Si/Al | | 3.64 | 1.99 | 3.58 | 3.59 | 3.61 |
| Si/Mg | | 9.11 | 4.85 | 8.99 | 9.03 | 9.07 |
| Al/Mg | | 2.50 | 2.44 | 2.51 | 2.51 | 2.51 |
| (Li+Na+K)/Si | | 0.00072 | 0.00073 | 0.00073 | 0.00073 | 0.00073 |
| Li+Na+K+Ca+Sr+Ba [% by mass] | | 0.1 | 0.08 | 0.1 | 0.1 | 0.1 |
| (Si+Zn)/(Mg+Al) | | 2.60 | 1.44 | 2.56 | 2.57 | 2.58 |
| Zn-(Ti+Zr) [% by mass] | | -3.86 | -3.39 | -4.65 | -4.37 | -4.06 |
| Ti/(Ti+Fe) | | 0.996 | 0.998 | 0.998 | 0.998 | 0.998 |
| As+Sb [% by mass] | | 0 | 0 | 0 | 0 | 0 |
| Sn+As+Sb+Cl [% by mass] | | 0.16 | 0.22 | 0.16 | 0.17 | 0.17 |
| Sn/(Sn+As+Sb+Cl) | | 1 | 1 | 1 | 1 | 1 |
| Metal Al [ppm] | | 0 | 0 | 0 | 0 | 0 |

[Table 138]

| | | No.341 | No.342 | No.343 | No.344 | No.345 |
|---|---|---|---|---|---|---|
| Before Crystallization | | | | | | |
| Temperature equiv. to High-Temp. Viscosity | 10^4 [°C] | 1368 | unmeasured | 1348 | 1352 | 1358 |
| | 10^3 [°C] | 1525 | unmeasured | 1505 | 1510 | 1516 |
| | 10^2.5 [°C] | 1625 | unmeasured | 1604 | 1609 | 1616 |
| | 10^2 [°C] | 1744 | unmeasured | 1724 | 1727 | 1735 |
| Liquidus Temperature [°C] | | unmeasured | unmeasured | 1437 | 1427 | 1389 |
| Liquidus Viscosity [-] | | unmeasured | unmeasured | 3.4 | 3.49 | 3.78 |
| $\alpha$ [$\times 10^{-7}$/°C] 30-380°C | | 25.4 | unmeasured | 25.7 | 25.7 | 25.7 |
| Density [g/cm$^3$] | | 2.46 | 2.62 | 2.46 | 2.45 | 2.45 |
| $\beta$ -OH [/mm] | | unmeasured | unmeasured | unmeasured | unmeasured | unmeasured |
| After Crystallization | | | | | | |
| Crystallization Conditions① | | 805°C-60h 1075°C-30min 1120°C-2h | 805°C-60h 1075°C-30min 1120°C-2h | 805°C-60h 1075°C-30min 1120°C-2h | 805°C-60h 1075°C-30min 1120°C-2h | 805°C-60h 1075°C-30min 1120°C-2h |
| Transmittance [%] 4mm thickness | 380nm | unmeasured | unmeasured | unmeasured | unmeasured | unmeasured |
| | 800nm | unmeasured | unmeasured | 34 | 35.5 | 35.1 |
| | 1200nm | unmeasured | unmeasured | 49.1 | 50.6 | 45 |
| L * | | unmeasured | unmeasured | unmeasured | unmeasured | unmeasured |

(continued)

| After Crystallization | | | | | | |
|---|---|---|---|---|---|---|
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | 39 | 35 | 33 |
| $\alpha$ [$\times 10^{-7}$/°C] 30-380°C | | unmeasured | unmeasured | 8.4 | 8.5 | 8.4 |
| $\alpha$ [$\times 10^{-7}$/°C] 30-750°C | | unmeasured | unmeasured | 11.8 | 12 | 12 |
| Density [g/cm$^3$] | | unmeasured | unmeasured | 2.39 | 2.39 | 2.39 |
| Average Surface Roughness of Principal Surface R a [nm] | | unmeasured | unmeasured | unmeasured | unmeasured | 0.5 |
| Average Surface Roughness of End Surface R a [nm] | | unmeasured | unmeasured | unmeasured | unmeasured | 0.1 |
| Waviness [$\mu$m] | | unmeasured | unmeasured | unmeasured | unmeasured | 0.01 |

[Table 139]

| | | No.346 | No.347 | No.348 | No.349 | No.350 |
|---|---|---|---|---|---|---|
| [% by mass] | $SiO_2$ | 68.4 | 67.7 | 66.7 | 65.9 | 66.6 |
| | $Al_2O_3$ | 19 | 18.9 | 18.8 | 18.7 | 18.6 |
| | MgO | 7.6 | 7.5 | 7.5 | 7.4 | 7.4 |
| | $Li_2O$ | 0 | 0 | 0 | 0 | 0 |
| | $Na_2O$ | 0.04 | 0.04 | 0.04 | 0.04 | 0.05 |
| | $K_2O$ | 0.01 | 0.01 | 0.01 | 0.01 | 0.01 |
| | CaO | 0.05 | 0.05 | 0.05 | 0.05 | 0.05 |
| | SrO | 0 | 0 | 0 | 0 | 0 |
| | BaO | 0 | 0 | 0 | 0 | 0 |
| | ZnO | 0 | 0 | 0 | 0 | 0 |
| | $B_2O_3$ | 0 | 0 | 0 | 0 | 0 |
| | $P_2O_5$ | 0.02 | 0.02 | 0.02 | 0.02 | 0.02 |
| | $TiO_2$ | 3.73 | 3.7 | 3.73 | 3.7 | 1.26 |
| | $ZrO_2$ | 0.98 | 1.95 | 2.92 | 3.87 | 5.75 |
| | $HfO_2$ | 0.02 | 0.04 | 0.06 | 0.08 | 0.12 |
| | $SnO_2$ | 0.17 | 0.16 | 0.16 | 0.16 | 0.16 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |
| Si/(Si+Al+Mg) | | 0.72 | 0.72 | 0.72 | 0.72 | 0.72 |
| Al/(Si+Al+Mg) | | 0.20 | 0.20 | 0.20 | 0.20 | 0.20 |
| Mg/(Si+Al+Mg) | | 0.08 | 0.08 | 0.08 | 0.08 | 0.08 |
| Si/Al | | 3.60 | 3.58 | 3.55 | 3.52 | 3.58 |
| Si/Mg | | 9.00 | 9.03 | 8.89 | 8.91 | 9.00 |
| Al/Mg | | 2.50 | 2.52 | 2.51 | 2.53 | 2.51 |
| (Li+Na+K)/Si | | 0.00073 | 0.00074 | 0.00075 | 0.00076 | 0.00090 |

(continued)

|  | No.346 | No.347 | No.348 | No.349 | No.350 |
|---|---|---|---|---|---|
| Li+Na+K+Ca+Sr+Ba [% by mass] | 0.1 | 0.1 | 0.1 | 0.1 | 0.11 |
| (Si+Zn)/(Mg+Al) | 2.57 | 2.56 | 2.54 | 2.52 | 2.56 |
| Zn-(Ti+Zr) [% by mass] | -4.71 | -5.65 | -6.65 | -7.57 | -7.01 |
| Ti/(Ti+Fe) | 0.997 | 0.997 | 0.997 | 0.997 | 0.992 |
| As+Sb [% by mass] | 0 | 0 | 0 | 0 | 0 |
| Sn+As+Sb+Cl [% by mass] | 0.17 | 0.16 | 0.16 | 0.16 | 0.16 |
| Sn/(Sn+As+Sb+Cl) | 1 | 1 | 1 | 1 | 1 |
| Metal Al [ppm] | 0 | 0 | 0 | 0 | 0 |

[Table 140]

|  |  | No.346 | No.347 | No.348 | No.349 | No.350 |
|---|---|---|---|---|---|---|
| Before Crystallization | | | | | | |
| Temperature equiv. to High-Temp. Viscosity | $10^4$ [°C] | 1352 | unmeasured | unmeasured | unmeasured | unmeasured |
| | $10^3$ [°C] | 1509 | unmeasured | unmeasured | unmeasured | unmeasured |
| | $10^{2.5}$ [°C] | 1608 | unmeasured | unmeasured | unmeasured | unmeasured |
| | $10^2$ [°C] | 1728 | unmeasured | unmeasured | unmeasured | unmeasured |
| Liquidus Temperature [°C] | | 1383 | unmeasured | unmeasured | unmeasured | unmeasured |
| Liquidus Viscosity [-] | | 3.78 | unmeasured | unmeasured | unmeasured | unmeasured |
| $\alpha$ [$\times 10^{-7}$/°C] 30-380°C | | 26 | unmeasured | unmeasured | unmeasured | unmeasured |
| Density [g/cm$^3$] | | 2.46 | 2.48 | 2.50 | 2.52 | 2.53 |
| $\beta$-OH [/mm] | | unmeasured | unmeasured | unmeasured | unmeasured | unmeasured |
| After Crystallization | | | | | | |
| Crystallization Conditions① | | 805°C-60h 1075°C-30min 1120°C-2h | 805°C-60h 1075°C-30min 1120°C-2h | 805°C-60h 1075°C-30min 1120°C-2h | 805°C-60h 1075°C-30min 1120°C-2h | 805°C-60h 1075°C-30min 1120°C-2h |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L* | | unmeasured | unmeasured | unmeasured | unmeasured | unmeasured |
| a* | | unmeasured | unmeasured | unmeasured | unmeasured | unmeasured |
| b* | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | unmeasured | unmeasured |
| Average Crystallite Size [nm] | | 34 | unmeasured | unmeasured | unmeasured | unmeasured |
| $\alpha$ [$\times 10^{-7}$/°C] 30-380°C | | 10.86 | unmeasured | unmeasured | unmeasured | unmeasured |
| $\alpha$ [$\times 10^{-7}$/°C] 30-750°C | | 14.54 | unmeasured | unmeasured | unmeasured | unmeasured |
| Density [g/cm$^3$] | | unmeasured | unmeasured | unmeasured | unmeasured | unmeasured |

(continued)

| After Crystallization | | | | | |
|---|---|---|---|---|---|
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 141]

| | | No.351 | No.352 | No.353 | No.354 | No.355 |
|---|---|---|---|---|---|---|
| [% by mass] | $SiO_2$ | 68.6 | 68.3 | 68.2 | 67.9 | 68.5 |
| | $Al_2O_3$ | 19.1 | 19.1 | 19.1 | 19 | 19.1 |
| | MgO | 7.6 | 7.6 | 7.6 | 7.6 | 7.6 |
| | $Li_2O$ | 0 | 0 | 0 | 0 | 0 |
| | $Na_2O$ | 0.05 | 0.04 | 0.04 | 0.04 | 0.04 |
| | $K_2O$ | 0.01 | 0.01 | 0.01 | 0.01 | 0.01 |
| | CaO | 0.05 | 0.05 | 0.05 | 0.05 | 0.88 |
| | SrO | 0 | 0 | 0 | 0 | 0 |
| | BaO | 0 | 0 | 0 | 0 | 0 |
| | ZnO | 0.01 | 0 | 0 | 0 | 0 |
| | $B_2O_3$ | 0.6 | 1 | 0.6 | 1 | 0 |
| | $P_2O_5$ | 0.02 | 0.02 | 0.02 | 0.02 | 0.02 |
| | $TiO_2$ | 3.75 | 3.73 | 3.75 | 3.74 | 3.73 |
| | $ZrO_2$ | 0 | 0 | 0.48 | 0.48 | 0 |
| | $HfO_2$ | 0 | 0 | 0.01 | 0.01 | 0 |
| | $SnO_2$ | 0.16 | 0.16 | 0.16 | 0.15 | 0.16 |
| | $Fe_2O_3$ | 0.01 | 0.01 | 0.01 | 0.01 | 0.01 |
| | $As_2O_3$ | 0 | 0 | 0 | 0 | 0 |
| | $Sb_2O_3$ | 0 | 0 | 0 | 0 | 0 |
| | $Cl_2$ | 0 | 0 | 0 | 0 | 0 |
| | $MoO_3$ | 0 | 0 | 0 | 0 | 0 |
| | $V_2O_5$ | 0 | 0 | 0 | 0 | 0 |
| | CuO | 0 | 0 | 0 | 0 | 0 |
| | NiO | 0 | 0 | 0 | 0 | 0 |
| | $MnO_2$ | 0 | 0 | 0 | 0 | 0 |
| | $Cr_2O_3$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | $Co_3O_4$ | 0 | 0 | 0 | 0 | 0 |
| [ppm] | Pt | 0.03 | 0.03 | 0.03 | 0.03 | 0.03 |
| | Rh | 0.02 | 0.02 | 0.02 | 0.02 | 0.02 |
| | Pt+Rh | 0.05 | 0.05 | 0.05 | 0.05 | 0.05 |

(continued)

|  | No.351 | No.352 | No.353 | No.354 | No.355 |
|---|---|---|---|---|---|
| Si/(Si+Al+Mg) | 0.72 | 0.72 | 0.72 | 0.72 | 0.72 |
| Al/(Si+Al+Mg) | 0.20 | 0.20 | 0.20 | 0.20 | 0.20 |
| Mg/(Si+Al+Mg) | 0.08 | 0.08 | 0.08 | 0.08 | 0.08 |
| Si/Al | 3.59 | 3.58 | 3.57 | 3.57 | 3.59 |
| Si/Mg | 9.03 | 8.99 | 8.97 | 8.93 | 9.01 |
| Al/Mg | 2.51 | 2.51 | 2.51 | 2.50 | 2.51 |
| (Li+Na+K)/Si | 0.00087 | 0.00073 | 0.00073 | 0.00074 | 0.00073 |
| Li+Na+K+Ca+Sr+Ba [% by mass] | 0.11 | 0.1 | 0.1 | 0.1 | 0.93 |
| (Si+Zn)/(Mg+Al) | 2.57 | 2.56 | 2.55 | 2.55 | 2.57 |
| Zn-(Ti+Zr) [% by mass] | -3.74 | -3.73 | -4.23 | -4.22 | -3.73 |
| Ti/(Ti+Fe) | 0.997 | 0.997 | 0.997 | 0.997 | 0.997 |
| As+Sb [% by mass] | 0 | 0 | 0 | 0 | 0 |
| Sn+As+Sb+Cl [% by mass] | 0.16 | 0.16 | 0.16 | 0.15 | 0.16 |
| Sn/(Sn+As+Sb+Cl) | 1 | 1 | 1 | 1 | 1 |
| Metal Al [ppm] | 0 | 0 | 0 | 0 | 0 |

[Table 142]

| | | No.351 | No.352 | No.353 | No.354 | No.355 |
|---|---|---|---|---|---|---|
| Before Crystallization | | | | | | |
| Temperature equiv. to High-Temp. Viscosity | 10^4 [°C] | 1352 | 1348 | 1350 | 1341 | 1349 |
| | 10^3 [°C] | 1512 | 1508 | 1510 | 1499 | 1510 |
| | 10^2.5 [°C] | 1611 | 1607 | 1611 | 1598 | 1610 |
| | 10^2 [°C] | 1723 | 1722 | 1726 | 1712 | 1722 |
| Liquidus Temperature [°C] | | 1409 | 1372 | 1387 | 1377 | unmeasured |
| Liquidus Viscosity [-] | | 3.61 | 3.83 | 3.75 | 3.75 | unmeasured |
| $\alpha$ [$\times 10^{-7}$/°C] 30-380°C | | 25.6 | 25.5 | 25.6 | 26.1 | 27 |
| Density [g/cm$^3$] | | 2.44 | 2.44 | 2.45 | 2.45 | 2.46 |
| $\beta$ -OH [/mm] | | unmeasured | unmeasured | unmeasured | unmeasured | unmeasured |
| After Crystallization | | | | | | |
| Crystallization Conditions① | | 805°C-60h 1075°C-30-min | 805°C-60h 1075°C-30-min | 805°C-60h 1075°C-30-min | 805°C-60h 1075°C-30-min | 805°C-60h 1075°C-30min 1120°C-2h |
| Transmittance [%] 4mm thickness | 380nm | 12.9 | 6.98 | 3.58 | unmeasured | unmeasured |
| | 800nm | 87.4 | 82.7 | 76.6 | 59.6 | unmeasured |
| | 1200nm | 85.2 | 84.6 | 81.8 | 75.4 | unmeasured |
| L* | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |

(continued)

| After Crystallization | | | | | | |
|---|---|---|---|---|---|---|
| Crystallization Conditions① | | 805°C-60h 1075°C-30-min | 805°C-60h 1075°C-30-min | 805°C-60h 1075°C-30-min | 805°C-60h 1075°C-30-min | 805°C-60h 1075°C-30min 1120°C-2h |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | 48 | 37 | 37 | 39 | unmeasured |
| $\alpha$ [$\times 10^{-7}$/°C] 30-380°C | | 23.4 | 16.3 | 10.2 | 9.3 | unmeasured |
| $\alpha$ [$\times 10^{-7}$/°C] 30-750°C | | 23 | 18 | 13.4 | 12.8 | unmeasured |
| Density [g/cm$^3$] | | 2.43 | 2.41 | 2.40 | 2.39 | unmeasured |
| Average Surface Roughness of Principal Surface R a [nm] | | unmeasured | unmeasured | unmeasured | 0.5 | unmeasured |
| Average Surface Roughness of End Surface R a [nm] | | unmeasured | unmeasured | unmeasured | 0.1 | unmeasured |
| Waviness [$\mu$m] | | unmeasured | unmeasured | unmeasured | 0.01 | unmeasured |

[Table 143]

|  |  | No.356 | No.357 | No.358 | No.359 | No.360 |
|---|---|---|---|---|---|---|
| [% by mass] | $SiO_2$ | 67.8 | 67.3 | 68.3 | 68.4 | 67.6 |
|  | $Al_2O_3$ | 19 | 18.8 | 19 | 19 | 19 |
|  | MgO | 7.5 | 7.5 | 7.5 | 7.5 | 7.5 |
|  | $Li_2O$ | 0 | 0 | 0 | 0 | 0 |
|  | $Na_2O$ | 0.05 | 0.05 | 0.05 | 0.04 | 0.04 |
|  | $K_2O$ | 0.01 | 0.01 | 0.01 | 0.01 | 0.01 |
|  | CaO | 0.05 | 0.05 | 0.05 | 0.05 | 0.06 |
|  | SrO | 1.64 | 0 | 0 | 0 | 0 |
|  | BaO | 0 | 2.44 | 0 | 0 | 0 |
|  | ZnO | 0 | 0 | 1.25 | 0 | 0 |
|  | $B_2O_3$ | 0 | 0 | 0 | 0 | 0 |
|  | $P_2O_5$ | 0.02 | 0.02 | 0.02 | 1.12 | 0.02 |
|  | $TiO_2$ | 3.71 | 3.69 | 3.7 | 3.69 | 3.66 |
|  | $ZrO_2$ | 0 | 0 | 0 | 0 | 0 |
|  | $HfO_2$ | 0 | 0 | 0 | 0 | 0 |
|  | $SnO_2$ | 0.16 | 0.16 | 0.15 | 0.16 | 2.14 |
|  | $Fe_2O_3$ | 0.01 | 0.01 | 0.01 | 0.01 | 0.01 |
|  | $As_2O_3$ | 0 | 0 | 0 | 0 | 0 |
|  | $Sb_2O_3$ | 0 | 0 | 0 | 0 | 0 |
|  | $Cl_2$ | 0 | 0 | 0 | 0 | 0 |
|  | $MoO_3$ | 0 | 0 | 0 | 0 | 0 |
|  | $V_2O_5$ | 0 | 0 | 0 | 0 | 0 |
|  | CuO | 0 | 0 | 0 | 0 | 0 |
|  | NiO | 0 | 0 | 0 | 0 | 0 |
|  | $MnO_2$ | 0 | 0 | 0 | 0 | 0 |
|  | $Cr_2O_3$ | 0 | 0 | 0 | 0 | 0 |
|  | $Nd_2O_3$ | 0 | 0 | 0 | 0 | 0 |
|  | $WO_3$ | 0 | 0 | 0 | 0 | 0 |
|  | $Co_3O_4$ | 0 | 0 | 0 | 0 | 0 |
| [ppm] | Pt | 0.03 | 0.03 | 0.03 | 0.03 | 0.03 |
|  | Rh | 0.02 | 0.02 | 0.02 | 0.02 | 0.02 |
|  | Pt+Rh | 0.05 | 0.05 | 0.05 | 0.05 | 0.05 |
| Si/(Si+Al+Mg) |  | 0.72 | 0.72 | 0.72 | 0.72 | 0.72 |
| Al/(Si+Al+Mg) |  | 0.20 | 0.20 | 0.20 | 0.20 | 0.20 |
| Mg/(Si+Al+Mg) |  | 0.08 | 0.08 | 0.08 | 0.08 | 0.08 |
| Si/Al |  | 3.57 | 3.58 | 3.59 | 3.60 | 3.56 |
| Si/Mg |  | 9.04 | 8.97 | 9.11 | 9.12 | 9.01 |
| Al/Mg |  | 2.53 | 2.51 | 2.53 | 2.53 | 2.53 |
| (Li+Na+K)/Si |  | 0.00088 | 0.00089 | 0.00088 | 0.00073 | 0.00074 |

(continued)

|  | No.356 | No.357 | No.358 | No.359 | No.360 |
|---|---|---|---|---|---|
| Li+Na+K+Ca+Sr+Ba [% by mass] | 1.75 | 2.55 | 0.11 | 0.1 | 0.11 |
| (Si+Zn)/(Mg+Al) | 2.56 | 2.56 | 2.62 | 2.58 | 2.55 |
| Zn-(Ti+Zr) [% by mass] | -3.71 | -3.69 | -2.45 | -3.69 | -3.66 |
| Ti/(Ti+Fe) | 0.997 | 0.997 | 0.997 | 0.997 | 0.997 |
| As+Sb [% by mass] | 0 | 0 | 0 | 0 | 0 |
| Sn+As+Sb+Cl [% by mass] | 0.16 | 0.16 | 0.15 | 0.16 | 2.14 |
| Sn/(Sn+As+Sb+Cl) | 1 | 1 | 1 | 1 | 1 |
| Metal Al [ppm] | 0 | 0 | 0 | 0 | 0 |

[Table 144]

| | | No.356 | No.357 | No.358 | No.359 | No.360 |
|---|---|---|---|---|---|---|
| Before Crystallization | | | | | | |
| Temperature equiv. to High-Temp. Viscosity | $10^4$ [°C] | 1351 | 1354 | 1346 | 1366 | 1348 |
| | $10^3$ [°C] | 1512 | 1515 | 1505 | 1528 | 1507 |
| | $10^{2.5}$ [°C] | 1611 | 1615 | 1604 | 1629 | 1606 |
| | $10^2$ [°C] | 1726 | 1730 | 1719 | 1747 | 1721 |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [$\times 10^{-7}$/°C] 30-380°C | | 27.4 | 27.7 | 26.2 | 25.3 | 26.2 |
| Density [g/cm$^3$] | | 2.47 | 2.49 | 2.47 | 2.44 | 2.48 |
| $\beta$ -OH [/mm] | | unmeasured | unmeasured | unmeasured | unmeasured | unmeasured |
| After Crystallization | | | | | | |
| Crystallization Conditions① | | 805°C-60h 1075°C-30min 1120°C-2h | 805°C-60h 1075°C-30min 1120°C-2h | 805°C-60h 1075°C-30-min | 805°C-60h 1075°C-30-min | 805°C-60h 1075°C-30min |
| Transmittance [%] 4mm thickness | 380nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| L * | | unmeasured | unmeasured | unmeasured | unmeasured | unmeasured |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$ -Cor. | $\alpha$ -Cor. | $\alpha$ -Cor. | $\alpha$ -Cor. | $\alpha$ -Cor. |
| Average Crystallite Size [nm] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| $\alpha$ [$\times 10^{-7}$/°C] 30-750°C | | unmeasured | unmeasured | unmeasured | unmeasured | unmeasured |
| Density [g/cm$^3$] | | unmeasured | unmeasured | unmeasured | unmeasured | unmeasured |

(continued)

| After Crystallization | | | | | |
|---|---|---|---|---|---|
| Crystallization Conditions① | 805°C-60h 1075°C-30min 1120°C-2h | 805°C-60h 1075°C-30min 1120°C-2h | 805°C-60h 1075°C-30-min | 805°C-60h 1075°C-30-min | 805°C-60h 1075°C-30m-in |
| Average Surface Roughness of Principal Surface R a [nm] | unmeasured | unmeasured | unmeasured | unmeasured | unmeasured |
| Average Surface Roughness of End Surface R a [nm] | unmeasured | unmeasured | unmeasured | unmeasured | unmeasured |
| Waviness [$\mu$m] | unmeasured | unmeasured | unmeasured | unmeasured | unmeasured |

[Table 145]

| | | | No.361 | No.362 | No.363 | No.364 | No.365 |
|---|---|---|---|---|---|---|---|
| [% by mass] | | $SiO_2$ | 68.4 | 69.7 | 68.5 | 68.4 | 68.1 |
| | | $Al_2O_3$ | 19 | 19 | 19.3 | 19.1 | 19 |
| | | MgO | 7.5 | 7.4 | 7.7 | 7.6 | 7.6 |
| | | $Li_2O$ | 0 | 0 | 0.47 | 0 | 0 |
| | | $Na_2O$ | 0.04 | 0.04 | 0.04 | 0.93 | 0.04 |
| | | $K_2O$ | 0.01 | 0.01 | 0.01 | 0.01 | 1.4 |
| | | CaO | 0.05 | 0.05 | 0.05 | 0.05 | 0.05 |
| | | SrO | 0 | 0 | 0 | 0 | 0 |
| | | BaO | 0 | 0 | 0 | 0 | 0 |
| | | ZnO | 0 | 0 | 0 | 0 | 0 |
| | | $B_2O_3$ | 0 | 0 | 0 | 0 | 0 |
| | | $P_2O_5$ | 0.03 | 0.02 | 0.02 | 0.02 | 0.02 |
| | | $TiO_2$ | 3.7 | 3.63 | 3.75 | 3.74 | 3.69 |
| | | $ZrO_2$ | 0 | 0 | 0 | 0 | 0 |
| | | $HfO_2$ | 0 | 0 | 0 | 0 | 0 |
| | | $SnO_2$ | 0.17 | 0.17 | 0.18 | 0.18 | 0.17 |
| | | $Fe_2O_3$ | 0.01 | 0.01 | 0.01 | 0.01 | 0.01 |
| | | $As_2O_3$ | 0 | 0 | 0 | 0 | 0 |
| | | $Sb_2O_3$ | 0 | 0 | 0 | 0 | 0 |
| | | $Cl_2$ | 0 | 0 | 0 | 0 | 0 |
| | | $MoO_3$ | 1.1 | 0 | 0 | 0 | 0 |
| | | $V_2O_3$ | 0 | 0 | 0 | 0 | 0 |
| | | CuO | 0 | 0 | 0 | 0 | 0 |
| | | NiO | 0 | 0 | 0 | 0 | 0 |
| | | $MnO_2$ | 0 | 0 | 0 | 0 | 0 |
| | | $Cr_2O_3$ | 0 | 0 | 0 | 0 | 0 |
| | | $Nd_2O_3$ | 0 | 0 | 0 | 0 | 0 |
| | | $WO_3$ | 0 | 0 | 0 | 0 | 0 |
| | | $Co_3O_4$ | 0 | 0 | 0 | 0 | 0 |

(continued)

|  |  | No.361 | No.362 | No.363 | No.364 | No.365 |
|---|---|---|---|---|---|---|
| [ppm] | Pt | 0.03 | 0.03 | 0.03 | 0.03 | 0.03 |
|  | Rh | 0.02 | 0.02 | 0.02 | 0.02 | 0.02 |
|  | Pt+Rh | 0.05 | 0.05 | 0.05 | 1.05 | 0.05 |
| Si/(Si+Al+Mg) | | 0.72 | 0.73 | 0.72 | 0.72 | 0.72 |
| Al/(Si+Al+Mg) | | 0.20 | 0.20 | 0.20 | 0.20 | 0.20 |
| Mg/(Si+Al+Mg) | | 0.08 | 0.08 | 0.08 | 0.08 | 0.08 |
| Si/Al | | 3.60 | 3.67 | 3.55 | 3.58 | 3.58 |
| Si/Mg | | 9.12 | 9.42 | 8.90 | 9.00 | 8.96 |
| Al/Mg | | 2.53 | 2.57 | 2.51 | 2.51 | 2.50 |
| (Li+Na+K)/Si | | 0.00073 | 0.00072 | 0.00759 | 0.01374 | 0.02115 |
| Li+Na+K+Ca+Sr+Ba [% by mass] | | 0.1 | 0.1 | 0.57 | 0.99 | 1.49 |
| (Si+Zn)/(Mg+Al) | | 2.58 | 2.64 | 2.54 | 2.56 | 2.56 |
| Zn-(Ti+Zr) [% by mass] | | -3.7 | -3.63 | -3.75 | -3.74 | -3.69 |
| Ti/(Ti+Fe) | | 0.997 | 0.997 | 0.997 | 0.997 | 0.997 |
| As+Sb [% by mass] | | 0 | 0 | 0 | 0 | 0 |
| Sn+As+Sb+Cl [% by mass] | | 0.17 | 0.17 | 0.18 | 0.18 | 0.17 |
| Sn/(Sn+As+Sb+Cl) | | 1 | 1 | 1 | 1 | 1 |
| Metal Al [ppm] | | 0 | 1000 | 0 | 0 | 0 |

[Table 146]

|  |  | No.361 | No.362 | No.363 | No.364 | No.365 |
|---|---|---|---|---|---|---|
| Before Crystallization | | | | | | |
| Temperature equiv. to High-Temp. Viscosity | $10^4$ [°C] | 1356 | unmeasured | 1334 | 1348 | 1359 |
|  | $10^3$ [°C] | 1516 | unmeasured | 1500 | 1513 | 1522 |
|  | $10^{2.5}$ [°C] | 1615 | unmeasured | 1602 | 1614 | 1626 |
|  | $10^2$ [°C] | 1728 | unmeasured | 1718 | 1728 | 1752 |
| Liquidus Temperature [°C] | | unmeasured | unmeasured | unmeasured | unmeasured | unmeasured |
| Liquidus Viscosity [-] | | unmeasured | unmeasured | unmeasured | unmeasured | unmeasured |
| $\alpha$ [×$10^{-7}$/°C] 30-380°C | | 25.4 | 24.7 | 27.9 | 28.4 | 28.8 |
| Density [g/cm³] | | 2.45 | 2.44 | 2.45 | 2.45 | 2.45 |
| $\beta$ -OH [/mm] | | unmeasured | unmeasured | unmeasured | unmeasured | unmeasured |
| After Crystallization | | | | | | |
| Crystallization Conditions① | | 805°C-60h 1075°C-32-min | 805°C-60h 1075°C-30min 1120°C-2h | 805°C-60h 1075°C-30min 1120°C-2h | 805°C-60h 1075°C-30min 1120°C-2h | 805°C-60h 1075°C-30min 1120°C-2h |
| Transmittance [%] 4mm thickness | 380nm | unmeasured | unmeasured | unmeasured | unmeasured | unmeasured |
|  | 800nm | unmeasured | unmeasured | unmeasured | unmeasured | unmeasured |
|  | 1200nm | unmeasured | unmeasured | unmeasured | unmeasured | unmeasured |
| L * | | unmeasured | unmeasured | unmeasured | unmeasured | unmeasured |

(continued)

| After Crystallization | | | | | | |
|---|---|---|---|---|---|---|
| Crystallization Conditions① | | 805°C-60h 1075°C-32-min | 805°C-60h 1075°C-30min 1120°C-2h | 805°C-60h 1075°C-30min 1120°C-2h | 805°C-60h 1075°C-30min 1120°C-2h | 805°C-60h 1075°C-30min 1120°C-2h |
| a * | | unmeasured | unmeasured | unmeasured | unmeasured | unmeasured |
| b * | | unmeasured | unmeasured | unmeasured | unmeasured | unmeasured |
| Diffuse Transmittance [%] 4mm thickness | 600nm | unmeasured | unmeasured | unmeasured | unmeasured | unmeasured |
| | 800nm | unmeasured | unmeasured | unmeasured | unmeasured | unmeasured |
| | 1200nm | unmeasured | unmeasured | unmeasured | unmeasured | unmeasured |
| Precipitated Crystals | | $\alpha$-Cor. | $\alpha$-Cor. | $\alpha$-Cor. | $\alpha$-Cor. | $\alpha$-Cor. |
| Average Crystallite Size [nm] | | unmeasured | unmeasured | unmeasured | unmeasured | unmeasured |
| $\alpha$ [$\times 10^{-7}$/°C] 30-380°C | | unmeasured | unmeasured | unmeasured | unmeasured | unmeasured |
| $\alpha$ [$\times 10^{-7}$/°C] 30-750°C | | unmeasured | unmeasured | unmeasured | unmeasured | unmeasured |
| Density [g/cm$^3$] | | unmeasured | unmeasured | unmeasured | unmeasured | unmeasured |
| Average Surface Roughness of Principal Surface R a [nm] | | unmeasured | unmeasured | unmeasured | unmeasured | unmeasured |
| Average Surface Roughness of End Surface R a [nm] | | unmeasured | unmeasured | unmeasured | unmeasured | unmeasured |
| Waviness [$\mu$m] | | unmeasured | unmeasured | unmeasured | unmeasured | unmeasured |

[Table 147]

| | | No.366 |
|---|---|---|
| [% by mass] | $SiO_2$ | 69.2 |
| | $Al_2O_3$ | 19.1 |
| | MgO | 7.6 |
| | $Li_2O$ | 0 |
| | $Na_2O$ | 0.04 |
| | $K_2O$ | 0.01 |
| | CaO | 0.05 |
| | SrO | 0 |
| | BaO | 0 |
| | ZnO | 0 |
| | $B_2O_3$ | 0 |
| | $P_2O_5$ | 0.02 |
| | $TiO_2$ | 3.73 |
| | $ZrO_2$ | 0 |
| | $HfO_2$ | 0 |
| | $SnO_2$ | 0.18 |
| | $Fe_2O_3$ | 0.01 |
| | $As_2O_3$ | 0 |
| | $Sb_2O_3$ | 0 |
| | $Cl_2$ | 0 |
| | $MoO_3$ | 0 |
| | $V_2O_5$ | 0.03 |
| | CuO | 0 |
| | NiO | 0 |
| | $MnO_2$ | 0 |
| | $Cr_2O_3$ | 0 |
| | $Nd_2O_3$ | 0 |
| | $WO_3$ | 0 |
| | $Co_3O_4$ | 0 |
| [ppm] | Pt | 0.03 |
| | Rh | 0.02 |
| | Pt+Rh | 0.05 |
| Si/(Si+Al+Mg) | | 0.72 |
| Al/(Si+Al+Mg) | | 0.20 |
| Mg/(Si+Al+Mg) | | 0.08 |
| Si/Al | | 3.62 |
| Si/Mg | | 9.11 |
| Al/Mg | | 2.51 |
| (Li+Na+K)/Si | | 0.00072 |

(continued)

|  | No.366 |
|---|---|
| Li+Na+K+Ca+Sr+Ba [% by mass] | 0.1 |
| (Si+Zn)/(Mg+Al) | 2.59 |
| Zn-(Ti+Zr) [% by mass] | -3.73 |
| Ti/(Ti+Fe) | 0.997 |
| As+Sb [% by mass] | 0 |
| Sn+As+Sb+Cl [% by mass] | 0.18 |
| Sn/(Sn+As+Sb+Cl) | 1 |
| Metal Al [ppm] | 0 |

[Table 148]

| | | No.366 |
|---|---|---|
| Before Crystallization | | |
| Temperature equiv. to High-Temp. Viscosity | $10^4$ [°C] | 1376 |
| | $10^3$ [°C] | 1540 |
| | $10^{2.5}$ [°C] | 1627 |
| | $10^2$ [°C] | 1717 |
| Liquidus Temperature [°C] | | unmeasured |
| Liquidus Viscosity [-] | | unmeasured |
| $\alpha$ [$\times 10^{-7}$/°C] 30-380°C | | 25.5 |
| Density [g/cm$^3$] | | 2.45 |
| $\beta$-OH [/mm] | | unmeasured |
| After Crystallization | | |
| Crystallization Conditions① | | 805°C-60h 1075°C-30min |
| Transmittance [%] 4mm thickness | 380nm | unmeasured |
| | 800nm | unmeasured |
| | 1200nm | unmeasured |
| L* | | unmeasured |
| a * | | unmeasured |
| b * | | unmeasured |
| Diffuse Transmittance [%] 4mm thickness | 600nm | unmeasured |
| | 800nm | unmeasured |
| | 1200nm | unmeasured |
| Precipitated Crystals | | $\alpha$ -Cor. |
| Average Crystallite Size [nm] | | unmeasured |
| $\alpha$ [$\times 10^{-7}$/°C] 30-380°C | | unmeasured |
| $\alpha$ [$\times 10^{-7}$/°C] 30-750°C | | unmeasured |
| Density [g/cm$^3$] | | unmeasured |
| Average Surface Roughness of Principal Surface R a [nm] | | unmeasured |
| Average Surface Roughness of End Surface R a [nm] | | unmeasured |

(continued)

| After Crystallization | |
|---|---|
| Crystallization Conditions① | 805°C-60h 1075°C-30min |
| Waviness [$\mu$m] | unmeasured |

First, raw materials were formulated in the form of an oxide, a hydroxide, a carbonate or a nitrate or other forms to provide each of glasses having respective compositions shown in the tables, thus obtaining a raw material batch (where the compositions shown in each of the tables are analysis values of actually produced glasses, and the sums of components and the ratios regarding components in the tables are represented by omitting oxygen elements and subscripts, such as, for example, "Li+Na+K"). The obtained raw material batch was put into a crucible containing platinum and rhodium, a rhodium-free strengthened-platinum crucible, a refractory crucible, a quartz crucible or so on, melted therein at 1630°C for 17 to 20 hours, then melted at an increased temperature of 1650°C for 2 hours, formed with a thickness of 5 mm by roll forming, and subjected to heat treatment at 700 to 750°C for 30 minutes using an annealing furnace, and then the annealing furnace was cooled at a rate of 100°C/h to room temperature, thus obtaining a crystallizable glass (an original glass) as a precursor before crystallization. The melting was performed by the electric melting process widely used for the development of glass members.

Using the glass composition of Sample No. 102, it has been confirmed that the glass composition brought into contact with a liquid or a solid can be melted by laser irradiation. Furthermore, it has also been confirmed that the glass composition brought into contact only with a gas while feeding the gas from around the glass sample to levitate the glass sample can be melted by laser. Moreover, it has also been confirmed that after the glass composition has been previously formed into a melt in an electric furnace or the like, the melt can be formed into a semispherical, spherical, fibrous or powdered shape by pressing, redrawing, spraying or other processes. Furthermore, using the glass composition of Sample No. 102, it has been confirmed that the glass composition can be melted in a continuous furnace where heating with a burner and ohmic heating are combined, and that the melt can be formed into a block, flaky, hollow or other shapes by a roll process, a film process, a lot process using dielectric heating or so on. Using the glass composition of Sample No. 102, it has also been confirmed that the melt can be formed into a thin-plate-like, tubular or valve-like shape by an up-draw process, a down-draw process, a slit process, an overflow (fusion) process, a hand-blown process or so on. Furthermore, using the glass composition of Sample No. 102, it has also been confirmed that the glass composition can be solidified into a sheet by flowing a glass melt of the glass composition onto a liquid having a larger specific gravity than Sample No. 102 and subsequently cooling it. The glasses produced by every method described above could be crystallized under the conditions shown in the tables.

The respective contents of Pt and Rh in the samples were analyzed with an ICP-MS instrument (Agilent 8800 manufactured by Agilent Technologies, Inc.). First, the produced glass samples were each ground and wetted with pure water and, then, perchloric acid, nitric acid, sulfuric acid, hydrofluoric acid or the like was added to the glass sample to dissolve the glass sample with the acid. Thereafter, the respective contents of Pt and Rh in the sample were measured with ICP-MS (inductively coupled plasma mass spectrometry). Based on calibration curves created using prepared Pt and Rh solutions the concentrations of which had been known, the respective contents of Pt and Rh in each measurement sample were determined. The measurement modes were a He gas/HMI (low mode) for Pt and a HEHe gas/HMI (middle mode) for Rh. The mass numbers were 198 for Pt and 103 for Rh. The content of $Li_2O$ in the produced samples was analyzed with an atomic absorption spectrometer (contrAA 600 manufactured by Analytik Jena). The manner of the analysis for this component was basically the same as the analysis for Pt and Rh, such as the procedure of dissolving the glass sample and the use of the calibration curve. Regarding the other components, the content of the component was measured with ICP-MS or atomic absorption spectrometry, like Pt, Rh, and $Li_2O$, or, otherwise, a calibration curve was created with an XRF (X-ray fluorescence) analyzer (ZSX Primus IV manufactured by Rigaku Corporation) using as a sample for determining the calibration curve a glass sample the concentration of which had been known by previously examining it with an ICP-MS or atomic absorption spectrometer, and the actual content of the component was then determined from an XRF analysis value of the measurement sample based on the calibration curve. In doing XRF analysis, the tube voltage, the tube current, the exposure time, and so on were adjusted according to the analytical component as needed.

Each of the original glasses shown in the tables was subjected to heat treatment under the crystallization conditions shown in the tables. The obtained crystallized glasses were evaluated in terms of transmittance (total transmittance), diffuse transmittance, L* value, a* value, b* value, type of precipitated crystals, average crystallite size, coefficient of thermal expansion, density, surface roughness, and waviness. In addition, the original glasses before crystallization was measured in terms of viscosity, liquidus temperature, liquidus viscosity, coefficient of thermal expansion, density, and β-OH value.

The evaluation of the transmittance was performed by measuring, with a spectro-photometer, a crystallized glass sheet optically polished at both surfaces to reach a thickness of 4 mm. A spectro-photometer V-670 manufactured by JASCO Corporation was used for the measurement. The spectro-photometer V-670 was fitted with an integrating sphere unit "ISN-723" and, therefore, the measured transmittance corresponds to the total transmittance. Furthermore, the measurement wavelength region was 200 to 1500 nm, the scan speed was 200 nm/min, the sampling pitch was 1 nm, and the band widths were 5 nm in a wavelength region of 200 to 800 nm and 20 nm in the other wavelength region. Prior to the measurement, a baseline correction (adjustment to 100%) and a dark measurement (adjustment to 0%) were performed. The dark measurement was conducted in a state where a barium sulfate plate attached to ISN-723 was removed. Using the measured transmittance, tristimulus values X, Y, and Z were calculated based on JIS Z 8781-4:2013 and its corresponding International Standard. The lightness and chromaticity were calculated from each stimulus value (light source C/10°). Furthermore, the measurement of the diffuse transmittance of each crystallized glass was performed by using the same type of instrument as above and placing the measurement sample in a state where the barium sulfate plate attached to ISN-723 was removed.

The precipitated crystals were evaluated with an X-ray diffractometer (Aeris manufactured by Spectris Co., Ltd.). The scan mode was $2\theta/\theta$ measurement, the scan type was a continuous scan, the scattering slit width was 9 mm, the divergent slit width was 1/4°, the light-receiving slit was opened, the measurement range was 5 to 60°, the measurement step was 0.01°, and the scan speed was 1.5°/min. The type of major crystalline phase and the crystal grain size were evaluated using analysis software installed on the instrument package. $\alpha$-cordierite which is the type of precipitated crystals identified as a major crystalline phase is shown as "$\alpha$-Cor." in the tables. The average crystallite size of the major crystalline phase was calculated using a measured X-ray diffraction peak based on the Debeye-Sherrer method. The XRD pattern of Sample No. 127 is shown in Fig. 1.

The coefficient of thermal expansion was evaluated, using a sample obtained by processing a sheet-shaped crystallized glass with a thickness of 5 to 7 mm to a length of 20 mm and a diameter of 3.8 mm, from its average coefficients of linear thermal expansion measured in a temperature range of 30 to 380°C and a temperature range of 30 to 750°C. A dilatometer manufactured by NETZSCH was used for the measurement.

The density was evaluated by the Archimedes's method.

The high-temperature viscosity was evaluated by the platinum ball pulling-up method. In the evaluation, a mass of glass sample was crushed to an appropriate size and loaded into an alumina-made crucible so as not to involve air bubbles as much as possible. Subsequently, the alumina crucible was heated to turn the sample into a melt, the measured values of the glass viscosity at a plurality of temperatures were determined, the constant of the Vogel-Fulcher equation was calculated, a viscosity curve was created, and the temperature at each of viscosities was calculated from the viscosity curve.

The liquidus temperature was evaluated in the following manner. First, glass powder sized between 300 micrometers and 500 micrometers was filled in a platinum boat with a size of approximately 120 × 20 × 10 mm, the boat was put into an electric furnace, and the glass powder was melted at 1600°C for 30 minutes in the furnace. Thereafter, the platinum boat was moved into an electric furnace having a linear temperature gradient and held therein for 20 hours to precipitate devitrification. The measurement sample was air cooled to room temperature, the devitrification precipitated at the interface between the platinum boat and the glass was observed, and the temperature at the portion where the devitrification was precipitated was calculated as a liquidus temperature from the temperature gradient graph of the electric furnace. Furthermore, the obtained liquidus temperature was interpolated into the high-temperature viscosity curve of the glass and the viscosity in the viscosity curve at the liquidus temperature was calculated as a liquidus viscosity.

The $\beta$-OH value was determined by measuring the transmittance of glass with an infrared spectrophotometer (FT-IR Frontier manufactured by PerkinElmer Inc.) and using the following equation. The scan speed was 100 $\mu$m/min, the sampling pitch was 1 cm$^{-1}$, and the scan times were ten per measurement.

$$\beta\text{-OH value} = (1/X)\log(T_1/T_2)$$

X: glass thickness
$T_1$: transmittance at a reference wavenumber of 3846 cm$^{-1}$
$T_2$: minimum transmittance at a hydroxyl group absorption wavenumber of around 3600 cm$^{-1}$

The average surface roughness Ra of the principal surface and end surface of the sample and the waviness were measured by the method described previously.

The measurement of the size of voids and the voidage was performed using a microfocus X-ray CT system (manufactured by Shimadzu Corporation). The size of voids in the low-thermal expansion member of Sample No. 306 was several nanometers to not more than 330 $\mu$m and the voidage thereof was 0.28%. A histogram showing measurement results of Sample No. 306 in terms of void size is shown in Fig. 2.

As is obvious from Tables 1 to 148, the low-thermal expansion members (crystallized glasses) of Sample Nos. 1 to 366 as examples exhibited low linear expansion coefficients. Furthermore, each of these samples contains no $Li_2O$ or contains it only in minute amounts and, therefore, they can be produced at low cost. Sample Nos. 169, 173, 175, 183, 204 to 206, 211 to 213, 218 to 221, 312 to 320, 361, and 366 were colored and, particularly, Sample Nos. 183 and 221 were colored in black.

[Industrial Applicability]

The low-thermal expansion member according to the present invention is suitable for a front window of an oil stove, a wood stove or the like, a substrate for high-technology products, such as a color filter substrate or an image sensor substrate, a setter for firing electronic components, a light diffuser plate, a furnace core tube for producing semiconductors, a mask for producing semiconductors, an optical lens, a dimension measurement member, a communication member, a fire window, a construction member, a heat-resistant plate or utensil, a chemical reaction container, an electromagnetic cooker top plate, a heat-resistant plate or utensil, a heat-resistant cover, a window glass for fire doors, a member for astrometric telescopes, a member for space optics, and so on.

## Claims

1. A low-thermal expansion member containing a $MgO\text{-}Al_2O_3\text{-}SiO_2$-based crystal.

2. The low-thermal expansion member according to claim 1, containing $\alpha$-cordierite and having transmittancy.

3. The low-thermal expansion member according to claim 2, containing, in terms of % by mass, 20 to 90% $SiO_2$, more than 0 to 50% $Al_2O_3$, and more than 0 to 40% $MgO$.

4. The low-thermal expansion member according to claim 2 or 3, wherein $SiO_2/(SiO_2+Al_2O_3+MgO)$ is 0.45 to 0.81 in terms of % by mass.

5. The low-thermal expansion member according to claim 2 or 3, wherein $Al_2O_3/(SiO_2+Al_2O_3+MgO)$ is 0.01 to 0.45 in terms of % by mass.

6. The low-thermal expansion member according to claim 2 or 3, wherein $MgO/(SiO_2+Al_2O_3+MgO)$ is 0.03 to 0.29 in terms of % by mass.

7. The low-thermal expansion member according to claim 2 or 3, wherein $SiO_2/Al_2O_3$ is 1 to 15 in terms of % by mass.

8. The low-thermal expansion member according to claim 2 or 3, wherein $SiO_2/MgO$ is 2 to 15 in terms of % by mass.

9. The low-thermal expansion member according to claim 2 or 3, wherein $Al_2O_3/MgO$ is 0.2 to 15 in terms of % by mass.

10. The low-thermal expansion member according to claim 2 or 3, wherein, in terms of % by mass, the low-thermal expansion member contains 0 to 5.6% $BaO$, $SiO_2/Al_2O_3$ is 2.5 to 15, and $SiO_2/MgO$ is 5.4 to 15.

11. The low-thermal expansion member according to claim 2 or 3, wherein, in terms of % by mass, the low-thermal expansion member contains 0 to 5.6% $BaO$, $SiO_2/Al_2O_3$ is 2.5 to 15, and $Al_2O_3/MgO$ is 1.8 to 15.

12. The low-thermal expansion member according to claim 2 or 3, containing, in terms of % by mass, 55.5 to 90% $SiO_2$ and more than 0% $ZnO$.

13. The low-thermal expansion member according to claim 2 or 3, wherein $(Li_2O+Na_2O+K_2O)/SiO_2$ is 0.00005 to 0.03 in terms of % by mass.

14. The low-thermal expansion member according to claim 2 or 3, wherein $Li_2O+Na_2O+K_2O+CaO+SrO+BaO$ is not more than 2% in terms of % by mass.

15. The low-thermal expansion member according to claim 2 or 3, wherein $(SiO_2+ZnO)/(MgO+Al_2O_3)$ is 0.7 to 3 in terms of % by mass.

16. The low-thermal expansion member according to claim 2 or 3, wherein $ZnO-(TiO_2+ZrO_2)$ is -15 to 5% in terms of % by mass.

17. The low-thermal expansion member according to claim 2 or 3, wherein $TiO_2/(TiO_2+Fe_2O_3)$ is 0.001 to 0.999 in terms of % by mass.

18. The low-thermal expansion member according to claim 2 or 3, containing at least one of $MoO_3$, $V_2O_5$, CuO, NiO, $MnO_2$, $Cr_2O_3$, $Nd_2O_3$, $WO_3$, and $Co_3O_4$.

19. The low-thermal expansion member according to claim 2 or 3, containing more than 0% $MoO_3$ in terms of % by mass.

20. The low-thermal expansion member according to claim 2 or 3, wherein, in terms of % by mass, $SiO_2/(SiO_2+Al_2O_3+MgO)$ is 0.36 to 0.81, $Al_2O_3/(SiO_2+Al_2O_3+MgO)$ is 0.09 to 0.5, $MgO/(SiO_2+Al_2O_3+MgO)$ is 0.01 to 0.29, and the low-thermal expansion member contains 0.01 to less than 2.5% $Na_2O$ and at least one of $As_2O_3$, $Sb_2O_3$, $SnO_2$, and Cl. low-thermal expansion member

21. The low-thermal expansion member according to claim 1 or 2, wherein a $\beta$-OH value is more than 0 to 2/mm.

22. The low-thermal expansion member according to claim 1 or 2, wherein a transmittance at a thickness of 4 mm and a wavelength of 1200 nm is not less than 10%.

23. The low-thermal expansion member according to claim 1 or 2, wherein a coefficient of thermal expansion at 30 to 380°C is not more than $30 \times 10^{-7}/°C$.

24. The low-thermal expansion member according to claim 1 or 2, wherein a coefficient of thermal expansion at 30 to 750°C is not more than $30 \times 10^{-7}/°C$.

25. The low-thermal expansion member according to claim 1 or 2, being a crystallized glass.

26. A precursor of a low-thermal expansion member, the precursor being made of a crystallizable glass containing, in terms of % by mass, 20 to 90% $SiO_2$, more than 0 to 50% $Al_2O_3$, more than 0 to 40% MgO, 0 to 20% CaO, 0 to 20% SrO, 0 to 20% BaO, 0 to 20% ZnO, 0 to 10% $Li_2O$, 0 to 20% $Na_2O$, 0 to 20% $K_2O$, 0 to 20% $B_2O_3$, 0 to 20% $P_2O_5$, 0 to 20% $TiO_2$, 0 to 20% $ZrO_2$, 0 to 10% $HfO_2$, and 0 to 20% $SnO_2$.

27. A method for producing the low-thermal expansion member according to claim 25, the method comprising the steps of:

    heating a raw material into a melt and forming the melt into a shape to obtain a crystallizable glass; and
    subjecting the crystallizable glass to heat treatment to crystallize the crystallizable glass.

28. The method for producing the low-thermal expansion member according to claim 27, wherein an amount of metal Al added to the raw material is more than 0 to 5000 ppm in terms of % by mass.

[FIG. 1]

[FIG. 2]

## INTERNATIONAL SEARCH REPORT

International application No.

**PCT/JP2024/000052**

| A. | CLASSIFICATION OF SUBJECT MATTER |
|---|---|

*C03C 10/08*(2006.01)i; *C03B 32/02*(2006.01)i; *C03C 3/085*(2006.01)i; *C03C 3/087*(2006.01)i; *C03C 3/091*(2006.01)i; *C04B 35/18*(2006.01)i

FI: C03C10/08; C03B32/02; C03C3/085; C03C3/087; C03C3/091; C04B35/18

According to International Patent Classification (IPC) or to both national classification and IPC

| B. | FIELDS SEARCHED |
|---|---|

Minimum documentation searched (classification system followed by classification symbols)

C03C1/00-14/00; C03B32/02; C04B35/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

INTERGLAD

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111320391 A (JINGDEZHEN CERAMIC INSTITUTE) 23 June 2020 (2020-06-23) claims, paragraphs [0002], [0036]-[0043], table 1, example 1 | 1-11, 14-15, 22-27 |
| Y | | 13, 17, 21, 28 |
| X | US 3450546 A (CORNING GLASS WORKS) 17 June 1969 (1969-06-17) claims, description, column 4, tables 1, 2, examples 1, 2 | 1-9, 12, 14-15, 22-26 |
| Y | | 12-20 |
| Y | JP 62-252340 A (MATSUSHITA ELECTRIC WORKS, LTD.) 04 November 1987 (1987-11-04) claims, p. 3, upper right column to lower right column, table 1 | 12-20 |
| Y | US 2012/0021890 A1 (ALHARBI, Omar A.) 26 January 2012 (2012-01-26) claims, paragraphs [0046]-[0053], tables 1, 3, examples 3, 4 | 13, 17 |

☑ Further documents are listed in the continuation of Box C.     ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 March 2024** | **09 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

International application No.

**PCT/JP2024/000052**

### C. DOCUMENTS CONSIDERED TO BE RELEVANT

| Category* | Citation of document, with indication, where appropriate, of the relevant passages | Relevant to claim No. |
|---|---|---|
| Y | WO 2018/051793 A1 (ASAHI GLASS CO., LTD.) 22 March 2018 (2018-03-22) paragraphs [0002], [0041] | 21 |
| Y | JP 2015-003857 A (NIPPON ELECTRIC GLASS CO.) 08 January 2015 (2015-01-08) paragraphs [0001], [0002], [0104] | 21 |
| Y | JP 03-242348 A (AGENCY OF IND. SCIENCE & TECHNOL.) 29 October 1991 (1991-10-29) p. 2, lower left column to p. 3, upper left column | 28 |
| A | JP 2000-185940 A (OHARA INC.) 04 July 2000 (2000-07-04) entire text | 1-28 |
| A | JP 2016-520503 A (DYMSHITS, Olga Sergeevna) 14 July 2016 (2016-07-14) entire text | 1-28 |

Form PCT/ISA/210 (second sheet) (July 2022)

## INTERNATIONAL SEARCH REPORT
### Information on patent family members

| Patent document cited in search report | Publication date (day/month/year) | Patent family member(s) | Publication date (day/month/year) |
|---|---|---|---|
| CN 111320391 A | 23 June 2020 | (Family: none) | |
| US 3450546 A | 17 June 1969 | FR 1528167 A | |
| JP 62-252340 A | 04 November 1987 | (Family: none) | |
| US 2012/0021890 A1 | 26 January 2012 | US 2012/0149542 A1 | |
| WO 2018/051793 A1 | 22 March 2018 | US 2019/0210911 A1 paragraphs [0002], [0043]<br>JP 2020-29399 A<br>CN 109715576 A<br>TW 201819324 A | |
| JP 2015-003857 A | 08 January 2015 | US 2016/0083292 A1 paragraphs [0001], [0002], [0114]<br>WO 2014/189117 A1<br>TW 201509850 A<br>CN 105164081 A<br>KR 10-2016-0012102 A | |
| JP 03-242348 A | 29 October 1991 | (Family: none) | |
| JP 2000-185940 A | 04 July 2000 | US 6245411 B1 entire text<br>EP 939395 A1<br>CN 1228396 A<br>KR 10-1999-0072857 A | |
| JP 2016-520503 A | 14 July 2016 | US 2016/0113363 A1 entire text<br>WO 2014/185813 A1<br>EP 2946685 A1<br>CN 105120705 A<br>KR 10-2016-0007624 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S3921049 B
- JP S4020182 B
- JP H01308845 A
- JP H11228180 A
- JP H11228181 A